(19) **Europäisches Patentamt / European Patent Office / Office européen des brevets**

(11) **EP 1 066 587 B1**

(12) **EUROPEAN PATENT SPECIFICATION**

(45) Date of publication and mention of the grant of the patent:
**21.11.2007 Bulletin 2007/47**

(21) Application number: **99914134.4**

(22) Date of filing: **24.03.1999**

(51) Int Cl.:
*B07C 1/00* (2006.01)     *B07C 5/34* (2006.01)
*B07C 5/10* (2006.01)     *G06K 7/10* (2006.01)
*G01B 11/04* (2006.01)

(86) International application number:
**PCT/US1999/006505**

(87) International publication number:
**WO 1999/049411 (30.09.1999 Gazette 1999/39)**

(54) **AUTOMATED SYSTEM AND METHOD FOR IDENTIFYING AND MEASURING PACKAGES TRANSPORTED THROUGH A LASER SCANNING TUNNEL**

AUTOMATISCHES SYSTEM UND VERFAHREN ZUM IDENTIFIZIEREN UND MESSEN VON PAKETEN, TRANSPORTIERT DURCH EINEN LASERABTASTTUNNNEL

SYSTEME ET PROCEDE AUTOMATISES D'IDENTIFICATION ET DE MESURE DE CONDITIONNEMENTS TRANSPORTES A TRAVERS UN TUNNEL DE LECTURE LASER

(84) Designated Contracting States:
**AT BE CH CY DE DK ES FI FR GB GR IE IT LI LU MC NL PT SE**

(30) Priority: **24.03.1998 US 47146**
**21.09.1998 US 157778**
**22.03.1999 US 274265**

(43) Date of publication of application:
**10.01.2001 Bulletin 2001/02**

(73) Proprietor: **METROLOGIC INSTRUMENTS, INC.**
**Blackwood, NJ 08012 (US)**

(72) Inventors:
• **GOOD, Timothy, A.**
**Blackwood, NJ 08012 (US)**
• **ZHU, Xiaoxun**
**Philadelphia, PA 19107 (US)**
• **WILZ, David, M.**
**Sewell, NJ 08080 (US)**
• **ROCKSTEIN, George, B.**
**Audobon, NJ 08106 (US)**
• **COLAVITO, Stephen, J.**
**Brookhaven, PA 19015 (US)**
• **BLAKE, Robert, E.**
**Woodbury Heights, NJ 08097 (US)**
• **AU, Ka, Man**
**Philadelphia, PA 19111 (US)**

• **GHOSH, Sankar**
**Philadelphia, PA 19154 (US)**
• **KOLIS, George**
**Pennsawken, NJ 08110 (US)**
• **SCOTT, Ian, A.**
**Haddonfield, NJ 08022 (US)**
• **AMUNDSEN, Thomas**
**Turnersville, NJ 08012 (US)**
• **GERMAINE, Gennady**
**Cherry Hill, NJ 08033 (US)**
• **DEHENNIS, Andrew, D.**
**Cheltenham, PA 19012 (US)**
• **DICKSON, Leroy**
**Morgan Hill, CA 95037 (US)**
• **KNOWLES, Carl, Harry**
**Moorestown, NJ 08057 (US)**

(74) Representative: **Dunlop, Hugh Christopher et al**
**R G C Jenkins & Co.**
**26 Caxton Street**
**London SW1H 0RJ (GB)**

(56) References cited:
**EP-A- 0 325 469      WO-A-97/22945**
**GB-A- 2 189 594      US-A- 5 495 097**
**US-A- 5 547 034      US-A- 5 661 561**
**US-A- 5 699 161**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of Invention

The present invention relates generally to an automated tunnel-type laser scanning package identification and measuring system arranged about a high-speed conveyor structure used in diverse package routing and transport applications, and also a method of identifying and measuring packages having bar code symbols on surfaces facing any direction with a 3-D scanning volume.

Brief Description of the Prior Art

In many environments, there is a great need to automatically identify and measure objects (e.g. packages, parcels, products, luggage, etc.) as they are transported along a conveyor structure. While over-the-head laser scanning systems are effective in scanning upwardly-facing bar codes on conveyed objects, there are many applications where it is not practical or otherwise feasible to ensure that bar code labels are upwardly-facing during transportation under the scanning station.

Various types of "tunnel" scanning systems have been proposed so that bar codes can be scanned independently of their orientation within scanning volume of the system. One such prior art tunnel scanning system is disclosed in US Patent No. 5,019,714 to Knowles. In this prior art scanning system, a plurality of single scanline scanners are orientated about a conveyor structure in order to provide limited degree of omni-directional scanning within the "tunnel-like" scanning environment. Notably, however, prior art tunnel scanning systems, including the system disclosed in US Patent No. 5,019,714, are incapable of scanning bar code systems in a true omni-directional sense, i.e. independent of the direction that the bar code faces as it is transported along the conveyor structure. At best, prior art scanning systems provide omni-directional scanning in the plane of the conveyor belt or in portions of planes orthogonal thereto. However, true omnidirectional scanning along the principal planes of a large 3-D scanning volume has not been hitherto possible.

US-A-5,699,161 describes a method and apparatus for measuring the length, width, and height of rectangular solid objects moving on a conveyor. The apparatus includes a light curtain, two laser triangulation range finders, and a pulse tachometer mounted on a frame around a conveyer.

Also, while numerous systems have been proposed for automatically identifying and measuring the dimensions and weight of packages along a high-speed conveyor, prior art systems have been very difficult to manufacture, maintain, and operate in a reliable manner without the use of human supervision.

Thus, there is a great need in the art for an improved tunnel-type automated laser scanning package identification/measuring system and a method of identifying and measuring packages transported along a high-speed conveyor system, while avoiding the shortcomings and drawbacks of prior art scanning systems and methodologies.

DISCLOSURE OF THE PRESENT INVENTION

Accordingly, it would be desirable to provide a novel tunnel-typc automated package identification and measuring system that is free of the shortcomings and drawbacks of prior art tunnel-type laser scanning systems and methodologies.

It is also desirable to provide a fully automated package identification and measuring system, wherein an omni-directional holographic scanning tunnel is used to read bar codes on packages entering the tunnel, while a package dimensioning subsystem is used to capture information about the package prior to entry into the tunnel.

It is further desirable to provide a fully automated package identification and measuring system, wherein mathematical models are created on a real-time basis for both the geometry of the package and the position of the laser scanning beam used to read the bar code symbol thereon.

It is further desirable to provide a fully automated package identification and measuring system, wherein the mathematical models are analyzed to determine if collected and queued package identification data is spatially and/or temporally correlated with package measurement data using vector-based ray-tracing methods, homogeneous transformations, and object-oriented decision logic so as to enable simultaneous tracking of multiple packages being transported through the scanning tunnel.

It is further desirable to provide such a system, in which a plurality of holographic laser scanning subsystems are mounted from a scanner support framework, arranged about a high-speed conveyor belt, and arranged so that each scanning subsystem projects a highly-defined 3-D omni-directional scanning volume with a large depth-of-field, above the conveyor structure so as to collectively provide omni-directional scanning with each of the three principal scanning planes of the tunnel-type scanning system.

It is further desirable to provide such a system, in which each holographic laser scanning subsystem projects a highly-defined 3-D omni-directional scanning volume that has a large depth-of-field and is substantially free of spatially and temporally coincident scanning planes, to ensure substantially zero crosstalk among the numerous laser scanning channels provided within each holographic laser scanning subsystem employed in the system.

It is further desirable to provide such a system, in which a split-type conveyor is used with a gap disposed between its first and second conveyor platforms, for mounting of an omni-directional projection-type laser scanning subsystem that is below the conveyor platforms and ends substantially the entire width of the conveyor platform.

It is further desirable to provide such a system, wherein a plurality of holographic laser scanners are arranged about the conveyor system so as to produce a bi-directional scanning pattern along the principal axes of a three-dimensional laser scanning volume.

It is further desirable to provide a system, in which each holographic laser scanner employed in the system projects a three-dimensional laser scanning volume having multiple focal planes and a highly confined geometry extending about a projection axis extending from the scanning window of the holographic scanner and above the conveyor belt of the system.

It is further desirable to provide an automated package identification and measuring system, wherein singulated packages can be detected, dimensioned, weighed, and identified in a fully automated manner without human intervention, while being transported through a laser scanning tunnel subsystem using a package conveyor subsystem.

It is further desirable to provide such a system, wherein a package detection and dimensioning subsystem is provided on the input side of its scanning tunnel subsystem, for detecting and dimensioning singulated packages passing through the package detection and dimensioning subsystem.

It is further desirable to provide such a system, wherein a data element queuing, handling and processing subsystem is provided for queuing, handling and processing data elements representative of package identification, dimensions and/or weight, and wherein a moving package tracking queue is maintained so that data elements comprising objects, representative of detected packages entering the scanning tunnel, can be tracked along with dimensional and measurement data collected on such detected packages.

It is further desirable to provide such a system, wherein a package detection subsystem is provided on the output side of its scanning tunnel subsystem.

It is further desirable to provide such a system, wherein the tunnel scanning subsystem provided therein comprises a plurality of laser scanning subsystems, and each such laser scanning subsystem is capable of automatically generating, for each bar code symbol read by the subsystem, accurate information indicative of the precise point of origin of the laser scanning beam and its optical path to the read bar code symbol, as well as produced symbol character data representative of the read bar code symbol.

It is further desirable to provide such a system, wherein the plurality of laser scanning subsystems generated an omnidirectional laser scanning pattern within a 3-D scanning volume, wherein a bar code symbol applied to any one side of a six-sided package (e.g. box) will be automatically scanned and decoded when passed through the 3-D scanning volume using the conveyor subsystem.

It is further desirable to provide such a system, wherein the laser scanning subsystems comprise holographic laser scanning subsystems, and also polygonal-type laser scanning subsystems for reading bar code symbols facing the conveyor, surface.

It is further desirable to provide such a system, wherein each holographic laser scanning subsystem employed in the tunnel scanning subsystem comprises a device for generating information specifying which holographic scanning facet or holographic facet sector (or segment) produced the laser scan data used to read any bar code symbol by the subsystem.

It is further desirable to provide such a system, wherein each non-holographic (e.g. polygonal-type) laser scanning subsystem employed in the tunnel scanning subsystem comprises a device for generating information specifying which mirror facet or mirror sector produced the laser scan data used to read any bar code symbol by the subsystem.

It is further desirable to provide such a system, wherein the data element queuing, handling and processing subsystem provided therein further comprises a scan beam geometry modeling subsystem for producing, relative to a local coordinate reference system symbolically embedded within the laser scanning subsystem, coordinate information comprising a geometric model of each laser scanning beam used to read a particular bar code symbol for which symbol character data has been produced by the laser scanning subsystem.

It is further desirable to provide such a system, wherein the data clement queuing, handling and processing subsystem provided therein further comprises a first homogeneous transformation module for converting the coordinate information comprising the geometric model of each laser scanning beam used to read a particular bar code symbol on a detected package, from the local coordinate reference system symbolically embedded within the laser scanning subsystem, to a global coordinate reference system symbolically embedded within the tunnel-type scanning system.

It is further desirable to provide such a system, wherein the data element queuing, handling and processing subsystem provided therein further comprises a package surface modeling subsystem for producing, relative to a local coordinate reference system symbolically embedded within the laser scanning subsystem, coordinate information comprising a geometric model of each surface on each package detected by the package detection and dimensioning subsystem.

It is further desirable to provide such a system, wherein the data element queuing, handling and processing subsystem provided therein further comprises a second homogeneous transformation module for converting the coordinate information comprising the geometric model of each surface on a detected package, from the local coordinate reference system symbolically embedded within the laser scanning subsystem, to a global coordinate reference system symbolically embedded within the tunnel-type, scanning system.

It is further desirable to provide such a system, wherein a laser scan beam and package surface intersection determination subsystem is provided for determining which detected package was scanned by the laser scanning beam that read a particular bar code symbol, and for linking (i.e. correlating) package measurement data associated with the detected package with package identification data associated with the laser scanning beam that read a bar code symbol on a detected package.

It is further desirable to provide such a system with a package velocity measurement subsystem for measuring the velocity of the package as it moves from the package detection and dimensioning subsystem through the laser scanning tunnel subsystem of the system.

It is further desirable to provide such a system, wherein the package velocity measurement subsystem is realized using a pair of spaced-apart laser beams projected over the conveyor so that when a package interrupts these laser beams, electrical pulses are automatically generated and processed using a clock in order to compute the instantaneous velocity of each and every package transported along the conveyor belt subsystem.

It is further desirable to provide such a system, wherein the package detection and dimensioning subsystem provided on the input side of the laser scanning tunnel subsystem comprises a first pair of light transmitting and receiving structures arranged to transmit a plurality of light beams along a direction parallel to the conveyor belt in order to collect data and measure the height of each singulated package passing through the package detection and dimensioning subsystem, and a second pair of light transmitting and receiving structures arranged to transmit a plurality of light beams along a direction perpendicular to the conveyor belt in order to collect data and measure the width of each singulated package passing through the package detection and dimensioning subsystem.

It is further desirable to provide such a system, wherein the package detection and dimensioning subsystem provided o n the input side of the laser scanning tunnel subsystem further comprises a height data processor for processing arrays of height profile data collected from the first pair of light transmitting and receiving structures in order to detect stacked arrangements of packages transported through the package detection and dimensioning subsystem, and width data processor for processing arrays of width profile data collected from the second pair of light transmitting and receiving structures in order to detect side-by-side arrangements of packages transported through the package detection and dimensioning subsystem, and upon detecting either a stacked configuration of packages or a side-by-side configuration of packages, automatically generating an unique data element indicative of such multiple package arrangements along the conveyor belt, and placing this unique data element in the moving package tracking queue in the data element queuing, handling and processing subsystem so that this subsystem can cause an auxiliary subsystem to reroute such multiple packages through a singulation unit and then return to pass once again through the system of the present invention.

It is further desirable to provide such a system, wherein a package weighing-in-motion subsystem is provided for weighing singulated packages moving through the package detection and dimensioning subsystem, and producing weight measurement information for assignment to each detected package.

It is further desirable to provide an automated package identification and measuring system, wherein singulated packages can be detected, dimensioned, weighed, and identified in a fully automated manner without human intervention, while being transported through a laser scanning tunnel subsystem using a package conveyor subsystem.

It is further desirable to provide such a system, wherein a package detection and dimensioning subsystem is provided on the input side of its scanning tunnel subsystem, for detecting and dimensioning singulated packages passing through the package detection and dimensioning, subsystem.

It is further desirable to provide such a system, wherein a data element queuing, handling and processing subsystem is provided for queuing, handling and processing data elements representative of package identification, dimensions and/or weight, and wherein a moving package tracking queue is maintained so that data elements comprising objects, representative of detected packages entering the scanning tunnel, can be tracked along with dimensional and measurement data collected on such detected packages.

It is further desirable to provide such a system, wherein a package detection subsystem is provided on the output side of its scanning tunnel subsystem.

It is further desirable to provide such a system, wherein the tunnel scanning subsystem provided therein comprises a plurality of laser scanning subsystems, and each such laser scanning subsystem is capable of automatically generating, for each bar code symbol read by the subsystem, accurate information indicative of the precise point of origin of the laser scanning beam and its optical path to the read bar code symbol, as well as produced symbol character data representative of the read bar code symbol.

It is further desirable to provide such a system, wherein the plurality of laser scanning subsystems generated an omdirectional laser scanning pattern within a 3-D scanning volume, wherein a bar code symbol applied to any one side of a six-sided package (e.g. box) will be automatically scanned and decoded when passed through the 3-D scanning volume using the conveyor subsystem.

It is further desirable to provide such a system, wherein the laser scanning subsystems comprise holographic laser scanning subsystems, and also polygonal-type laser scanning subsystems for reading bar code symbols facing the conveyor surface.

It is further desirable to provide such a system, wherein each holographic laser scanning subsystem employed in the tunnel scanning subsystem comprises a device for generating information specifying which holographic scanning facet or holographic facet sector (or segment) produced the laser scan data used to read any bar code symbol by the subsystem.

It is further desirable to provide such a system, wherein each non- holographic (e.g. polygonal-type) laser scanning subsystem employed in the tunnel scanning subsystem comprises a device for generating information specifying which mirror facet or mirror sector produced the laser scan data used to read any bar code symbol by the subsystem.

It is further desirable to provide such a system, wherein the data element queuing, handling and processing subsystem provided therein further comprises a scan beam geometry modeling subsystem for producing, relative to a local coordinate reference system symbolically embedded within the laser scanning subsystem, coordinate information comprising a geometric model of each laser scanning beam used to read a particular bar code symbol for which symbol character data has been produced by the laser scanning subsystem.

It is further desirable to provide such a system, wherein the data element queuing, handling and processing subsystem provided therein further comprises a first homogeneous transformation module for converting the coordinate information comprising the geometric model of each laser scanning beam used to read a particular bar code symbol on a detected package, from the local coordinate reference system symbolically embedded within the laser scanning subsystem, to a global coordinate reference system symbolically embedded within the tunnel-type scanning system.

It is further desirable to provide such a system, wherein the data element queuing, handling and processing subsystem provided therein further comprises a package surface modeling subsystem for producing, relative to a local coordinate reference system symbolically embedded within the laser scanning subsystem, coordinate information comprising a geometric model of each surface on each package detected by the package detection and dimensioning subsystem.

It is further desirable to provide such a system, wherein the data element queuing, handling and processing subsystem provided therein further comprises a second homogeneous transformation module for converting the coordinate information comprising the geometric model of each surface on a detected package, from the local coordinate reference system symbolically embedded within the laser scanning subsystem, to a global coordinate reference system symbolically embedded within the tunnel-type scanning system.

It is further desirable to provide such a system, wherein a laser scan beam and package surface intersection determination subsystem is provided for determining which detected package was scanned by the laser scanning beam that read a particular bar code symbol, and for linking (i.e. correlating) package measurement data associated with the detected package with package identification data associated with the laser scanning beam that read a bar code symbol on a detected package.

It is further desirable to provide such a system with a package velocity measurement subsystem for measuring the velocity of the package as it moves from the package detection and dimensioning subsystem through the laser scanning tunnel subsystem of the system.

It is further desirable to provide such a system, wherein the package velocity measurement subsystem is realized using an roller wheel engaged in direct contact with the conveyor belt as it moves, generating electrical pulses as an optical encoder attached to the shaft of the roller wheel is caused to complete one revolution, during which the conveyor belt traveled one linear foot, and counting these generated electrical pulses with reference to a clock in order to compute the instantaneous velocity of the conveyor belt, and thus each and every package transported therealong, without slippage.

It is further desirable to provide such a system, wherein the package detection and dimensioning subsystem provided on the input side of the laser scanning tunnel subsystem comprises a laser scanning mechanism that generates an amplitude modulated laser scanning beam that is scanned across the width of the conveyor structure in the package conveyor subsystem while the scanning beam is disposed substantially perpendicular to the surface of the conveyor structure, and light reflected from scanned packages is collected, detected and processed to produce information representative of the package height profile across the width of the conveyor structure for each timing sampling instant carried out by the package detection and dimension subsystem.

It is further desirable to provide such a system, wherein the package detection and dimensioning subsystem provided on the input side of the laser scanning tunnel subsystem further comprises a height data processor for processing arrays of height profile data collected from the first pair of light transmitting and receiving structures in order to detect stacked arrangements of packages transported through the package detection and dimensioning subsystem, and width data processor for processing arrays of width profile data collected from the second pair of light transmitting and receiving structures in order to detect side-by-side arrangements of packages transported through the package detection and dimensioning subsystem, and upon detecting either a stacked configuration of packages or a side-by-side configuration of packages, automatically generating a unique data element indicative of such multiple package arrangements alone the conveyor belt, and placing this unique data element in the moving package tracking queue in the data element queuing, handling and processing subsystem so that this subsystem can cause an auxiliary subsystem to reroute such multiple packages through a singulation unit and then returned to pass once again through the system of the present invention.

It is further desirable to provide such a system, wherein a package weighing-in-motion subsystem is provided for weighing singulated packages moving through the package detection and dimensioning subsystem, and producing weight measurement information for assignment to each detected package.

It is further desirable to provide an automated package identification and measuring system, wherein multiple packages, arranged in a side-by-side, stacked and/or singulated configuration, can be simultaneously detected, dimensioned, weighed, and identified in a fully automated manner without human intervention, while being transported through a laser scanning tunnel subsystem using a package conveyor subsystem.

It is further desirable to provide such a system, wherein a package detection and dimensioning subsystem is provided on the input side of its scanning tunnel subsystem, for simultaneously detecting and dimensioning multiple packages passing through the package detection and dimensioning subsystem, and wherein the package detection and dimensioning subsystem employs multiple moving package tracking queues simultaneously maintained therein for spatially different regions above the conveyor belt so order that data objects, representative of packages detected in such spatially different regions, can be produced and tracked along with dimensional and measurement data collected on such detected packages.

It is further desirable to provide such a system, wherein a data element queuing, handling a nd processing subsystem is provided for queuing, handling and processing data elements representative of package identification, dimensions and/or weight, and wherein multiple moving package tracking queues are simultaneously maintained for spatially different regions above the conveyor belt so that data elements comprising objects, representative of detected packages entering the scanning tunnel, can be tracked along with dimensional and measurement data collected on such detected packages.

It is further desirable to provide such a system, wherein a multiple package detection and dimensioning subsystem is provided on the output side of its scanning tunnel subsystem, and multiple moving package trucking queues are simultaneously maintained therein for spatially different regions above the conveyor belt in order that data elements comprising objects, representative of detected packages exiting the scanning tunnel, can be tracked along with dimensional and measurement data collected on such detected packages.

It is further desirable to provide such a system, wherein the tunnel scanning subsystem provided therein comprises a plurality of laser scanning subsystems, and each such laser scanning subsystem is capable of automatically generating, for each bar code symbol read by the subsystem, accurate information indicative of the precise point of origin of the laser scanning beam and its optical path to the read the bar code symbol, as well as symbol character data representative of the read bar code symbol.

It is further desirable to provide such a system, wherein the data element queuing, handling and processing subsystem provided therein further comprises a scan beam geometry modeling subsystem for producing, relative to a local coordinate reference system symbolically embedded within the laser scanning subsystem, coordinate information comprising a geometric model of each laser scanning beam used to read a particular bar code symbol for which symbol character data has been produced by the laser scanning subsystem.

It is further desirable to provide such a system, wherein the data element queuing, handling and processing subsystem provided therein further comprises a first homogeneous transformation module for converting the coordinate information comprising the geometric model of each laser scanning beam used to read a particular bar code symbol on a detected package, from the local coordinate reference system symbolically embedded within the laser scanning subsystem, to a global coordinate reference system symbolically embedded within the tunnel-type scanning system.

It is further desirable to provide such a system, wherein the data element queuing, handling and processing subsystem provided therein further comprises a package surface modeling subsystem for producing, relative to a local coordinate reference system symbolically embedded within the laser scanning subsystem, coordinate information comprising a geometric model of each surface on each package detected by the package detection and dimensioning subsystem.

It is further desirable to provide such a system, wherein the data element queuing, handling and processing subsystem provided therein further comprises a second homogeneous transformation module for converting the coordinate information comprising the geometric model of each surface on a detected package, from the local coordinate reference system symbolically embedded within the laser scanning subsystem, to a global coordinate reference system symbolically embedded within the tunnel type scanning system.

It is further desirable to provide such a system, wherein a laser scan beam and package surface intersection determination subsystem is provided for determining which detected package was scanned by the laser scanning beam that read a particular bar code symbol, and for linking (i.e. correlating) package measurement data associated with the detected package with package identification data associated with the laser scanning beam that read a bar code symbol on a detected package.

It is further desirable to provide such a system with a package velocity measurement subsystem for measuring the velocity of the package as it moves from the package detection and dimensioning subsystem through the laser scanning tunnel subsystem of the system.

It is further desirable to provide such a system, wherein the package velocity measurement subsystem is realized using an roller wheel engaged in direct contact with the conveyor belt as it moves, generating electrical pulses as an optical encoder attached to the shaft of the roller wheel is caused to complete one revolution, during which the conveyor belt traveled one linear foot, and counting these generated electrical pulses with reference to a clock in order to compute the instantaneous velocity of the conveyor belt, and this each and every package transported therealong, without slippage.

It is further desirable to provide such a system, wherein the package detection and dimensioning subsystem provided on the input side of the laser scanning tunnel subsystem comprises a laser scanning mechanism that generates an amplitude modulated laser scanning beam that is scanned across the width of the conveyor structure in the package conveyor subsystem while the scanning beam is disposed substantially perpendicular to the surface of the conveyor structure, and light reflected from scanned packages is collected, detected and processed to produce information representative of the package height profile across the width of the conveyor structure for each timing sampling instant carried out by the package detection and dimension subsystem.

It is further desirable to provide such a system, wherein the package detection and dimensioning subsystem provided on the input side of the laser scanning tunnel subsystem comprises a stereoscopic camera subsystem which captures stereoscopic image pairs of packages being transported through the package detection and dimensioning subsystem, and also a real-time stereoscopic image processor which is programmed to detect multiple images present in the field of view of stereoscopic imaging subsystem, and compute the vertices and dimensions of each such detected package.

It is further desirable to provide such a system, wherein a package weighing-in-motion subsystem is provided for weighing simultaneously weighing each package, or arrangement of side-by-side and/or stacked packages moving through the package detection and dimensioning subsystem, and producing weight measurement information for assignment to each detected package, or apportioned to each arrangement of side-by-side and/or stacked packages, based on relative volumetric measurements.

It is further desirable to provide a bi-directional package identification and measuring system, wherein the either the first or second side of its scanning tunnel can function as either the input side thereof or the output side thereof, by peforming a simple programming operation, thereby enabling two different directions of package flow as required the situation at hand.

It is further desirable to provide an improved tunnel-type scanning system, wherein bar code symbols downwardly facing the conveyor belt can be automatically scanned as they are transported through the system in a high-speed manner.

It is further desirable to provide an improved method of identifying and measuring packages within a tunnel-scanning environment through which objects of various types can be conveyed at high transport speeds.

It is further desirable to provide an automated package identification and measuring system characterized by: lower labor costs; higher load efficiency; perfect destination accuracy; extremely fast ID throughput; more accurate shipping charges; fast, accurate tracking and sorting, and precision package weights, shapes, and measurements.

It is further desirable to provide an automated package identification and measuring system which can read bar codes anywhere on a parcel moving down a fast conveyor line: top; sides; front; rear; and bottom.

It is further desirable to provide an automated package identification and measuring system which enables fully automated, package handling on real world-sized bar codes.

It is further desirable to provide an automated package identification and measuring system which does not require any human intervention during handling.

It is further desirable to provide an automated package identification and measuring system which can sort the package after bar code data on the package has been read and captured by the system software.

It is further desirable to provide an automated package identification and measuring system which can measure and weigh the package, eliminating the "guesstimating" often required by human operators.

It is further desirable to provide an automated package identification and measuring system which enables exact weighing and measuring of packages, and thus minimizes wasted cargo space and more carrying capacity on every shipment, thereby allowing shippers to bill customers with greater precision, with fees keyed to package volume, shape, weight, and destination.

It is further desirable to provide an automated method of automated identifying and measuring packages arranged in either a singulated, side-by-side or stacked configuration on a conveyor structure.

It is further desirable to provide a novel way of and means for digitizing digital scan data while correlating laser scanning information.

It is further desirable to provide a novel way of and means for decoding digital scan count data while correlating laser scanning information for use in various types of object tracking operations.

Aspects of the present invention are set out in the accompanying claims.

BRIEF DESCRIPTION OF THE DRAWINGS

For a more complete understanding of the present invention, the following Detailed Description of the Illustrative Embodiment should be read in conjunction with the accompanying Drawings, wherein:

Fig. 1A is a perspective view of an automated tunnel-type laser scanning package identification and measurement (e.g. dimensioning and weighing) system constructed in accordance with the first illustrated embodiment of the present invention;

Fig. 1B is an end elevated view of the system shown in Fig. 1A;

Fig. 1C is a first perspective view of the tunnel-type package identification and measurement system of the first illustrative embodiment of the present invention;

Fig. 1D is a second perspective view of the tunnel-type package identification and measurement system of Fig. 1A, shown in larger scale and with a portion of its conveyor structure removed from about the tunnel laser scanning subsystem;

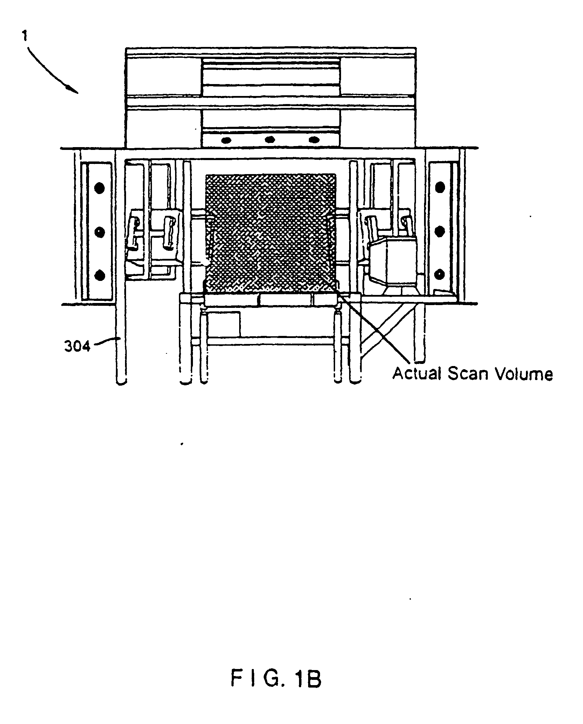

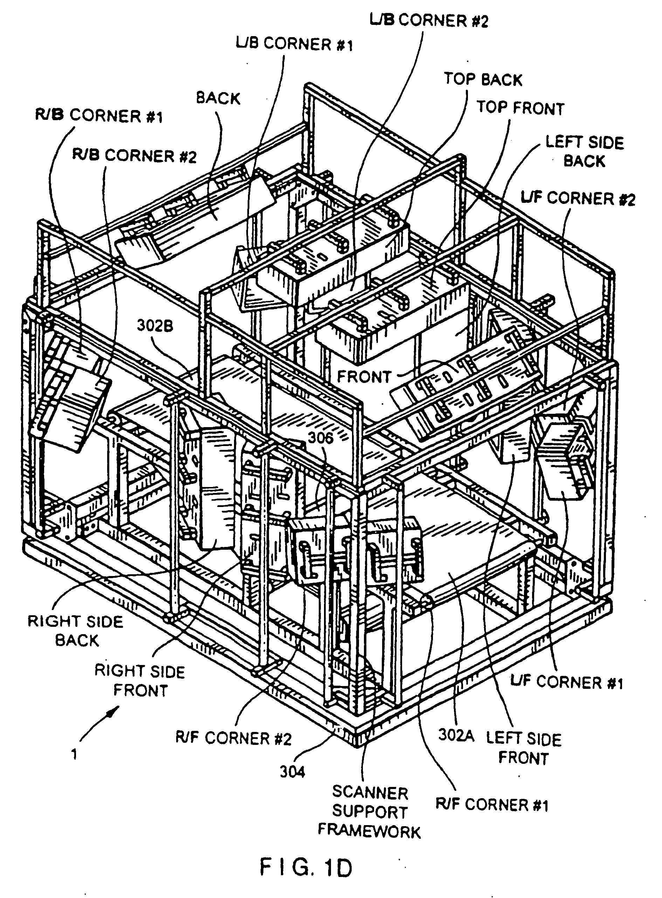

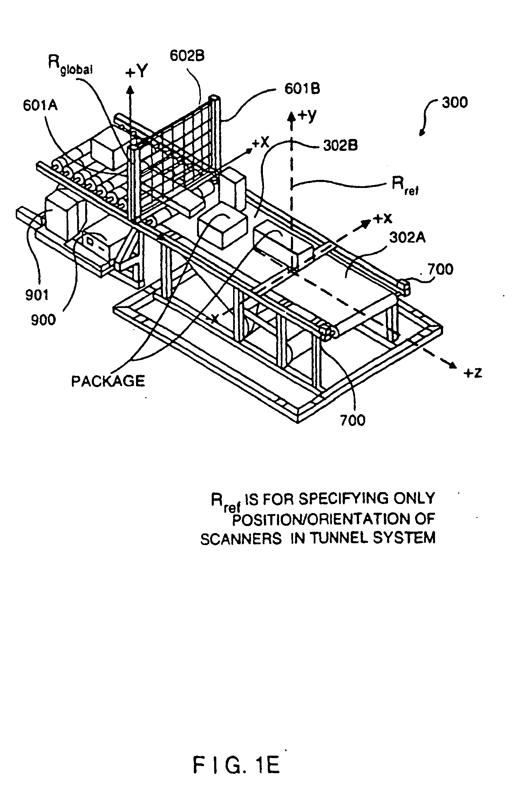

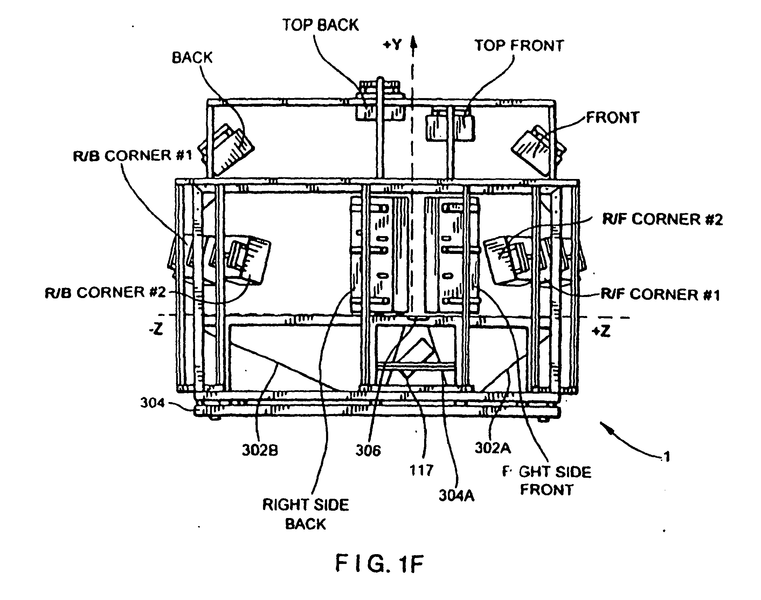

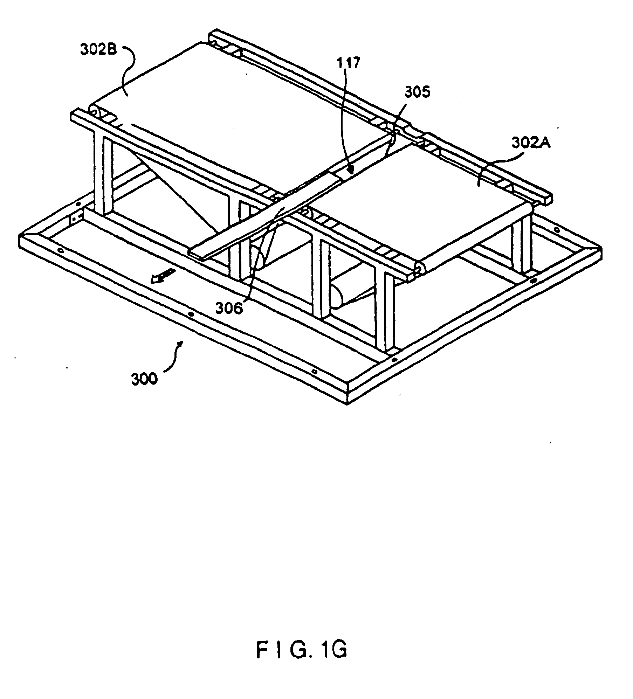

Fig. 1E is a third perspective view of the tunnel-type package identification and measurement system of the first illustrative embodiment, removed from the scanner support framework, in order to clearly show the 0-ring conveyor platform for staggering packages prior to entering the 3-D scanning volume, the light curtain associated with the packaging dimensioning subsystem for determining the total volume of the package, and whether there are multiple packages entering the 3-D scanning volume, a scanner management computer system (i.e. Station) with a graphical user interface (GUI) for easily configuring the scanning subsystems within the system and monitoring the flow of packages into the scanning tunnel, and an exit sensor for detecting the exit of each scanned package within the scanning tunnel;

Fig. 1F is an elevated end view of the tunnel-type laser scanning system of the first illustrative embodiment of the present invention, shown in greater detail, detached from a portion of its roller-based conveyor subsystem and scanner management subsystem;

Fig. 1G is a perspective view of the split-section conveyor subsystem and its bottom-mounted laser scanning projection subsystem, and user-interface/workstation, shown detached from the scanner support framework shown in Figs. 1A, 1B and 1C;

Fig. 2A is a perspective view of the split-conveyor subsystem removed from scanner support framework of the system of the first illustrative embodiment, showing a coordinate reference framework symbolically embedded within the conveyor subsystem and shown with graphical indications describing the directions of yaw, pitch and roll of each triple-scanning disc holographic scanner supported from the scanner support framework of the tunnel scanning system shown in Figs. 1A and 1B;

Fig. 2B is a perspective view of the split-conveyor subsystem removed from scanner support framework of the package identification and measurement system of the first illustrative embodiment, showing a coordinate reference framework symbolically embedded within the conveyor system and schematically depicted with graphical indications describing the directions of yaw, pitch and roll of each single-scanning disc holographic scanner supported from the scanner support framework of the tunnel scanning subsystem shown in Figs. 1A and 1B;

Fig. 2C is a table setting forth data specifying the position and orientation of the sixteen omni-directional holographic laser scanners mounted within the tunnel scanning subsystem of the first illustrative embodiment of the present invention, wherein the position of each single-disc holographic scanner is specified with respect to the center of the holographic scanning disc contained within each such scanning unit, and the position of each triple-disc holographic scanner is specified with respect to the center of the middle holographic scanning disc contained within each such scanning unit;

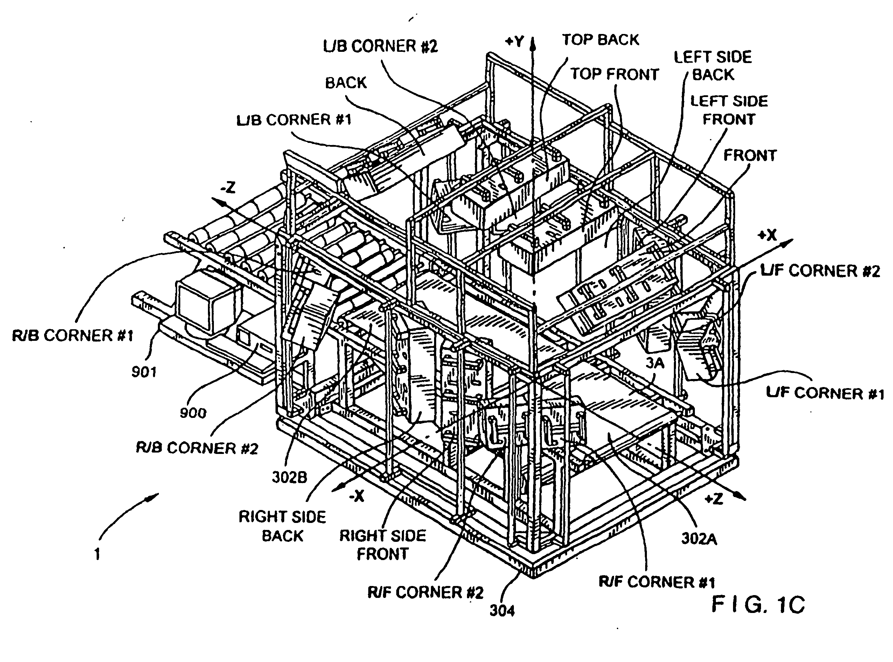

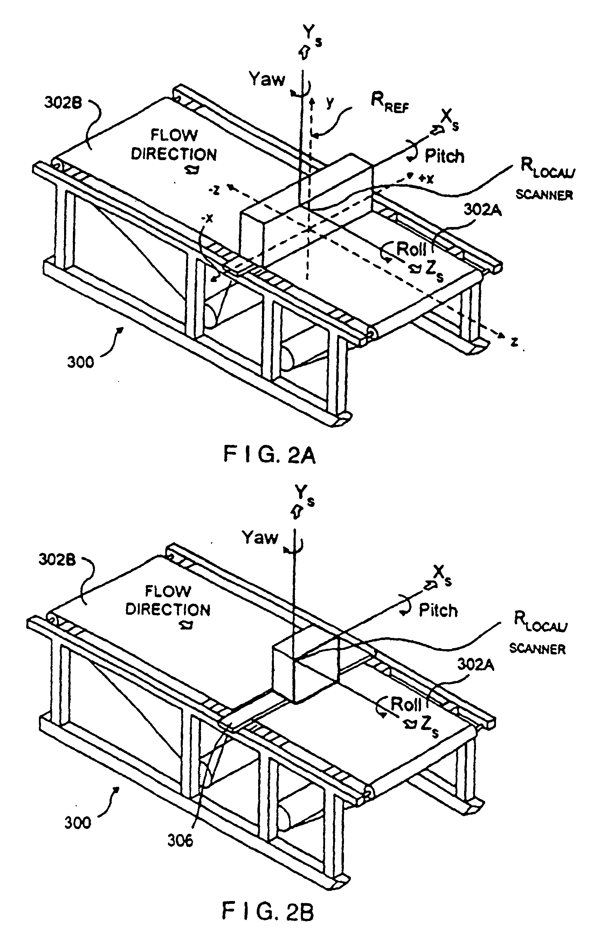

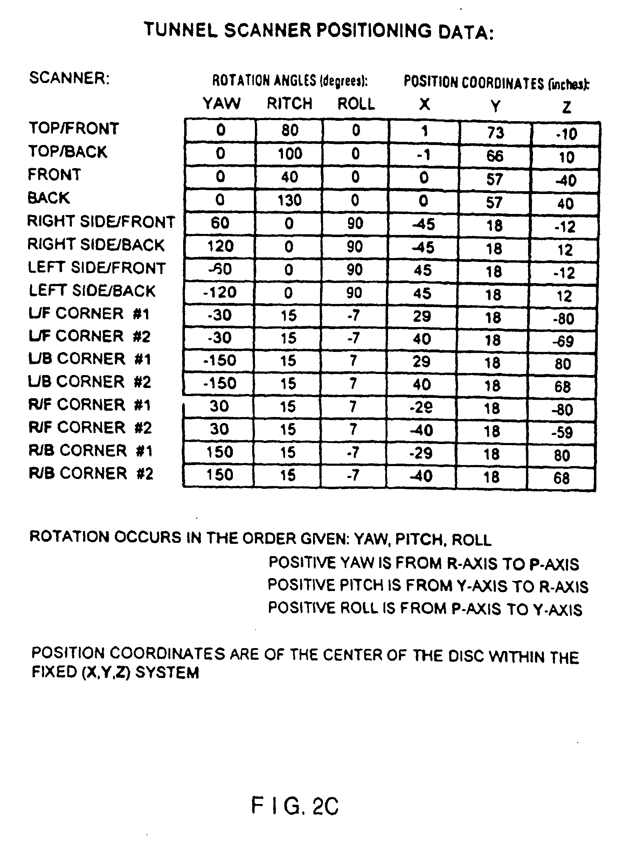

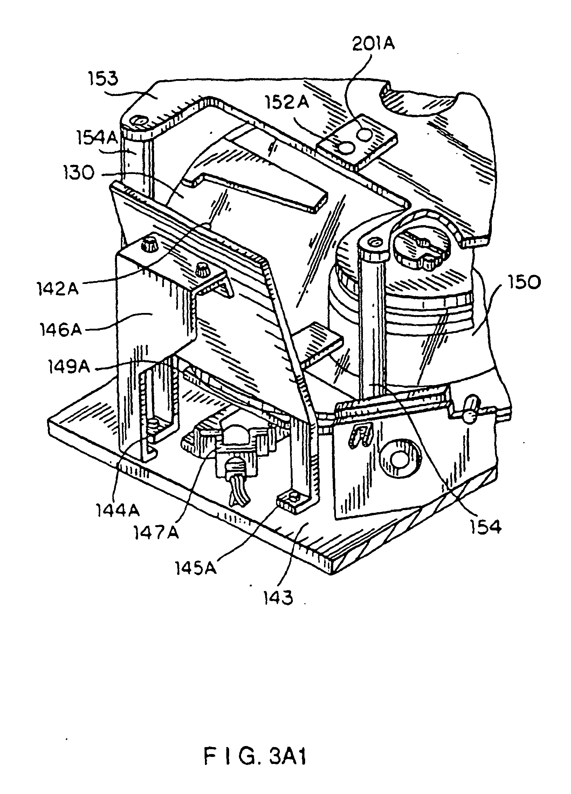

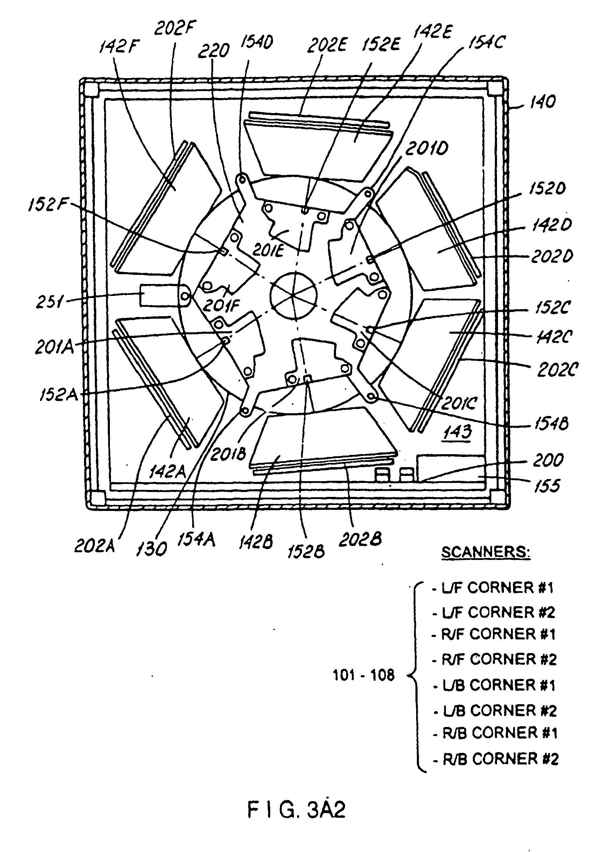

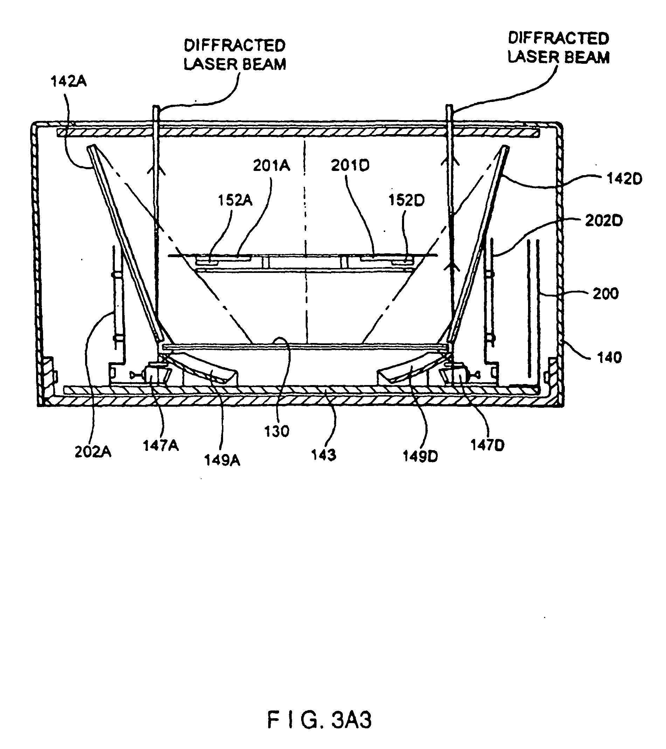

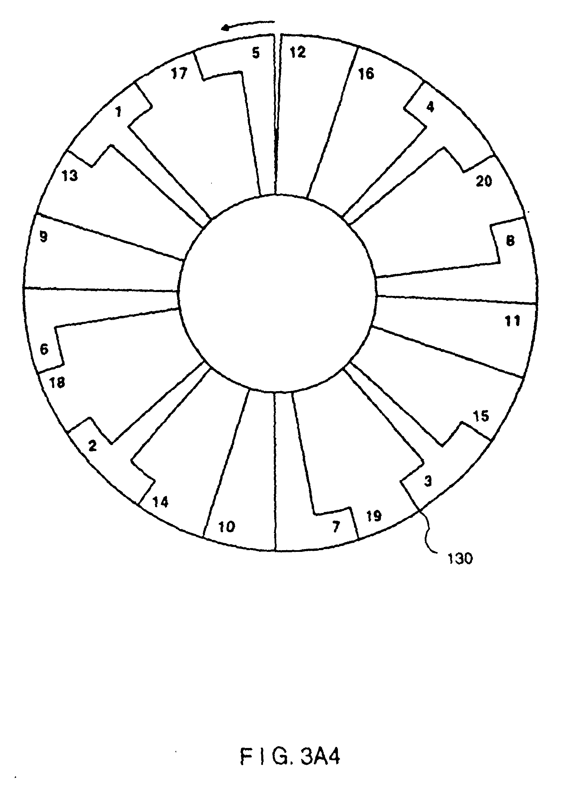

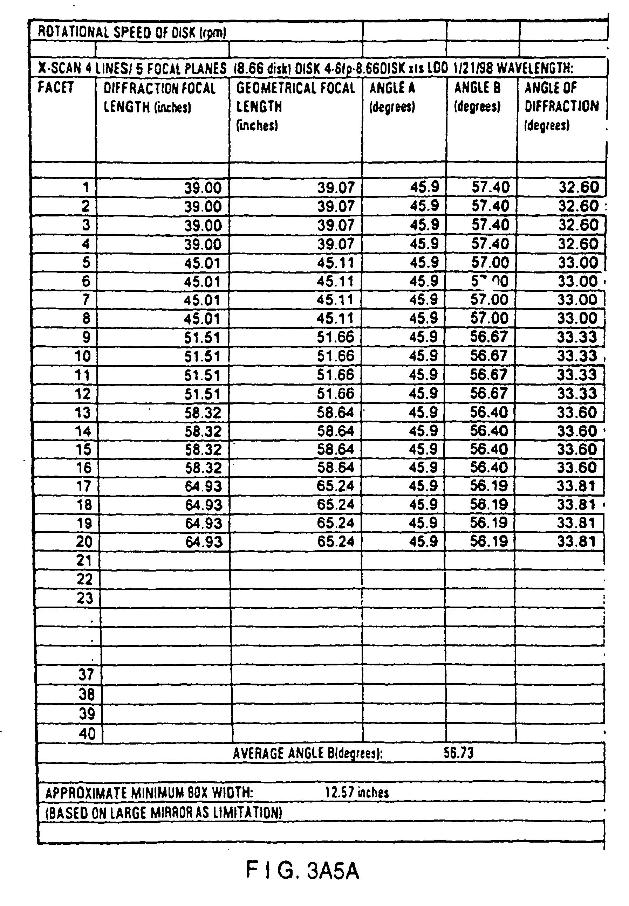

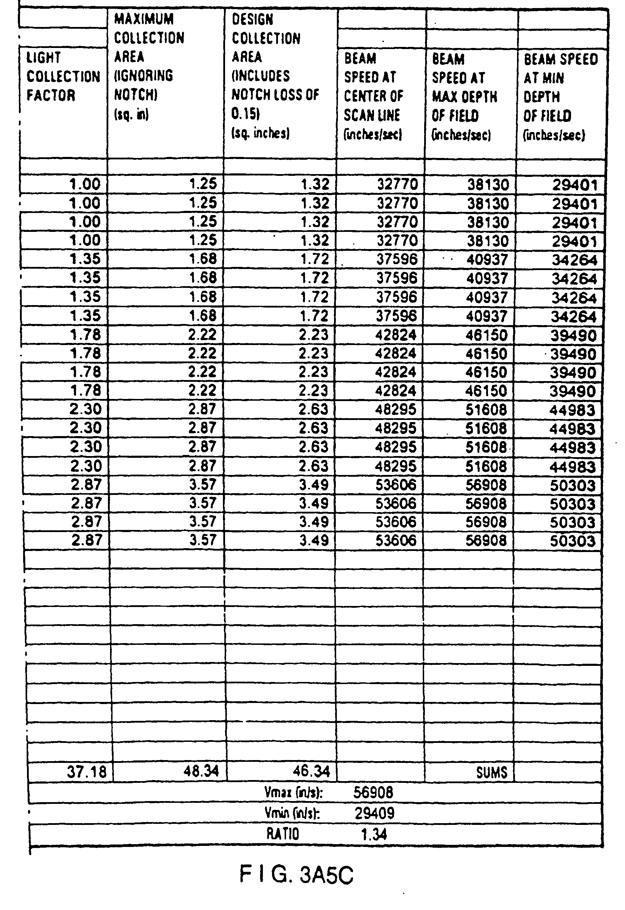

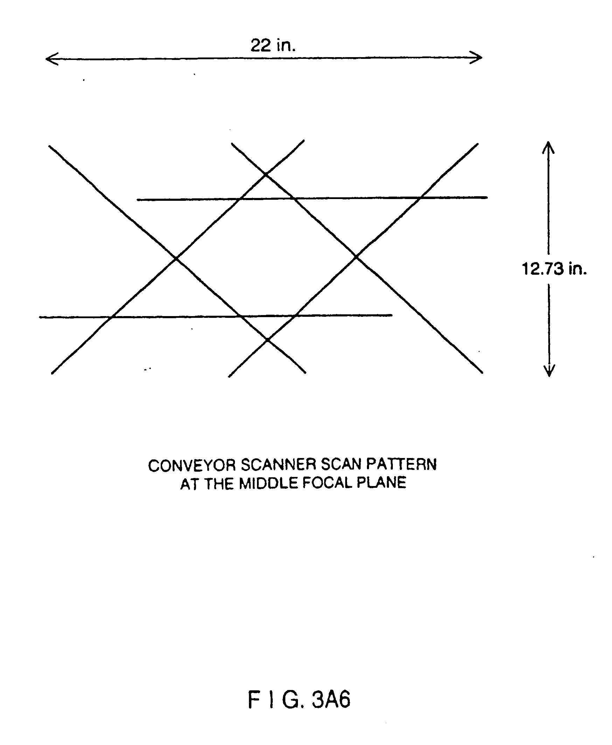

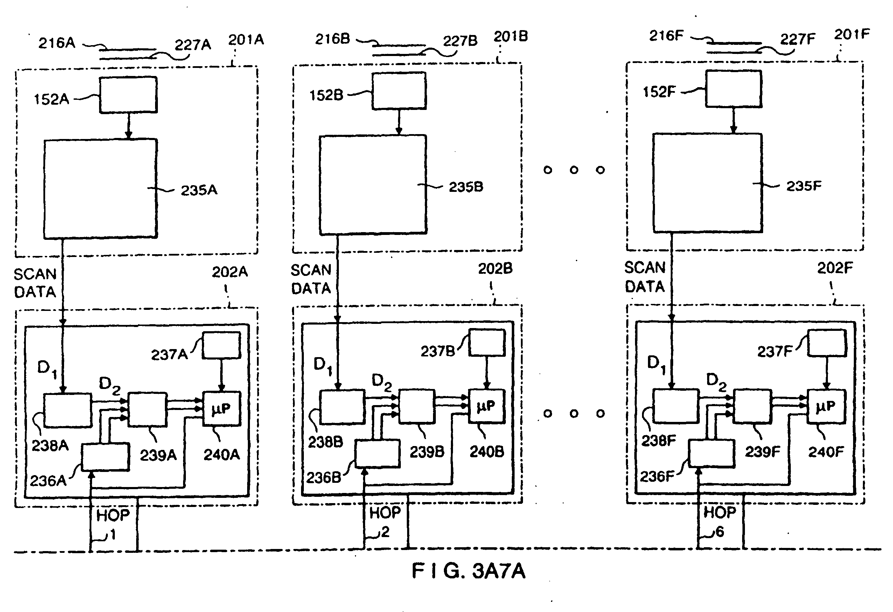

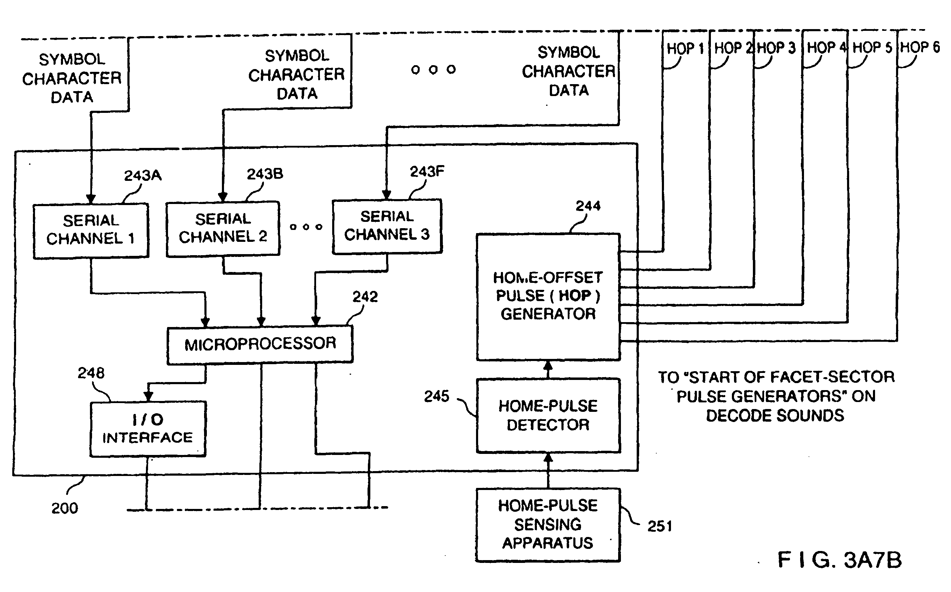

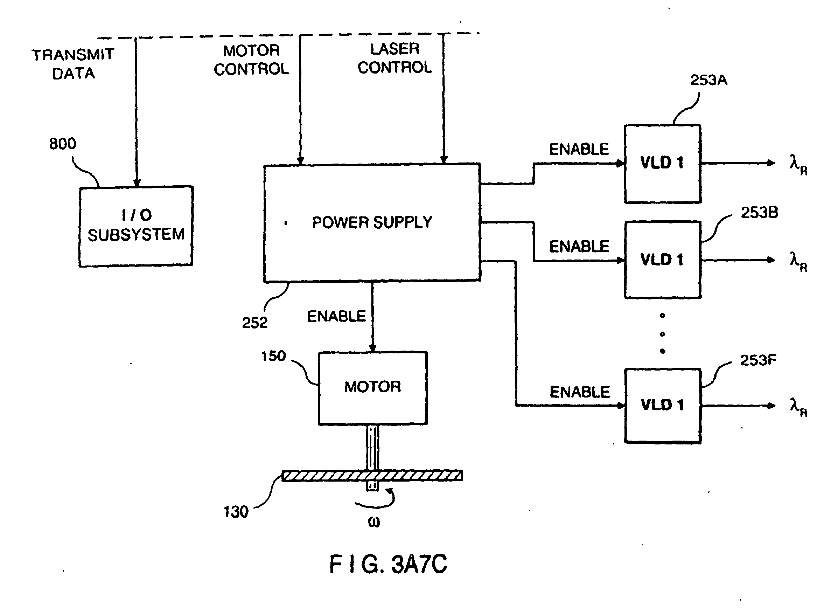

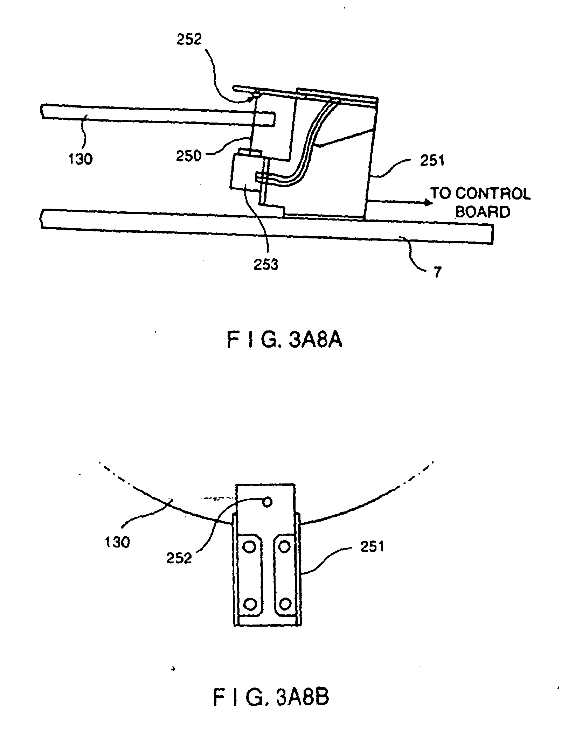

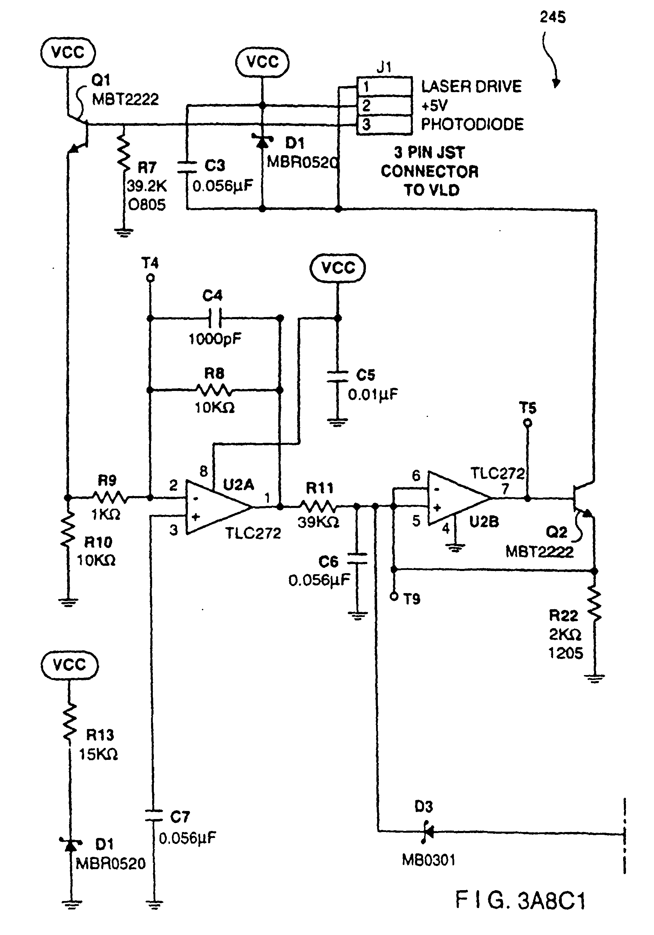

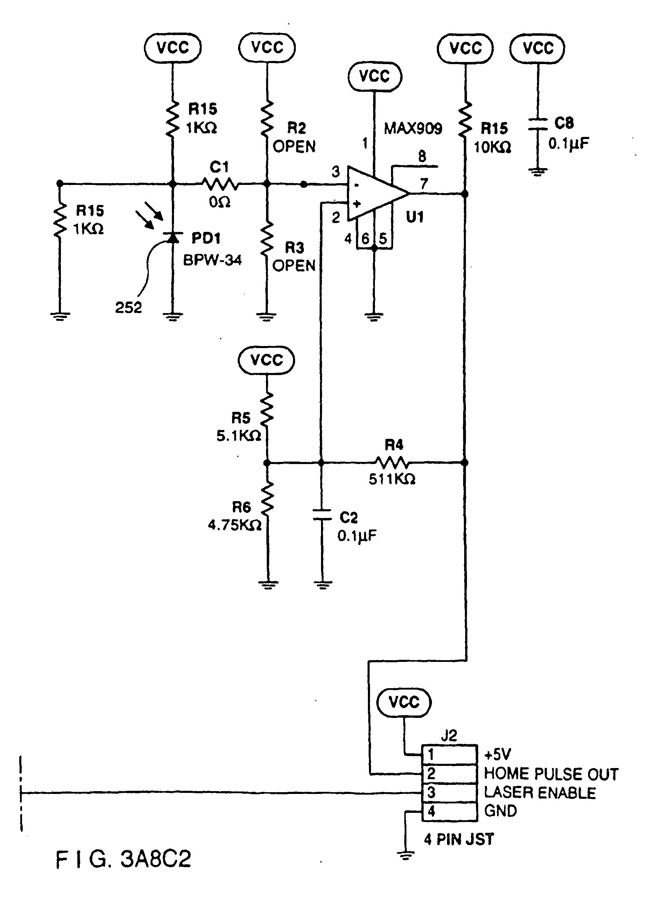

Fig. 3A1 is a perspective, partially cut-away view of the single-disc holographic laser scanning subsystem (e.g. indicated as L/F Corner #1, L/F Corner #2, L/B Corner #1, LB Corner #2, R/F Corner #1, R/F Corner #2, R/B Corner #1 and R/B Corner #2 in Fig. 1C and the Scanner Positioning Table shown in Fig. 2C), mounted within the corners of the tunnel-type scanning system of the first illustrative embodiment, showing the holographic scanning disc surrounded by one of its six beam folding mirrors, parabolic light collection mirrors, laser beam production modules, photodetectors, and analog and digital signal processing boards mounted on the optical bench of the subsystem;

Fig. 3A2 is a plan view of the single-disc holographic laser scanning subsystem employed in the tunnel scanning subsystem of the first illustrative embodiment, showing the holographic scanning disc surrounded by six laser scanning stations comprising a beam folding mirror, parabolic light collection mirror, laser beam production module (employing a VLD), each of which is enclosed in a compact housing adapted for adjustable support by the scanner support framework employed in the tunnel scanning subsystem of the illustrative embodiment;

Fig. 3A3 is a cross-sectional view of the single-disc holographic laser scanning subsystem shown in Fig. 3A2, showing its holographic scanning disc rotatably supported by its scanning motor mounted on the optical bench of the subsystem;

Fig. 3A4 is a schematic representation of the layout of the volume-transmission type holographic optical element (HOEs) mounted between the glass support plates of the holographic scanning disc employed within the single-disc holographic scanning subsystem installed in the tunnel scanning system of the first illustrative embodiment;

Figs 3A5A through 3A5C, taken together, show a table setting forth the design parameters used to construct each holographic disc within the single-disc holographic scanning subsystem employed in the tunnel scanning system of the first illustrative embodiment;

Fig. 3A6 is a schematic representation of the laser scanning pattern projected from the single-disc holographic laser scanning subsystem employed in the tunnel-type scanning system of the first illustrative embodiment of the present invention;

Figs. 3A7A through 3A7C, taken together, show the subcomponents of the single-disk holographic laser scans subsystems of the first illustrative embodiment. configured together on the analog signal processing boards, decode signal processing boards and within the housing

Fig. 3A8A is an elevated view of the home-pulse mark sensing module of the present invention deployed about each holographic scanning disc in the system of the first illustrative embodiment present invention;

Fig. 3A8B is a plan view of the home pulse mark sensing module shown in Fig. 3A8A;

Figs. 3A8C1 and 3A8C2, taken together, show a schematic diagram of an analog signal processing circuit which can be used to implement the home-pulse detector employed in the holographic laser scanning subsystems of the first illustrative embodiment of the present invention;

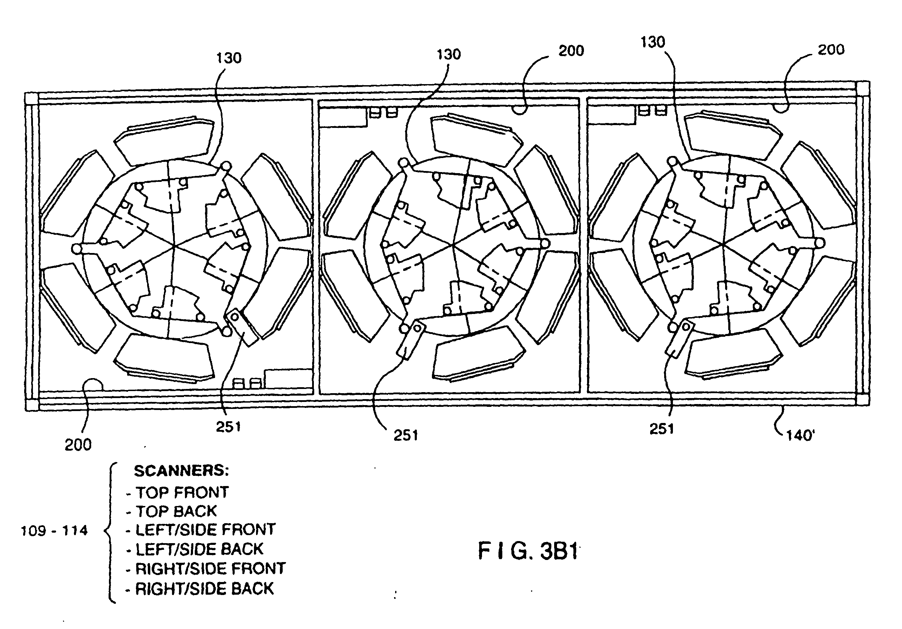

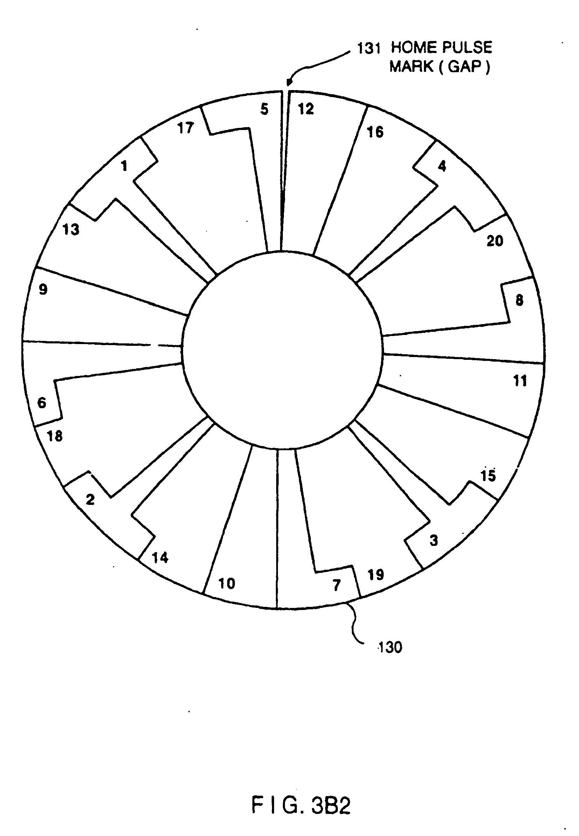

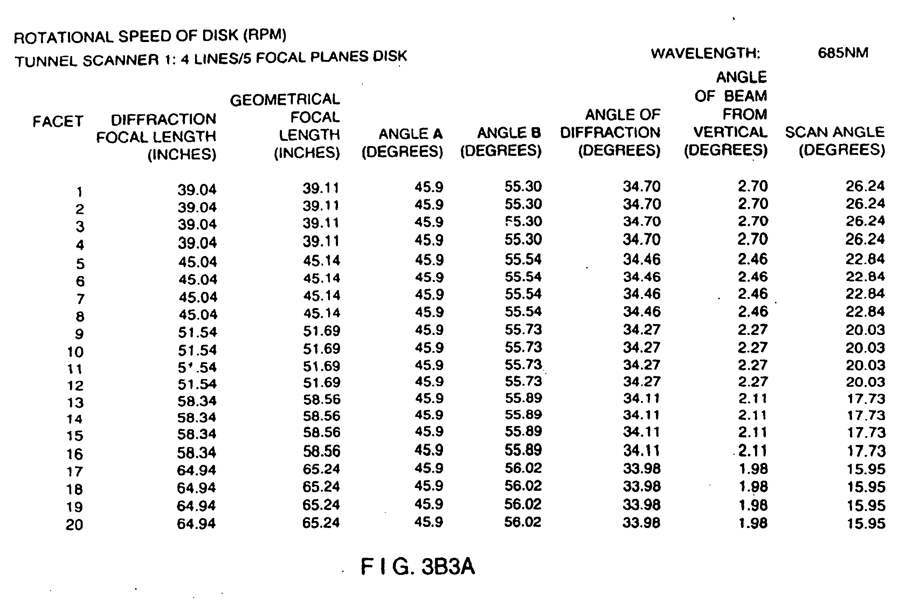

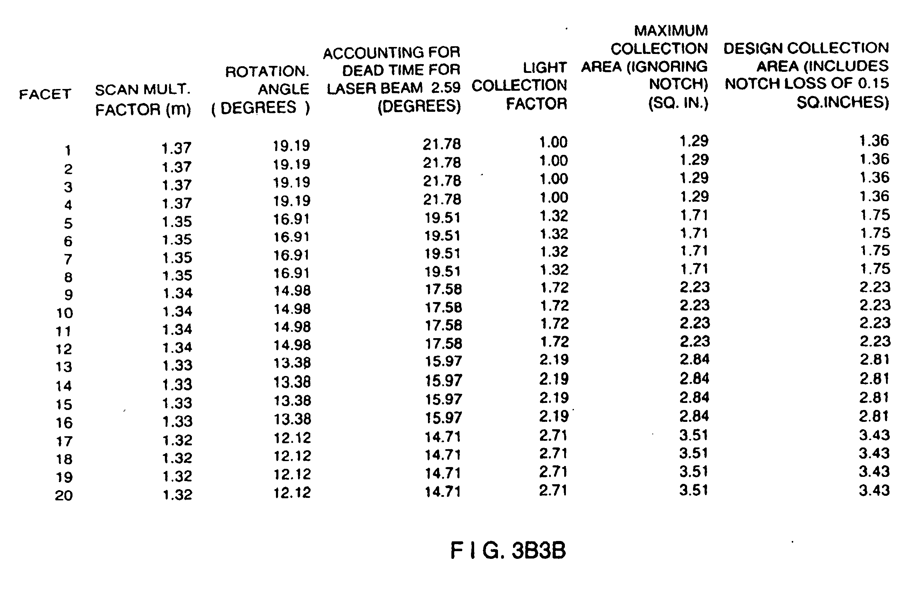

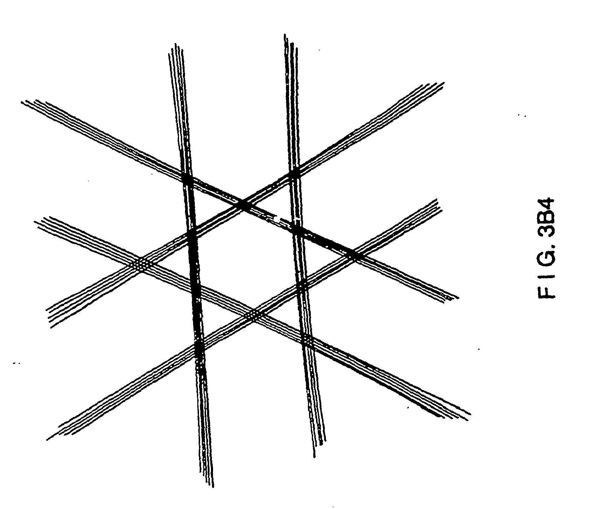

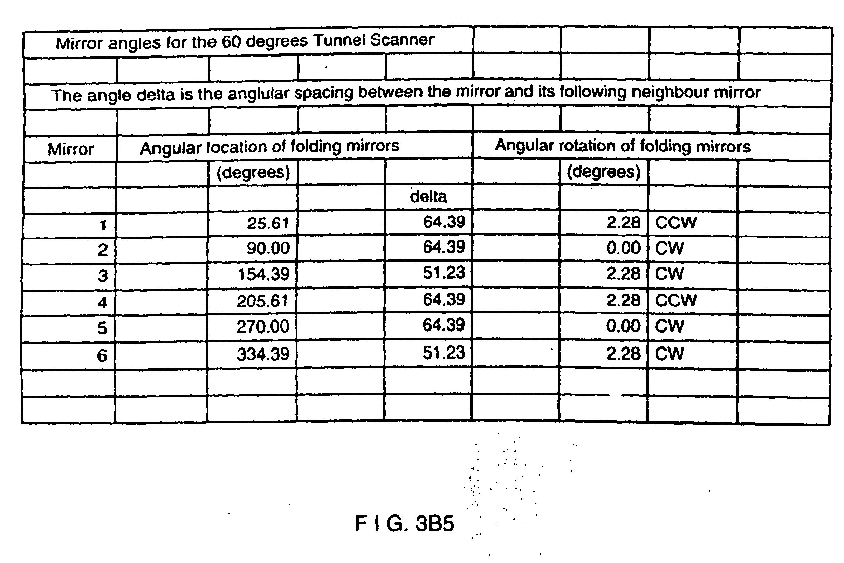

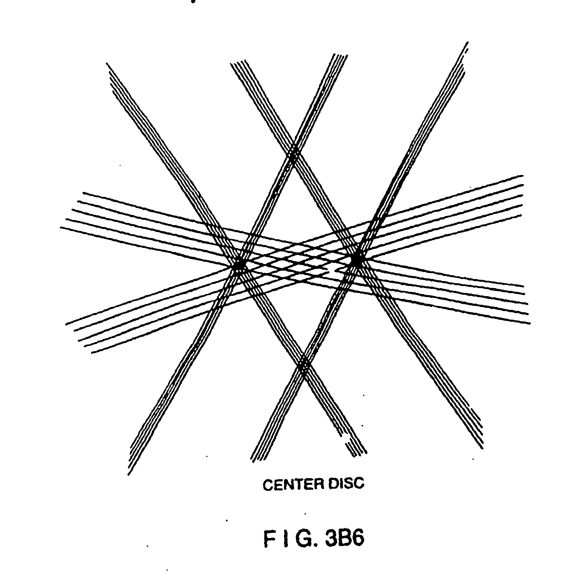

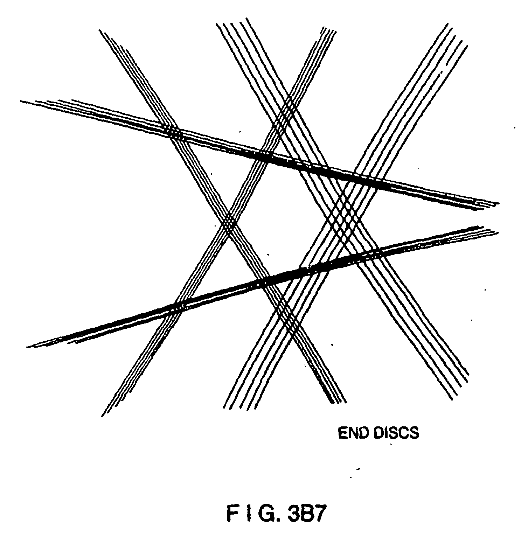

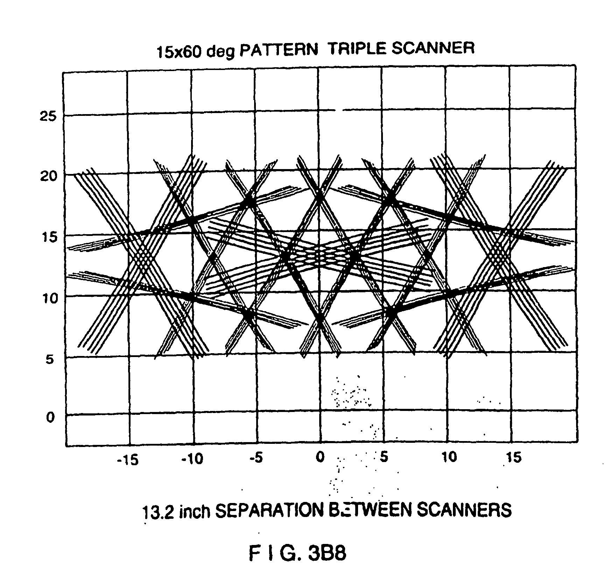

Fig. 3B1 is a plan view of the triple-disc holographic scanning subsystem (e.g. indicated as Top/Front, Top/Back, Left Side/Front, Left Side/Back, Right Side/Front and Right Side/Back in Fig. 1C and the Scanner Positioning Table shown in Fig. 2C), mounted on the top and sides of the tunnel-type scanning system of the first illustrative embodiment, showing three holographic scanning discs mounted on an optical bench with 13.3 inches spacing between the axis of rotation of each neighboring holographic scanning disc, and each holographic scanning disc being surrounded by six beam folding mirrors, six parabolic light collection mirrors, six laser beam production modules, six photodetectors, and six analog and digital signal processing boards mounted on the optical bench of the subsystem;

Fig. 3B2 is a schematic representation of the layout of the volume-transmission type holographic optical elements (HOEs) mounted between the glass support plates of each holographic scanning disc employed within the triple-disc holographic scanning subsystem shown in Fig. 3B1;

Figs. 3B3A and 3B3B, taken together, provide a table setting forth the design parameters used to construct within each holographic scanning disc each holographic scanning subsystem employed in the triple-disc holographic laser scanner shown in Fig. 3B1;

Fig. 3B1 is a schematic representation of the laser scanning pattern projected from the single-disc holographic laser scanning subsystem employed in the triple-disc holographic laser scanner shown in Fig. 3B4, when no beam folding mirrors associated therewith are angularly located or rotated;

Fig. 3B5 is a table setting forth the angular location and rotation of each beam folding mirror in the center and end-located holographic scanning subsystems employed in the tripie-disc holographic laser scanner shown in Fig. 3B1;

Fig. 3B6 is a schematic representation of the laser scanning pattern projected from the center holographic laser scanning subsystem employed in the triple-disc holographic laser scanner shown in Fig. 3B1, wherein each beam folding mirror associated therewith is angularly located and rotated as shown in the table of Fig. 3B5, to achieve the desired scanning pattern;

Fig. 3B7 is a schematic representation of the laser scanning pattern projected from end-located holographic laser scanning subsystems employed in the triple-disc holographic laser scanner shown in Fig. 3B1 wherein each of beam folding mirrors associated therewith is angularly located and rotated to achieve the desired scanning pattern;

Fig. 3B8 is a schematic representation of the laser scanning pattern projected from the triple-disc holographic laser scanner shown in Fig. 3B1,

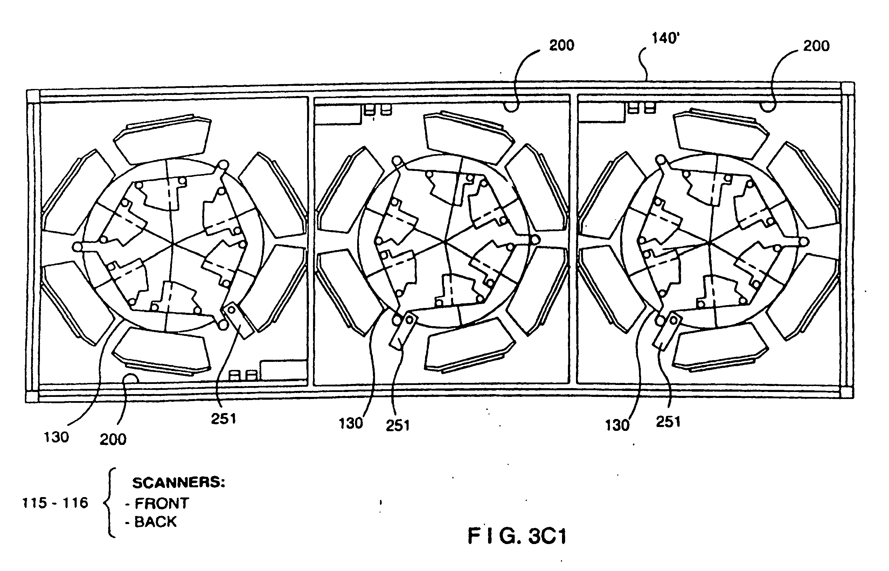

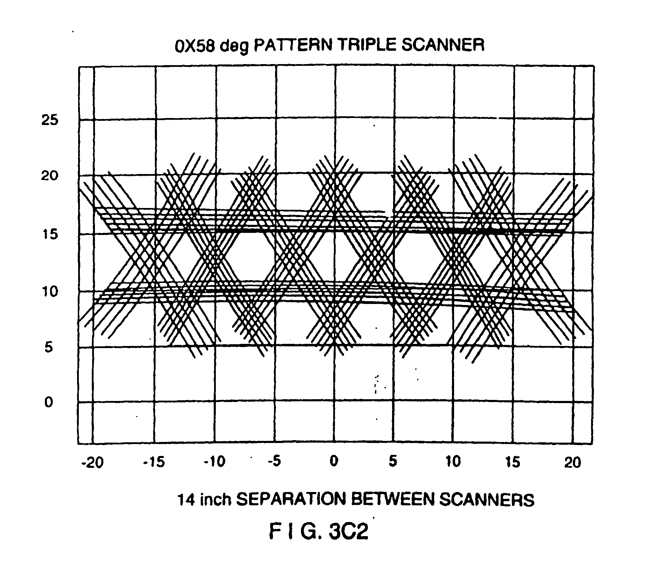

Fig. 3C1 is a plan view of the triple-disc holographic scanning subsystem (e.g. indicated as Front and Back in Fig. 1C and the Scanner Positioning Table shown in Fig. 2C), mounted on the top of the tunnel-type scanning system of the illustrative embodiment, showing three holographic scanning discs mounted on an optical bench with 14.0 inches spacing between the axis of rotation of each neighboring holographic scanning disc, and each holographic scanning disc being surrounded by six beam folding mirrors, six parabolic light collection mirrors, six laser beam production modules, six photodetectors, and six analog and digital signal processing boards mounted on the optical bench of the subsystem;

Fig. 3C2 is a schematic representation of the laser scanning pattern projected from the triple-disc holographic laser scanner shown in Fig. 3C1;

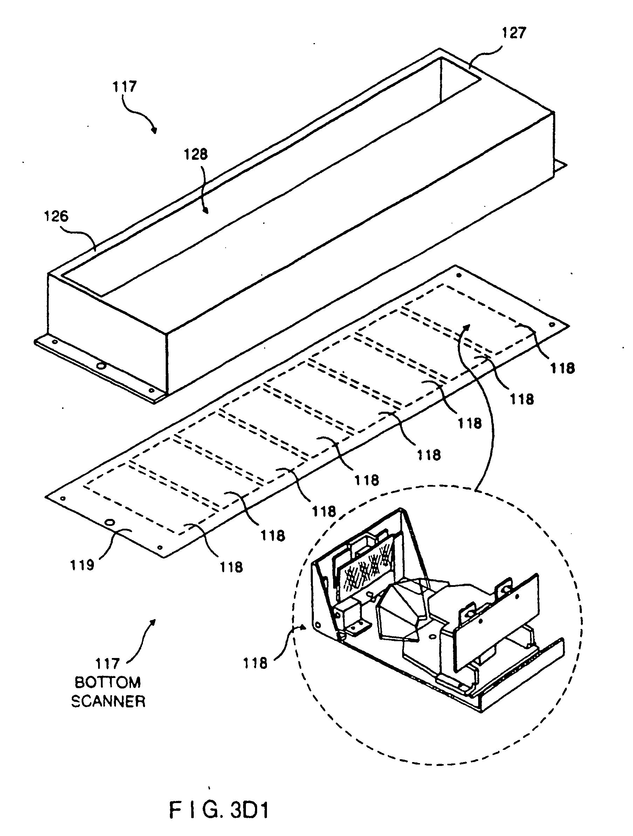

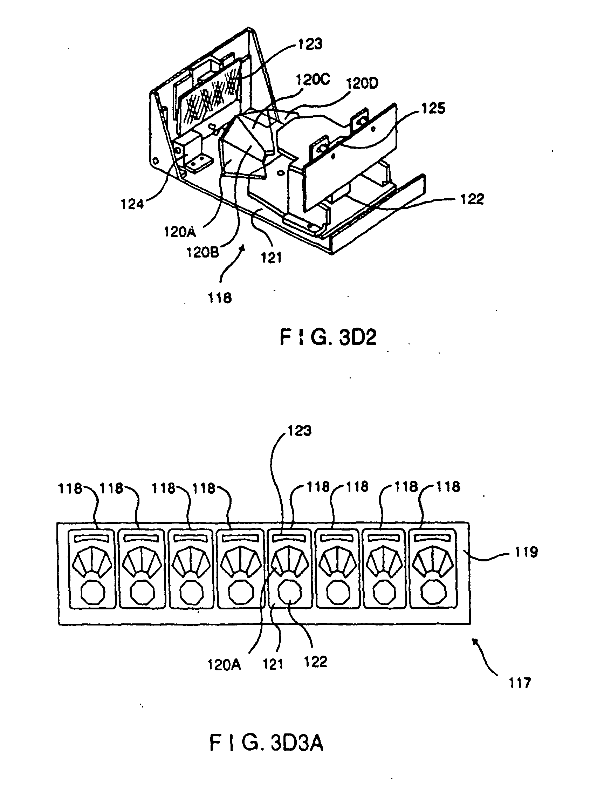

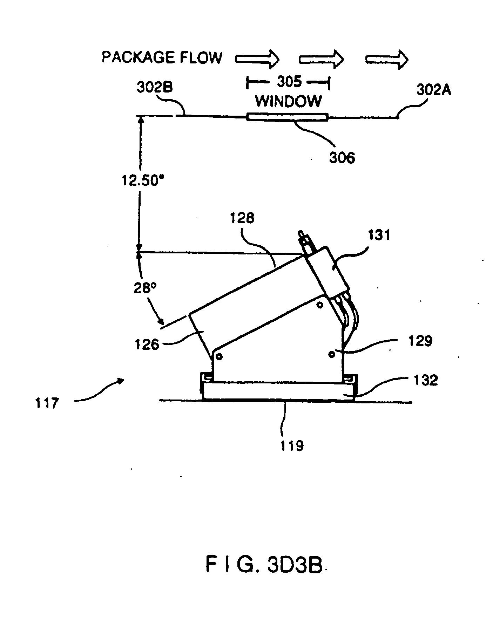

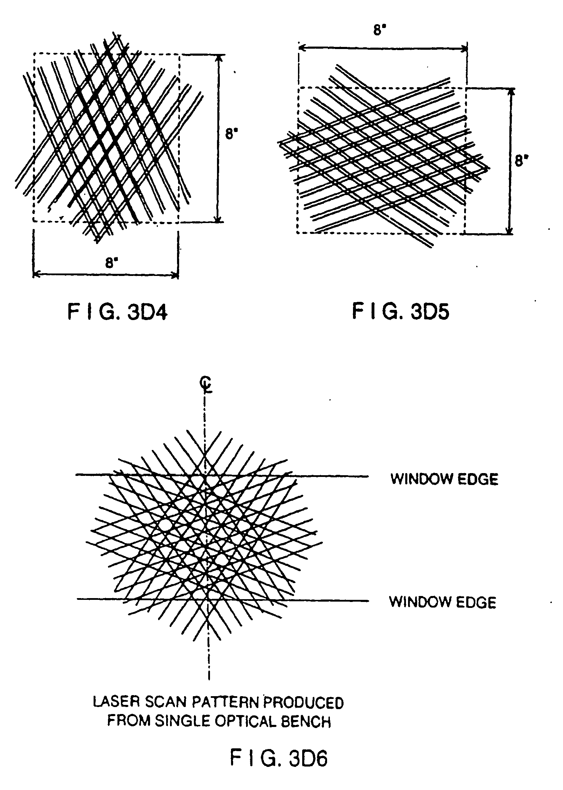

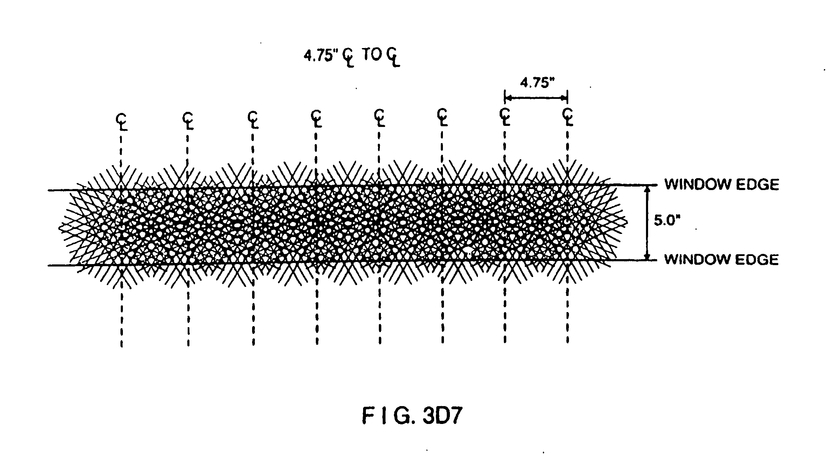

Fig. 3D1 is an exploded diagram of the fixed laser projection scanner mounted beneath the conveyor belt surface of the system and between the first and second conveyor belt platforms of the conveyor subsystem employed in the tunnel scanning system of the first illustrative embodiment of the present invention, showing the optical bench upon which eight fixed projection-type laser scanning subsystems are mounted and enclosed within a scanner housing having a rugged glass scanning window bridging the gap provided between the first and second conveyor belt platforms;

Fig. 3D2 is a perspective diagram of the projection-type laser scanning subsystem mounted within the bottom-mounted fixed projection scanner shown in Fig. 3DI, showing an eight-sided polygon scanning element rotatably mounted closely adjacent to a stationary mirror array comprised of four planar mirrors, and a light collecting mirror centrally mounted for focusing light onto a photodetector disposed slightly beyond the polygon scanning element;

Fig. 3D3A is a plan view of the eight fixed-projection laser scanning subsystems mounted on the optical bench of the bottom-mounted laser scanner shown in Fig. 3D1;

Fig. 3D3B is an elevated end view of the eight fixed-projection laser scanning subsystems mounted on the optical bench of the bottom-mounted laser scanner shown in Fig. 3D1, so that the scanning window(s) of the fixed projection laser scanning subsystems (i.e. platforms or benches) are disposed at about a 28° angle with respect to the optically transparent extending across the width extent of the plane of the conveyor belt structure - of the system;

Fig. 3D4 is a schematic representation of the partial scanning pattern produced by the eight-sided polygon scanning element and two stationary mirrors mounted adjacent to the central plane of each fixed-projection laser scanning subsystem mounted on the optical bench of the bottom-mounted laser scanner shown in Fig. 3D1;

Fig. 3D5 is a schematic representation of the partial scanning pattern produced by the eight-sided polygon scanning element and two outer stationary mirrors mounted adjacent to the two inner-located stationary mirrors in each fixed-projection laser scanning subsystem mounted on the optical bench of the bottom-mounted laser scanner shown in Fig. 3D1;

Fig. 3D6 is a schematic representation of the complete scanning pattern produced by the eight-sided polygon scanning element and four stationary mirrors mounted about the central plane of each fixed-projection laser scanning subsystem mounted on the optical bench of the bottom-mounted laser scanner shown in Fig. 3D1;

Fig. 3D7 is a schematic representation of the resultant (collective) omni-directional scanning pattern produced through the conveyor-mounted scanning window, by the eight fixed-projection laser scanning subsystems mounted on the optical bench of the bottom-mounted laser scanner shown in Fig. 3D1;

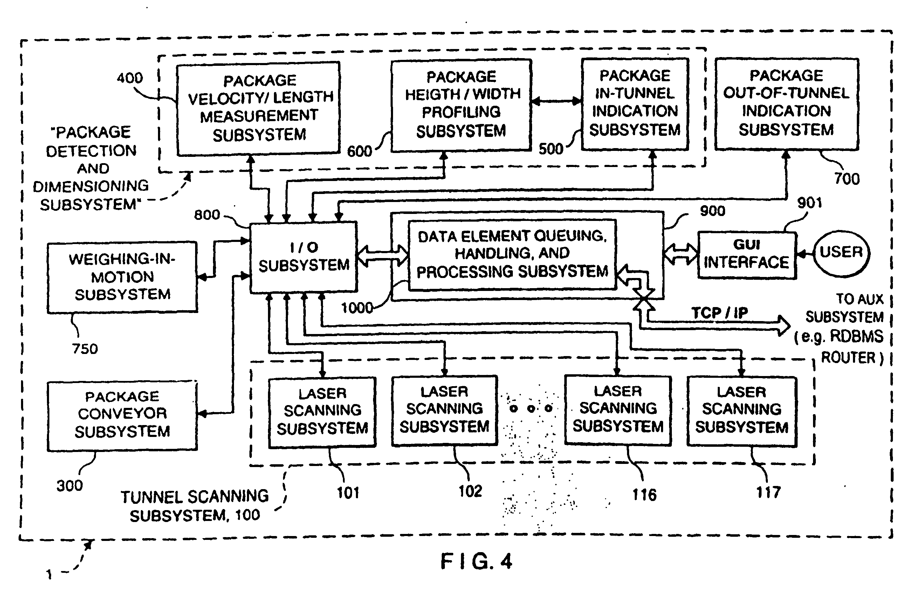

Fig. 4 is a schematic block diagram illustrating that the holographic and fixed-projection laser scanning subsystems, the package dimensioning/measurement subsystem, package velocity and length measurement subsystem, the package-in-tunnel indication subsystem, the package-out-of-tunnel subsystem, the package weighing-in-motion subsystem, the data-element queuing, handling and processing subsystem, the input/output port multiplexing subsystem, and the conveyor belt subsystem integrated together within the automated tunnel-type package identification and measurement system of the first illustrative embodiment of the present invention;

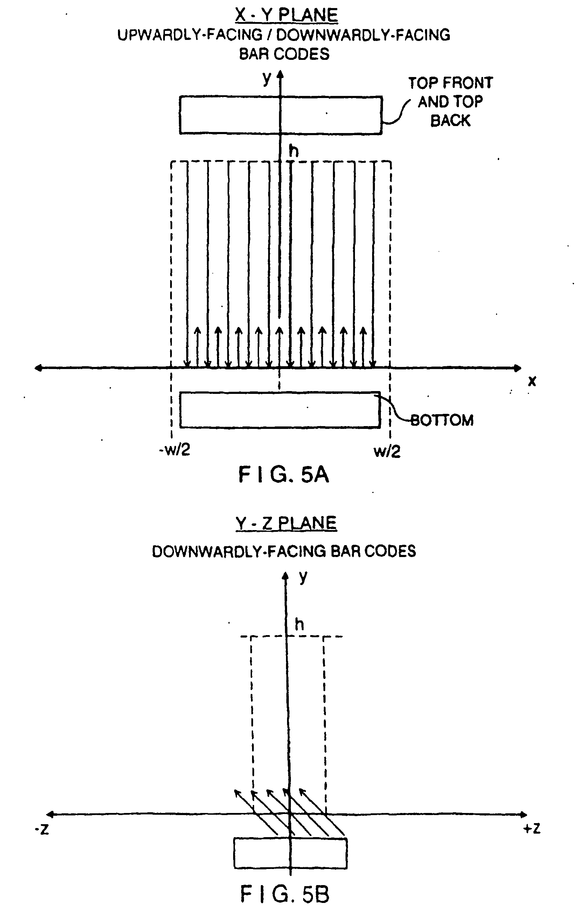

Fig. 5A is a schematic diagram showing the directions of omni-directional scanning provided in the X-Y plane of the 3-D scanning volume of the tunnel scanning system of the first illustrative embodiment Top Front and Top Back holographic laser scanning subsystems, and bottom-mounted fixed projection scanning subsystem employed therein;

Fig. 5B is a schematic diagram showing the direction of omni-directional scanning provided in the Y-Z plane of the 3-D scanning volume of the tunnel scanning system of the first illustrative embodiment, by the bottom-mounted fixed-projection laser scanning subsystem employed therein;

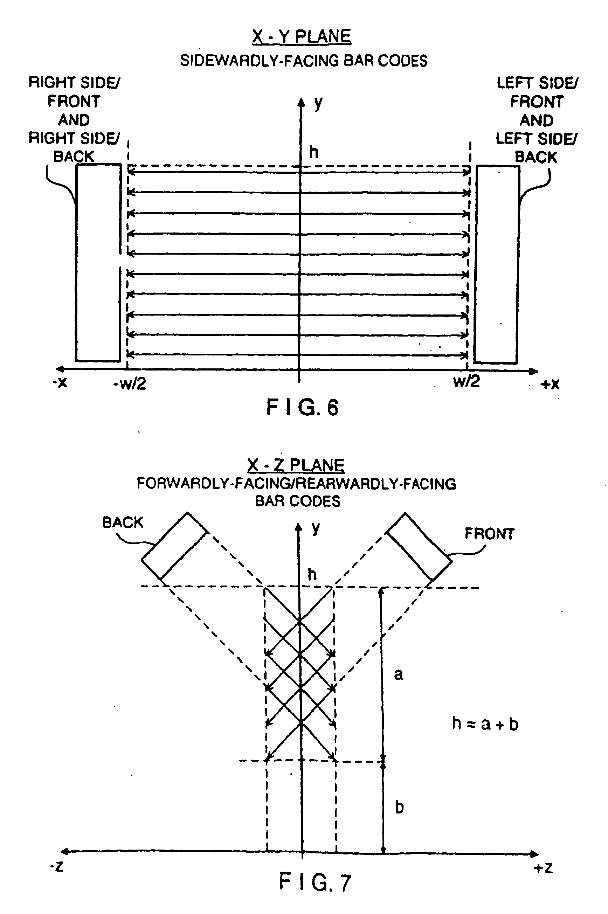

Fig. 6 is a schematic diagram showing the direction of omni-directional scanning provided in the X-Y plane of the 3-D scanning volume of the tunnel scanning system of the first illustrative embodiment, by the Left Side Front, Left Side Back, Right Side Front and Right Side Back holographic laser scanning subsystems employed therein;

Fig. 7 is a schematic diagram showing the direction of omni-directional scanning provided in the Y-Zplane of the 3-D scanning volume of the tunnel scanning system of the first illustrative embodiment, by the Top Front and Top Back holographic laser scanning subsystems employed therein;

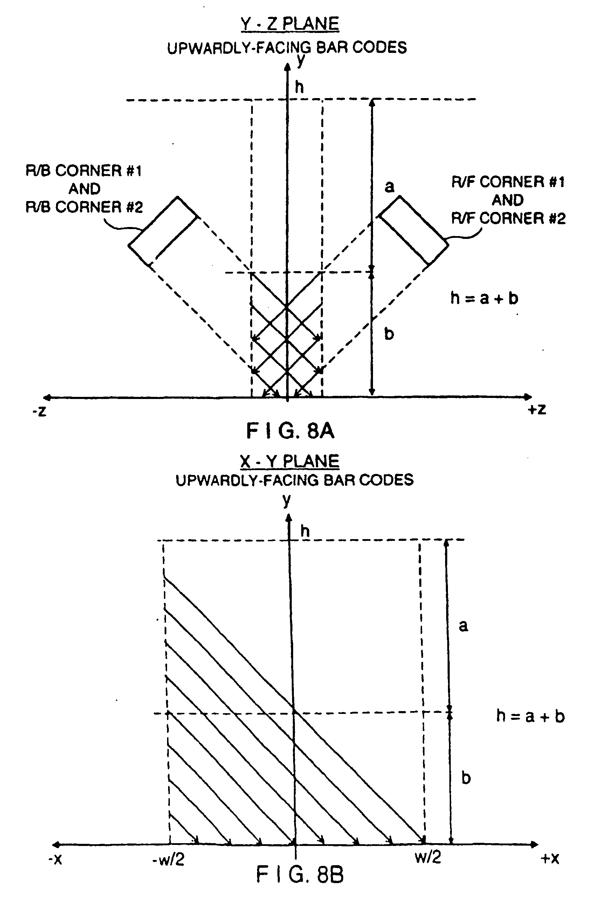

Fig. 8A is a schematic diagram showing the direction of omni-directional scanning provided in the Y-Zplane of the 3-D scanning volume of the tunnel scanning system of the first illustrative embodiment of the present invention, by the holographic laser scanning subsystems (indicated by R/B Corner #1, R/B Corner #2, R/F Corner #1 and R/F Corner #2) employed therein;

Fig. 8B is a schematic diagram showing the direction of omni-directional scanning provided in the X-Y plane of the 3-D scanning volume of the tunnel scanning system of the first illustrative embodiment of the present invention, by the holographic laser scanning subsystems (indicated by R/B Corner #1, R/B Corner #2, R/F Corner #1 and R/F Corner #2) employed therein;

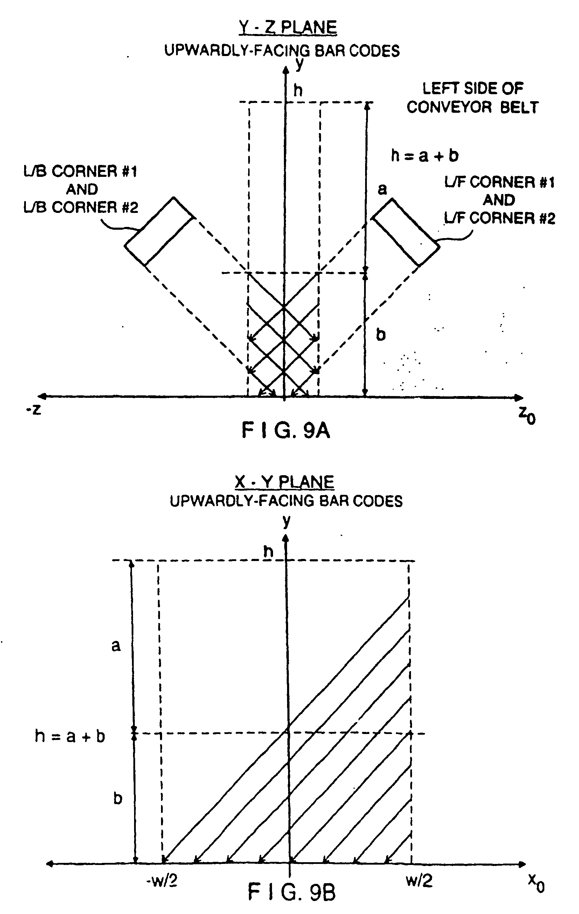

Fig. 9A is a schematic diagram showing the direction of omni-directional scanning provided in the Y-Z plane of the 3-D scanning volume of tunnel scanning system of the first illustrative embodiment of the present invention, by the holographic laser scanning subsystems (indicated by L/B Corner #1, L/B Corner #2, L/F Corner #1 and L/F Corner #2) employed therein;

Fig. 9B is a schematic diagram showing the direction of omni-directional scanning provided in the X-Yplane of the 3-D scanning volume of tunnel scanning system of the first illustrative embodiment of the present invention, by the holographic laser scanning subsystems (indicated by L/B Corner #1, L/B Corner #2, L/F Corner #1 and L/F Corner #2) employed therein;

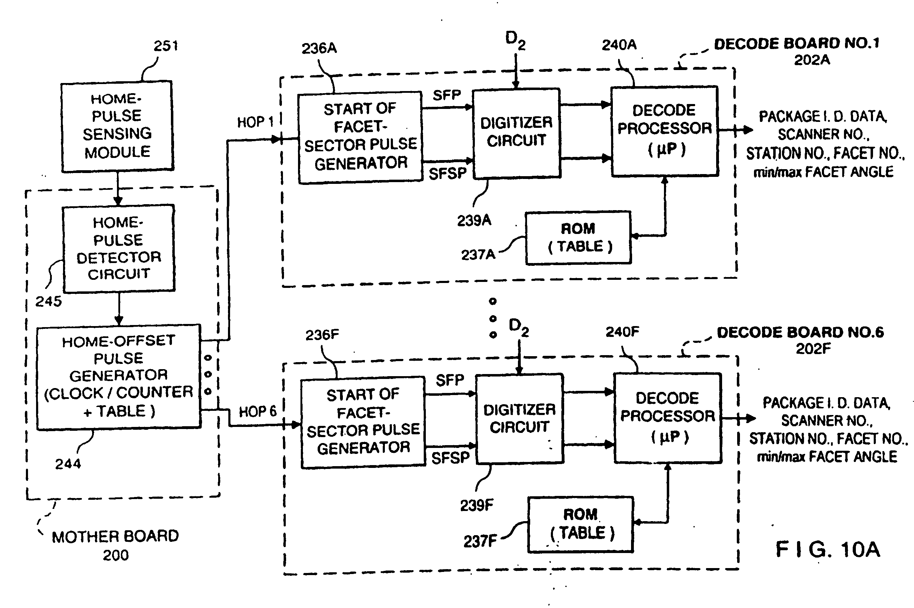

Fig. 10A is a schematic representation of the components on the control board and decode processing boards associated with holographic scanning disc employed within the tunnel scanning subsystem of the first illustrative embodiment of the present invention, showing the home-pulse detector and home-offset pulse (HOP) generator on the control board, and the start-of-facet-sector pulse (SOFSP) generator, digitizer circuitry, decode signal processor and ROM containing relative timing information about each SOFSP in relation to the HOP sent to the decode processing board from the control board of the present invention;

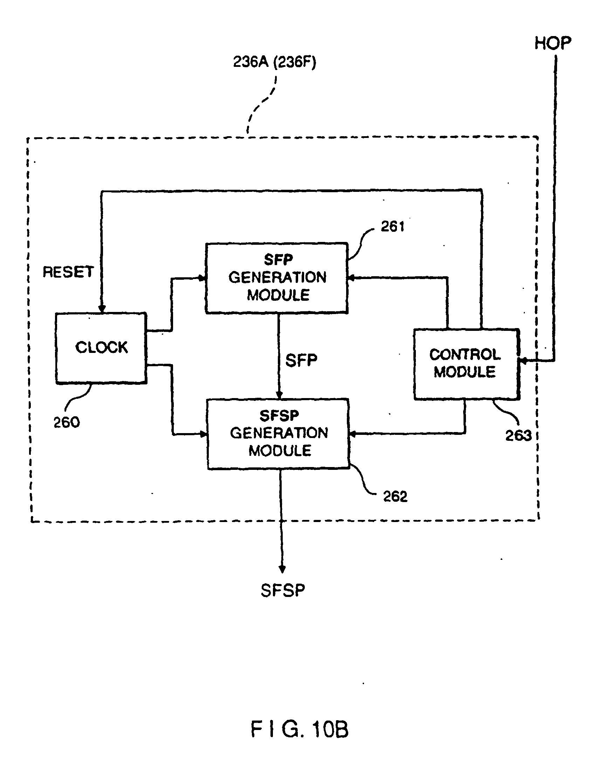

Fig. 10B is a schematic representation of the start-of-facet-sector pulse (SOFSP) generator employed on each decode board associated with a holographic laser scanning subsystem in the system of the first illustrative embodiment of the present invention;

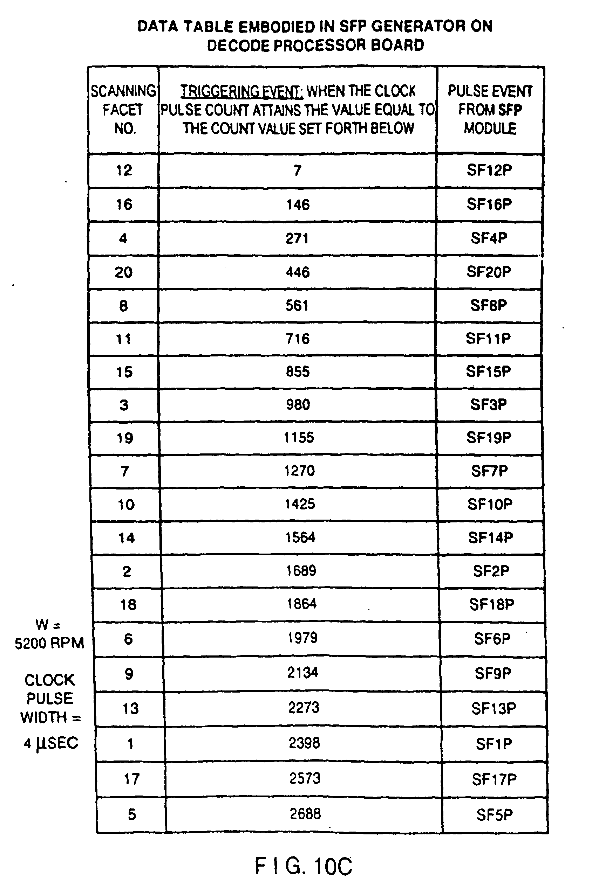

Fig. 10C is a first table containing parameters and information that are used within the SOFP generation module of the SOFSP generator shown in Fig. 10B;

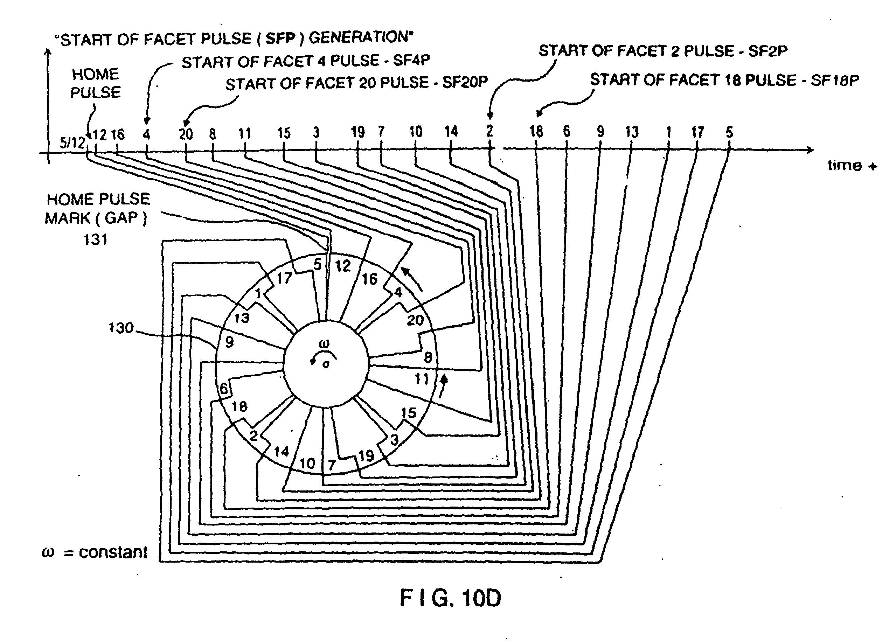

Fig. 10D is a schematic representation of the operation of the start-of-facet pulse (SOFP) generator employed within each SOFSP generator of the present invention, wherein start of facet pulses are generated within the SOFP generator relative to the home-offset pulse (HOP) received from the HOP generator on the control board associated with each holographic scanning disc;

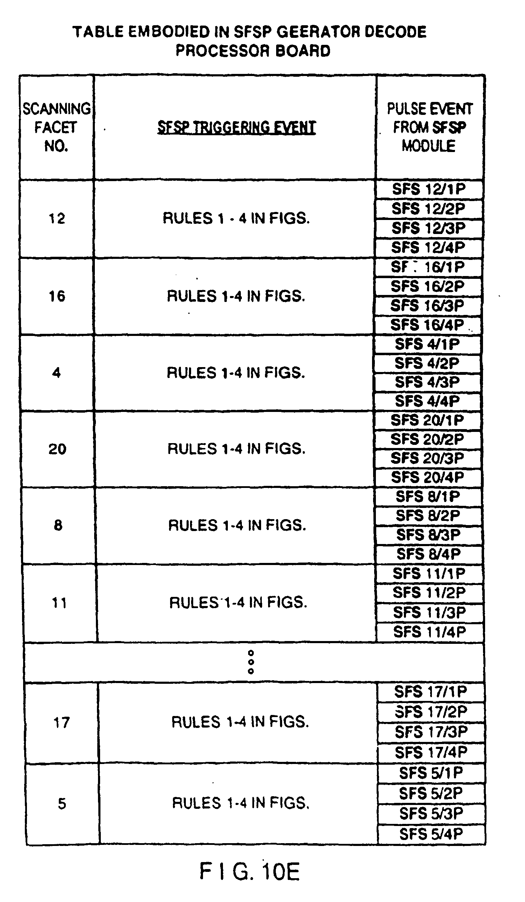

Fig. 10E is a second table containing parameters and information that are used within the SOFSP generation module of the SOFSP generator shown in Fig. 10B;

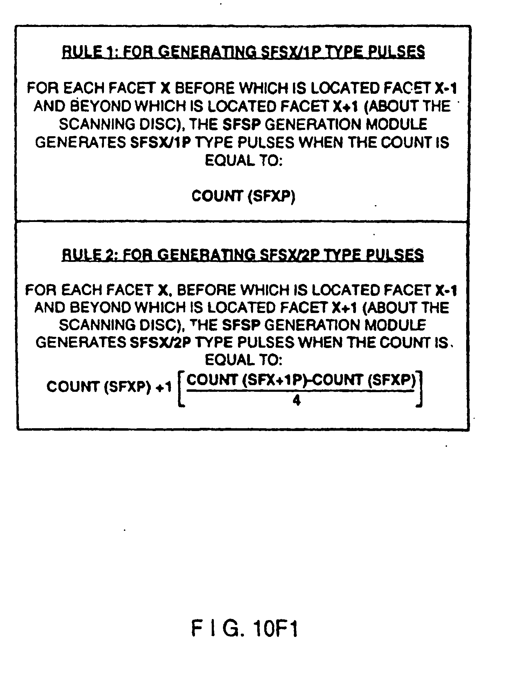

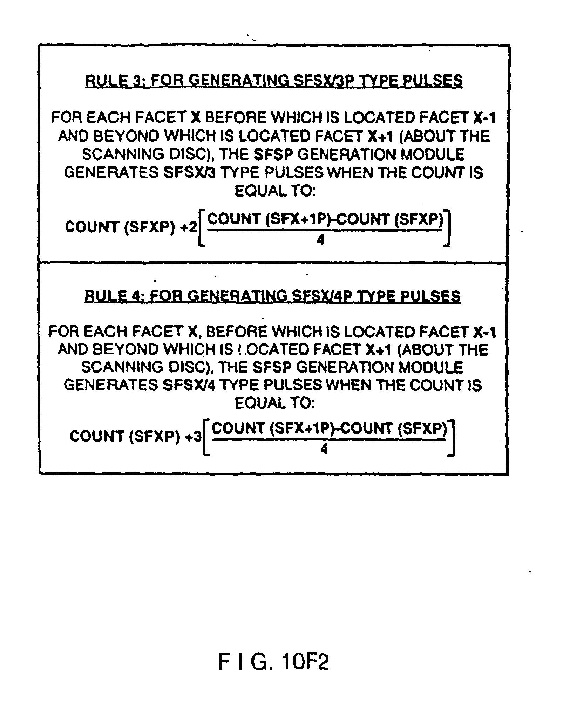

Fig. 10F1 and 10F2 set forth a table containing a set of production rules used within the SOFSP generation module of the SOFSP generator shown in Fig. 10B, to generate start-of-facet-sector pulses therewithin;

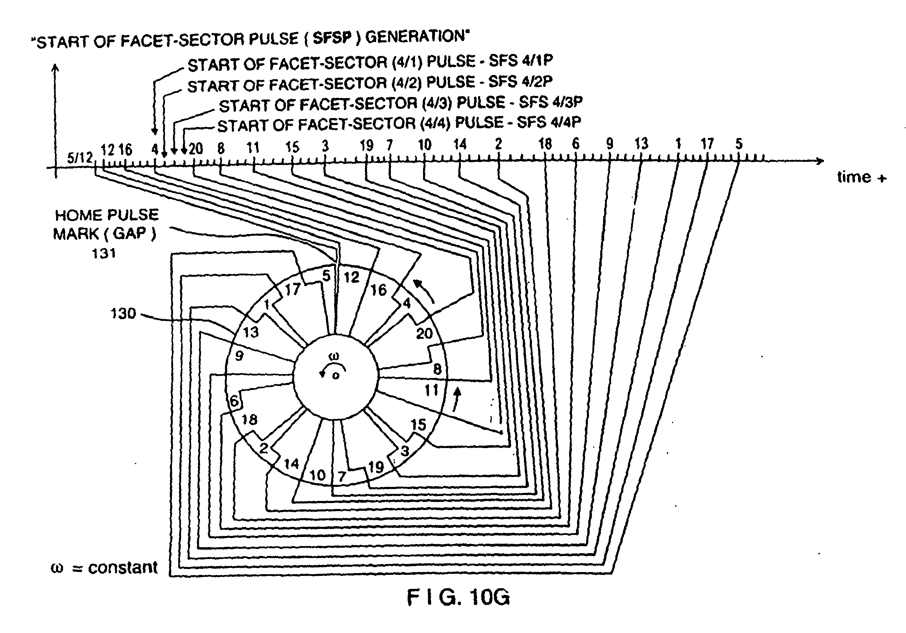

Fig. 10G is a schematic representation of the operation of the start-of-facet-sector pulse (SOFSP) generator of the present invention, wherein start of facet sector pulses (SOFSPs) are generated within the SOFSP generator relative to the home-offset pulse (HOP) received from the HOP generator on the control board associated with each holographic scanning disc;

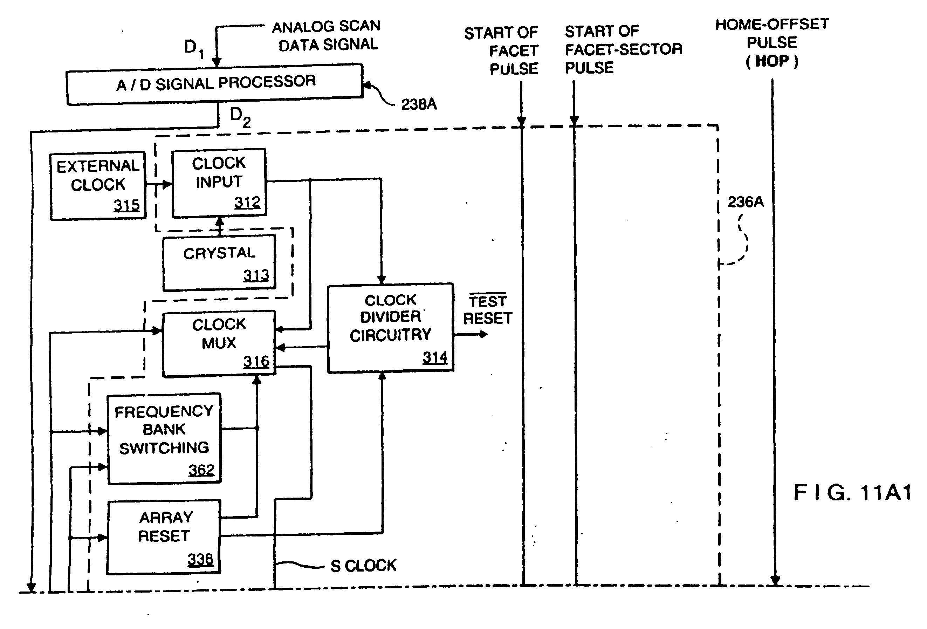

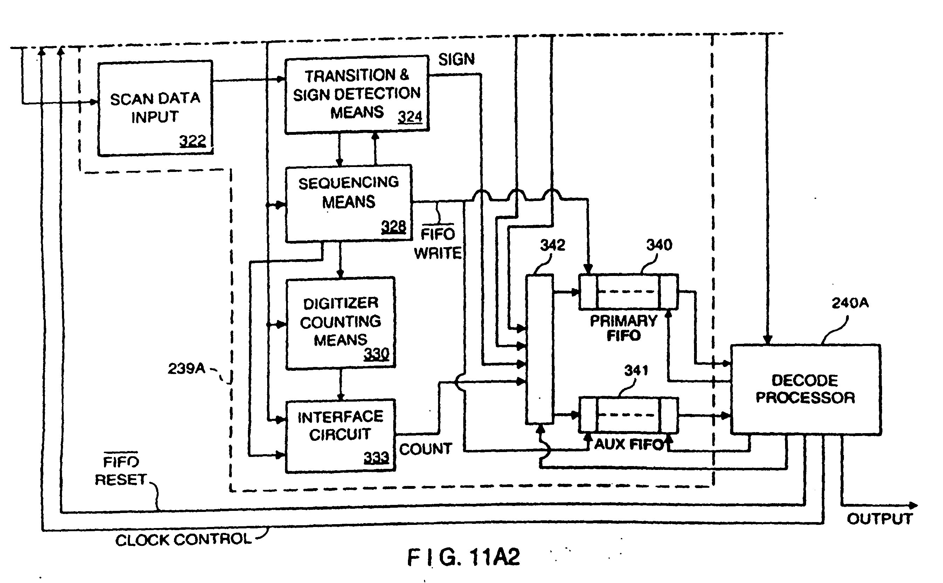

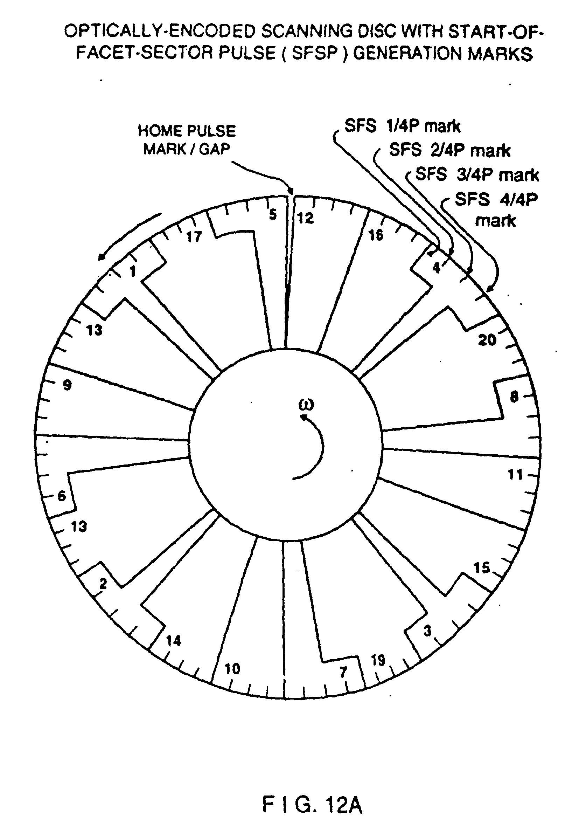

Figs. 11A1 and 11A2 taken together, provide a schematic diagram of the digitizing circuit shown in Fig. 10A, using a pair of dual FIFO memory storage buffers to synchronously track digital scan data and information about the facet-sectors on the optically-encoded holographic scanning disc of Fig. 12A used to generate the laser scanning beam that was u sed to collect such digital scan data from a bar code symbol on a package transported through the tunnel scanning subsystem of the first illustrative embodiment of the present invention;

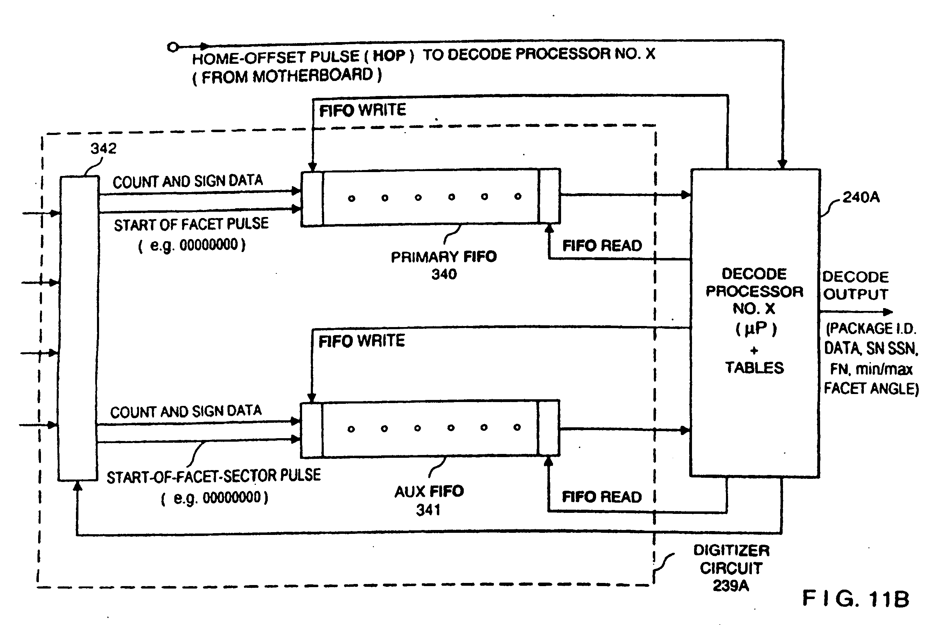

Figs. 11B is a schematic diagram showing in greater detail the digitizing circuit shown in Fig. 10A;

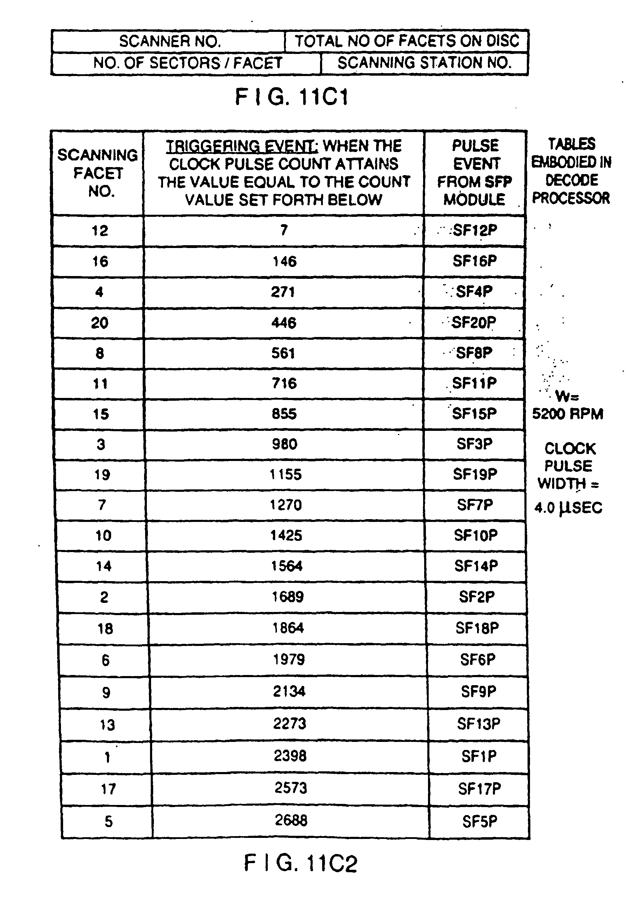

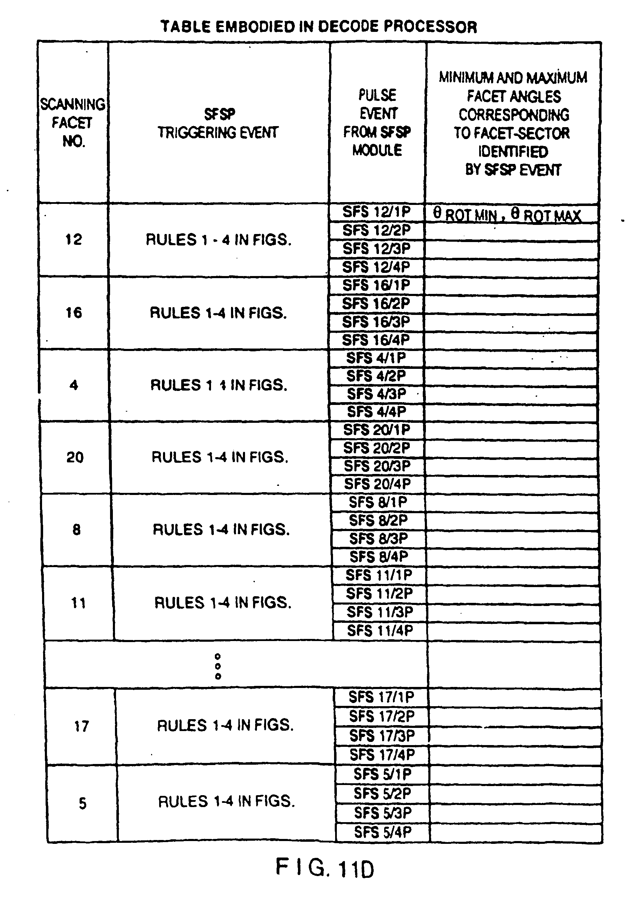

Figs. 11C1, 11C2 and 11D set forth tables containing parameters and information that are used within the decode processor of the present invention shown in Fig. 11B in order to recover digital count data from time-based facet-sector related information, and generate decoded symbol character data and the minimum and maximum facet sector angles that specify the facet sector on a particular holographic scanning disc used to generate the laser scanning beam/plane that collects the scan data associated with the decoded bar code symbol;

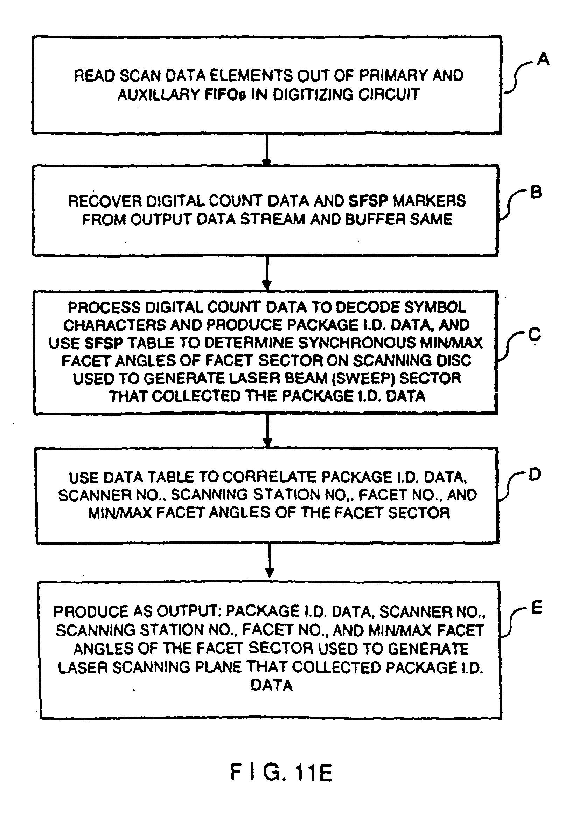

Fig. 11E is a high level flow chart describing the steps of the process carried out by the decode processor of the present invention shown in Fig. 11B;

Fig. 12A is a schematic diagram of the holographic scanning disc that contains an optically-encoded home-pulse mark as well as a series of start-of-facet-sector marks about the outer edge thereof for indicating where each facet sector along the disc begins, relative to the home pulse mark;

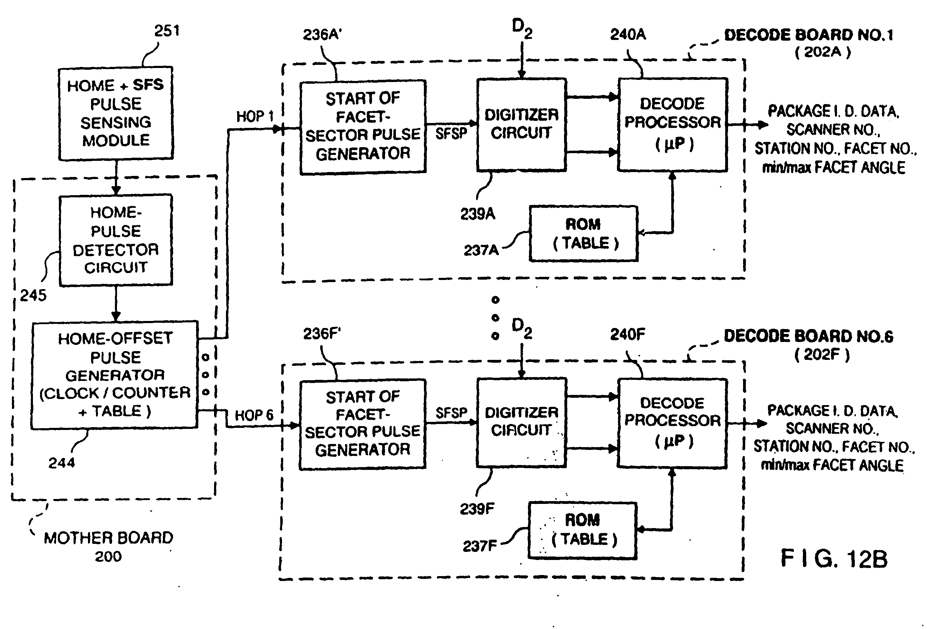

Fig. 12B is a schematic representation of the components on the control board and decode processing boards associated with an optically-encoded holographic scanning disc which can be employed within the tunnel scanning subsystem of the present invention, showing the home-pulse detector and home-offset pulse (HOP) generator on the control board, and the start-of-facet-sector pulse (SOFSP) generator, digitizer circuitry, decode signal processor and ROM containing relative timing information about each SOFSP in relation to the HOP sent to the decode processing board from the control board of the present invention;

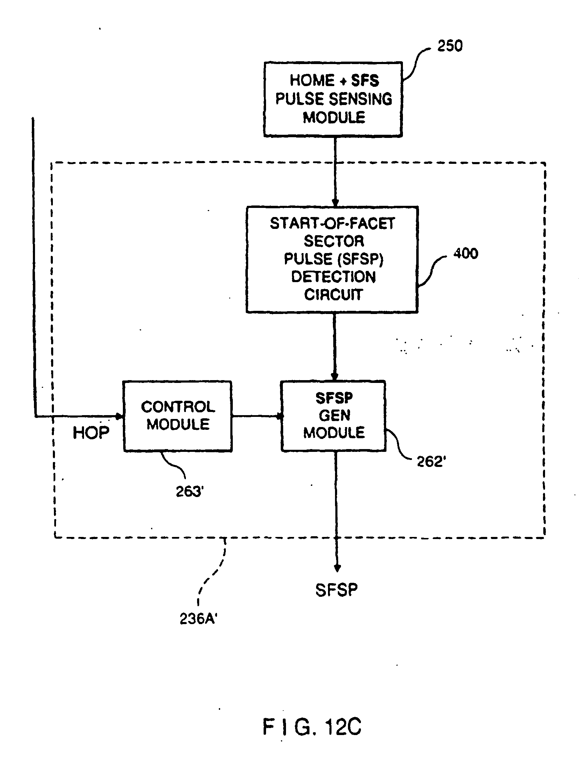

Fig. 12C is a schematic representation of the start-of-facet-sector pulse (SOFSP) generator employed on each decode board shown in Fig. 12B;

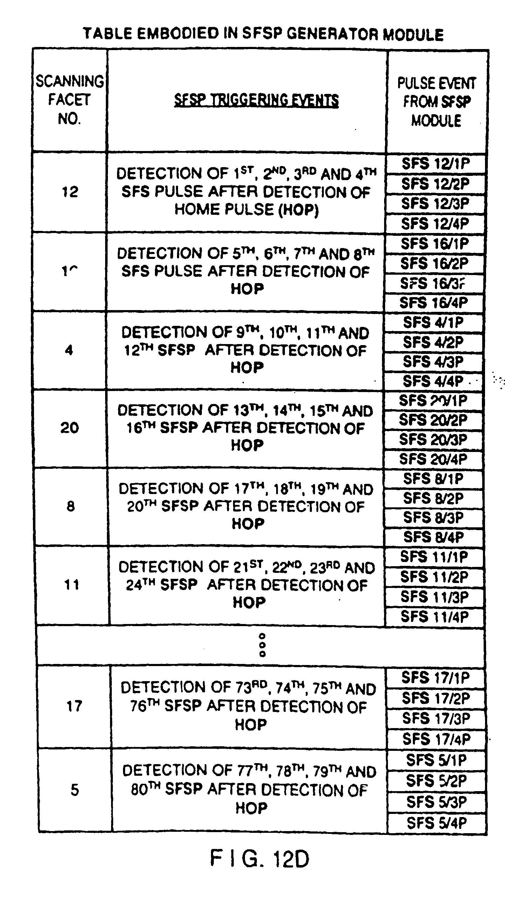

Fig. 12D is a table containing parameters and information that are used within the SOFSP generation module of the SOFSP generator shown in Fig. 12C;

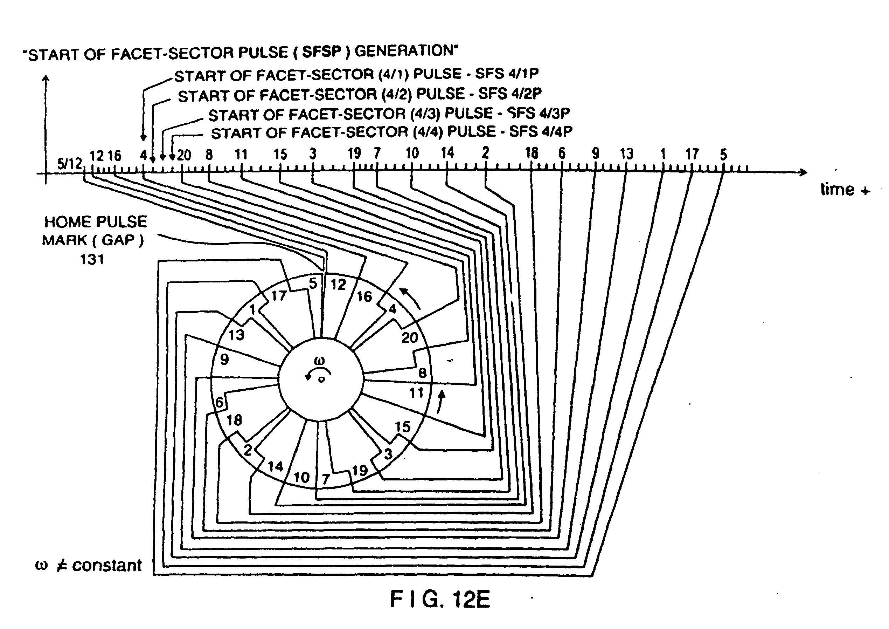

Fig. 12E is a schematic representation of the operation of the start-of-facet sector pulse (SOFSP) generator shown in Fig. 12C, wherein start of facet sector pulses are generated therewithin relative to the home-offset pulse (HOP) received from the HOP generator on the control board associated with each holographic scanning disc;

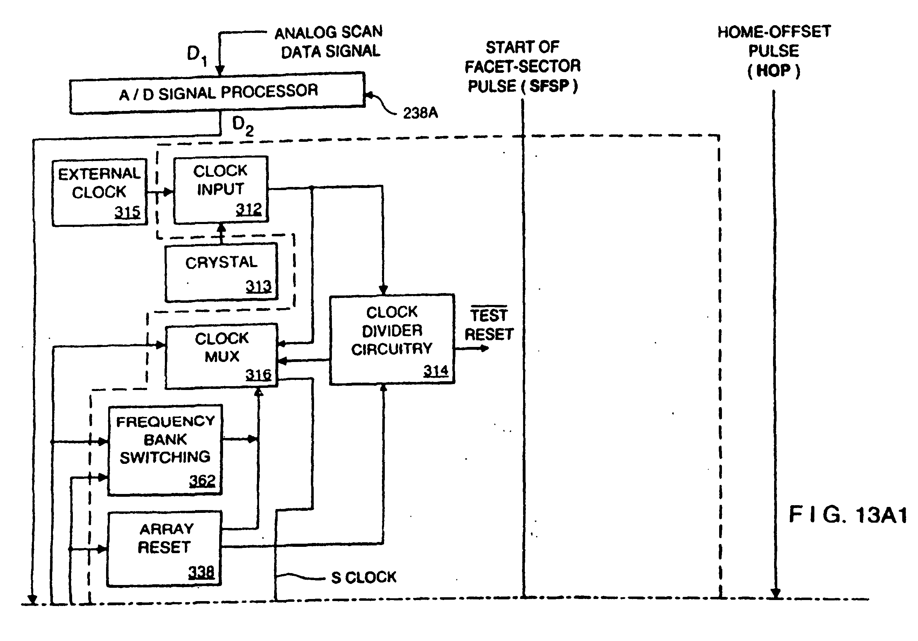

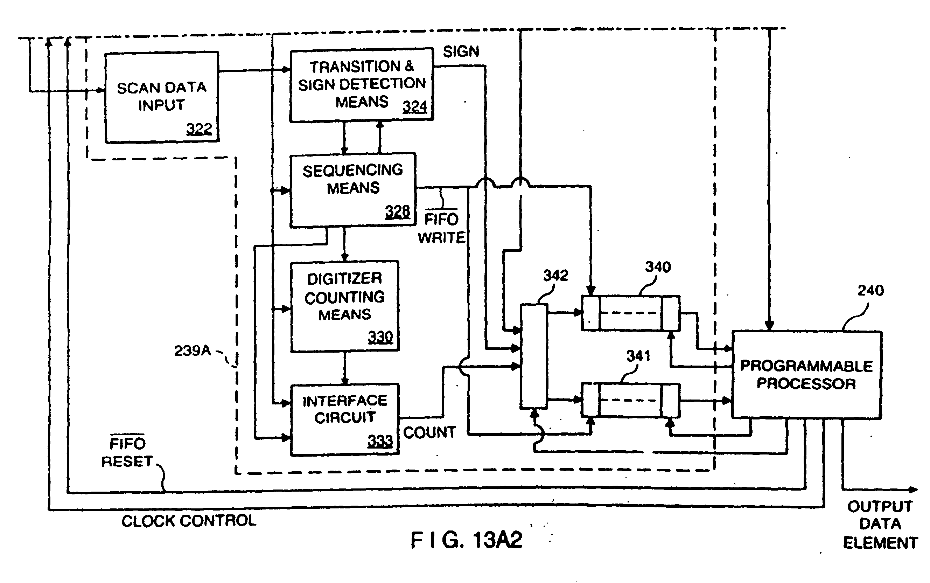

Figs. 13A1 and 13A2, taken together, set forth a schematic diagram of the digitizing circuit shown in Fig. 12B using a pair of dual FIFO memory storage buffers to synchronously track digital scan data and information about the facet-sectors on a holographic scanning disc used to generate the laser scanning beam that was used to collect such digital scan data from a bar code symbol on a package transported through the tunnel scanning subsystem hereof;

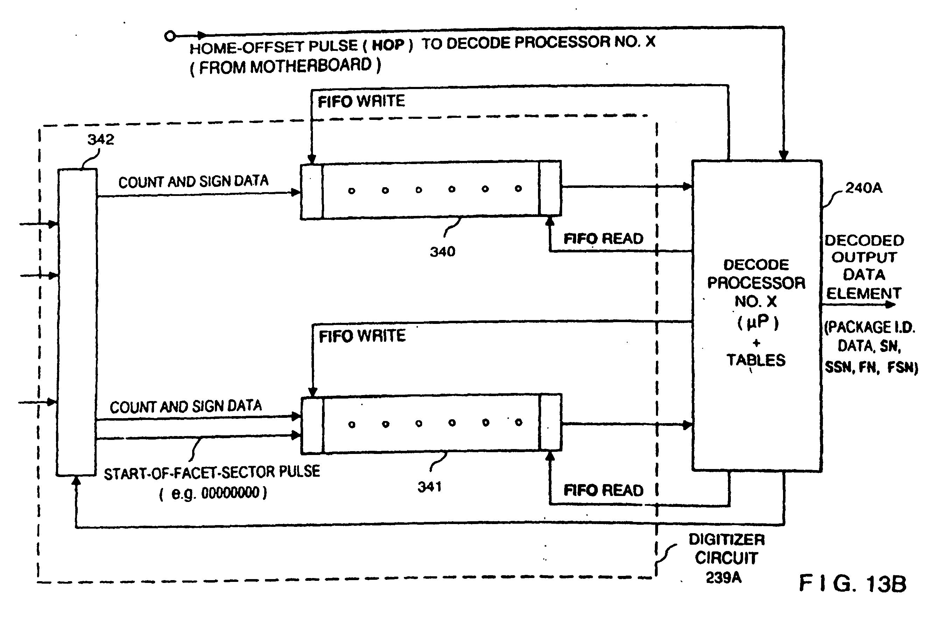

Fig. 13B is a schematic diagram showing the digitizing circuit of Figs. 13A1 and 13A2 in greater detail;

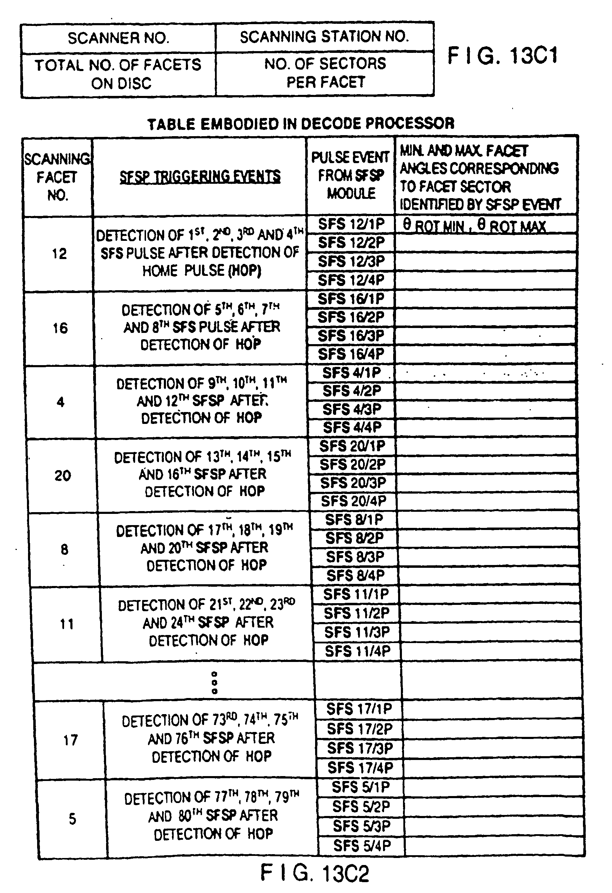

Figs. 13C1 and 13C2 are tables containing parameters and information that are used within the decode processor of the present invention shown in Fig. 13A in order to recover digital count data from time-based facet-sector related information, and generate decoded symbol character data and the minimum and maximum facet sector angles that specify the facet sector on a particular holographic scanning disc used to generate the laser scanning beam/plane that collects the scan data associated with the decoded bar code symbol;

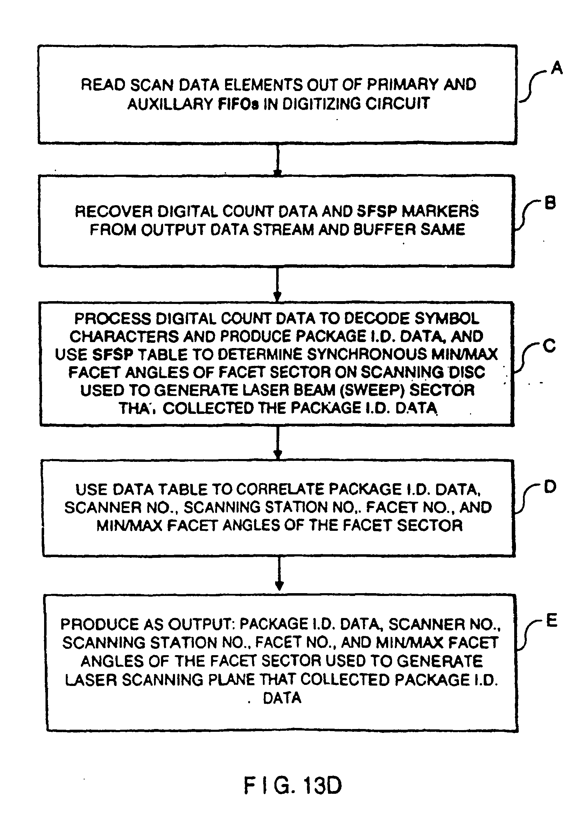

Fig. 13D is a high level flow chart describing the steps of the process carried out by the decode processor of the present invention shown in Fig. 12B;

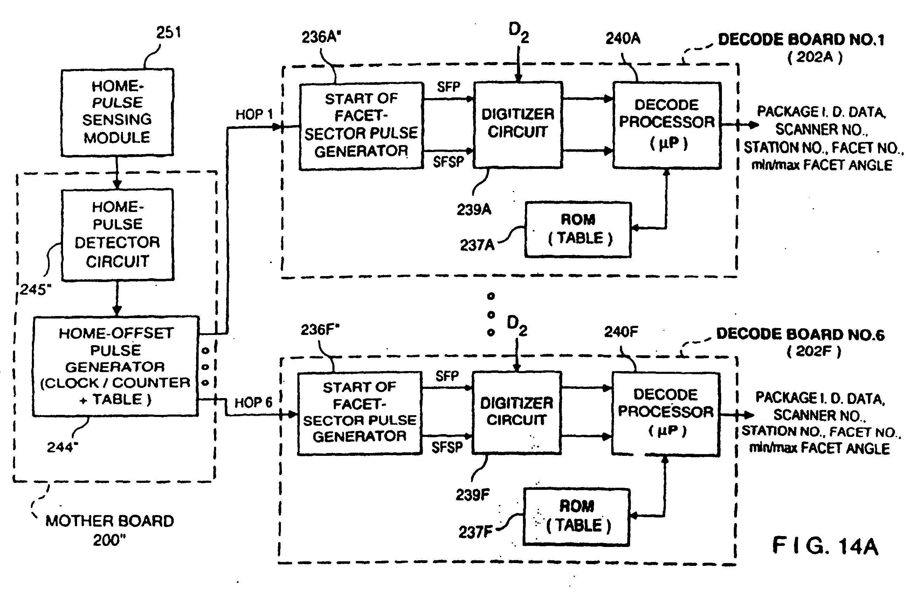

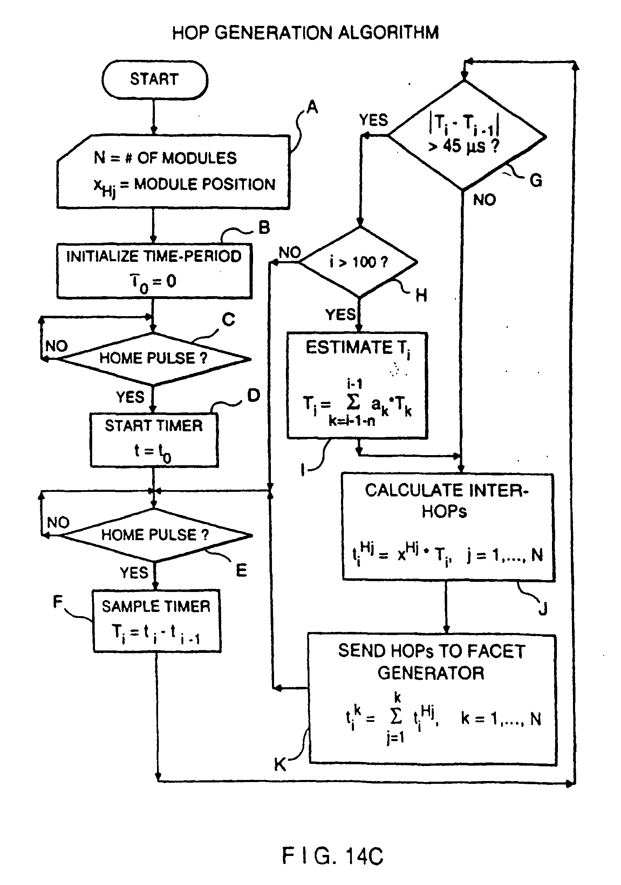

Fig. 14A is a schematic representation of the components on the control board and decode processing boards associated with a holographic scanning disc employed within an alternative embodiment of the holographic scanning subsystems in the tunnel scanning subsystem of the first illustrative embodiment of the present invention, showing the home-pulse detector and home-offset pulse (HOP) generator on the control board, and the start-of-facet-sector pulse (SOFSP) generator, digitizer circuitry, and decode signal processor.

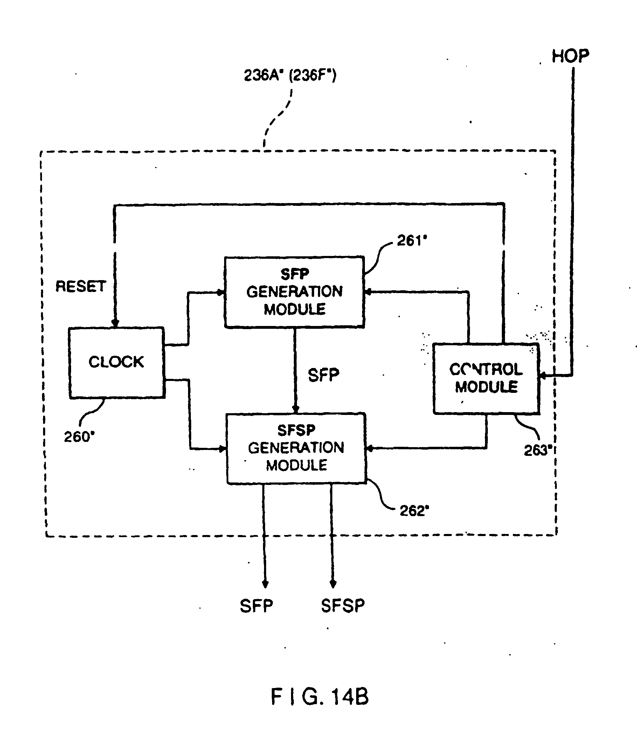

Fig. 14B is a schematic representation of the start-of-facet-sector pulse (SOFSP) generator employed on each decode board associated with a holographic laser scanning subsystem depicted in Fig. 14A;

Fig. 14C is a flow chart describing the operation of the HOP generator on the control board associated with each holographic scanning disc, wherein home offset pulses (HOPs) are automatically generated from the HOP generator aboard the control board in each holographic laser scanning subsystem independent of the angular velocity of the holographic scanning disc employed therein;

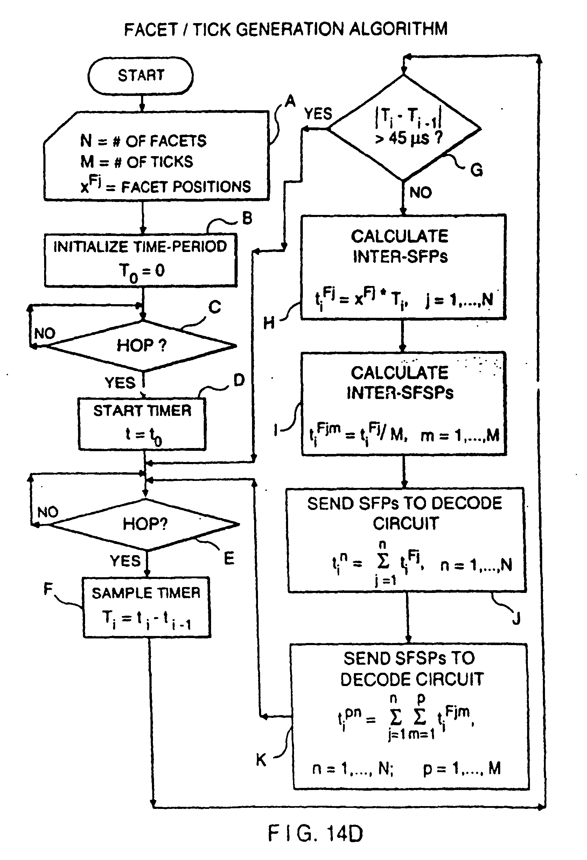

Fig. 14D is a flow chart describing the operation of the SOFSP generator aboard each decode board, wherein start of facet pulses (SOFPs) are automatically generated within the SOFP generation module relative to the home-offset pulse (HOP) received by the control module in the SOFSP generator independent of the angular velocity of the holographic scanning disc of the subsystem, and wherein start of facet sector pulses (SOFSPs) are automatically generated within the SOFSP generation module relative to SOFPs generated by the SOFP generation module, independent of the angular velocity of the holographic scanning disc of the subsystem;

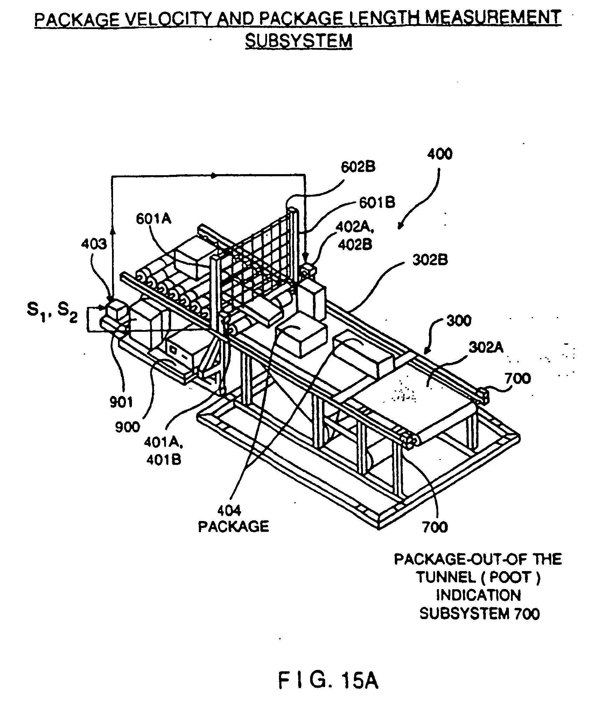

Fig. 15A is a schematic representation of the package velocity and length measurement subsystem of the present invention configured in relation to the tunnel conveyor and package height/width profiling subsystems of the system of the first illustrative embodiment of the present invention;

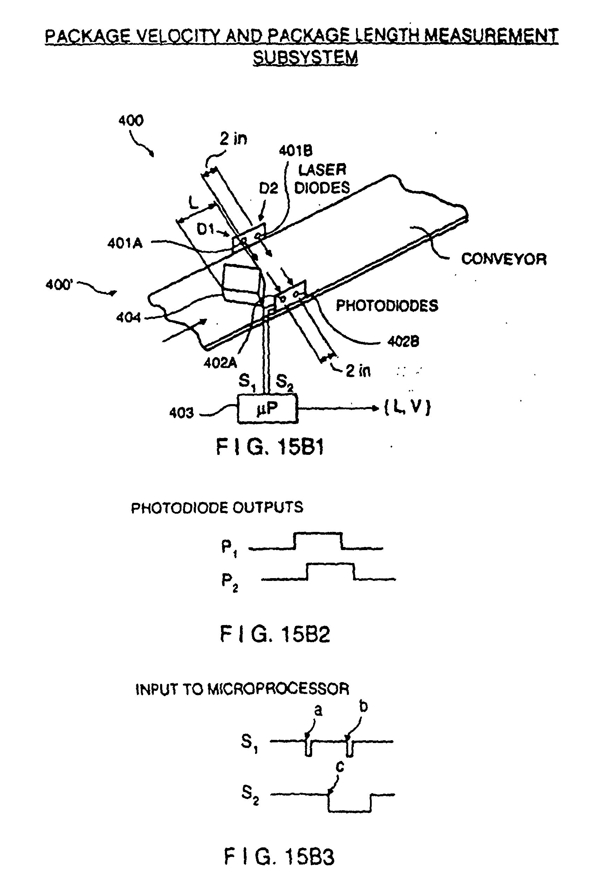

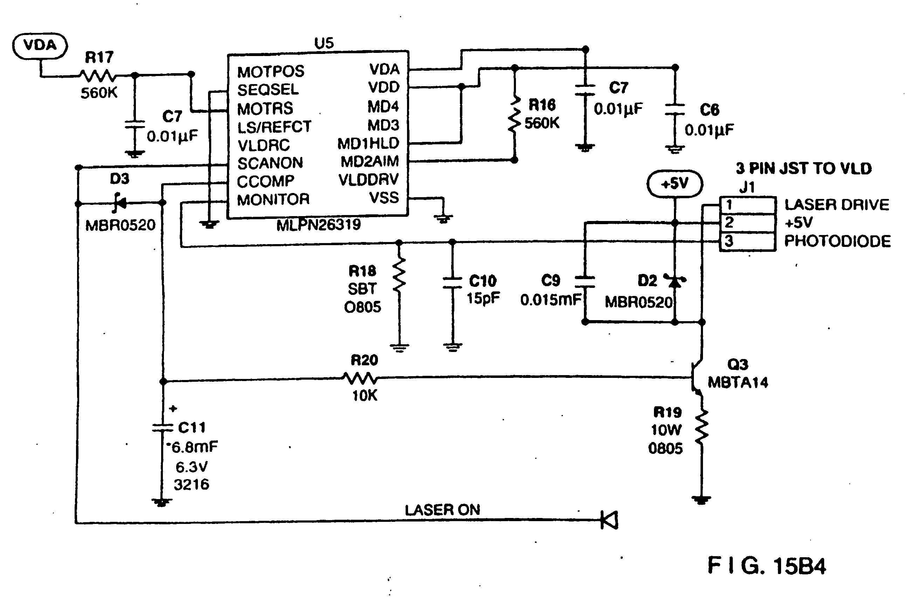

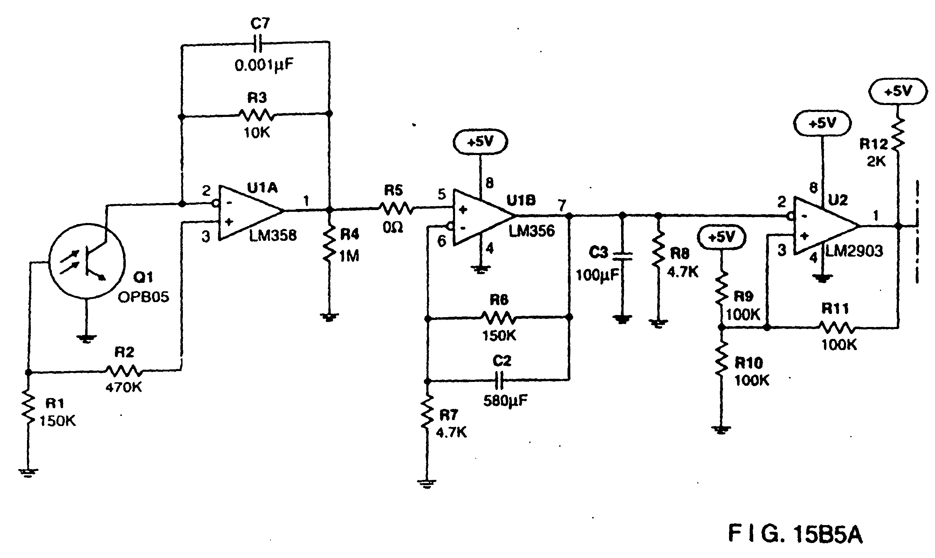

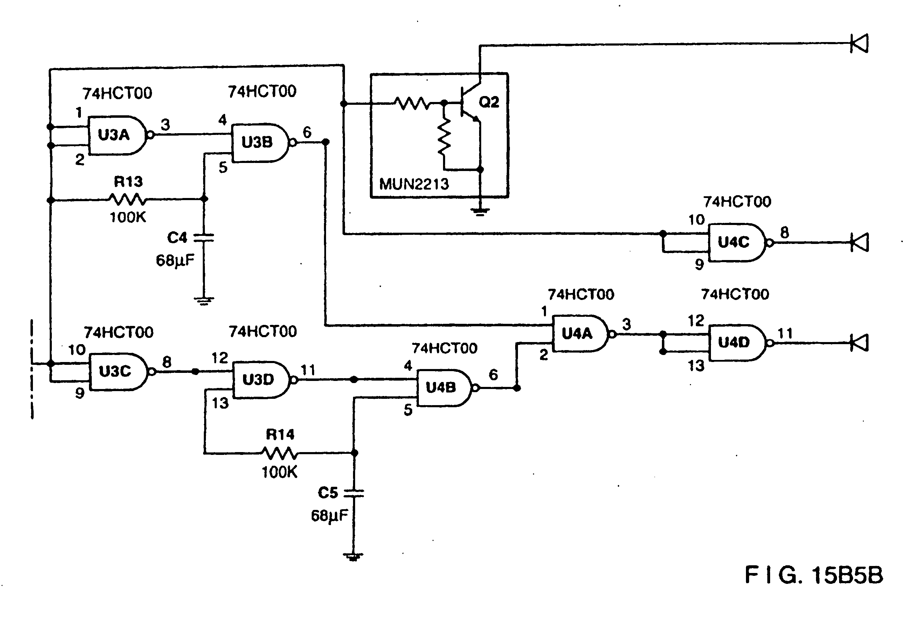

Fig. 15B1 is a schematic representation showing the dual-laser based package velocity and measurement subsystem installed in a "direct transmit/receive" configuration at the location of the vertical and horizontal light curtains employed in the package height/width profiling subsystem of the present invention;

Fig. 15B2 is a schematic representation of the signals received by the photoreceivers of the dual-laser based package velocity and measurement subsystem shown in Fig. 15A:

Fig. 15B3 is a schematic representation of the signals generated by the photoreceiving circuitry and provided as input to the signal processor of the dual-laser based package velocity and measurement subsystem shown in Fig. 15A;

Fig. 15B4 is a schematic diagram of circuitry for driving the dual laser diodes used in the dual-laser based package velocity and measurement subsystem of Fig. 15B1;

Figs. 15B5A and 15B5B, taken together, provide a schematic diagram of circuitry for conditioning the signals received by the photoreceivers employed in the dual-laser based package velocity and measurement subsystem of Fig. 15B1,

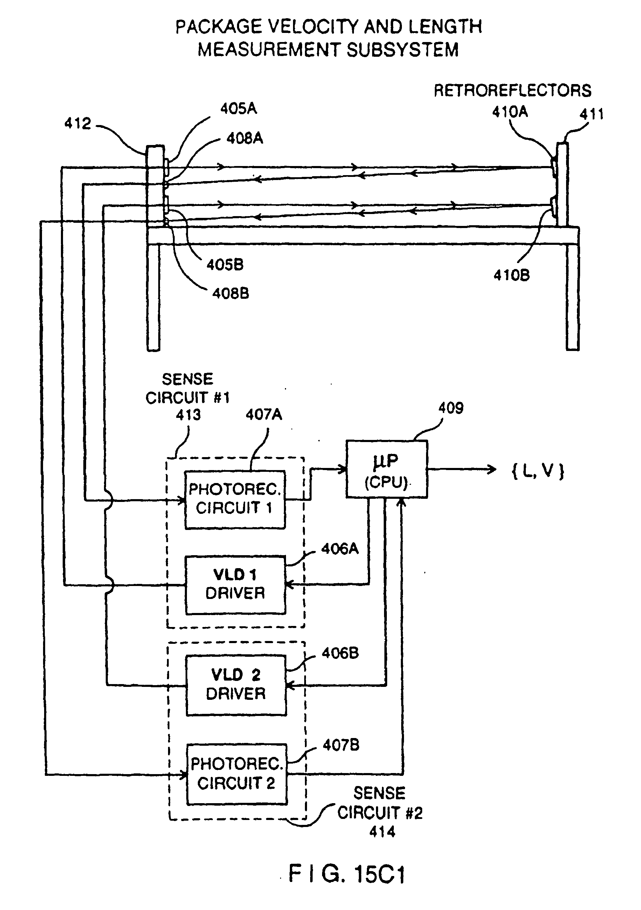

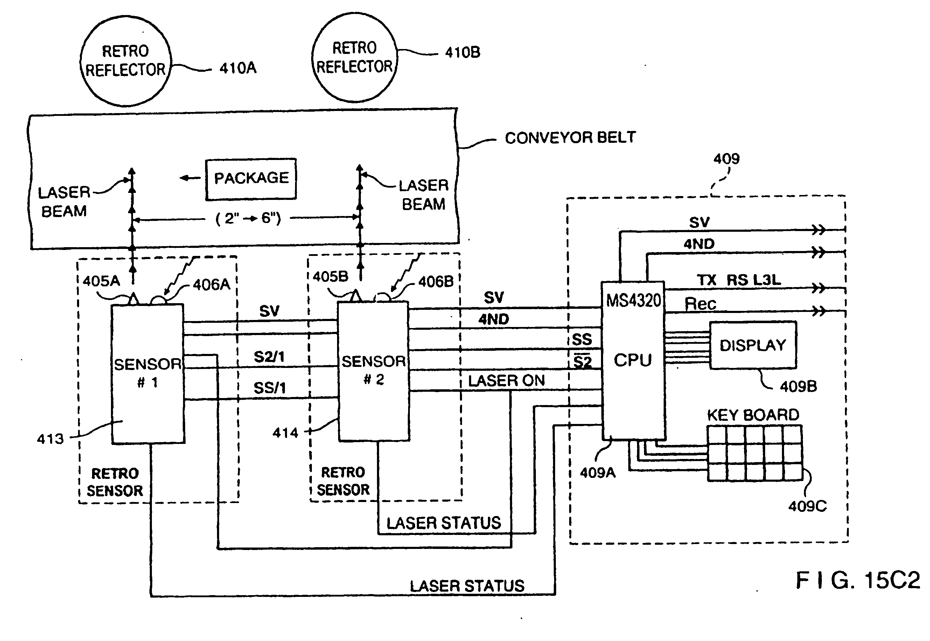

Fig. 15C1 is a schematic representation showing the dual-laser based package velocity and measurement subsystem installed in a "retro-reflection" configuration at the location of the vertical and horizontal light transmitting/receiving structures employed in the package height/width profiling subsystem of the present invention;

Fig. 15C2 is a schematic diagram of electronic circuitry adapted for automatically generating a pair of laser beams at a known space-part distance, towards a retroflective device positioned on the opposite side of the conveyor belt of the system of the first illustrative embodiment of the present invention, and automatically detecting the retroflected beams and processing the same so as to produce signals suitable for computing the length and velocity of a package passing through the transmitted laser beams within the dual-laser based package velocity and measurement subsystem of Fig. 15C1;

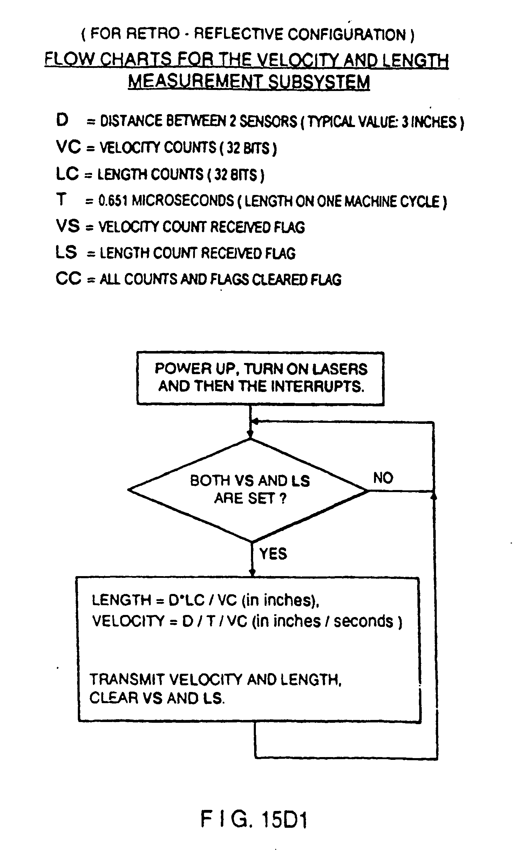

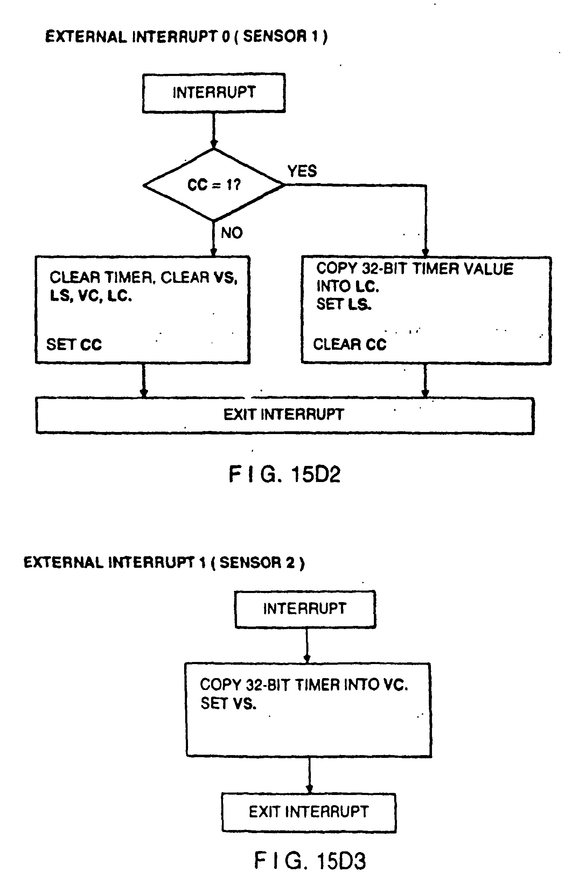

Figs. 15D1 through 15D3, taken together, set forth a flow chart describing the steps carried out by the signal processor used in the dual-laser based package velocity and measurement subsystems of Figs. 15A and Fig. 15C1, so as to compute the velocity (v) and length (L) of the package transported through the laser beams of the dual-laser based package velocity and measurement subsystem hereof;

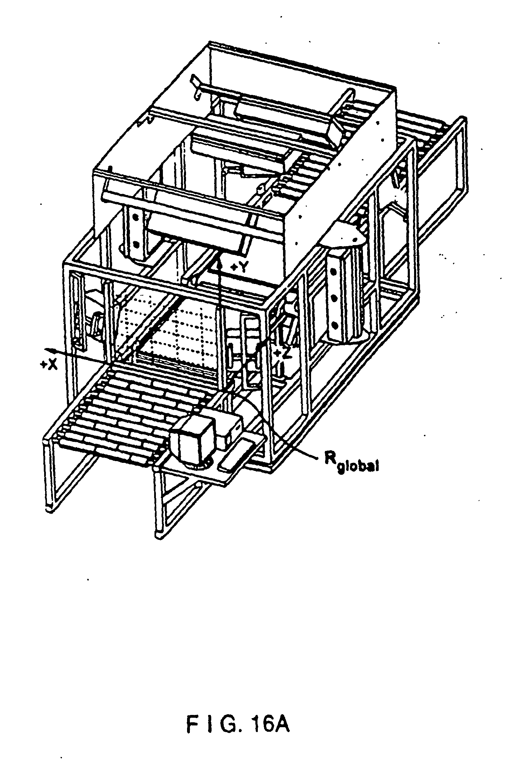

Fig. 16A is a perspective view of the automated package identification and measurement system of the present invention, showing the location of the package height/width profiling subsystem (and package-in-tunnel signaling subsystem) in relation thereto and the global coordinate reference system $R_{global}$ symbolically embedded within the structure thereof, as shown;

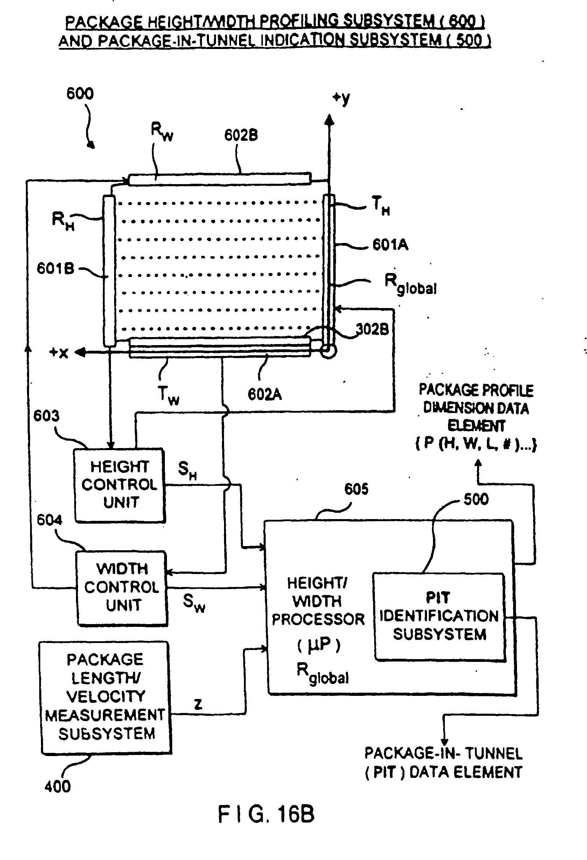

Fig. 16B is a schematic representation of the horizontally and vertically arranged light transmitting and receiving structures and subcomponents employed in the package height/width profiling subsystem in the system of the first illustrative embodiment of the present invention;

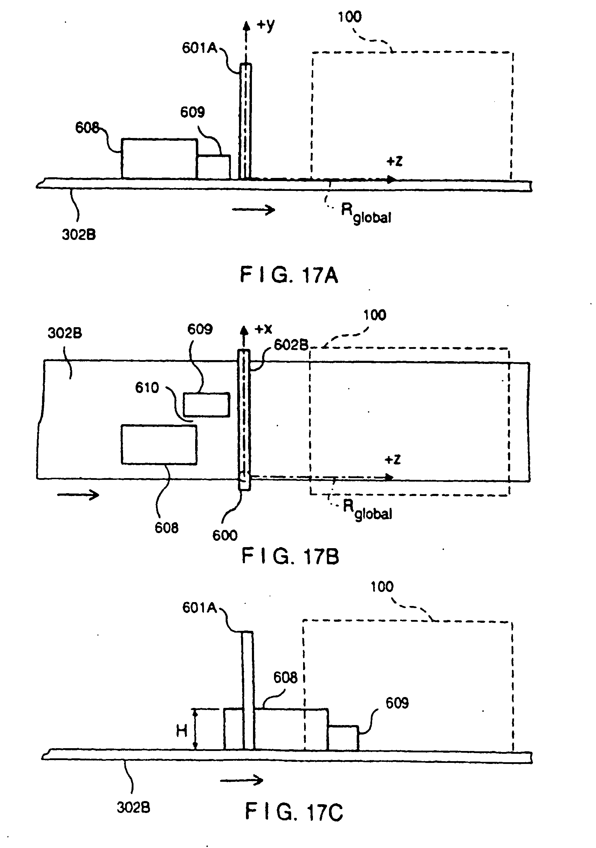

Fig. 17A is an elevated side view of a pair of packages, arranged in a side-by-side configuration, and about to be transported through the package height/width profiling subsystem of Fig. 16B;

Fig. 17B is a plan view of a pair of packages, arranged in a side-by-side configuration, and about to be transported through the package height/width profiling subsystem of Fig. 16B;

Fig. 17C is an elevated side view of a pair of packages, arranged in a side-by-side configuration, and being transported through and thus profiled by the package height/width profiling subsystem of Fig. 16B;

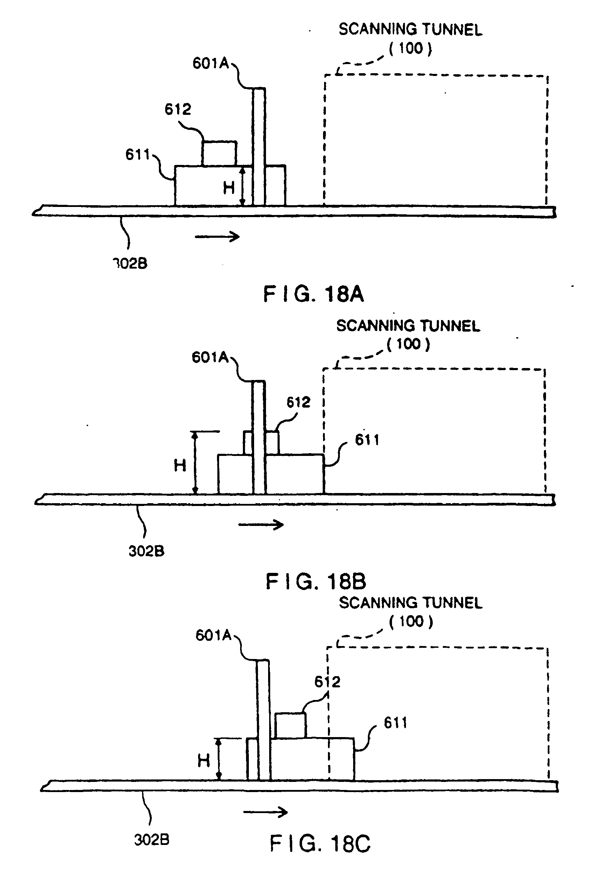

Fig. 18A is an elevated side view of a pair of stacked packages conveyed along the conveyor belt subsystem, wherein one package is being transported through and thus profiled by the package height/width profiling subsystem of Fig. 16B, while the other package has not yet been profiled by the subsystem;

Fig. 18B is an elevated side view of a pair of stacked packages conveyed along the conveyor belt subsystem, wherein both packages are being transported through and thus profiled by the package height/width profiling subsystem of Fig. 16B;

Fig. 18C is an elevated side view of a pair of stacked packages conveyed along the conveyor belt subsystem, wherein one package is being transported through and thus profiled by the package height/width profiling subsystem of Fig. 16B, while the other package has already bee n profiled by the subsystem;

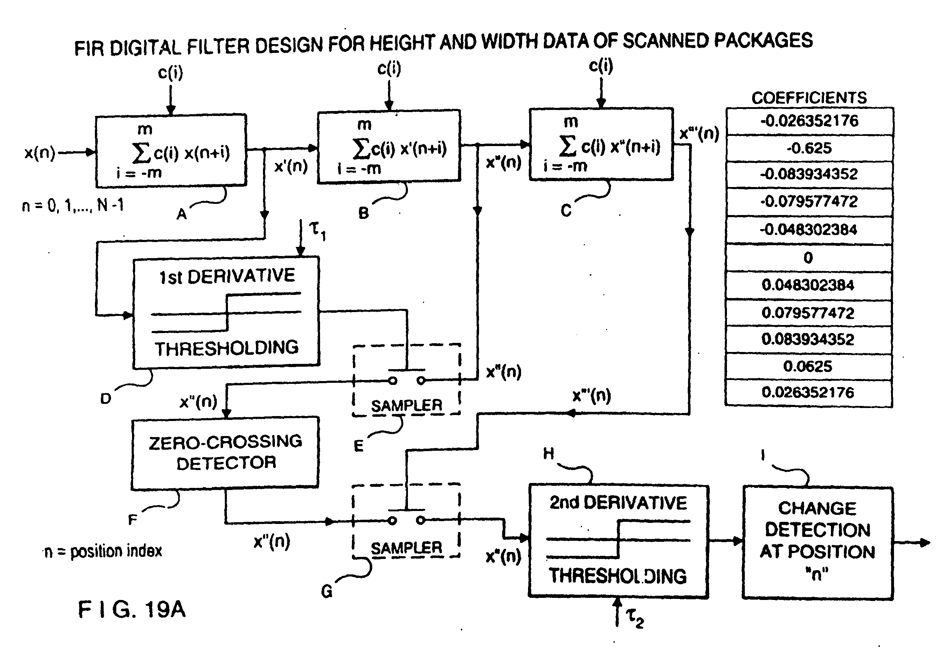

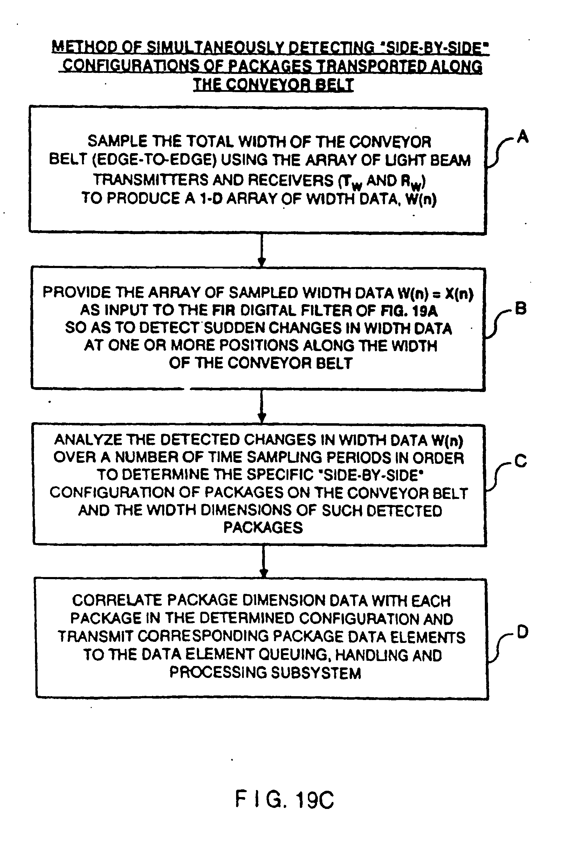

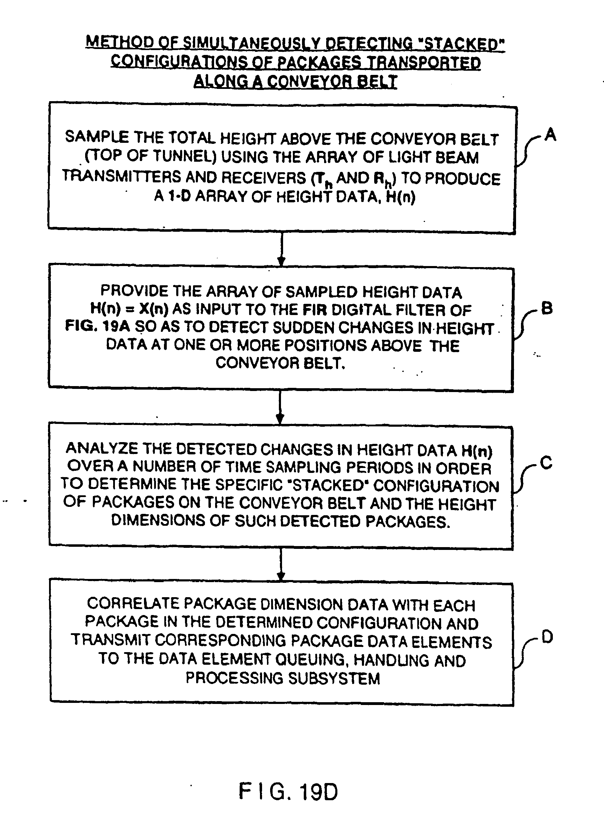

Fig. 19A is a schematic diagram of an improved third-order finite-impulse-response (FIR) digital filter system that can be used to filter data streams produced from the width and height profiling data channels of the package height/width profiling subsystem of Fig. 16B, in order to detect sudden changes in width and height profiles along the conveyor belt, within the context of a method of simultaneous package detection and tracking being carried out on a real-time basis in accordance with the principles of the present invention;

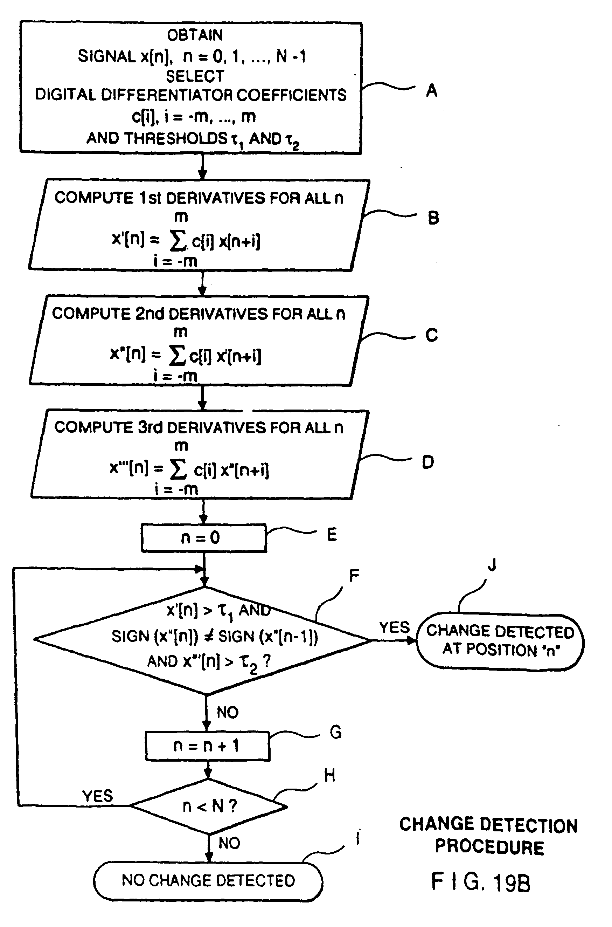

Fig. 19B is a flow chart describing the operation of the FIR digital filter system of Fig. 19A and how it detects sudden changes in the width and height data streams produced by the package height/width profiling subsystem of Fig. 16B;

Fig. 19C is a flow chart describing the method of simultaneously detecting "side-by-side" configurations of packages along a conveyor belt using the FIR digital filter system of Fig. 19A to detect sudden changes in the width data streams produced by the package height/width profiling subsystem of Fig. 16B;

Fig. 19D is a flow chart describing the method of simultaneously detecting "stacked" configurations of packages along a conveyor belt using the FIR digital filter of Fig. 19A to detect sudden changes in the height data streams produced by the package height/width profiling subsystem of Fig. 16B.

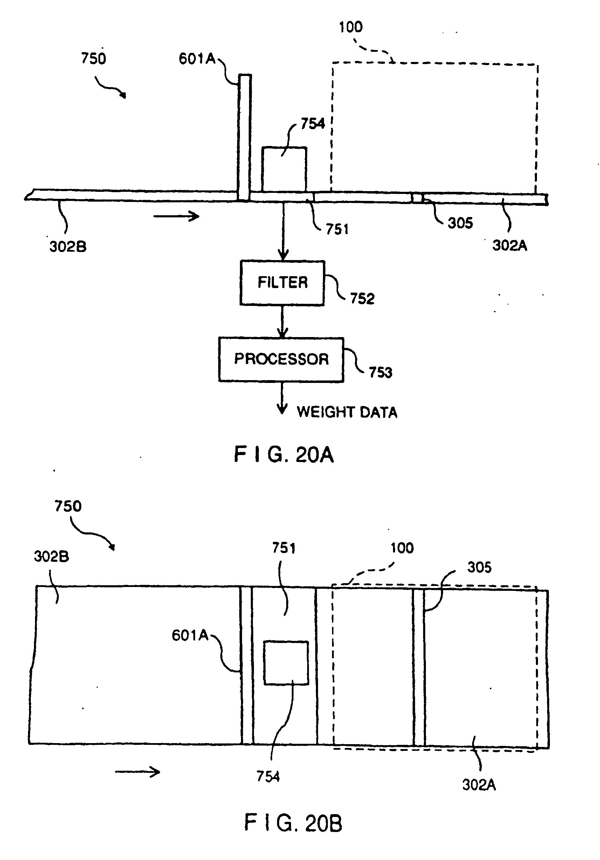

Fig. 20A is an elevated side schematic view of the in-motion weighing subsystem employed in the system of the first illustrative embodiment of the present invention, wherein the scale and data processing subcomponents thereof are shown arranged about the package height/width profiling subsystem of Fig. 16B;

Fie. 20B is a plan view of the in-motion weighing subsystem shown in Fig. 20A. wherein a moving package is shown being weighed on the scale component as it is transported along the conveyor belt of the system of th e first illustrative embodiment;

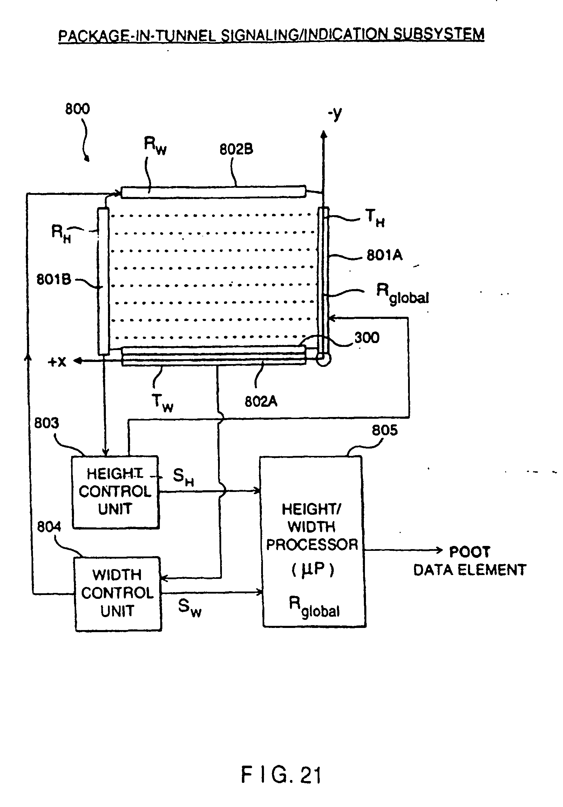

Fig. 21 is a schematic diagram of the package-in-tunnel signaling subsystem employed in the automated package identification and measuring system of the first illustrative embodiment of the present invention;

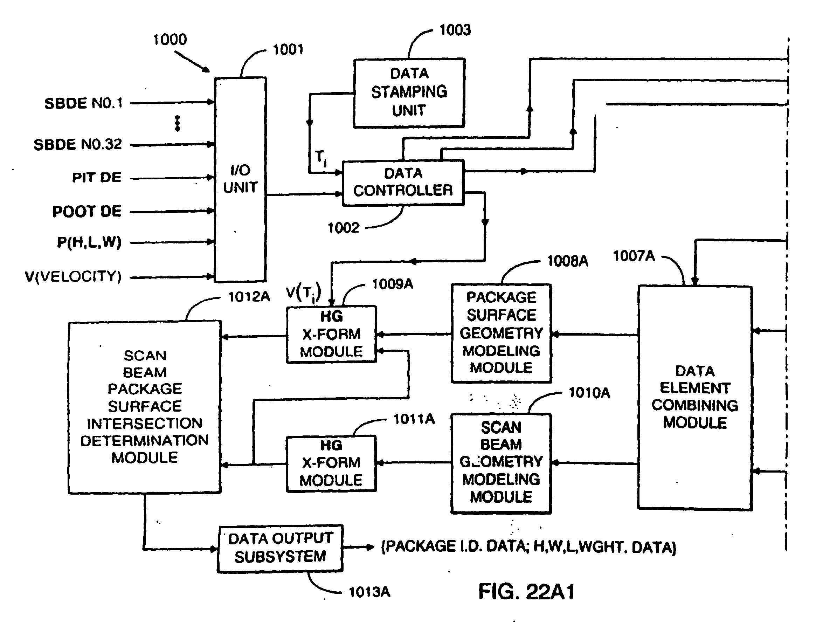

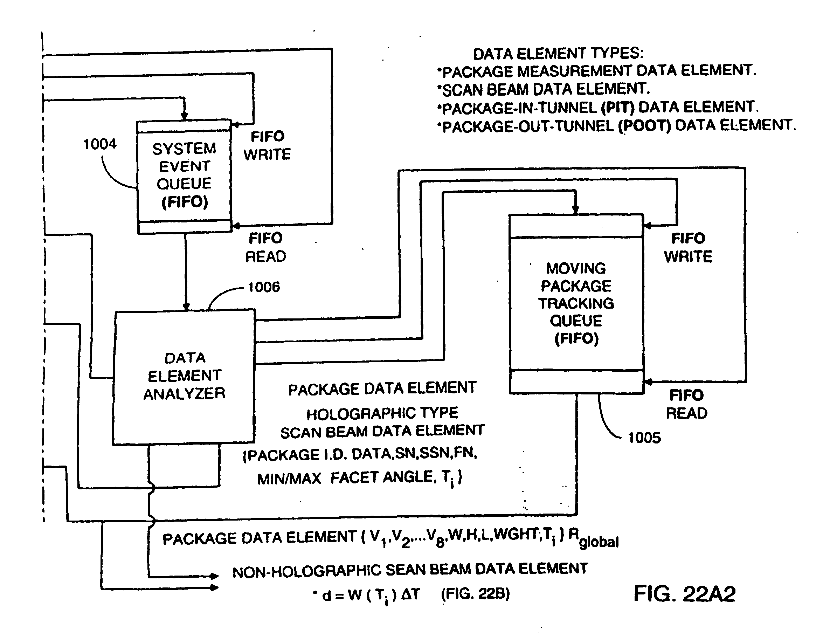

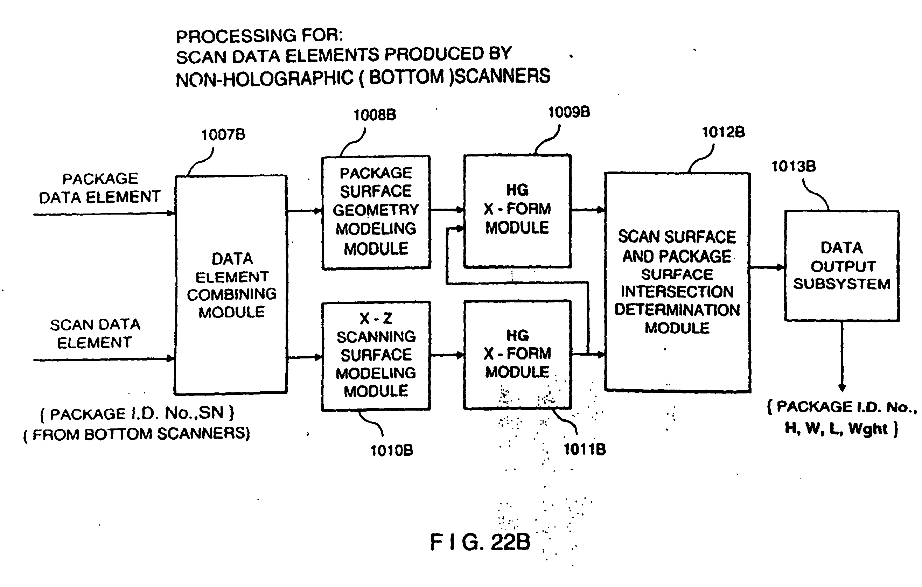

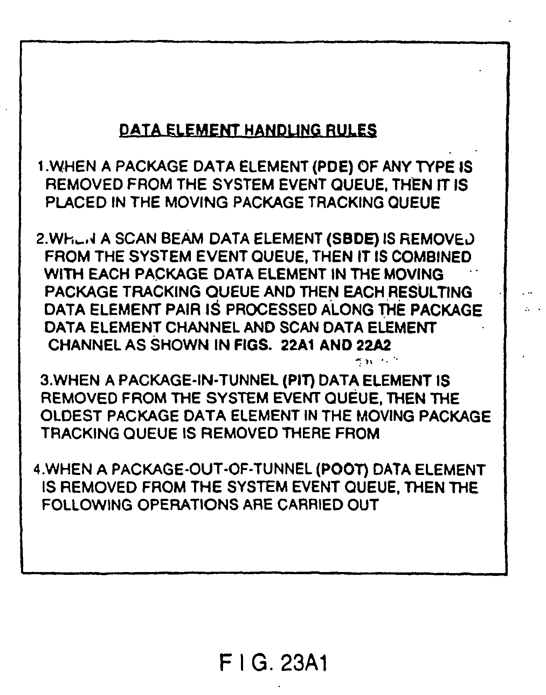

Figs. 22A and 22B taken together provide a schematic representation of the data element queuing, handling and processing subsystem of the present invention shown in Fig. 4;

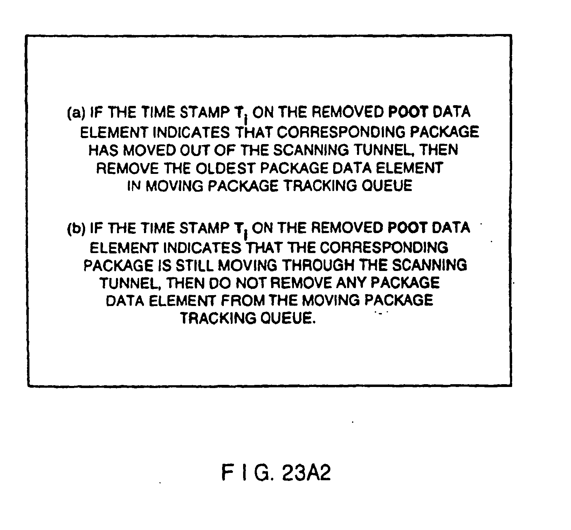

Figs. 23A1 and 23A2 set forth a table of rules used to handle the data elements stored in the system event queue in the data element queuing, handling and processing subsystem of Fig. 22A and 22B;

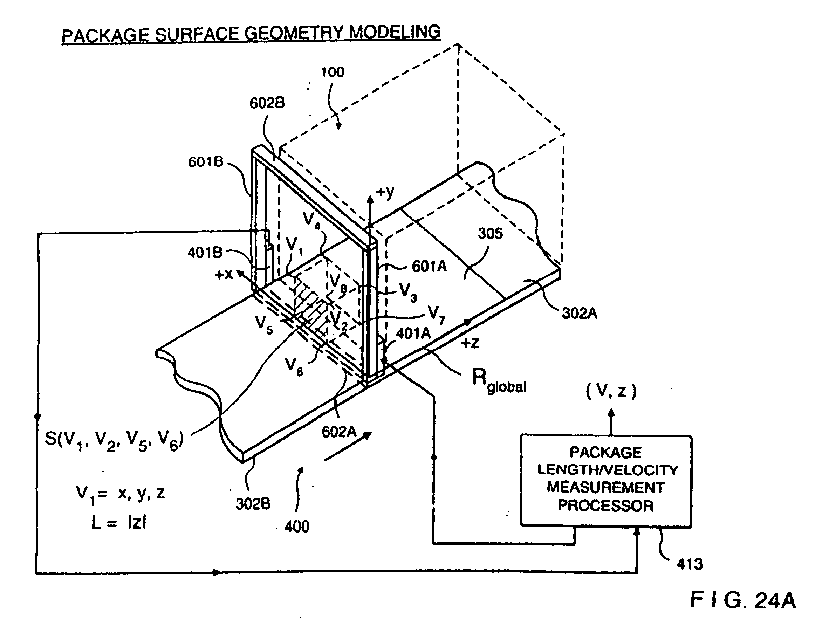

Fig. 24A is a schematic representation of the surface geometry model created for each package surface by the package surface geometry modeling subsystem (i.e. module) deployed with the data element queuing, handling and processing subsystem of Figs. 22A and 22B illustrating and showing how each surface of each package (transported through package dimensioning/measuring subsystem and package velocity/length measurement subsystem) is mathematically represented (i.e. modeled) using at least three position vectors (referenced to x=0, y=0, z=0) in the global reference frame $R_{global}$, and a normal vector drawn to the package surface indicating the direction of incident light reflection therefrom;

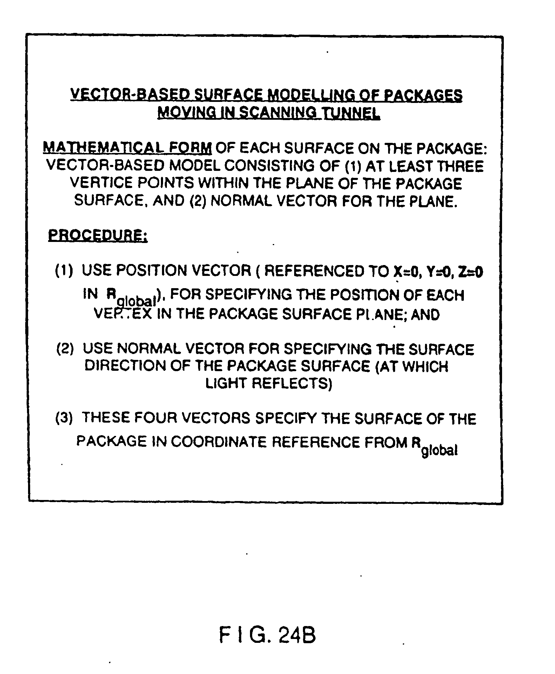

Fig. 24B is a table setting forth a preferred procedure for creating a vector-based surface model for each surface of each package transported through the package dimensioning/measuring subsystem and package velocity/length measurement subsystem of the system hereof;

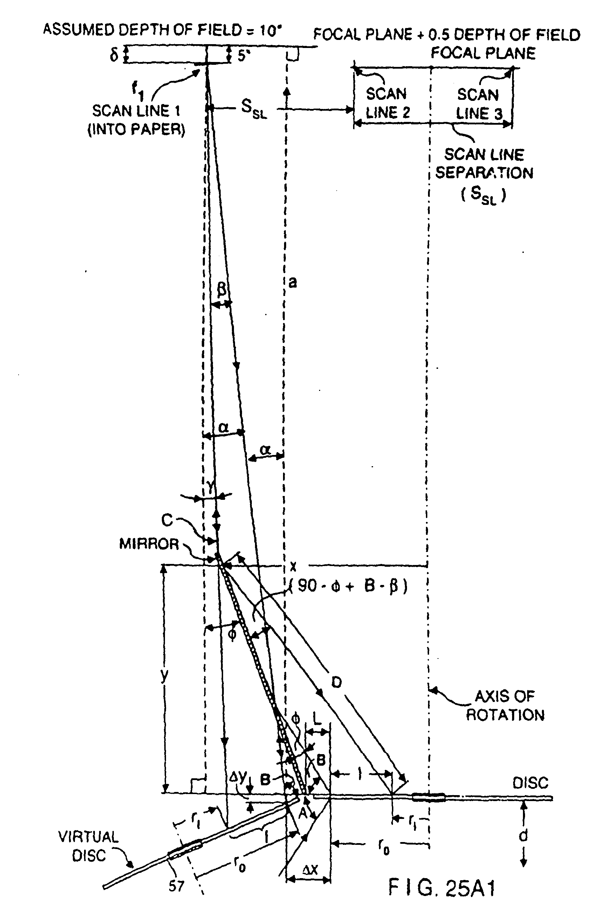

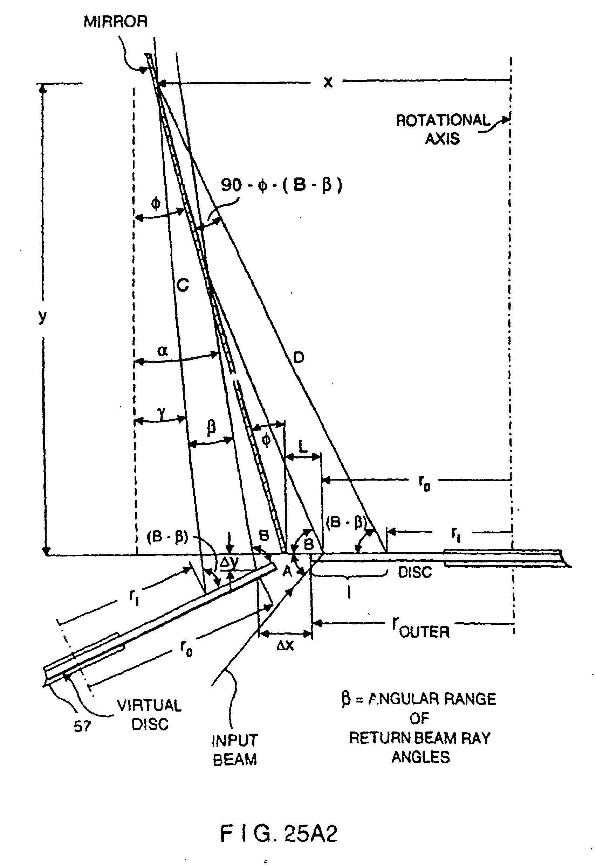

Figs. 25A1 through 25A2 set forth schematic representation of a diffraction-based geometric optics model, created by the scan beam geometry modeling subsystem (i.e. module) of Fig. 22A, for the propagation of the laser scanning beam (ray) emanating from a particular point on the facet, towards its point of reflection on the corresponding beam folding mirror, towards to the focal plane determined by the focal length of the facet created within the scan beam geometry modeling module shown in Figs. 22A and 22B;

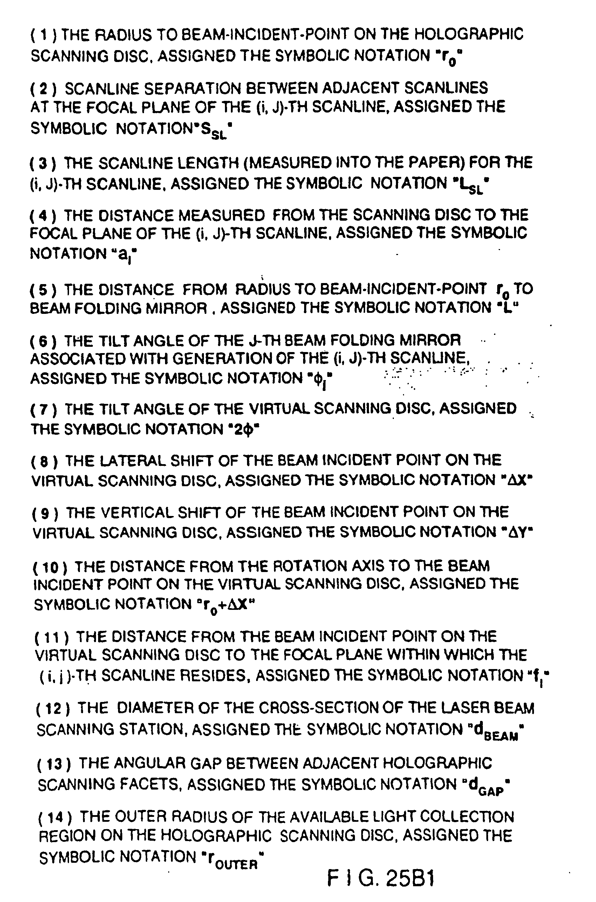

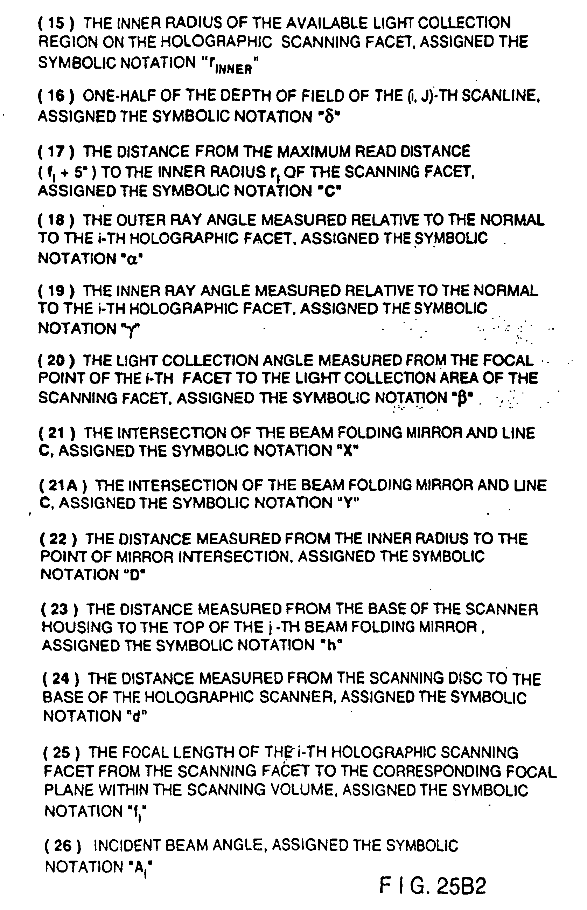

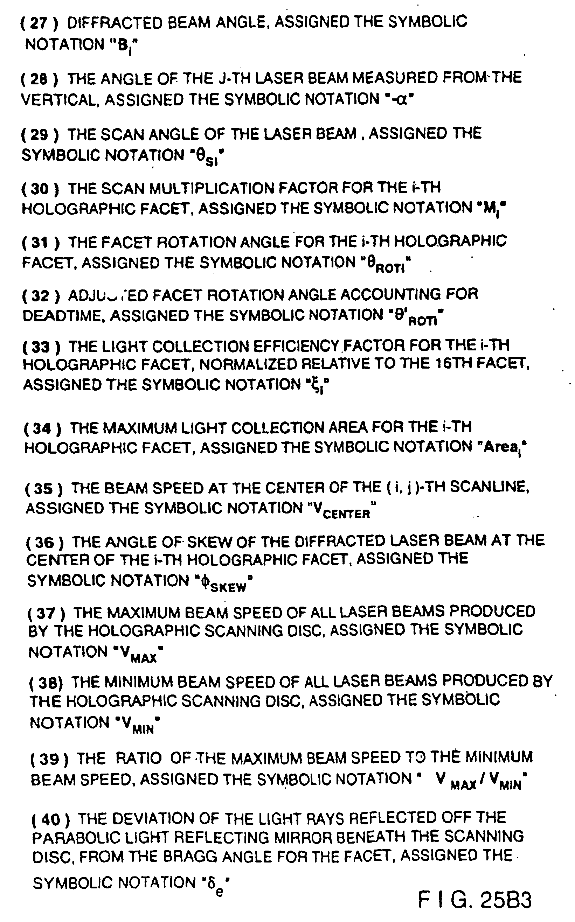

Figs. 25B1 through 25B3 set forth a table of parameters used to construct the diffraction-base geometric optics model of the scanning facet and laser scanning beam shown in Figs. 25A1 through 25A2;

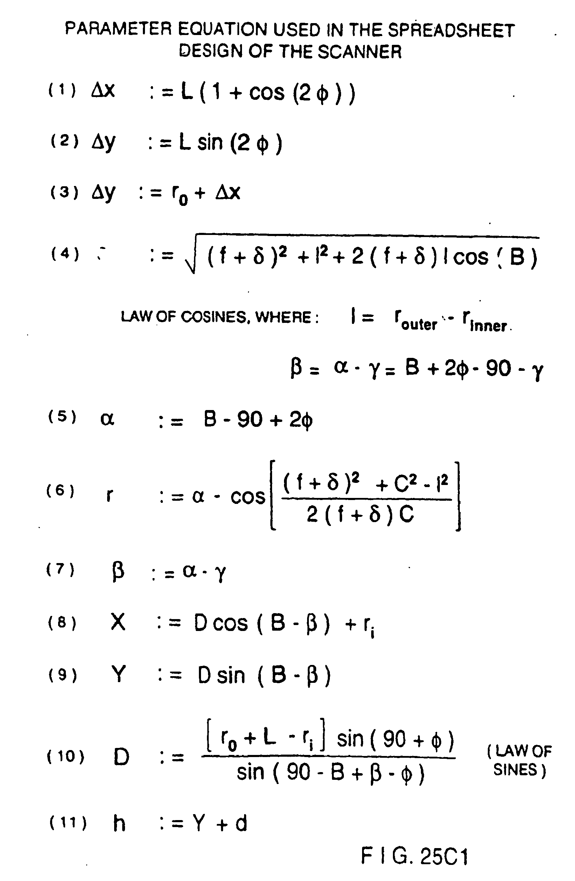

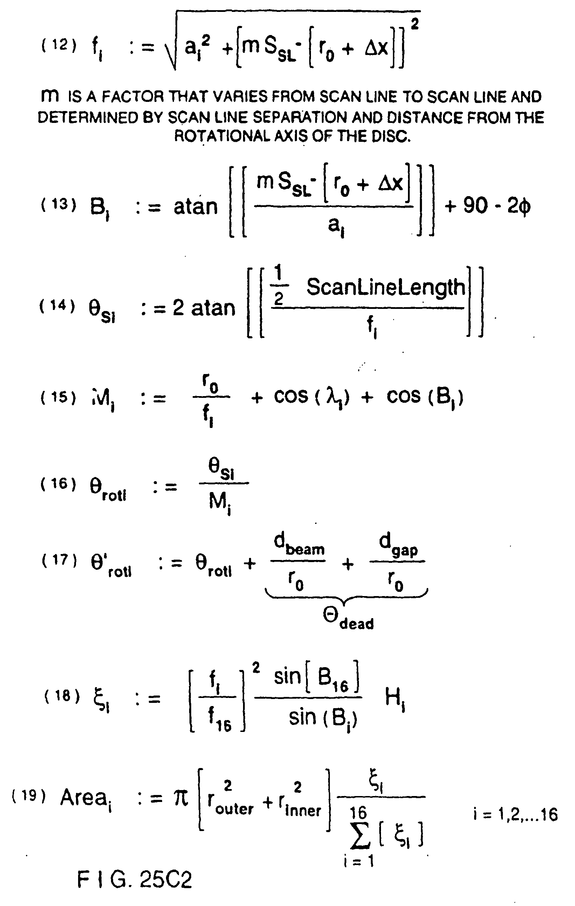

Figs. 25C1 and 25C2, taken together, set forth a table of parameters used in the spreadsheet design of the holographic laser scanning subsystems of the present invention, as well as in real-time generation of geometrical models for laser scanning beams using 3-D ray-tracing techniques;

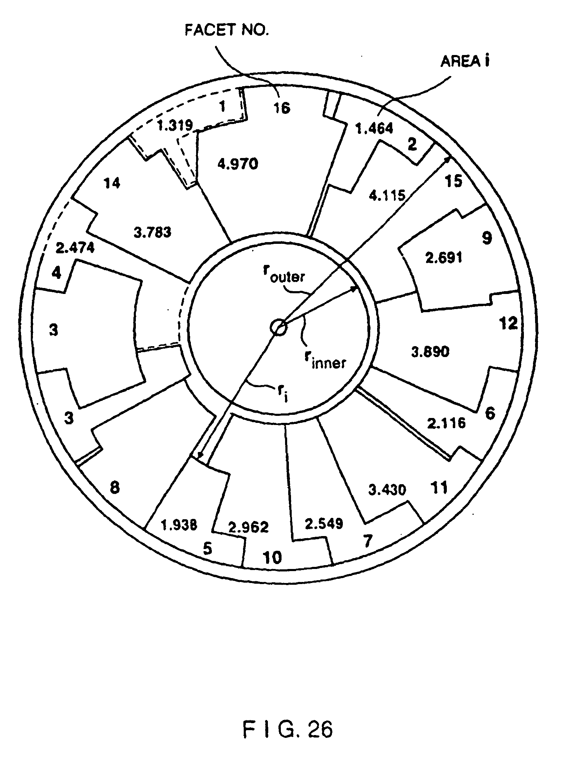

Fig. 26 is a schematic representation of the laser scanning disc shown in Figs. 25A1 through 25A2, labeled with particular parameters associated with the diffraction-based geometric optics model of Figs. 25A1 through 25A2;

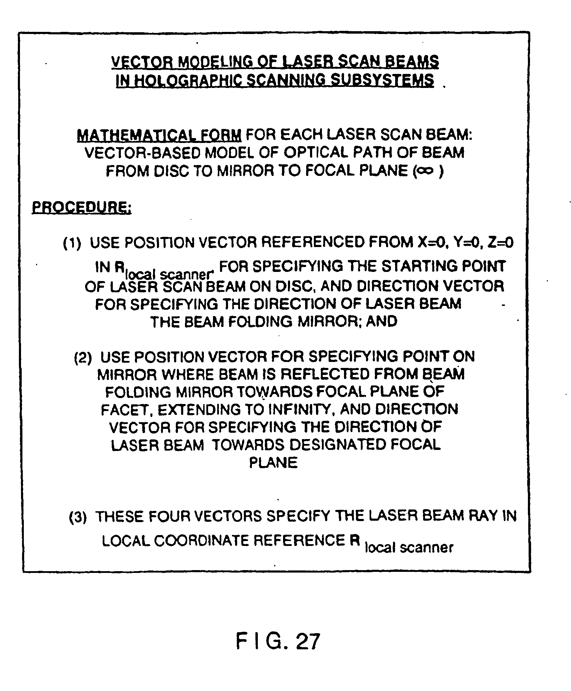

Fig. 27 is a table setting forth a preferred procedure for creating a vector-based ray model for laser scanning beams which have been produced by a holographic laser scanning subsystem of the system hereof, that may have collected the scan data associated with a decoded bar code symbol read thereby within the tunnel scanning subsystem;

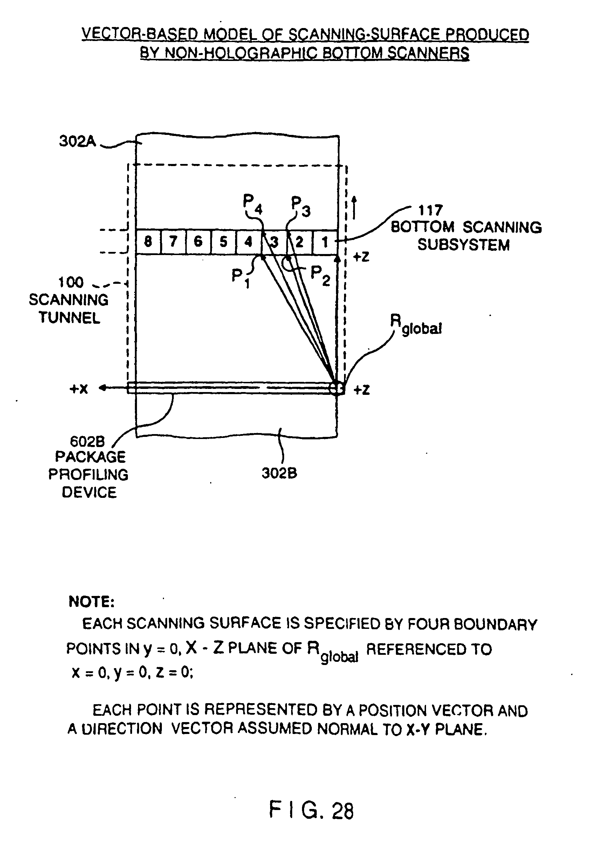

Fig. 28 is a schematic representation of the vector-based 2-D surface geometry model created for each candidate scan beam by the scan surface modeling subsystem (i.e. module) shown in Fig. 22B, and showing how each omnidirectional scan pattern produced from a particular polygon-based bottom scanning unit is mathematically represented (i.e. modeled) using four position vectors (referenced to x=0, y=0, z=0) in the global reference frame $R_{global}$, and a normal vector drawn to the scanning surface indicating the direction of laser scanning rays projected therefrom during scanning operations;

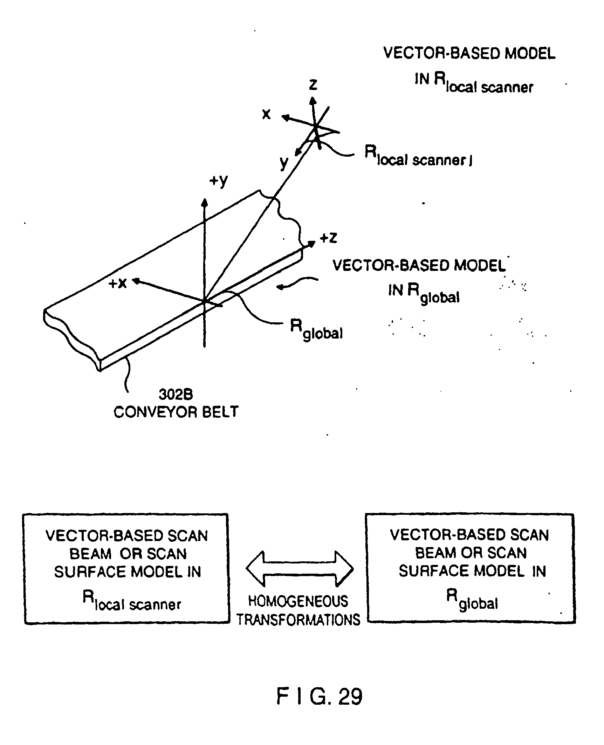

Fig. 29 is a schematic representation graphically illustrating how a vector-based model created within a local scanner coordinate reference frame $R_{localscannerj}$ can be converted into a corresponding vector-based model created within the global scanner coordinate reference frame $R_{global}$ using homogeneous transformations;

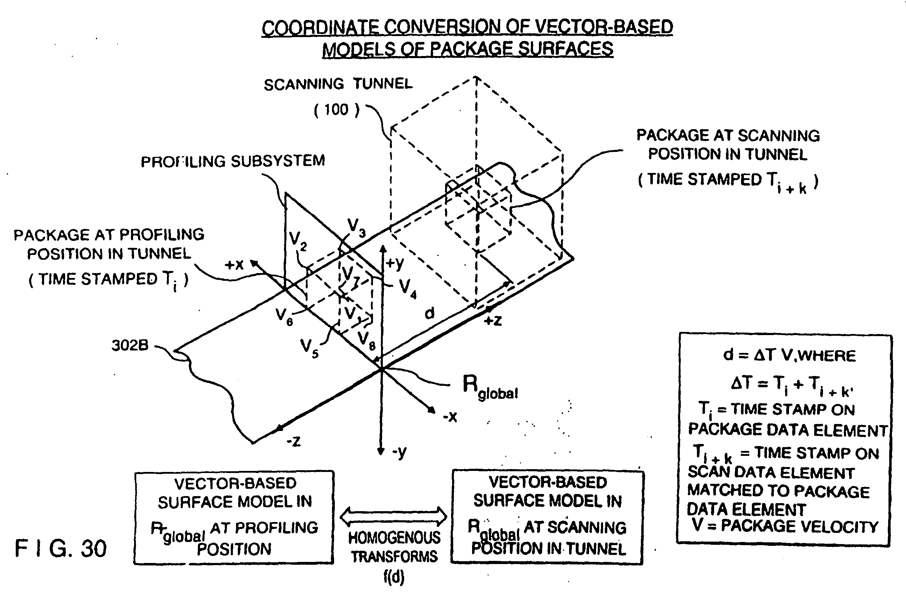

Fig. 30 is a schematic representation graphically illustrating how a vector-based package surface model created within the global coordinate reference frame $R_{global}$ at the "package height/width profiling position" can be converted into a corresponding vector-based package surface model created within the global scanner coordinate reference frame $R_{global}$ at the "scanning position" within the tunnel using homogeneous transformations, and how the package travel distance (d) between the package height/width profiling and scanning positions is computed using the package velocity (v) and the difference in time indicated by the time stamps placed on the package data element and scan beam data element matched thereto during each scan beam/package surface intersection determination carried out within the data element queuing, handling and processing subsystem of Figs. 22A and 22B;

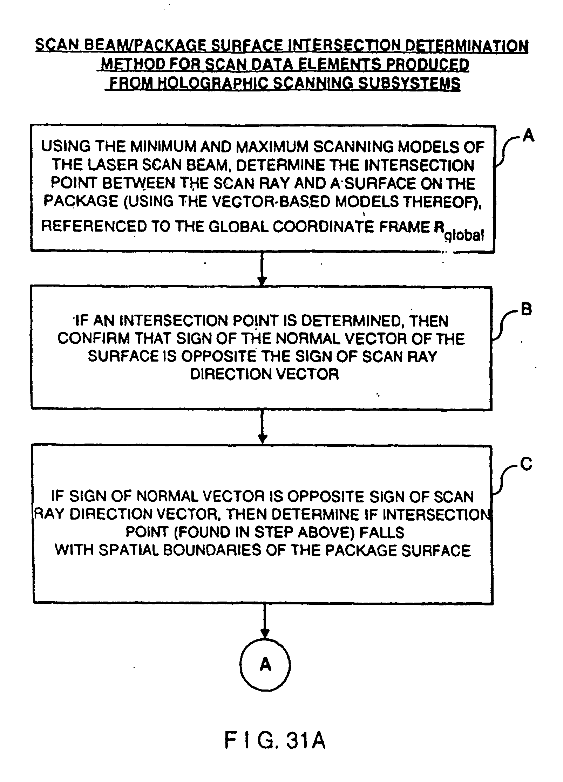

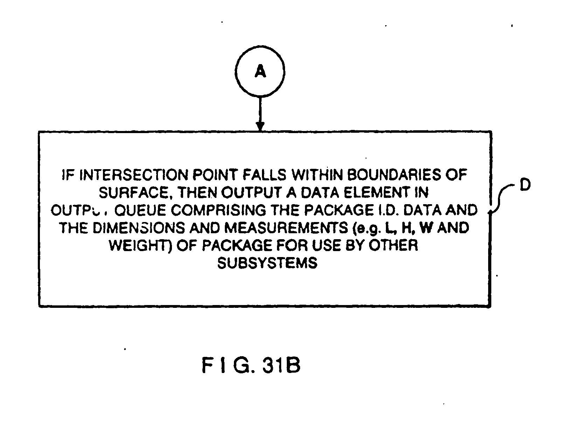

Figs. 31A and 31B, taken together, provide a procedure for determining whether the scan beam (rays) associated with a particular scan beam data element produced by a holographic scanning subsystem intersects with any surface on the package that has been scanned at a particular scanning position, and thus whether to correlate a particular package identification data element with particular package measurement data element acquired by the system;

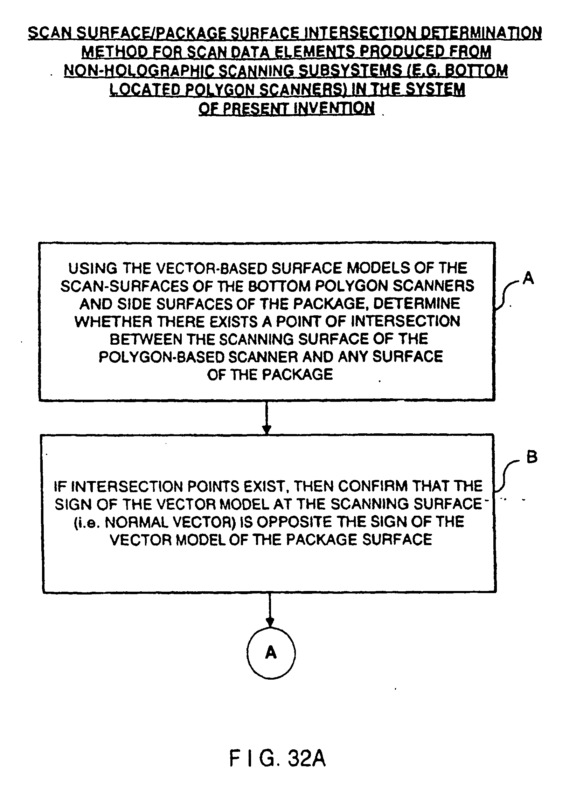

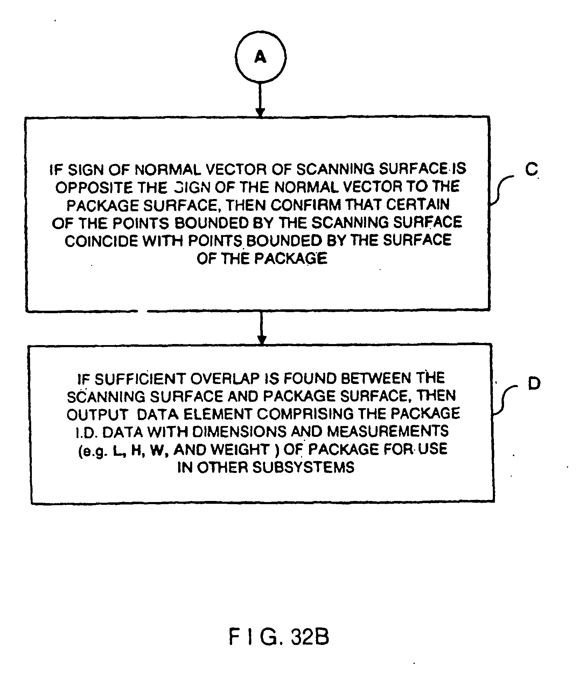

Figs. 32A and 32B, taken together, provide a procedure for determining whether the scanning surface associated with a particular scan beam data element produced by a non-holographic (e.g. polygon-based) bottom-located scanning subsystem intersects with any surface on the package that has been scanned at a particular scanning position, and thus whether to correlate a particular package identification data element with particular package measurement data element acquired by the system;

## DETAILED DESCRIPTION OF BEST MODE EMBODIMENTS OF THE PRESENT INVENTION

Referring to the figures in the accompanying Drawings, the best mode embodiments of the automated package identification and measurement system of the present invention will be described in great detail, wherein like elements will be indicated using like reference numerals.

## Automated Tunnel-Type Laser Scanning Package Identification And Measurement System Of The First Illustrative Embodiment Of The Present Invention

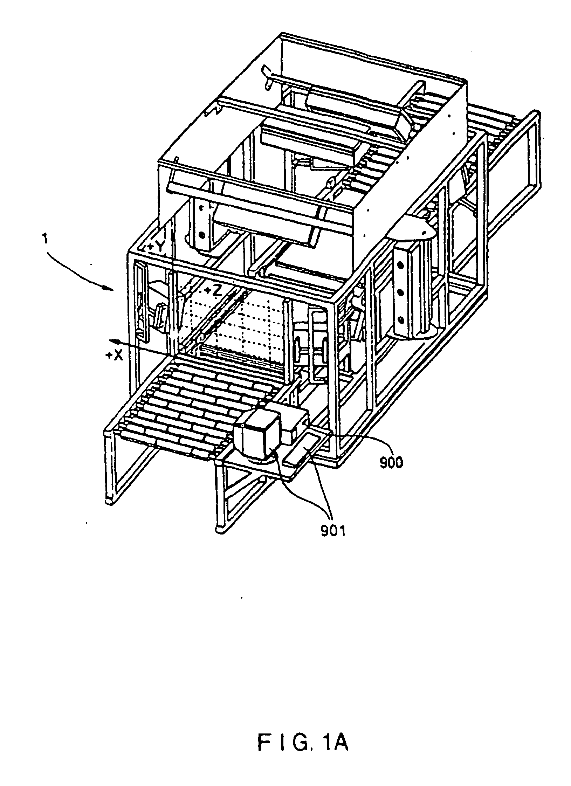

In Fig. 1A, there is shown an automated tunnel-type laser scanning package identification and measuring (e.g. dimensioning and weighing) system designed to meet the needs of demanding customers, such as the United States Postal Service (USPS), which requires "hands-free" bar code (or code symbol) scanning of at least six-sided packages, wherein the label containing the code symbol to be read could be positioned in any orientation on any one of the six or more sides of the box or container structure. As used hereinafter, the term "hands-free" shall mean scanning of bar codes on boxes or parcels that are travelling past the scanners in only one direction on some sort of conveyor system. In this illustrative embodiment, the package should be singulated in a conventional manner.

As shown in Fig: 4, the automated tunnel scanning system of the first illustrative embodiment indicated by reference numeral 1 comprises an integration of subsystems, namely: a high-speed package conveyor system 300 having a conveyor belt 302 comprising at least two separated sections 302A and 302B (as illustrated in Figs. 1C through 1G), with each section having a width of at least 30 inches to support one or more package transport lanes along the conveyor belt; a tunnel scanning subsystem 100 including an arrangement of holographic and non-holographic laser scanning bar code symbol reading subsystems 101 through 1 17 supported overhead and below the conveyor belt by a support frame 304 (as illustrated in Figs 1C-1E) so as to produce a truly 3-D omnidirectional scanning volume above the conveyor belt, for scanning bar codes on packages transported therethrough independent of the package or bar code orientation; a package velocity and length measurement subsystem 400; a package-in-the-tunnel indication subsystem 500 realized as a 2-D light sensing structure mounted along the conveyor belt, on the input side of the tunnel, for automatically detecting the presence of each package moving into the scanning tunnel; a package (x-y) dimensioning subsystem 600, employing the 2-D light sensing structure of subsystem 500, for producing x-y profile data of detected packages; a package-out-of-the-tunnel indication subsystem 700 realized as an infrared (IR) light sensing object-detecting device mounted along the conveyor belt, on the output side of the tunnel, for automatically detecting the presence of packages moving out of the scanning tunnel; a weighing-in-motion subsystem 750 for weighing packages as they are transported along the conveyor belt; an input/output subsystem 800 for managing the inputs to and output from the system of Fig. 1A; and a data management computer 900 with a graphical user interface (GUI) 901, for realizing a data element queuing, handling and processing subsystem 1000, as well as other data and system management functions.

Laser Scanning Tunnel Subsystem Of First Illustrative Embodiment Of The Present Invention

As shown in Figs. 1A through 1G, the tunnel scanning system of the first illustrative embodiment 1 comprises an arrangement of laser scanning subsystems (i.e. scanners) which, by virtue of their placement, relative to the conveyor belt subsystem 300, essentially form a "tunnel" scanning subsystem over and about the conveyor belt of the conveyor subsystem 300. In the field of package sortation of any sort, whether it be mail, luggage (as in an airport terminal) or other items or boxes, this type of code symbol scanning system is known as a "tunnel scanning system" by those skilled in the art.

The tunnel scanning system of the first illustrative embodiment, shown in great detail in Figs. 1A through 9B, has been designed and constructed to meet a specific set of customer-defined scanning parameters. For example, the bar code label could be on any one side of a box having six sides. The bar code label could be in any orientation. Futhermore, the object bearing the bar code label to be read would be moving past the scanners of the conveyor belt travelling at speeds in excess of 400 feet per second. In the illustrative embodiment, the conveyor belts 302A and 302B are moving at 520 feet per second but many move faster in other embodiments. The types of codes to be read to include such codes as Code 39, Code 128 and others. The aspect ratio of the bar codes to be read is on the order of 10 mils and up.

The tunnel scanning system of the present invention can be used in various types of applications, such as for example, where the bar codes are read to determine (a) identification of incoming packages, (b) identification of outgoing packages, and (c) sortation of outgoing packages. For sortation types of applications, the information derived from the bar code will be used not only to identify the package, but also to direct the package along a particular path using deflectors, routers and other instruments well known in the package and parcel handling art.

In the illustrative embodiment, the volume to be scanned within the tunneling subsystem (e.g. its 3-D scanning volume) is approximately: 1 meter wide (i.e. the width of the conveyor belt); ten feet long; and 1 meter tall (i.e. the height of the tallest possible box going through). The laser scanning pattern produced by the concerted operation of the holographic laser scanning subsystems identified in the drawings, and described above, fills this entire 3-D scanning volume with over 400,000 scan lines per second. The 3-D scanning volume of the tunnel scanning system, measured with respect to the surface of the conveyor belt, begins at the surface of the conveyor belt in order to scan flat items (such as envelopes), and extends up approximately 1 meter ("h) above the surface of the conveyor belt subsystem.

As shown in Figs. 1A through 1D, sixteen holographic laser scanning subsystems 101 through 116 are mounted on a lightweight scanner support framework 304, at positions specified in Tunnel Scanner Positioning Data Table shown in Fig. 2C. The terms (e.g. "Top/Front", Top/Back", etc.) used in this Table to identify the individual holographic scanning subsystems of the tunnel scanning system hereof are used throughout the drawings, rather than reference numerals. The one fixed-projection scanner subsystem, identified by the label "Bottom" or 117, is mounted between the gap 305 provided between the first and second conveyor platforms 302A and 302B comprising the conveyor subsystem 300 of the tunnel scanning subsystem 100.

Each of the holographic scanners (denoted in R/F Corner #1, R/F Corner #2, R/B Corner #1, R/B Corner #2, L/F Corner #1, L/F Corner #2, L/B Corner #1, L/B Corner #2) mounted within the corners of the scanner support framework are single-disc holographic scanning subsystems, having five focal planes, formed using six laser scanning stations, each of which includes a VLD, a beam folding mirror, parabolic light collection mirror, signal processing circuit boards and the like, are designed and constructed using the methods detailed in Applicant's copending Application Serial Nos. 08/949,915 filed October 14, 1997; 08/854,832 filed May 12, 1997; 08/886,806 filed April 22, 1997; 08/726,522 filed October 7, 1996; and 08/573,949 filed December 18, 1995, the subject matter of the latter two U.S Applications being published in its entirety on June 26, 1997 by WIPO under WIPO Publication No. WO 97/22945, and each incorporated herein by reference. The design parameters for the twenty facet holographic scanning disc 130 shown in Fig. 3A4, and the supporting subsystem used therewith, are set forth in the Table of Figs. 3A5A through 3A5C. Notably, the design parameters set forth in the table of Figs. 3A5A through 3A5C are defined in detail in the above-referenced US Patent Applications. The scanning pattern projected on the middle (third) focal/scanning plane of each such single-disc holographic scanning subsystem is shown in Fig. 3A6.

The various omnidirectional scanning directions provided for within the 3-D scanning volume of the tunnel-scanning system of the present invention are schematically illustrated in Figs. 5A through 9B. These illustrations indicate how each of the laser scanning subsystems within the tunnel scanning system contribute to produce the truly omnidirectional scanning performance attained by the tunnel scanner hereof.

The four triple-disc holographic scanners (denoted as Left Side Front, Left Side Back, Right Side Front and Right Side Back) are mounted on the left and right sides of the scanner support framework 304. Each of these four triple-disc holographic scanning subsystems is shown in greater detail in Figs. 3B1 through 3B8. Each of these holographic scanning subsystems has five focal planes, formed using three sets (groups) of six laser scanning stations, arranged about a twenty-facet scanning disc. Each laser scanning station about the scanning disc includes a VLD, a beam folding mirror, parabolic light collection mirror, signal processing circuit boards and the like. Each holographic laser scanning subsystem within these triple-disc scanners is designed and constructed using the methods detailed in the above referenced WIPO Publication No. WO 97/22945 incorporated herein by reference. The design parameters for each twenty facet holographic scanning disc 130 shown in Fig. 3B2, and the supporting subsystem used therewith, are set forth in the Table of Figs. 3B3A and 3B3B. Notably, the design parameters set forth in the table of Figs. 3B3A and 3B3B are defined in detail in the above-referenced WIPO publication No. WO 97/22945. The scanning pattern projected on the middle (third) focal/scanning plane of each such triple-disc holographic scanning subsystem is shown in Fig. 3B8.

As shown, the two triple-disc holographic scanners (denoted as Front and Back) are mounted above the conveyor belt by way of the scanner support framework 304. Each of these triple-disc holographic scanning subsystems is shown in greater detail in Figs. 3C1 and 3C2. Each of these holographic scanning subsystems has five focal planes, formed using three sets (groups) of six laser scanning stations, arranged about a twenty-facet scanning disc. Each laser scanning station about the scanning disc has a VLD, a beam folding mirror, parabolic light collection mirror, signal processing circuit boards and the like. Each holographic laser scanning subsystem within these triple-disc scanners are designed and constructed using the methods detailed in the above referenced WIPO Publication No. WO 97/22945 incorporated herein by reference. The design parameters for each twenty facet holographic scanning disc shown in the table of Fig. 3A4, and the supporting subsystem used therewith, are set forth in the Table of Figs 3B3A to 3B3B. Notably, the design parameters set forth in the table of Figs. 3B3A to 3B3B are defined in detail in the above-referenced WIPO Publication. The scanning pattern projected on the middle (third) focal/scanning plane of each such triple-disc holographic scanning subsystem is shown in Fig. 3C2.

The bottom-mounted fixed projection scanner (denoted as Bottom) employed in the tunnel scanning system hereof is shown in greater detail in Figs, 3DI through 3D7. As shown in Fig. 3DI, the bottom-mounted scanner comprises eight fixed-projection laser scanning subsystems 118, that are mounted along optical bench 119. As illustrated in Fig. 3D2, each fixed projection scanning subsystem 118 comprises: four stationary mirrors 120A through 120D arranged about a central reference plane passing along the longitudinal extent of the optical bench 121 of the subsystem; an eight-sided motor driven polygon scanning element 122 mounted closely to the nested array of mirrors 120A through 120D; a light collecting mirror 123 mounted above the nested array along the central reference plane; a laser diode 124 for producing a laser beam which is passed through collecting mirror 123 and strikes the polygon scanning element 122; and a photodetector 125, mounted above the polygon scanning element 122, for detecting reflected laser light and produce scan data signals indicative of the detected laser light intensity for subsequent signal processing in a manner known in the bar code reading art.

As shown in Fig. 3DI, each subsystem 118 is mounted on optical bench 119, and a housing 126 with light transmission aperture 127, is mounted to the optical bench 119 in a conventional manner. As shown, a protective, scratch-resistant scanning window pane 128 is mounted over the light transmission aperture 127 to close off the interior of the housing from dust, dirt and other forms of debris. As illustrated in Fig 3D3B, the bottom scanning unit 117 is mounted to a pair of support brackets 129 which in turn are mounted to a base support bracket 132 connected to the scanning tunnel framework 304A( shown in Fig. 1E). Scanning unit 117 is mounted relative to the conveyor belt sections 302A and 302B so that the scanning window 128 on the bottom scanning unit 117 is disposed at about 2 8° to the protective conveyor window 306, disposed over the gap region 305 (e.g. about 5.0 inches wide) formed between the conveyor belt sections 302A and 302B. The bottom scanning unit 117 is mounted about 12.5 inches below the conveyor scanning window 306. Also, the symbol character data outputs from subsystems 118 are supplied to a digital data multiplexer 133 which transmits the symbol character data to the I/O subsystem 800, shown in Fig. 4.

The partial scan patterns produced by individual stationary mirrors 120B, 102C and 120A,120D, in each laser scanning subsystem 118 are shown in Figs. 3D4 and 3D5, respectively. The complete pattern generated by each subsystem 118 is shown in Fig. 3D6. The composite omnidirectional photodetector support frame 153 which is stationarily mounted to the optical bench by way of vertically extending support elements 154A through 154F. The electrical analog scan data signal produced from each photodetector is processed in a conventional manner by its analog scan data signal processing board 201A (through 201F) which is also supported upon the photodetector support frame 153, as shown. Notably, the height of the photodetector support board, referenced to the base plate (i.e. optical bench 143), is chosen to be less than the minimum height so that the beam folding mirrors 142A-142F must extend above the holographic disc 130 in order to realize the prespecified laser scanning pattern of the illustrative embodiment. In practice, this height parameter is not selected (i.e. specified) until after the holographic disc has been completely designed according to the design process of the present invention, while satisfying the design constraints imposed on the disc design process. As explained in detail in WIPO Patent Application Publication No. WO 98/22945, the use of a spreadsheet-type computer program to analytically model the geometrical structure of both the laser scanning apparatus and the ray optics of the laser beam scanning process, allows the designer to determine the geometrical parameters associated with the holographic scanning facets on the disc which, given the specified maximum height of the beam folding mirrors (Y is defined in Fig. 25A2), will produce the prespecified laser scanning pattern (including focal plane resolution) while maximizing the use of the available light collecting area on the holographic scanning disc.

As best shown in Fig. 3A3, the parabolic light collecting mirror 149A (through 149F) associated with each laser scanning station is disposed beneath the holographic scanning disc 130, along the central reference plane associated with the laser scanning station. While certainly not apparent from this figure, precise placement of the parabolic light collecting element (e.g. mirror) 149A relative to the holographic facets on the scanning disc 130 is a critical requirement for effective light detection by the photodetector 152A (to 152F) associated with each laser scanning station. Placement of the photodetector at the focal point of the parabolic light focusing mirror alone is not sufficient for optimal light detection in the light detection subsystem of the present invention. As taught in WIPO Patent Application Publication No. WO 98/22945, careful analysis must be accorded to the light diffraction efficiency of the holographic facets on the scanning disc and to the polarization state(s) of collected and focused light rays being transmitted therethrough for detection. As will become more apparent hereinafter, the purpose of such light diffraction efficiency analysis ensures the realization of two important conditions, namely: (i) that substantially all of the incoming light rays reflected off an object (e.g. bar code symbol) and passing through the holographic facet (producing the corresponding instant scanning beam) are collected by the parabolic light collecting mirror; and (ii) that all of the light rays collected by the parabolic light collecting mirror are focused through the same holographic facet onto the photodetector associated with the station, with minimal loss associated with light diffraction and refractive scattering within the holographic facet. A detailed procedure is described in WIPO Patent Application Publication No..WO 98/22945 for designing and installing the parabolic light collecting mirror in order to satisfy the critical operating conditions above.

As shown in Figs. 3A2 and 3A3, the six digital scan data signal processing boards 202A through 202F, are arranged in such a manner to receive and provide for processing the analog scan data signals produced from analog scan data signal processing boards 201A through 201F, respectively. As best shown in Figs. 3A2 and 3A3, each digital scan data signal processing board 202 A through 202 F is mounted vertically behind its respective beam folding mirror 142A through 142F. A control board (i.e. motherboard) 200 is also mounted upon the base plate 143 for processing signals produced from the digital scan data signal processing boards. A conventional power supply board 155 is also mounted upon the base plate 143, within one of its extreme corners. The function of the digital scan data signal processing boards 202A-202F, the central processing board 200, and the power supply board will be described in greater detail in connection with the functional system diagram shown in Fig. 3A7A through 3A7C. As shown in Figs. 3A7A through 3A7C, electrical cables are used to conduct electrical signals from each analog scan data signal processing board 201A-201F to its associated digital scan data signal processing board 202A-202F, and from each digital scan data signal processing board to the central processing board 200. Regulated power supply voltages are provided to the central signal processing board 200 by way of an electrical harness (not shown), for distribution to the various electrical and electro-optical devices requiring electrical power within the holographic laser scanner as shown in Figs. 3A7B and 3A7C. In a conventional manner, electrical power from a standard 120 Volt, 60 HZ, power supply is provided to the power supply board by way of flexible electrical wiring (not shown). Symbol character data produced from the central processing board 200 is transmitted to the I/O subsystem 800, over a serial data transmission cable connected to a serial output (i.e. standard RS232) communications jack installed through a wall in the scanner housing 140 (140').

Many of the system components comprising each of the holographic laser scanning units 101 through 116 are realized on control board 200, the plurality (e.g. six) analog signal processing boards 201A through 201F, and the six digital signal processing boards 202A through 202F.

In the illustrative embodiment shown in Fig. 3A7A, each analog scan data signal processing board 201A through 201F has the following components mounted thereon: a photodetector 152A (through 152F) (e.g. a silicon photocell) for detection of analog scan data signals as described hereinabove; and analog signal processing circuit 235A (through 235F) for processing detected analog scan data signals.

In the illustrative embodiment, each photodetector 152A through 152F is realized as an opto-electronic device and each analog signal processing circuit 235A through 235F aboard the analog signal processing board (201A through 201F) is realized as an Application Specific Integrated Circuit (ASIC) chip. These chips are suitably mounted onto a small printed circuit (PC) board, along with electrical connectors which allow for interfacing with other boards within the scanner housing. With all of its components mounted thereon, each PC board is suitably fastened to the photodetector support frame 153, along its respective central reference frame, as shown in Fig. 3A1.

In a conventional manner, the optical scan data signal $D_0$ focused onto the photodetector 152A during laser scanning operations is produced by light rays of a particular polarization state (e.g. S polarization state) associated with a diffracted laser beam being scanned across a light reflective surface (e.g. the bars and spaces of a bar code symbol) and scattering thereof. Typically, the polarization state distribution of the scattered light rays is altered when the scanned surface exhibits diffuse reflection characteristics. Thereafter, a portion of the scattered light rays are reflected along the same outgoing light ray paths toward the holographic facet which produced the scanned laser beam. These reflected light rays are collected by the scanning facet and ultimately focused onto the photodetector of the associated light detection subsystem by its parabolic light reflecting mirror 149A through 149F disposed beneath the scanning disc 130. The function of each photodetector 152A through 152F is to detect variations in the amplitude (i.e. intensity) of optical scan data signal $D_0$, and to produce in response thereto an electrical analog scan data signal $D_1$ which corresponds to such intensity variations. When a photodetector with suitable light sensitivity characteristics is used, the amplitude variations of electrical analog scan data signal $D_1$ will linearly correspond to the light reflection characteristics of the scanned surface (e.g. the scanned bar code symbol). The function of the analog signal processing circuitry is to band-pass filter and preamplify the electrical analog scan data signal $D_1$, in order to improve the SNR of the output signal.

In the illustrative embodiment, each digital scan data signal processing board 202A through 202F is constructed in substantially the same manner. On each of these signal processing boards, the following devices are provided: an analog-to-digital (A/D) conversion circuit 238A through 238F, as taught in copending US Application Nos. 09/243,078 filed February 2, 1999 and 09/241,930 filed February 2, 1999, realizable as a first application specific integrated circuit (ASIC) chip; a programmable digitizing circuit 239A through 239F realized as a second ASIC chip; a start-of-facet-sector pulse (SOFSP) generator 236A through 236F realizable as a programmable IC chip, for generating SOFSPs relative to home-offset pulses (HOP) generated by a HOP generation circuit 244 on the control board 200, shown in Fig. 3A7B, and received by the SOFSP generator; an EPROM 237A through 237F for storing parameters and information represented in the tables of Figs. 10C, 10E, 10F1 and 10F2, and a programmed decode computer 240A through 240F realizable as a microprocessor and associated program and data storage memory and system buses, for carrying out symbol decoding operations and recovery of SOFSPs from the digitizer circuit 239A in a synchronous, real-time manner as will be described in greater detail hereinafter. In the illustrative embodiment, the ASIC chips, the microprocessor, its associated memory and systems buses are all mounted on a single printed circuit (PC) board, using suitable electrical connectors, in a manner well known in the art.

The function of the A/D conversion circuit 238A through 238F is to perform a thresholding function on the second-derivative zero-crossing signal in order to convert the electrical analog scan data signal $D_1$ into a corresponding digital scan data signal $D_2$ having first and second (i.e. binary) signal levels which correspond to the bars and spaces of the bar code symbol being scanned. In practice, the digital scan data signal $D_2$ appears as a pulse-width modulated type signal as the first and second signal levels thereof vary in proportion to the width of bars and spaces in the scanned bar code symbol.

The function of the programmable digitizing circuit 239A through 239F of the present invention is two-fold: (1) to convert the digital scan data signal D2, associated with each scanned bar code symbol, into a corresponding sequence of digital words (i.e. a sequence of digital count values) $D_3$ representative of package identification (I.D.) data; and (2) to correlate time-based (or position-based) information about the facet sector on the scanning disc that generated the sequence digital count data (corresponding to a scanline or portion thereof) that was used to read the decoded bar code symbol on the package scanned in the scanning tunnel subsystem 100. Notably, in the digital word sequence D3, each digital word represents the time length duration of first or second signal level in the corresponding digital scan data signal $D_2$. Preferably, the digital count values are in a suitable digital format for use in carrying out various symbol decoding operations which, like the scanning pattern and volume of the present invention, will be determined primarily by the particular scanning application at hand. Reference is made to U.S. Patent No. 5,343,027 to Knowles, as it provides technical details regarding the design and construction of microelectronic digitizing circuits suitable for use in each holographic laser scanning subsystem 101 through 116 in the system of the present invention.

In bar code symbol scanning applications, each programmed decode computer 240A through 240F has two primary functions: (1) to receive each digital word sequence $D_3$ produced from its respective digitizing circuit 239A through 239F, and subject it to one or more bar code symbol decoding algorithms in order to determine which bar code symbol is indicated (i.e. represented) by the digital word sequence $D_3$, originally derived from corresponding scan data signal $D_1$ detected by the photodetector associated with the decode computer, and (2A) to generate a specification for the laser scanning beam (or plane-sector) that was used to collect the scan data underlying the decode bar code symbol, or alternatively, (2B) to generate a specification of the holographic scanning facet sector or segment that produced the collected scan data D1 from which each laser-scanned bar code symbol is read.

In accordance with general convention, the first function of the programmed decode computer 240A through 240F hereof is to receive each digital word sequence $D_3$ produced from the digitizing circuit 239A through 239F, and subject it to one or more pattern recognition algorithms (e.g. character recognition algorithms) in order to determine which pattern is indicated by the digital word sequence $D_3$. In bar code symbol reading applications, in which scanned code symbols can be any one of a number of symbologies, a bar code symbol decoding algorithm with auto-discrimination capabilities can be used in a manner known in the art.

The second function of the programmed decode processor 240A through 240F is best described with reference to Figs. 11D and 11E. In the illustrative embodiment hereof, each programmed decode computer 240A through 240F generates a specification for the laser scanning beam (or plane-sector) in terms of the minimum and maximum facet angles delimited by the facet sector involved in the scanning the decoded bar code symbol. Such minimum and maximum facet angles are indicated in the last column of the table shown in Fig. 11D. Alternatively, each programmed decode computer 240A through 240F could generate a specification of the holographic scanning facet sector or segment that produced the collected scan data from which each laser-scanned bar code symbol is read. In such a case, each programmed decode processor would generate for each decoded bar code symbol, the following items of information: the identification number of the laser scanning subsystem that produced the underlying scan data from which the bar code symbol was read; the identification number of the laser scanning station that produced the underlying scan data from which the bar code symbol was read; the facet number of the scanning facet on the scanning disc that produced the underlying scan data from which the bar code symbol was read; and the facet sector number of the scanning facet on the scanning disc that produced the underlying scan data from which the bar code symbol was read. Such information items could be generated using tables similar to those set forth in Fig. 11D, except that instead of reading out minimum and maximum facet angles (as provided in the rightmost column thereof), the facet sector (or segment) number could be read out, and assembled with the other items of information providing the specification of how the laser scanning beam in issue was generated from the holographic laser scanning subsystem. In either case, such information will enable the data management computer system 900 of Fig.4 to compute a vector-based geometrical model of the laser scanning beam used to scan the read bar code symbol represented by the coordinated symbol character data. As will be described in greater detail hereinafter, the geometrical model of the laser beam is produced in real-time aboard the data management computer system 900 using "3-D ray-tracing techniques" which trace the laser scanning beam from (1) its point of original on the holographic scanning disc, (2) to its point of reflection off the corresponding beam folding mirror, and (3) towards the focal point of the laser scanning beam determined by the focal length of the scanning facet involved in the production of the laser scanning beam. From the computed vector-based geometrical model of the laser scanning beam, the location of the decoded bar code symbol (i.e. when it was scanned by the laser scanning beam being geometrically modeled) can be specified (i.e. computed) in real-time relative to a local coordinate reference system symbolically embedded within the laser scanning subsystem.

As shown in Fig. 3A7B through 3A7C, the control board 200 comprises a number of components mounted on a small PC board, namely: a programmed microprocessor 242 with a system bus and associated program and data storage memory, for controlling the system operation of the holographic laser scanner and performing other auxiliary functions: first, second, third, forth, fifth and sixth serial data channels 243A through 243F. for receiving serial data input from the programmable decode computers 240A through 240F: an input/output (I/O) interface circuit 248 for interfacing with and transmitting symbol character data and other information to the I/O subsystem 800, and ultimately to the data management computer system 900 of Fig. 4; home pulse detector 245 realizable as the electronic circuit shown in Fig. 3A8C, for detecting the home pulse generated when the laser beam 250 from VLD 253 (in home pulse marking sensing module 251 shown in Fig. 3A8A) is directed through home-pulse gap 131 (between Facets Nos. 5 and 12) and sensed by photodetector 253: and a home-offset-pulse (HOP) generator 244 realized as an ASIC chip, for generating a set of six home-offset pulses (HOPs) in response to the detection of each home pulse by circuit 245. In the illustrative embodiment, each serial data channel 243A through 243F is realized as an RS232 port, although it is understood that other structures may be used to realize the function performed thereby. The programmed control computer 242 also produces motor control signals, and laser control signals during system operation. These control signals are received as input by a power supply circuit 252 realized on the power supply PC board. Other input signals to the power supply circuit 252 include a 900 Volt, 60 Hz line voltage signal from a standard power distribution circuit. On the basis of the received input signals, the power supply circuit produces as output. (1) laser source enable signals to drive VLDs 253A, 253B and 253C, respectively, and (2) a motor enable signal in order to drive the scanning disc motor 150 coupled to holographic scanning disc 130.

First Method Of Determining Laser Beam Position In Holographic Laser Scanners Under Constant Scanning Motor Speed Conditions

In Figs. 10A through 11E, a first method is shown for determining the position of the laser scanning beam produced by holographic laser scanning subsystems under constant scanning motor speed conditions and synchronously encoding facet section information with digital count data in the digitizer circuit of each decode board. In general, this method involves optically encoding the "home pulse mark/gap 131" along the edge of the holographic scanning disc, and upon detecting the same, generating home offset pulses (HOPs) which are used to automatically generate the start of each facet pulse (SOFPs), and the SOFPs in turn are used to automatically generate the start-of-facet-sector pulses (SOFSPs) aboard each decode board. The details of this process will be described hereinbelow.

Referring now to Figs. 10A through 11E, it is noted that each home offset pulse produced from HOP generating circuit 244 is provided to the SOFSP generator 236A through 236F on the decode processing board. When the HOP pulse is received at the SOFSP generator 236A through 236F on a particular decode processing board, the home pulse gap 131 on the scanning disc 130 is starting to pass through the laser beam directed therethrough at the scanning station associated with the decode signal processing board. As shown in Figs. 10A through 11E, timing information stored in the tables shown in these figures is used by the SOFSP generator 236A (through 236F) to generate a set of SOFSPs in response to the received HOP pulse during each revolution of the scanning disc. This enables a digital number count (referenced from the HOP) to be generated and correlated along with the digital data counts produced within the digitizer circuit 239A in a synchronous manner. As shown in Fig. 10B, each SOFSP generator 236A through 236F comprises: a clock 260 for producing clock pulses (e.g. having a pulse duration of about 4 microseconds); a SOFP generation module 261 for generating SOFPs using the table of Fig. 10C in accordance with the process depicted in Fig. 10D; a SOFSP generation module 262 for generating SOFSPs using the table of Fig. 10E and production rules set forth in Figs. 10F1 and 10F2, in accordance with the process depicted in Fig. 10G: and a control module 263 for controlling the SOFP generator 261 and the SOFSP generator 262, and resetting the clock 260 upon each detection of a new HOP from the HOP generator on the control board 200 associated with the holographic scanning unit.

As shown in Fig. 11A1 and 11A2, the digitizer circuit 239A of the present invention comprises a number of subcomponents. In particular, a scan data input circuit 322 is provided for receiving digital scan data signal $D_2$. A clock input 312 is provided from an external fixed frequency source 313, e.g. a 40 MHz crystal, or another external clock 15 to produce a pulse train. The output of the clock input circuit 312 is provided to the clock divider circuitry 314. That circuit 314 includes dividers for successively dividing the frequency of the clock pulses by a factor of two to produce a plurality of clock frequencies, as will be described in detail later. This plurality of clock signals is provided to a clock multiplexer 316. As shown in Fig. 11A1 and 11A2, the 40 MHz clock input signal is also provided directly to the clock multiplexer 316. The clock multiplexer 316 selects the desired output frequencies for the device based upon control signals received from clock control circuitry in the programmable processor 240A and in associated circuitry. The output of the clock multiplexer 316 comprises an S clock signal which provides the basic timing for the digitizer circuit 239A, as well as the input to digital counters. The processing of the input (bar code) scan data $D_2$ is provided from signal processor 238A. The scanner input circuit 322 provides output signals which represent the detected bar code signal to be processed and are provided to the transition and sign detecting circuit 324. That circuit detects the transition from a bar to a space or from a space to a bar from the input signals provided thereto, and also determines whether the symbol occurring before the transition is a bar or a space. Thus, the transition and sign detector 324 provides a signal bearing the "sign: information (referred to as the "SIGN" signal) which is provided to multiplexer 342, and thus a primary first-in, first-out (FIFO) memory which serves as the input of programmable processor 240A. The transition and sign circuit 324 also provides a signal to the sequencing means 328 to commence operation of the sequencing circuit 328. The sequencing circuit 328 sequences the digitizer circuit through a predetermined number of steps which begin at the occurrence of each symbol transition and which will be described in detail later. Sequencing circuit 328 provides a FIFO write signal to the FIFO input of primary FIFO 340 and the auxiliary FIFO 341, at the proper time to enable it to accept data thereinto. The sequencing circuit 328 provides input signals to digitizing counting circuit 330 so that the starting a nd stopping of the counters, occurring with the detection of each transition, is properly sequenced. The counting circuit 330 also receives an input signal from the clock multiplexer 316 (S Clock). This signal runs the counters at the selected rate when they are enabled by the sequencing means 328. The clock multiplexer 316, the sequencer circuit 328 and the counting circuit 330 each supply signals to the interface circuit 333 which enables it to properly pass the digitized count data to the primary and auxiliary FIFOs 340 and. 341, via multiplexer 342, as shown in Figs. 11A1 and 11A2. The clock multiplexer 316 is arranged to provide two banks of available frequencies for the device to use, namely, an upper and a lower bank. The selection of frequencies from the upper bank or the lower bank is determined by a frequency bank switching circuit 362. The frequency bank switching circuit 362 also provides an input to an array reset 38 which provides a signal to reset the clock divider 314 on command. The clock divider circuitry 314 also generates a TEST reset signal by inverting the array reset signal. The TEST reset signal resets the remainder of the circuit 239A. The command which initiates this reset condition is normally generated by a testing device (not shown) connected to device 239A and used to test it upon its fabrication.

As shown in Figs. 11A1 and 11C, digital count data or a string of zeros (representative of correlated SOFP data or count values from the HOP) are written into the primary FIFO using multiplexer 342 and write enable signals generated by the sequencing circuit 328. The SOFP marker (i.e. string of zeros) is written over the data in the primary FIFO 340 whenever the SOFP count data is presented to the digitizer circuit. Also, digital count data or a string of zeros (representative of correlated SOFSP data or SFS count values from the HOP) are written into the auxiliary FIFO 341 using multiplexer 342 and write enable signals generated by the sequencing circuit 328. The SOFSP marker (i.e. string of zeros) is written over the data in the auxiliary FIFO 341 whenever the SOFP count data is presented to the digitizer circuit. With such a data encoding scheme, the decoder 240A, is allowed to decode process the scan count data in the FIFOs, as well as determine which facet sector produced the laser scanning beam. The later function is carried out using the tables set forth in Figs. 11C1 through 11D and the method described in the flow chart of Fig. 11E. As shown in Fig. 11B, the output of the 240A is a scan beam data element comprising the package ID data, the scanner number (SN), the laser scanning station number (SSN), facet number (FN) and minimum and maximum facet angles subtending the facet sector involved in generating the laser beam used to read the decoded bar code symbol representative of the package ID data. Additional details concerning the design and construction of digitizer circuit (239A) can be found in Co-Applicant's US Patent No. 5.343,027.

Second Method Of Determining Laser Beam Position In Holographic Laser Scanners Under Constant Scanning Motor Speed Conditions

In Figs. 12A through 13D, an alternative method is shown for determining the position of the laser scanning beam holographic laser scanning subsystems under constant scanning motor speed and synchronously encoding facet section information with digital count data in the digitizer circuit of each decode board. This method involves optically encoding the start of each facet sector (SFS) mark along the outer edge of the holographic scanning disc 130, as shown in Fig. 12A. This optical encoding process can be carried out when mastering the scanning disc using a masking pattern during laser exposure. The home pulse gap sensing module described above can be used to detect the home pulse gap as well as the SFS marks along the edge of the scanning disc. As shown, the home gap or functionally equivalent mark of a predetermined opacity generates a home pulse, whereas the SFS marks generate a series of SOFSPs during each revolution of the scanning disc. The home pulse is detected on the home pulse detection circuit on the control board and is used to generate HOPs as in the case described above. The HOPs are transmitted to each decode board where they are used reference (i.e. count) how many SOFSPs have been counted since the received HOP, and thus determine which facet sector the laser beam is passing through as the scanning disc rotates. Digital counts representative of each SOFSP are synchronously generated by the SOFSP generator aboard each decode board and are loaded into the auxiliary FIFO 341, while correlated digital count scan data is loaded into both the primary and auxiliary FIFOs in a manner similar to that described above. The decode processor can use the information in tables 13C 1 and 13C2 to determine which SOFSP counts correspond to which minimum and maximum facet angles in accordance with the decode processing method of the present invention described in Fig. 13D. The advantage of this method is that it is expected to be less sensitive to variations in angular velocity of the scanning disc.

Referring now to Fig. 4, the individual scanning subsystems within the system of the first illustrative embodiment are shown interfaced with the data management computer system 900 by way of I/O port subsystem 800 well known in the art. As shown, the data management computer system 900 has a graphical user interface (GUI) 901 supported by a display terminal, an icon-pointing device (i.e. a mouse device), keyboard, printer, and the like. The GUI enables programming of the system, as well as the carrying out of other management and maintenance functions associated with proper operation with the system. Preferably, the data management computer system 900 also includes a network interface card for interfacing with a high-speed Ethernet information network that supports a network protocol such as TCP/IP well known in the art.

The above-described methods for determining the position of laser scanning beams in holographic laser scanning systems involve recovering laser position information using a "home-pulse" mark on the holographic disc rotated a constant angular velocity. However, it has been discovered that such techniques work satisfactorily only when the angular velocity of the scanning disc is maintained very close to the designed nominal angular velocity during start-up and steady-state operation. In many applications, it is difficult or r otherwise unfeasible to maintain the angular velocity of the scanning disc constant such modes of operation, even when using speed locking/control techniques known in the electrical motor arts. Thus in many applications there will be a need for a laser beam position determination system and method that works for any scanning disc motor speed as well as under small accelerations (and decelerations) of the scanning disc motor, hereinafter referred to as varying scanning motor speed conditions.

Laser Position Determination In Holographic Laser Scanners Under Varying Scanning Motor Speed Conditions

In Figs. 14A through 14D, a novel system and method is illustrated for accurately determining the position of laser scanning beams in holographic laser scanning subsystems under varying scanning disc motor speed conditions. In this embodiment of the present invention, a holographic scanning disc having a home pulse mark or gap 131 as shown in Fig. 3B2 can be used to generate the required laser scanning pattern. Also, as shown in Fig. 3B1, each holographic scanning disc is provided with a home pulse sensing module 251 and home pulse detection circuit 245 as shown in Figs. 3A8A. 3A8B and 3A8C and described in detail hereinabove.

As illustrated in Fig. 14A, each time the home pulse mark or gap on the scanning disc 130 passes the home pulse sensing module 251, a home pulse (HP) is automatically generated from the home pulse detection circuit 245". Each time a home pulse is generated from the home pulse detection circuit 245", a set of home offset pulses (HOPs) is sequentially produced from HOP generation circuit 244" in accordance with the process depicted in Fig. 14C. The number of HOPs produced in response to each detected HP is equal to the number of laser scanning stations (i.e. scanning modules), N, arranged about the laser scanning disc. Each generated HOP is provided to the SOFSP generator (236A" through 236F") on the decode processing board (202A 'through 202F') associated with the HOP. When the HOP pulse is received at the SOFSP generator on its respective decode signal processing board, the home pulse mark or gap on the scanning disc 130 is then starting to pass through the laser beam directed therethrough at the laser scanning station associated with the decode signal processing board. During each revolution of the scanning disc, the SOFSP generation module 261'' within each SOFSP generation circuit 236 " through 236" generates a set of start of facet pulses (SOFPs) relative to the HOP, and also a set of start of facet sector pulses (SOFSPs) relative to each SOFSP. This enables a SOFP and a SOFSP (referenced from the HOP) to be generated by each SOFSP generation circuit 236A'' through 236F" and provided to the digitizer circuit 239A through 239F so that the SOFP and SOFSP data can be correlated with the digital data counts produced within the digitizer circuits in a synchronous manner. Within the decode processor. SOFP and SOFSP data can be translated into laser beam position data expressed in terms of the minimum and maximum angles that delimit the facet sector producing the scan data from which the bar code symbol was decoded.

In the illustrative embodiment, the HOP generation circuit 244" is implemented using an 87C51 microcontroller. The microcontroller uses two inputs: the home-pulse detected signal from the home pulse detection circuit 245" connected to an interrupt pin of the 87C51 ; and a "motor-stable" signal from the scanning motor controller. The microcontroller has as many outputs as there are laser scanning stations (i.e. scanning modules) in each laser scanning subsystem. Each output pin is dedicated to sending HOPs to a particular laser scanning station within the subsystem.

In general, each SOFSP generation circuit is realized as a programmed microprocessor. However, for purposes of understanding the SOFSP generation circuit, it will be helpful to schematically represent it as comprising a number of subcomponents, as shown in Fig. 14B. As shown therein, each SOFSP generator 236A" through 236F" comprises: a clock 260" for producing clock pulses (e.g. having a pulse duration of about 4 microseconds); a SOFP generation module 261" for generating SOFPs in accordance with the process depicted in Fig. 14D; a SOFSP generation module 262" for generating SOFSPs in accordance with the process depicted in Fig. 14D; and a control module 263" for controlling the SOFP generator 261" and the SOFSP generator 262", and resetting the clock 260" upon each detection of a new HOP from the HOP generator 244" on the control board 200" associated with the holographic scanning unit.

In the illustrative embodiment, the SOFP/SOFSP generation circuit 236A" (through 236F") has been implemented using an programmed 87C52 microcontroller mounted on each decoding board associated with a particular scanning station. The HOP for the corresponding scanning station is received on an interrupt pin of the microcontroller. The microcontroller outputs three signals to the decode processor 240A (through 240F): (i) SOFPs; (ii) SOFSPs; and (iii) a signal processor adjustment signal which constitutes a level high (or low) when the facet that passes the scanning station's laser is a facet on a near (or far) focal plane.

The operation of the HOP generation circuit 244" and the SOFSP generation circuit 236A" (through 236F') will now be described within reference to the flow charts set forth in Fig. 14C and 14D. In these flow charts described below, the following list of symbols are used:

- $t_i$ = timer value at start of home-pulse for the $i^{th}$ rotation of the disc;
- $T_i$ = time-period of the $(i\text{-}l)^{th}$ rotation of the disc;
- $x_{HJ}$ = angular value of the position of the laser of the $j^{th}$ scanning station (i.e. scanning module) of the system, relative to the previous scanning station (home-pulse laser for scanning station 1);
- $x^{Fj}$ = angular width of the $j^{th}$ facet of the disc;
- $x^{Fjm}$ = angular width of the $m^{1b}$ sector (i.e. segment) of the $j^{th}$ facet of the disc;
- $t_i^{Hj}$ = time elapsed between the $j^{th}$ HOP and the $(j\text{-}l)^{th}$ HOP of the $i^{th}$ rotation of the disc;
- $t_i^{Fj}$ = time elapsed between the Start of Facet Pulse (SOFP) of facet $j$ and facet $j\text{-}l$ of the $i^{th}$ rotation of the disc;
- $t_i^{Fjm}$ = time elapsed between the Start of Facet Segment Pulse (SOFSP) of sector $m$ and sector $m\text{-}l$ of facet $j$ of the $i^{th}$ rotation of the disc;

- $t_i^n$ = time at which the nth HOP/SOFP of the jth rotation of the disc is outputted; and
- $t_i^{pn}$ = time at which the pth SOFSP of the nth facet of the ith rotation of the disc is outputted.

Each time the "start of home-pulse mark" is detected, the home-pulse pickup circuit 251 described hereinabove automatically produces a negative going output pulse which is provided to the HOP generation circuit 244", as shown in Fig. 14A. The HOP generation circuit 244' uses this negative going output pulse to calculate the times at which the home-pulse mark reaches the different modules (i.e. laser scanning stations) and, in response to such calculated times, to automatically generate and provided HOPs to the SOFSP generation circuit 236A' (through 236F'). The calculation is based on the important assumption that the motor speed for the ith rotation is very close to the motor speed for the $(i\text{-}l)$th rotation.

As indicated at Block A in Fig. 14C, the process within the SOFSP generation circuit 236A" defines N as the number of laser scanning stations (i.e. scanning modules) in the holographic scanner, and $x^{Hj}$ as the angular offset (i.e. position) of a laser scanning station from the home-pulse sensing module (i.e. pickup) 251. At Block B in Fig. 14C, the process involves initializing the time period or setting $T_0$=0. Then at Block C, the HOP generation circuit determines whether a home pulse (HP) has been detected at its input port. Until an HP is detected, the circuit remains at this control block. When an HP is detected, then at Block D the circuit starts the timer therewithin (i.e. $t=t_0$). Then at Block E, the circuit determines whether another HP has been detected. As shown, the circuit remains at this control block until the next HP is detected. When the HP is detected, then at Block F the circuit samples the timer. The time-period of rotation of the scanning disc is calculated from two consecutive home-pulse detections as follows:

$T_i = t_i - t_{i-1}$, where $T_i$ is the time-period for the ith rotation of the disc. Then at Block G, the circuit determines whether the time-period for the ith rotation is "close" to that for the $(i\text{-}l)$th rotation.

As indicated at Block G, a measure of "closeness" is defined as: $| T_i\text{-}T_{i-1}|$<45 uS. If the time measure is not close, i.e. $|T_i\text{-}T_{i-1}|$> 45 uS, then if the time-period of rotation for the ith and $(i\text{-}l)$th rotation does not satisfy, $|T_i\text{-}T_{i-1}|$ < 45 uS, the circuit checks at Block H to determine whether the scanning disc has rotated at least a 100 times (experimental value). If the scanning disc has not rotated at least a 100 times, then the circuit proceeds to Block E and waits for the next home-pulse and carries out the control process over again. Since it is critical to the performance of the scanner that every scan be associated with laser position information, the time-period has to be accurately predicted when for some reason the time-period between two consecutive rotations of the disc differs by more than 45 uS (experimental value). The assumption here is that the scanning motor speed cannot change suddenly between two rotations.

If the scanning disc has rotated at least a 100 times (i.e. $i$ > 100), then the circuit proceeds to Block I and estimates the time-period of the current rotation $T_i$ by using the time period data for the past n rotations of the disc, given by the following expression:

$$T_i = \sum_{k=i-1-n}^{i-1} a_k * T_k$$

Where the $n$ coefficients $a_{i-1-n}$ through $a_{i-1}$ can be calculated beforehand (and offline) as follows:

If $T_i$ is the actual time-period of rotation i of the disc, at least squares estimate of the time-period for rotation $i+l$ can be calculated by minimizing the function,

$E = \sum_{k=i-1-n}^{i-1} (T_k^{\cdot} - \sum_{j=1}^{n} a_j T_{k-j}^{\cdot})^2$ with respect to each $a_j$ ($j = l,...,n$) The final expressions for the minimized "optimal" values of the coefficients aj are given by : $a_j = (\sum_k T_k^{\cdot} T_{k-j}^{\cdot}) / (\sum_k \sum_j T_{k-j}^{\cdot})$

A good value for n with reasonable computational complexity was found to be 5.

As indicated at Block J, the circuit then calculates the "inter-HOPS" $t_i^{Hj}$ which is the time taken by the home-pulse mark to reach to scanning station $j$ from scanning station $j\text{-}1$. This measure is given by the expression : $t_i^{Hj} = x^{Hj} * T_i$, $j = l,...,N$

Finally, at Block K, the circuit sends (i.e. transmits) HOPs to the SOFSP generation circuit of each laser scanning station (for the ith rotation) at each instant of time given by the expression:

$$t_i^k = \sum_{j=1}^{k} t_i^{Hj}, k = 1,...,N$$

Thereafter, the control process returns to Block E as indicated in Fig. 14C. If at Block G, the time measure is "close" (i.e. I $T_i$ - $T_{i-1}$I < 45 uS). then the circuit proceeds directly to control Block J.

As described above, the HOP generation circuit 244" on the control board 200 accurately predicts when the home-pulse mark on the scanning disc arrives at each scanning station and sends out a negative going pulse to each laser scanning station. In contrast, the SOFP generation circuit 236A" uses the HOPs to calculate when each facet/facet sector passes the laser module in each laser scanning station. Notably, an important assumption here is that the scanning motor speed does not vary too much between two consecutive rotations of the scanning disc.

As indicated at Block A in Fig. 14D, the process within the SOFSP generation circuit 236A" defines the following parameters: N as the number of laser scanning facets on the holographic scanning disk; M as the number of sectors (or "Ticks") on each facet of the scanning disc; $x^{Fj}$ as the angular width of facet $j$ of the scanning disc; and $x^{Fjm}$ as the angular width of sector $m$ of facet $j$ of the scanning disc.

At Block B in Fig. 14D, the process involves initializing the time period or setting $T_0$ = 0. Then at Block C, the SOFSP generation circuit determines whether a home pulse (HP) has been detected at its input port. Until an HP is detected, the SOFSP generation circuit remains at this control block. When an HP is detected, then at Block D the SOFSP generation circuit starts the timer therewithin (i.e. $t=t_0$). Then at Block E. the SOFSP generation circuit' determines whether another HP has been detected. As shown, the SOFSP generation circuit remains at this control block until the next HP is detected. When the HP is detected, then at Block F the SOFSP generation circuit samples the timer contained therewithin. The time-period of rotation of the scanning disc is calculated from two consecutive home-pulse detections as follows: $T_i$ = $t_i$ - $t_{i-1}$, where $T_i$ is the time-period for the ith rotation of the disc. Then at Block G, the SOFSP generation circuit determines whether the time-period for the ith rotation is "close" to that for the (i-1)th rotation.

As indicated at Block G, a measure of "closeness" is defined as: $T_i$ - $T_{i-1}$I < 45 uS. If the time measure is not close, then the time-period of rotation for the ith and (i- 1)th rotation does not , satisfy, I $T_i$ - $T_{i-1}$I < 45 uS. and the SOFSP generation circuit returns to Block E, as indicated in Fig. 14D and looks for another HOP, without sending any SOFP/ SOFSP.

If the time-period of rotation for the ith and (i-l)[1b] rotation does satisfy, I $T_i$ - $T_{i-1}$I<45 uS, then the SOFSP generation circuit proceeds to Block H where the time between start of facet pulses (SOFPs) for facets $j-l$ and $j$ of the disc for the ith rotation is calculated using the expression:

$$t_i^{Fj} = x^{Fj} * T_i, \quad j = l,...,N$$

Then at Block I, the SOFSP generation circuit calculates the "inter-HOPs" which are defined as the time between start of sector pulses $m-l$ and $m$ for facet $j$, corresponding to rotation $i$ of the disc. Such inter-SOFSPs are calculated by the expression:

$$t_i^{Fjm} = t_i^{Fj} / M, \quad m = l,...,M$$

At Block J, the SOFP generation circuit sends out (to the decode processor) SOFPs at the times given by the expression:

$$t_i^n = \sum_{j=1}^{n} t_i^{Fj}, n = 1,...,N$$

Likewise, the SOFSP generation circuit sends out (to the decode processor) SOFSPs at the times given by the expression:

$$t_i^{pn} = \sum_{j=1}^{u} \sum_{m=1}^{p} t_i^{l'jm}, n = 1, \ldots, N; \; p = 1, \ldots, M$$

Using the transmitted SOFPs/SOFSPs, correlated with bar code scan data at the digitizer circuit 239A (through 239F), the decode circuit 240A (through 240F) can then specify the laser beam position in terms of the minimum and maximum angle of the scanning facet sector that generated the bar code scan data that has been correlated therewith using the dual-FIFO digitizer circuit 239A (to 239F) of the present invention. Typically, calculations for each SOFP / SOFSP will be performed in a pipelined fashion since the total computation time far exceeds the time between any two SOFSPs. The laser beam position determination subsystem illustrated in Figs. 14A through 14D and described hereinabove, has been built and tested in holographic tunnel scanning system employing holographic laser scanners having 5 laser scanning stations, scanning discs with 16 facets and 20 facet sectors/segments, and scanning motor speed variations within tne range of between 4800 rpm and 5800 rpm. The system can handle small scanning-motor accelerations (and decelerations).

Notably, the above-described subsystem has limitations on the number of sectors (or segments) that each facet can be resolved into along the scanning disc. While a large number of sectors per facet will guarantee more accurate laser beam position information, the subsystem is limited by the computational time required to output each SOFSP. Average computational times for outputting SOFPs is found to be about 20 uS, and about 12 uS for SOFSPs.

The Laser-Based Package Velocity And Length Measurement Subsystem Of The First Illustrative Embodiment Of The Present Invention

In Fig. 15A, the package velocity and length measurement subsystem 400 is configured in relation to the tunnel conveyor subsystem 500 and package height/width profiling subsystem 600 of the illustrative embodiment. In Fig. 15B1, a direct transmit/receive configuration of the dual-laser based package velocity and measurement subsystem 400' is installed at the location of the vertical and horizontal light curtains 601 and 602 employed in the package height/width profiling subsystem 600. As shown in Fig. 15B1, subsystem 400 comprises a pair of laser diodes (D1 and D2) 401A and 401B, respectively, spaced apart by about 2 inches and mounted on one side of the conveyor belt; a pair of photo-diodes 402A and 402B spaced apart by about 2 inches and mounted on the other side of the conveyor belt, opposite the pair of laser diodes 401A and 401B; and electronic circuits, including a programmed microprocessor 403, for providing drive signals to the laser diodes 401A and 401B, and for receiving and processing the electrical data signals P1 and P2 produced by the photodiodes 402A and 402B so that information representative of the length (L) and velocity (V) of the package 404 moving on the conveyor belt is automatically computed in accordance with the flow chart shown in Figs. 15D1 through 15D3.

In Fig. 15C1, a retro-reflection configuration of the dual-laser based package velocity and measurement subsystem 400 is shown installed at the location of the vertical and horizontal light curtains 601 and 602 employed in the package height/width profiling subsystem 600. The dual laser diodes 405A and 405B used in the dual-laser based package velocity and length measurement subsystem 400 can be driven using the VLD driver circuitry 406A and 406B circuitry shown in Fig. 15C2. In Fig. 15C1, electronic circuitry 407A and 407B is shown for conditioning the signals received by the photoreceivers 407A and 407B in this subsystem are shown in Fig.15C1. The velocity (v) and length (L) of the package transported through the package velocity and measurement subsystem 400 can be computed using microcomputing system 409 carrying out the algorithm disclosed in Figs. 15D1 through 15D3. As shown in Fig. 15C2, the laser beam transmitted from laser diode 405A is retro-reflected by retro-reflector 410A mounted on support structure 411 disposed opposite the support structure 412 supporting laser diodes 405A and 405B and photodiodes 408A and 408B. As shown in Fig. 15C1, the laser beam from laser diode 405A is reflected off retro-reflector 410A and is detected by photodiode 408A, whereas the laser beam from laser diode 405B is reflected off retro-reflector 410B and is detected by photodiode 408B. As when in Fig. 15C1, the output signals from photodetectors 408A and 408B are provided to photoreceiving circuits 407A and 408B respectively, for processing and are then provided to micro-computing system 409 so that the Length (L) and Velocity (V) of the moving packages are computed in accordance with the algorithm described in Figs. 15D1 through 15D3. In the illustrative embodiment shown in Figs. 15C1 and 15C2, laser diode 405A and photodiode 408A are packages as a first laser transceiver module indicated at Block 413, whereas laser diode 408B and photodiode 408B are packaged as a second laser transceiver module 414. As shown in Figs. 15C1 and 15C2 micro-computing system 409 comprises a microprocessor (CPU) 409A display device 409B and keyboard 409C.

The Package Height/Width Profiling Subsystem Of The First Illustrative Embodiment Of The Present Invention

As shown in Figs. 16A and 16B, the global coordinate reference system $R_{global}$ is symbolically embedded within the structure of the package height/width profiling subsystem 600 (and also the package-in-tunnel signaling subsystem 500). As shown in Fig. 16B, the vertically arranged light transmitting and receiving structures 601A and 601B associated with the package height/width profiling subsystem, as well as horizontally arranged light transmitting and receiving structures 602A and 602B associated therewith, are arranged in a manner generally known in the package handling art. As shown in Fig. 16A, the vertically arranged light transmitting and receiving structures 601A and 601B are controlled by a height control unit 603, which produces, as output, a signal $S_H$ consisting of time-sampled package height data collected along the vertical extent of the scanning tunnel aperture, similarly, horizontally arranged light transmitting and receiving structures are controlled by a width control unit 604, which produces, as output, a signal $S_W$ consisting of time-sampled package height data collected along the horizontal extent of the scanning tunnel aperture. The output data streams from height and width control units 603 and 604, and the package length/velocity measurement subsystem 400, are provided as input to an H/W data processor 605, programmed to produce (i) package profile dimension data element (e.g. H, weight, etc. as well as (ii) a package-in-tunnel (PIT) indication (token) data element for each package detected by subsystem 600.

In the illustrative embodiment, package height/width profiling subsystem 600 is realized by integrating (i) the profiler system (Model No. P101-144-200) from KORE, Inc. of Grand Rapids, Michigan, and (ii) the package velocity and measurement subsystem 400 described above, and providing programmed H/W data processor 605 in accordance with the principles of the present invention. The primary function of the package height/width profiling subsystem 600 is to obtain x and y coordinates associated with the profile of each package as it passes through the light curtain arranged in the x-y plane of the global coordinate reference system $R_{global}$. The function of the package velocity and length measurement subsystem 400 is to obtain the z coordinate(s) (i.e. the run-length L) of the package relative to the global reference system, at the time of package height/width profiling (i.e. when the package has passed the dual laser beam transceiver of this subsystem). Notably, the package height/width profiling subsystem 600 carries out the function of the package-in-tunnel signaling subsystem 500. That is, each time a package is detected at the entry side of the scanning tunnel, the subsystem 600/500 automatically generates a package-in-tunnel (PIT) data element for transmission to the data element queuing, handling and processing subsystem 1000 to be described in greater detail below.

In the tunnel scanning system of the first illustrative embodiment, packages must be transported along the conveyor belt in a singulated manner (i.e. physically arranged so that one package is positioned behind the other package with a space disposed therebetween). In the event that this condition is not satisfied, the package height/width profiling subsystem 600 is designed to automatically detect that packages within the system have not been properly singulated (i.e. are arranged in a side-by-side and/or stacked configuration) and generate a control signal which causes a downstream package deflector to reroute the multiple packages through a package singulator unit and then rerouted through the scanning tunnel system without human intervention.

For example, subsystem 600 can simultaneously detect when two boxes 608 and 609 moving along conveyor 300, pass through non-singulated with a small gap or space 610 between the boxes, as shown in Figs. 17A through 17C. In this case, the horizontal light curtain $T_w$, $R_w$ of the package dimensioning subsystem 600 will automatically detect the gap 610.

When the two boxes 611 and 612 are close to each other or when one is on top of the other, as shown in Figs. 18A through 18C, subsystem 600 employs a simultaneous package detection method based on package width (or height) measurements. This method of simultaneous package detection is best described by considering the width measurement taken by the subsystem over time as being expressible as $[x_1, x_2.....x_n]$. According to the simultaneous package detection/tracking method hereof, the subsystem 600 employs a novel FIR digital filter system, as illustrated in Figs. 19A through 19D.

In general, the FIR digital filter formulation has a transfer function which fits the linear operation of differentiation where $d/dt\ e^{iwt}=iwe^{iwt}$. In the frequency domain, this implies that the transfer function is of the form:

$$H(w)=iw.$$

Letting the digital filter be of the form
$Y_a= (N/Z_{K=-N})\ C_k X_{n-k.}$ with coefficients $C_k=-C_k$, the transfer function
can be expressed as:

$$H(w) = [2c_i \sin w + 2c_2 \sin 2w + .... + 2c_N \sin Nw]i.$$

A Fourier Series approximation of the function can be expressed as:=

$$H(w) = \begin{cases} iw & |w| < w_c \\ c & |w| > w_c \end{cases}$$

The resulting filter will have a passband of $[o, w_c]$. This is a low pass (smoothing) differentiator for $w_c < \pi$. The filter coefficients can be computed using the formula $C_k = (a_k + ib_k)/2$ where $k = 0$; where

$$a_k = \upsilon \text{ and } b_k = (1/\pi) I_{\cdot\pi} \, \mu(w) \sin kw \, dw$$

$$b_k = (2/\pi) I_0{}^{wc} \, i\omega \sin kw \, dw$$

$$C_k = (-1/\pi)((\sin k w_c k) - (\omega_c \cos k w_c / k))$$

Notably, $w_c$ is a value in the range of $[o, \pi]$ when $w_c = \pi$, and also

$$C_k = (1/k)(-1)^k$$

Using the above formulation, a digital filter can be designed for the simultaneous package detection method of subsystem 600. For taking the 1st spatial derivative, a filter having a low pass frequency of $f_c + o$ is used (1 is used where $w_c = 2\pi$). This will help filter out the noise during measurement operations in subsystem 600. For taking the 2nd spacial derivative, an all pass band ($w_c = \pi$) filter is used. To improve the detection performance, in particular to reduce flash-alarm rate, the present invention teaches using a 3rd spacial derivative signal to sample the 2nd derivative zero crossings of the second spatial derivative signal, and thus ensure that false-alarms do not happen due to the lowering of the lst derivative threshold in the digital filter design. The details of the FIR digital filter of the present invention will be described below with reference to Fig. 11A.

As illustrated in Fig. 19A, the digital filter method of the present invention comprises: (A) computing the 1st spatial derivative (or gradient function) of x(n) for all spatial samples n; (B) computing the 2nd spatial derivative of x(n) for all samples n; (C) computing the 3rd spatial derivative of x(n) for all spatial samples n; (D) determine whether the lst spatial derivative signal x'(n) is greater than the threshold $\tau_1$; (E) using the thresholded 1st spatial derivative signal x'(n) to sample the 2nd spatial derivative signal x"(n); (F) detecting the zero-crossings of x"(n) to produce a zero-crossing signal; (G) sampling the detected zero-crossing signal using the 3rd spatial derivative signal x'''(n) to produce a sampled zero-crossing signal; (H) t h re s holding the sampled zero-crossing signal against the threshold $\tau_2$ to detect sudden changes in the value of x(n); and (I) analyzing the changes in the value of x(n) over a number of time sampling periods in order to determine whether packages are configured side-by-side, stacked or singulated manner.

In Fig. 19B, the digital filter method the present invention is represented in a flow chart, indicating the particular operations carried out in a real-time sequential manner.

As indicated at Block A in Fig. 19B, a sampled position signal x(n) is obtained where n = 0, 1, 2, ..., N-1; the digital filter coefficients c[i] are selected; and thresholds $\tau_1$ and $\tau_2$ are obtained using empirical methods. At Block B in Fig. 19B, the 1st spatial derivative of x(n), denoted x'(n), is computed for all samples n. At Block C in Fig. 19B, the 2nd spatial derivative of x(n), denoted x"(x), is computed for all samples n. A$^+$ Block D in Fig. 19B, the 3rd spatial derivative of x(n), denoted x'''(x), is computed for all samples n. At Block E in Fig. 19B, the position index n is set to zero. At Block F in Fig. 19B, the filter determines whether the lst spatial derivative signal x'(n) is greater than the threshold $\tau_1$, whether sign (x"[x]) $\neq$ sign (x"[n-1]) and whether x"[n] $> \tau_2$. If any one of these conditions are not satisfied, then at Block G the position index n is incremented by 1 (i.e. n = n+l) and then, at Block H, a check is made to determine whether the position index n is less than N. If not, then at Block I, no change is detected. If n < N, then the process flow returns to Block F, as indicated at Block F. If at Block F, all three of the conditions listed therein are satisfied, then at Block J a change is detected at position n across the width of the conveyor belt.

Notably, the digital FIR filter system illustrated in Figs. 19A and 19B is used as a basic filtering module within H/W Data Processor 605 of Fig. 16B. During the operation of the system of the present invention, the H/W Data Processor 605 carries out the simultaneous package detection process of the present invention to be described hereinbelow with reference to Figs. 19C and 19D.

In general, there are two basic scenarios to consider when carrying out the simultaneous package detection method of the present invention: (1) when one box is disposed beside another, as shown in Figs. 17A through 17C; and (2) when one box is disposed on top of a nother as shown in Figs. 18A through 18C. The cases of more than 2 boxes can be easily extended from these two box scenarios.

Considering the side-by-side boxes case, shown in Figs. 17A through 17C, it is noted that the light transmitting and receiving structures ($T_w$, $R_w$) 602A and 602B, respectively, are used to measure the width of the packages when they move through the light curtain structure of Fig. 16B, as it is often referred to by those skilled in the art. In the case of side-by-side boxes, the measurement of package width will change while packages are passing through the light curtain structure. The method of simultaneously detecting packages arranged in a "side-by-side" configuration is illustrated in the flow chart of Fig. 19C.

As indicated at Block A in Fig. 19C, the first step in the method involves obtaining an array of N sampled width measurements W(n) along the total width of the conveyor belt (i.e. edge to edge) as the conveyor belt with packages thereon is transported through the light curtain shown in Fig. 16B. Collection of the array of width data elements, denoted by W(n) for n=0, 1, 2, ..., N-1, is achieved using the array of light beam transmitters and receivers 602A and 602B. shown in Fig. 16B. Naturally, the spatial sampling rate (and thus the number and position of the N samples along the conveyor belt) is selected so that enough width measurements are taken and gaps between packages can be detected.

As indicated at Block B in Fig. 19C, second step in the method involves providing the array of sampled width data W(n) as input to the digital filter system of Fig. 19A so as to detect sudden changes in width data at one or more positions along the width of the conveyor belt. The first spatial derivative of the discrete set of width samples W(n)is defined as W'(n)=W(n)-W(n-1) where n=1,2,...N. The second spatial derivative of the discrete set of height samples W(n)is defined as W"(n)=W'(n)-W'(n-1) where n=1,2,...N. The third spatial derivative of the discrete set of width samples W(n)is defined as w'''(n)=w''(n)-w''(n-1) where n=1,2,...N. The digital filter system of Fig. 19A differentiates the sudden changes in values of W(n) from noise (e.g. measurement errors and slight irregularities in the box shape). As illustrated at Block F in Fig. 19B, the decision rules for the simultaneous detection method are:

(1) determine that the boxes are "side-by-side" if W'(n) > $\tau_1$, sign(W"[n]) $\neq$ sign(W"[n-1]) and W"(n) > $\tau_2$, for any n; and
(2) otherwise, determine that the boxes are singulated.

Notably, sign function indicated by the symbol ( ), denotes the algebraic sign function which is used to find zero crossings in the 2nd spatial derivative signal W"(n). Simulations show that the above decision rules are work well with regard to noise, and always correctly locate abrupt changes in width data, which is necessary to determine that boxes are arranged in a side-by-side configuration.

As indicated at Block C in Fig. 19C, the third step of the method involves analyzing the detected changes in the width data array W(n) for n=0, 1, 2,..., N-1 for a number of time sampling periods, so as to determine the specific "side-by-side" configuration of packages on the conveyor belt.

As indicated at Block D in Fig. 19C, the fourth and last step of the method involves correlating the package dimension data (if collected) with each package in the detected "side-by-side" configuration, and transmitting a special "multiple-in-tunnel" package indicating data element (e.g. MPIT data element) to the data element queuing, handling and processing subsystem 1000 indicates that within subsystem 1000 there is either an irregular-shaped package in the tunnel or multiple side-by-side packages in the tunnel. Subsystem 1000 can then generate a control signal to cause a downstream package router to route such multiple packages through a package singulation unit, and then once again through the scanning tunnel system without human intervention. Considering the "stacked" boxes case, shown in Figs. 18A through 18C, it is noted that the light transmitting and receiving structures ($T_w$, $R_w$) 601A and 601B, respectively, are used to measure the height of the packages as they move through the light curtain structure shown in Fig. 16B. In the case of stacked boxes, the measurement of the package height will change while packages are passing through the light curtain. The method of simultaneously detecting packages arranged in a "stacked" configuration is illustrated in the flow chart of Fig. 19D.

As indicated at Block A in Fig. 19D, the first step in the method involves obtaining an array of N sampled height measurements W(n) along the total height of the tunnel aperture (i.e. top to bottom) as the conveyor belt with packages thereon is transported through the light curtain structure shown in Fig. 16B. Collection of the array of height data elements, denoted by H(n) for n=0, 1, 2, ..., N-1, is achieved using the array of light beam transmitters and receivers 601A and 601B, shown in Fig. 16B. Naturally, the sampling rate (and thus the position of the N samples above the conveyor belt) is selected so that enough height measurements are taken.

As indicated at Block Bin Fig. 19D, the second step in the method involves providing the array of sampled height data H(n) as input to the digital filter system of Fig. 19A so as to process the data array(s) and detect sudden changes in height data at one or more positions above the height of the conveyor belt. The first spatial derivative of the discrete set of height samples H(n) is defined as H'(n)=H(n)-H(n-1) where n=1,2,..., N. The second spatial derivative of the discrete set of height samples H(n) is defined as H''(n)=H'(n)-H'(n-1) where n=1,2,...N. The third spatial derivative of the discrete set of height samples H(n) is defined as H'''(n)=H'''(n)-H'''(n-1) where n=1,2,...N. The digital filter system of Fig. 19B differentiates the sudden changes in values of H(n) from noise (e.g. measurement errors and slight irregularities in the box shape). As illustrated at Block F in Fig. 19A, the decision rules for the simultaneous detection method operating on sampled height data, are:

(1) determine that the boxes are "stacked" if H(n) > $\tau_1$, sign(H"[n]) ≠ sign(H"[n-1]) and H"(n) > $\tau_2$, for any n; and
(2) otherwise, determine that the boxes are singulated.

Notably, the function indicated by the symbol ( ) denotes the algebraic sign function which is used to find zero crossings in the 2nd spatial derivative signal H"(n). Simulations show that the above decision rules work well with regard to noise, and always correctly locate abrupt changes in height data, which is necessary to determine that boxes are arranged in a stacked configuration.

As indicated at Block C in Fig.19D, the third step of the method involves analyzing the detected changes in the height data array H(n) for n=0, 1, 2,..., N-1 for a number of time sampling periods, so as to determine the specific "stacked" configuration of packages on the conveyor belt.

As indicated at Block D in Fig. 19, the fourth and last step of the method involves correlating the package dimension data (if collected) with each package in the detected "stacked" configuration, and transmitting corresponding package indicating data elements (e.g. PIT data elements) to the data element queuing, handling and processing subsystem 1000. As will become apparent hereinafter, these PIT data elements enable detected packages to be tracked within the overall system and eventually linked up with corresponding package identification data acquired by the bar code symbol reading subsystems employed within the tunnel scanning system

Using the package detection method described above, any arrangement of non-singulated boxes on the conveyor belt can be automatically detected and successfully tracked.

The sampling rate for the above described digital filtering method, denoted by T, can be determined as follows: Let the speed of the box/conveyor be denoted by $\upsilon$, and the minimum tolerance for package separation be denoted as D. Then considering the necessary data points to perform the second spatial derivative, the following expression must hold true:

$$T \neq 3D/\upsilon$$

Using this rule for a 600 ft/min. conveyor belt, if the minimum tolerance is 50 mm (2 in.), then the sampling period is computed to be about 5ms, which corresponds to a sampling frequency of about 200 Hz.

The In-Motion Package Weighing Subsystem Of The First Illustrative Embodiment Of The Present Invention

As shown in the Figs. 20A and 20B, the in-motion package weighing subsystem 750 is preferably arranged about the package height/width profiling subsystem 600. As shown, the in-motion weighing subsystem 750 comprises: a scale platform 751 integrated with the conveyor subsystem 300, for producing analog or digital weight signals indicative of the weight of a package(s) 754 moving across the scale platform 751; a filtering circuit 752 for filtering the analog or digital weight signals in order to remove noise components and artifacts therefrom; and a signal processor 753 for processing the filtered weight signals in order to produce a digital word representative of the measured weight of the package. Notably, the in-motion weighing subsystem of the illustrative embodiment can be realized using the model 9480 EXPRESSWEIGHT™ In-Motion Variable Box and Package Weighing System from Mettler-Toledo, Inc. of Worthington, Ohio.

The Package-In-Tunnel Signaling Subsystem Of The First Illustrative Embodiment Of The Present Invention

The package-in-tunnel indication subsystem 500 can be realized in a variety of ways. One way shown in Fig. 21, is to use a light transmitting/receiving structure as employed in package identification and measuring system 600, and generating a package-out-of-tunnel (POOT) data element upon detecting the exit of each package from the scanning tunnel. As shown in Fig. 21, the vertically arranged light transmitting and receiving structures 801A and 801B, as well as horizontally arranged light transmitting and receiving structures 802A and 802B, are arranged in a manner generally known in the package handling art. As shown in Fig. 21 , the vertically arranged light transmitting and receiving structures 801A and 801 B are controlled by a height control unit 803, which produces, as output, a signal $S_H$ consisting of time-sampled package height data collected along the vertical extent of the scanning tunnel aperture, similarly, horizontally arranged light transmitting and receiving structures 803 are controlled by a width control unit 804, which produces, as output, a signal $S_w$ consisting of time-sampled package height data collected along t.he horizontal extent of the scanning tunnel aperture. The output data streams from height and width control units 803 and 804, and the package length/velocity measurement subsystem 400, are provided as input to an H/W data processor 805, programmed to produce a package-out-of-tunnel (POOT) Indication (token) data element for each package detected by 800. In the illustrative embodiment, subsystem 800 is realized by integrating (i) the profiler system (Model No. P101-144-200) from KORE, Inc. of Grand Rapids, Michigan, and providing programmed H/W data processor 805 which includes the digital filter system described in Figs. 19A through 19D in order to simultaneously detect side-by-side configured packages, stacked packages, as well as singulated packages in the manner described in great detail hereinabove.

As-shown in Fig. 21, the best location for this subsystem is at the exit plane of the scanning tunnel. The POOT data element is provided to the data element queuing, handling and processing subsystem 1000, in the manner similar to that of all other data elements generated from the package height/width profiling subsystem 600, scanning units associated with the tunnel scanning subsystem, and package-in-tunnel indication subsystem 500.

The Data Element Queuing Handling And Processing Subsystem Of The First Illustrative Embodiment Of The Present Invention

In Figs. 22A and 22B, the structure and function of data element queuing, handling and processing subsystem 1000 is shown in greater detail. As shown in Fig. 22A, all data elements entering subsystem 1000 are provided to an I/O subsystem 1001, the output port of which is connected to a data element time-stamping unit 1003 that is controlled by a timing/control unit 1002. In the illustrative embodiment, there are four possible types of data elements that might be loaded into the system event queue 1004, realized as a FIFO data structure known in the computing art. As shown in Fig. 22A. the four possible data element types are: package (measurement) data elements; scan beam (i.e. package identification), data elements; package-in-tunnel (PIT) data elements; and package out-of-tunnel (POOT) data elements.

As shown in Fig. 22A, the data element queuing, handling and processing subsystem 1000 further comprises a number of other modules, namely: a moving package tracking queue 1005, realized as a FIFO data structure known in the computing art, for queuing package data elements, package-in-tunnel (PIT) data elements and package out-of-tunnel (POOT) data elements; and a data element analyzer 1006 (e.g. programmed microprocessor and associated memory structures) for reading the different types of data elements from the output of the system event queue 1004 and analyzing and handling the same according to the Data Element Handling Rules set forth in Figs. 23A1 and 23A2.

As shown in Fig. 22A, scan beam data elements generated from "holographic type" laser scanning subsystems must be processed using a system of data processing modules. As shown in Fig. 22A, this system of data processing modules comprises a data element combining module 1007A for combining (i) each scan beam data element generated from "holographic-type" laser scanning subsystems and accessed from the system event queue 1004 with (ii) each and every package data a element in the moving package tracking queue 1005, so as to produce a plurality of combined data element pairs; a package surface geometry modeling module 1008A for generating a geometrical model for the package represented by the package data element in each combined data element pair produced by the data element combining module 1007A; a homogeneous transformation (HG) module 1009A for transforming (i.e. converting) the coordinates of each package surface geometry model produced at the "dimensioning position" in the global coordinate reference frame $R_{global}$, into package surface geometry model coordinates at the "scanning position" within the scanning tunnel (i.e. displaced a distance z from the package dimensioning position); a scan beam geometry modeling module 1010A for generating a geometrical model for the laser scanning beam represented by the scan beam data element in each combined data element pair produced by the data element combining module 1007A; a homogeneous transformation (HG) module 1011A for transforming (i.e. converting) the coordinates of each scanning beam geometry model referenced to the local frame of reference symbolically embedded within the holographic laser scanning system, into scanning beam geometry model coordinates referenced to the global coordinate reference $R_{global}$ at the "scanning position" within the scanning tunnel; a scan beam and package surface intersection determination module 1012A for determining, for each combined data element pair produced from the data element combining module, whether the globally-referenced scan beam model produced by the HG transformation module 1009A intersects with the globally-referenced package surface model produced by the HG transformation module 1011A, and if so, then the data output subsystem 1013A produces, as output, package identification data, package dimension data (e.g. height, width data etc.), and package weight data, for use by auxiliary systems associated with the tunnel scanning system of the present invention.

As shown in Figs. 22A and 22B scan beam data elements generated from "non-holographic type" laser scanning subsystems must be processed using a different system of data processing modules than that shown in Fig. 22A. As shown in Fig. 22B, this system of data processing modules comprises: a data element combining module 1007B (similar to module 1007A) for combining (i) each scan beam data element generated from the "non-holographic-type" bottom-located laser scanning subsystems and accessed from the system event queue 1004 with (ii) each and every package data element in the moving package tracking queue 1005, so as to produce a plurality of combined data element pairs; a package surface geometry modeling module 1008B (similar to module 1008A) for generating a geometrical model for the package represented by the package data element in each combined data element pair produced by the data element combining module 1007B; a homogeneous transformation (HG) module 1009B (similar to module 1009A) for transforming (i.e. converting) the coordinates of each package surface geometry model produced at the "dimensioning position" in the global coordinate reference frame $R_{global}$, into package surface geometry model coordinates at the "scanning position" within the scanning tunnel (i.e. displaced a distance z from the package dimensioning position); a X-Z scanning surface (geometry) modeling module 10108 for generating a geometrical model for the laser scanning surface represented by the scan beam data element in each combined data element pair produced by the data element combining module 1007B: a homogeneous transformation (HG) module 1011B for transforming (i.e. converting) the coordinates of each x-z scanning surface geometry model referenced to the local frame of reference symbolically embedded within n the non-holographic bottom laser scanning subsystem, into scanning beam geometry model coordinates referenced to the global coordinate reference $R_{global}$ at the "scanning position" within the scanning tunnel; a scan beam and package surface intersection determination module 1012B for determining, for each combined data element pair produced from the data element combining module, whether the globally-referenced scanning surface model produced by the HG transformation module 1009B intersects with the globally-referenced package surface model produced by the HG transformation module 1011B, and if so, then the data output subsystem 1013B produces, as output, package identification data, package dimension data (e.g. height, width data etc.), and package weight data, for use by auxiliary systems associated with the tunnel scanning system of the present invention.

Having described the overall structure and function of the data element queuing, handling and processing subsystem 1000, it is appropriate at this juncture to now briefly describe the operation thereof with reference to Figs. 22A and 22B.

Prior to loading into the system event queue 1004, each data element is time-stamped (i.e. $T_j$) by the timing stamping module 1003 driven by a master clock within timing/control unit 1002 referenced to the global reference frame $R_{global}$. All data elements in the system event queue 1 004 are handled by a data element analyzer/handler 1006 which is governed by the table of Data Element Handling Rules set forth in Figs. 23A1 and 23A2. In general, subsystem 1000 is best realized by a computing platform having a multi-tasking operating system capable of handling multiple "threads" at the same time.

Each package moving through the scanning tunnel will be represented by a data element (i.e. an object in an object-oriented programming environment e.g. Java programming environment) stored in a moving package tracking queue 1005 operably connected to the data element analyzer 1006. Package data elements are placed in the moving package tracking queue 1005 and matched with each scan beam data element accessed from the system event queue 1004 using a data element combining module 1007A. Scan beam data elements generated from holographic-based scanning units are processed along the scan data processing channel illustrated by blocks 1008A, 1009A, 1010A, 1011A, 1012A, and 1013A set forth in the lower right hand corner of Fig. 22A, whereas scan beam data elements generated from non-holographic based scanning units (e.g. from the bottom-located polygon scanners in the tunnel) are processed along a different scan data processing channel illustrated by blocks 1008B, 1009B, 1010B, 1011B, 1012B, and 1013B set forth on Fig. 22B. This is because scan beam data elements generated from holographic-based scanning units have been generated from laser scanning beams (or finite scanning sectors) which can be tracked with scan package identification data by tracking facet sectors on the scanning disc in issue. While a similar technique can be used for polygon-based scanners (e.g. tracking "mirror sectors" instead of HOE-based facet sectors), a different approach has been adopted in the illustrative embodiment. That is, the scanning surface (e.g. 3x5 ") of each polygon scanning unit along the bottom scanner is accorded a vector-based surface model, rather than a ray-type model used fur package identification data collected using holographic scanning mechanisms.

The Package Surface Geometry Modeling-Subsystem Of The First Illustrative Embodiment Of The Present Invention

As shown in Fig. 24A, a surface geometry model is created for each package surface by the package surface geometry modeling subsystem (i.e. module) 1008A deployed with the data element queuing, handling and processing subsystem 1000 of Fig. 22A. In the illustrative embodiment, each surface of each package transported through package dimensioning/measuring subsystem 600 and package velocity/length measurement subsystem 400 is mathematically represented (i.e. modeled) using at least three position vectors (referenced to x=0, y=0, z=0) in the global reference frame $R_{global}$, and a normal vector to the package surface indicating the direction of incident light reflection therefrom. The table of Fig. 24B describes a preferred procedure for creating a vector-based surface model for each surface of each package transported through the package dimensioning/measuring subsystem 600 and package velocity/length measurement subsystem of the system 400 hereof.

The Scan Beam Geometry Modeling Subsystem Of The First Illustrative Embodiment Of The Present Invention

As shown in Figs. 25A1 through 25A2, a vector-based model is created by the scan beam geometry modeling subsystem (i.e. module) 1010A of Fig. 22A. for the propagation of the laser scanning beam (ray) emanating from a particular point on the facet, to its point of reflection on the corresponding beam folding mirror, towards to the focal plane determined by the focal length of the facet.

The table set forth in Figs. 25B1 through 25B3 define the parameters used to construct the diffraction-based geometric optics model of the scanning facet and laser scanning beam shown in Figs. 25A1 and 25A2. Details of this modeling procedure can be found in Applicant's copending Application No. 08/726,522 filed October 7, 1996; and 08/573,949 filed December. 18, 1995, now published as WiPO Patent Publication No. WO97/22945.

Fig. 26 provides a schematic representation of the laser scanning disc shown in Figs. 25A1 and 25A2, labeled with particular parameters associated with the diffraction-based geometric optics model of Figs. 25A1 and 25A2.

In Fig. 27, a preferred procedure is described for creating a vector-based ray model for laser scanning beams which have been produced by a holographic laser scanning subsystem of the system hereof, that may have collected the scan data associated with a decoded bar code symbol read thereby within the tunnel scanning subsystem.

The Scan Surface Modeling Subsystem Of The First Illustrative Embodiment Of The Present Invention

Fig. 28 schematically shows how the scan surface modeling subsystem (i.e. module) shown of Figs. 22A-22B can be used to define a vector-based 2-D surface geometry model for each candidate scan beam generated by the polygonal-based bottom scanners in the tunnel scanning system. As shown in Fig. 28, each omnidirectional scan pattern produced from a particular polygon-based bottom scanning unit is mathematically represented (i.e. modeled) using four position vectors (referenced to x=0, y=0, z=0) in the global reference frame $R_{global}$, and a normal vector to the scanning surface indicating the direction of laser scanning rays projected therefrom during scanning operations.

The Homogeneous (HG) Transformation Module Of The First Illustrative Embodiment Of The Present Invention

Fig. 29 schematically describes how the homogeneous (HG) transformation module 1009A of Fig. 22A uses homogeneous transformations to convert a vector-based model within a local scanner coordinate reference frame $R_{localscannerj}$ into a corresponding vector-based model created within the global scanner coordinate reference frame $R_{global}$. This mathematical technique is essential in that it converts locally-referenced coordinates used to represent a laser beam (which scanned a bar code symbol) into globally-referenced coordinates used to represent the same laser scanning beam.

Fig. 30 describes how the homogeneous (HG) transformation module 1009A of Fig. 22A uses homogeneous transformations to convert a vector-based package surface model specified within the global coordinate reference frame $R_{global}$ at the "package height/width profiling position", into a corresponding vector-based package surface model created within the global coordinate reference frame $R_{global}$ specified at the "scanning position" within the tunnel scanning system. This mathematical technique is essential in that it converts locally-referenced coordinates used to represent a package surface into globally-referenced coordinates used to represent the same package surface. Notably, this method of coordinate conversion involves computing the package travel distance (z=d) between the package height/width profiling and scanning positions using (1) the package or conveyor belt velocity (v) and the difference in time (i.e. $\Delta T$=T1-T2) indicated by the time stamps (T1 and T2) placed on the package data element and scan beam data element, respectively, matched thereto during each scan beam/package surface intersection determination carried out within determination module 1012A in the data element queuing, handling and processing subsystem 1000 of Figs. 22A and 22B. Notably, this package displacement distance z=d between the profiling and scanning positions is given by the mathematical expression d= v $\Delta T$.

The Scan Beam And Package Surface Intersection Determination Subsystem Of The First Illustrative Embodiment Of The Present Invention For Use With Scan Beam Data Elements Produced By Holographic Scanning Subsystems

Figs. 31A and 31B, taken together, describes a procedure which is carried out within the scan beam and package surface intersection determination module 1012A of the illustrative embodiment in order to determine whether (i) the scan beam (rays) associated with a particular scan beam data element produced by a holographic scanning subsystem intersects with (ii) any surface on the package that has been scanned at a particular scanning position, and thus whether to correlate a particular package identification data element with particular package measurement data element acquired by the system.

As indicated at Block A in Fig. 31A, the first step of the procedure involves using the minimum and maximum scan rays models of the laser scan beam to determine the intersection point between the scan ray and a surface on the package (using the vector-based models thereof) referenced to the global coordinate reference frame $R_{global}$. As indicated at Block B in Fig. 31A, if an intersection point has been determined at Block A, then confirm that the sign of the normal vector of the surface is opposite the sign of the scan ray direction vector. As indicated at Block C in Fig. 31A, if the sign of the normal vector is opposite the sign of the scan ray direction vector, then determine if the intersection point (found at Block A) falls within the spatial boundaries of the package surface. As indicated at Block D in Fig. 31B, if the intersection point falls within the boundaries of the modeled package surface, then output a data element to the output queue in the data output subsystem 1013A, wherein the data element comprises package identification data and package measurement data representative of the dimensions and measurements of the package by the system for use by other subsystems. When a scan beam (i.e. package identification) data element taken from the system event queue 1004 is correlated with a package measurement data element using the above described method, then the subsystem 1000 outputs a data element (in an output data queue 1013A) containing the package ID data and the package dimensional and measurement data. Such correlated data elements can be displayed graphically, printed out as a list, provided to sorting subsystems, shipping pricing subsystems, routing subsystems and the like.

### The Scan Surface And Package Surface Intersection Determination Subsystem Of The First Illustrative Embodiment Of The Present Invention For Use With Scan Beam Data-Flements Produced By Non-Holographic Scanning Subsystems

Figs. 32A and 32B, taken together, describes a procedure which can be carried out within the scan surface and package surface intersection determination module 1012B of Fig. 22B in order to determine whether the scanning surface associated with a particular scan beam data element produced by a non-holographic (e.g. polygon-based) "bottom-located "scanning subsystem spatially intersects with any surface on the package that has been scanned at a particular scanning position, and thus whether to correlate a particular package identification data element with particular package measurement data element acquired by the system.

As indicated at Block A in Fig. 32A, the first step of the procedure involves using the vector-based surface models of the laser scan surfaces of the bottom polygon scanners and side surfaces of the packages so as to determine whether or not there exists a point of intersection between the scanning surface of the polygon-based scanners and any surface of the package. As indicated at Block B in Fig. 32A, if an intersection point exists, then confirm that the sign of the vector model of the scanning surface (i.e. the normal vector) is opposite the sign of the vector model of the package surface. As indicated at Block C in Fig. 32B, if the sign of the normal vector of the scanning surface is opposite the sign of the normal vector to the package surface, then confirm that certain of the points bounded by the scanning surface coincide with points bounded by the surface of the package. As indicated at Block D in Fig. 32B, if sufficient overlap is found to exist between the scanning surface and the package surface, then output a data element to the output queue in the data output subsystem 1013B, wherein the data element comprises package identification data and package measurement data representative of the dimensions and measurements of the package by the system for use by other subsystems. When a scan beam data element taken from the system event queue 1004 is correlated with a package data element using the above described method, then the subsystem 1000 outputs a data element (in an output data queue 1013B) containing the package ID data and the package dimensional and measurement data. Such correlated data elements can be displayed graphically, printed out as a list, provided to sorting subsystems, shipping pricing subsystems, routing subsystems and the like.

Notably, the smaller the facet sectors on the scanning disc, then the better resolution the system hereof will have with regarding to correlating package identification data with package measurement data. As the facet sector gets smaller, the corresponding minimum and maximum facet angles generated from the decoder device hereof will get closer and closer, approaching a single scanning ray in the ideal situation.

### Applications Of The System Of The Present Invention

In general, the package identification and measuring systems of the present invention can be installed in package routing hubs, shipping terminals, airports, factories, and the like. There of course will be numerous other applications for such systems as new situations arise, and the capabilities of such systems become widely known to the general public.

As shown in Fig. 60, the system of the present invention (1, 2000, or 3000) described above can be connected to an information network 4000 supporting TCP/IP or other network protocol. As shown, the network includes at least one relational database management computer system (RDBMS) 4001 designed to receive information collected from each and every package identified, and dimensioned and/or measured while passing through the scanning tunnel subsystem of the system. Notably, a package router 4005 is shown installed downstream from the system in order to route packages in an automated manner using control signals generated by the subsystem 900 in the system. It is understood that many systems 1, 2000 or 3000 could be assembled in various types of package routing networks in order to achieve a particular set of functions relating to automatic identification, routing, and sorting operations.

As shown in Fig. 60, the RDBMS 4001 is connected to a Java/Jini enabled Internet (i.e. http) server 4002 by way of an information network supporting TCP/IP in a manner well known in the art. The HTTP server 4002, realized using a SUN® workstation supporting Java and Jini server components by Sun Microsystems, Inc. of Palo Alto, California, is accessible by any Java/Jini-enabled client machine 4003 equipped with a Java/Jini-enabled (http) browser program known in the art. Any client machine 4003 can be RF linked to Internet infrastructure 4004, connected thereto by a POTs line, ISDN line, DSL line, T1 line or any other means available presently or in the future. Typically, computer system 900, RDBMS 4001,and Internet server 4002 are located in close physical proximity with the automated package identification and measuring system 1, 2000 and 3000, and if no in close physical proximity, then reasonably close thereto in comparision to the distance of a remote client machine 4003 used to remote control and manage the system when required by trained service technicians.

In this illustrative embodiment, the data element management computer subsystem 900 within the system 1, 2000 or 3000 is also realized using a SUN® workstation running the SOLARIS version of Unix and supporting Java and Jini server components by Sun Microsystems, Inc. Each node in the network, including subsystem 900, and Internet server 4002, has an assigned static IP address on the Internet, and is provided with its own Jini™ interface for the purpose of enabling customers and other authorized personnel to use a Jini/Java-enabled client machine 4003 located anywhere around the globe so as to: (1)remotely access (from Internet server 4002) information about any packages transported through the system, as well as diagnostics regarding the system; and (2) remotely control the various subcomponents of the system in order to reprogram its subsystems, perform service routines, performance checks and the like, as well as carry out other forms of maintenance required to keep the system running optimally, while minimizing down-time or disruption in system operations.

While the above-described system employs Jini/Java-enabted remote control technology, it is understood that other forms of remote control technology, known in the computing arts, can be used to implement the remote-controlled diagnostics, management and servicing method of the present invention.

Modifications Of The Illustrative Embodiments

While the package conveyor subsystems employed in the illustrative embodiments have utilized belt or roller structure to transport package, it is understood that this subsystem can be realized in many ways, for example: using trains running on tracks passing through the laser scanning tunnel; mobile transport units running through the scanning tunnel installed in a factory environment; robotically-controlled platforms or carriages supporting packages, parcels or other bar coded objects, moving through a laser scanning tunnel subsystem.

In the preferred embodiments of the present invention described above, holographic laser scanning subsystems have been used to generated robust 3-D omnidirectional scanning volumes employed in such systems. As such, the laser beam position tracking techniques disclosed herein have been applied to the holographic scanning disc used in such systems to produce facet and facet sector information generated and correlated with each and every line of scan data generated within each holographic scanning subsystem. It is understood, however, when using polygonal type scanning systems, the laser beam position tracking techniques taught herein can be directly applied to the rotating polygon, and in such cases, polygon mirror and mirror sector information would be automatically generated and correlated with each and every line of scan data generated within each polygonal-type laser scanning subsystem of the present invention. While the various embodiments of the package identification and measuring system hereof have been described in connection with linear (1-D) and 2-D code symbol scanning applications, it should be clear, however, that the system and methods of the present invention are equally suited for scanning alphanumeric characters (e.g. textual information) in optical character recognition (OCR) applications, as well as scanning graphical images in graphical scanning arts. All that will be required is to provide image data storage buffers in each of the scanning units so that images of bar code symbols can be reconstructed during scanning operations, and then, character recognition techniques, such as taught in US Patent No. 5,727,081 to Burges, et al, incorporated herein by reference.

Advantages And Other Features Of The System Of The Present Invention

By virtue of their symmetrical nature of the systems of the illustrative embodiments described hereinabove, the systems of the present invention can function as a bi-directional package identification and measuring system, wherein the either the first or second side of its scanning tunnel can function as either the input side thereof or the output side thereof, by peforming a simple programming operation, thereby enabling two different directions of package flow as required the situation at hand. This can have great value where, at certain times of the day, the tunnel system is used to move packages out of a building or structure, and at a different time of days, it is then required to move packages from a receiving source into the building or structure, as the case may be. This flexiblity, hitherto not available in prior art systems, should provide to increase throughout whereever the systems of the present invention are installed.

Through proper programming, the automated package identification and measuring systems of the illustrative embodiments described hereinabove can read virtually any bar code symbology imaginable (e.g. Interleaved two of five, Code 128 and Code three of nine) and formats so as to sort and identify packages at various package rates required by USPS or other end-users. The systems of the illustrative embodiments can read the ZIP Code (six digits), Package Identification Code (PIC) (sixteen characters)' and Tray bar code (ten digits) symbols.

The tunnel scanning systems hereof can be configured so that all of the products passing through the "tunnel" shall be scanned and read for the valid USPS bar coded symbols regardless of the position of the bar code symbol on the surface of the product. This also includes the bottom surface of the product.

The tunnel scanning system hereof can be provided with additional equipment including, for example, tachometers, dimensioning units, support structures, special power units (if required), air compressors and any other support equipment required by an application at hand.

Preferably, the tunnel scanning systems of the illustrative embodiments are constructed using standard interfaces such that scanners, decoders, concentrator, etc. are interchangeable.

The tunnel scanning systems hereof can read bar coded symbols through the entire population of tray and tub label holders in use by the USPS, and other package or parcel carriers. In addition, the tunnel scanning systems can read bar code symbols on the package products when the bar code symbol label is placed under diaphanous materials.

There will be more than one bar code symbol on many of the packages found in the tunnel system hereof. Some of these symbols will not be valid USPS symbols. If there are multiple symbols on a package, the scanner logic can be set to automatically identify and process only the USPS valid symbols.

The tunnel scanning systems of the illustrative embodiments can process all types of products (e.g. trays and tubs having extremely large variance in surface types, colors, and plastics (e.g. Tyvek material, canvass, cardboard, polywrap, Styrofoam, rubber, dark packages). Some of these product types include: softpack-pillows, bags; packages having non-flat bottoms, such as flats, trays, and tubs with and without bands; cartons; rugs; duffel bags (without strings or metal clips); tires; wooden containers; and sacks.

It is understood that the laser scanning systems, modules, engines and subsystems of the illustrative embodiments may be modified in a variety of ways which will become readily apparent to those skilled in the art, and having the benefit of the novel teachings disclosed herein. All such modifications and variations of the illustrative embodiments thereof shall be deemed to be within the scope of the present invention as defined by the Claims to Invention appended hereto.

**Claims**

1. An automated package identification and measuring system comprising:

   an omni-directional scanning tunnel subsystem (100) for producing a plurality of laser scanning beams for reading bar code symbols on packages entering said omni-directional scanning tunnel subsystem, and producing package identification data representative of each package identified by a bar code symbol read on said package by a laser scanning beam, and position data for said beam;
   a package dimensioning subsystem (500, 600) for capturing package measurement information about each package passing through said omni-directional scanning tunnel subsystem, and producing package measurement data representative of said captured package measurement information;
   a computer subsystem for collecting and queuing package identification data and package measurement data, and creating, on a real-time basis, mathematical models for both the geometry of said package and the position of the laser scanning beam used to read the bar code symbol on said package;
   wherein said mathematical models are analysed to determine if collected and queued package identification data is spatially and/or temporally correlated with package measurement data so as to enable simultaneous tracking of multiple packages being transported through said omni-directional scanning tunnel subsystem.

2. The automated package identification and measuring system of claim 1, wherein said omni-directional scanning tunnel subsystem comprises a plurality of laser scanning subsystems (101-117) mounted from a scanner support framework, arranged about a conveyor structure (302A, 302B), so that each laser scanning subsystem projects a defined 3-D omni-directional scanning volume with a depth-of-field above the conveyor structure so as to collectively provide omni-directional scanning within each of three principal scanning planes of said omni-directional scanning system.

3. The automated package identification and measuring system of claim 1, wherein said tunnel subsystem has an input side and an output side, and further comprises: data element queuing, handling and processing subsystem for queuing, handling and processing data elements representative of package identification, dimensions and/or weight; and a moving package tracking queue maintained in said data element queuing, handling, and processing subsystem, so that data elements comprising objects, representative of detected packages entering said scanning tunnel subsystem, can be tracked along with dimensional and measurement data collected on such detected packages.

4. The automated package identification and measuring system of claim 3, wherein each laser scanning subsystem employed in the tunnel scanning subsystem comprises a polygon scanning element (130) having mirror facets with mirror facet sectors, and a device for generating information specifying which mirror facet or mirror facet sector produced the laser scanning beam used to read any bar code symbol by the subsystem.

5. The automated package identification and measuring system of claim 4, wherein said device generates information specifying which mirror facet or mirror facet sector produced the laser scanning beam used to read any bar code symbol by the subsystem, independent of the angular velocity of the polygon scanning element or variations in such angular velocity.

6. The automated package identification and measuring system of claim 3, wherein said data element queuing, handling and processing subsystem further comprises a scan beam geometry modeling subsystem for producing, relative to a local coordinate reference system symbolically embedded within a laser scanning subsystem employed in said omni-directional scanning tunnel subsystem, coordinate information comprising a geometric model of each laser scanning beam used to read a particular bar code symbol for which symbol character data has been produced by the laser scanning subsystem.

7. The automated package identification and measuring system of claim 6, wherein said data element queuing, handling and processing subsystem further comprises a first homogeneous transformation module for converting the coordinate information comprising the geometric model of each laser scanning beam used to read a particular bar code symbol on a detected package, from the local coordinate reference system symbolically embedded within said laser scanning subsystem, to a global coordinate reference system symbolically embedded within said omni-directional scanning tunnel system.

8. The automated package identification and measuring system of claim 6, wherein said data element queuing, handling and processing subsystem further comprises a package surface modeling subsystem for producing, relative to a local coordinate reference system symbolically embedded within the laser scanning subsystem, coordinate information comprising a geometric model of each surface on each package dimensioned by the package dimensioning subsystem.

9. The automated package identification and measuring system of claim 7, wherein said data element queuing, handling and processing subsystem further comprises a second homogeneous transformation module for converting the coordinate information comprising the geometric model of each surface on a detected package, from the local coordinate reference system symbolically embedded within the laser scanning subsystem, to a global coordinate reference system symbolically embedded within omni-directional scanning tunnel system.

10. The automated package identification and measuring system of claim 8, which further comprises a laser scan beam and package surface intersection determination subsystem for determining which detected package was scanned by the laser scanning beam that read a particular bar code symbol, and for linking (i.e. correlating) package measurement data associated with the detected package with package identification data associated with the laser scanning beam that read a bar code symbol on a detected package.

11. The automated package identification and measuring system of any one of the preceding claims, wherein the omni-directional scanning tunnel subsystem is a holographic scanning tunnel subsystem.

12. A method of package identification and measuring comprising:

   producing a plurality of laser scanning beams in an omni-directional scanning tunnel subsystem (100) for reading bar code symbols on packages entering said omni-directional scanning tunnel subsystem;
   producing package identification data representative of each package identified by a bar code symbol read on said package by a laser scanning beam, and position data for said beam;
   capturing (500, 600) package measurement information about each package passing through said omni-directional scanning tunnel subsystem, and producing package measurement data representative of said captured package measurement information;
   collecting and queuing package identification data and package measurement data, and creating, on a real-time basis, computer models for both the geometry of said package and the position of the laser scanning beam used to read the bar code symbol on said package;
   analysing said computer models to determine if collected and queued package identification data is spatially and/or temporally correlated with package measurement data so as to enable simultaneous tracking of multiple packages being transported through said omni-directional scanning tunnel subsystem.

**Patentansprüche**

1.  Automatisiertes Paketidentifikations- und Messsystem, umfassend:

    ein Allrichtungs-Scantunneluntersystem (100) zum Erzeugen mehrerer Laserscanstrahlen zum Lesen von Strichcodesymbolen auf Paketen, die in das Allrichtungs-Scantunneluntersystem eintreten, und Erzeugen von Paketidentifikationsdaten, die jedes Paket darstellen, das durch einen Strichcodesymbol identifiziert wird, das auf dem Paket von einem Laserscanstrahl gelesen wird, und Positionsdaten von dem Strahl,
    ein Paketdimensionierungsuntersystem (500, 600) zum Erfassen von Paketmessinformation über jedes Paket, das das Allrichtungs-Scantunneluntersystem durchläuft, und Erzeugen von Paketmessdaten, die die erfasste Paketmessinformation darstellen,
    ein Computeruntersystem zum Sammeln und Aufreihen von Paketidentifikationsdaten und Paketmessdaten, und Erzeugen, auf Echtzeitbasis, von mathematischen Modellen sowohl für die Geometrie des Pakets als auch die Position des Laserscanstrahls, der verwendet wird, um das Strichcodesymbol auf dem Paket zu lesen, wobei die mathematischen Modelle analysiert werden, um zu bestimmen, ob die gesammelten und aufgereihten Paketidentifikationsdaten räumlich und/oder zeitlich mit Paketmessdaten korreliert sind, um das gleichzeitige Mitverfolgen mehrerer Pakete zu erlauben, die durch das Allrichtungs-Scantunneluntersystem transportiert werden.

2.  Automatisiertes Paketidentifikations- und Messsystem nach Anspruch 1, wobei das Allrichtungs-Scantunneluntersystem mehrere Laserscanuntersysteme (101-117) aufweist, die von einem Scannertragrahmen ausgehend installiert sind, der um eine Förderstruktur (302A, 302B) angeordnet ist, so dass jedes Laserscanuntersystem ein definiertes 3-D-Allrichtungs-Scanvolumen mit einer Feldtiefe über der Förderstruktur projiziert, um kollektiv Allrichtungs-Scannen innerhalb jeder der drei Hauptscanebenen des Allrichtungs-Scansystems bereitzustellen.

3.  Automatisiertes Paketidentifikations- und Messsystem nach Anspruch 1, wobei das Tunneluntersystem eine Eingangsseite und eine Ausgangsseite hat und ferner Folgendes aufweist: Datenelementeinreihungs-, Handhabungs- und Verarbeitungsuntersystem zum Einreihen, Handhaben und Verarbeiten von Datenelementen, die Paketidentifikation, Maße und/oder Gewicht darstellen; und eine laufende Paketüberwachungsschlange, die in dem Datenelementeinreihungs-, Handhabungs- und Verarbeitungsuntersystem geführt wird, so dass Datenelemente, die Objekte enthalten, die erfasste Pakete, die in das Scantunneluntersystem eintreten, darstellen, gemeinsam mit Dimensions- und Messdaten, die auf solchen erfassten Paketen gesammelt werden, mitverfolgt werden können.

4.  Automatisiertes Paketidentifikations- und Messsystem nach Anspruch 3, wobei jedes Laserscanuntersystem, das in dem Scantunneluntersystem verwendet wird, ein Vieleckscanelement (130) aufweist, das Spiegelfacetten mit Spiegelfacettensektoren und eine Vorrichtung hat, um Information zu erzeugen, die spezifiziert, welche Spiegelfacette oder welcher Spiegelfacettensektor den Laserscanstrahl erzeugt hat, der verwendet wurde, um ein beliebiges Strichcodesymbol durch das Untersystem zu lesen.

5.  Automatisiertes Paketidentifikations- und Messsystem nach Anspruch 4, wobei die Vorrichtung Information erzeugt, die spezifiziert, welche Spiegelfacette oder welcher Spiegelfacettensektor den Laserscanstrahl erzeugt hat, der verwendet wurde, um ein beliebiges Strichcodesymbol durch das Untersystem zu lesen, unabhängig von der Winkelgeschwindigkeit des Vieleckscanelements oder von Variationen in einer solchen Winkelgeschwindigkeit.

6.  Automatisiertes Paketidentifikations- und Messsystem nach Anspruch 3, wobei das Datenelementeinreihungs-, Handhabungs- und Verarbeitungsuntersystem ferner ein Scanstrahl-Geometriemodellieruntersystem aufweist, um in Bezug zu einem lokalen Koordinatenreferenzsystem, das symbolisch innerhalb eines Laserscanuntersystems, das in dem Allrichtungs-Scantunneluntersystem verwendet wird, eingebettet ist, Koordinateninformation zu erzeugen, die ein geometrisches Modell jedes Laserscanstrahls enthält, der verwendet wird, um ein bestimmtes Strichcodesymbol zu lesen, für das Symbolzeichendaten von dem Laserscanuntersystem erzeugt wurden.

7.  Automatisiertes Paketidentifikations- und Messsystem nach Anspruch 6, wobei das Datenelementreinreihungs-, Handhabungs- und Verarbeitungsuntersystem ferner ein erstes homogenes Umwandlungsmodul aufweist, um die Koordinateninformation, die das geometrische Modell jedes Laserscanstrahls, der verwendet wird, um ein bestimmtes Strichcodesymbol auf einem erfassten Paket zu lesen, enthält, aus dem lokalen Koordinatenreferenzsystem, das symbolisch in dem Laserscanuntersystem eingebettet ist, in ein globales Koordinatenreferenzsystem umzuwandeln, das symbolisch in dem Allrichtungs-Scantunnelsystem eingebettet ist.

8. Automatisiertes Paketidentifikations- und Messsystem nach Anspruch 6, wobei das Datenelementeinreihungs-, Handhabungs- und Verarbeitungsuntersystem ferner ein Paketoberflächenmodellieruntersystem aufweist, um in Bezug zu einem lokalen Koordinatenreferenzsystem, das symbolisch in dem Laserscanuntersystem eingebettet ist, Koordinateninformation zu erzeugen, die ein geometrisches Modell jeder Oberfläche auf jedem Paket enthält, das von dem Paketdimensionieruntersystem dimensioniert wird.

9. Automatisiertes Paketidentifikations- und Messsystem nach Anspruch 7, wobei das Datenelementeinreihungs-, Handhabungs- und Verarbeitungsuntersystem ferner ein zweites homogenes Umwandlungsmodul aufweist, um die Koordinateninformation, die das geometrische Modell jeder Oberfläche auf einem erfassten Paket enthält, von dem lokalem Koordinatenreferenzsystem, das symbolisch in dem Laserscanuntersystem eingebettet ist, in ein globales Koordinatenreferenzsystem umzuwandeln, das symbolisch in dem Allrichtungs-Scantunnelsystem eingebettet ist.

10. Automatisiertes Paketidentifikations- und Messsystem nach Anspruch 8, das ferner einen Laserscanstrahl und ein Untersystem zum Bestimmen von Paketoberflächenschnittstellen aufweist, um zu bestimmen, welches erfasste Paket von dem Laserscanstrahl gescannt wurde, der ein bestimmtes Strichcodesymbol gelesen hat, und um die Paketmessdaten, die mit dem erfassten Paket verbunden sind, mit Paketidentifikationsdaten, die zu dem Laserscanstrahl gehören, der das Strichcodesymbol auf einem erfassten Paket gelesen hat, zu verbinden (das heißt zu korrelieren).

11. Automatisiertes Paketidentifikations- und Messsystem nach einem der vorhergehenden Ansprüche, wobei das Allrichtungs-Scantunneluntersystem ein holografisches Scantunneluntersystem ist.

12. Verfahren zur Paketidentifikation und -messung, Folgendes aufweisend:

Erzeugen mehrerer Laserscanstrahlen in einem Allrichtungs-Scantunneluntersystem (100) zum Lesen von Strichcodesymbolen auf Paketen, die in das Allrichtungs-Scantunneluntersystem eintreten,
Erzeugen von Paketidentifikationsdaten, die jedes Paket darstellen, das durch ein Strichcodesymbol identifiziert wird, das auf dem Paket durch einen Laserscanstrahl gelesen wird, und Positionsdaten für den Strahl,
Erfassen (500, 600) der Paketmessinformation über jedes Paket, das das Allrichtungs-Scantunneluntersystem durchläuft, und Erzeugen von Paketmessdaten, die die erfasste Paketmessinformation darstellen,
Sammeln und Aufreihen von Paketidentifikationsdaten und Paketmessdaten und Erzeugen, auf Echtzeitbasis, von Computermodellen sowohl für die Geometrie des Pakets als auch für die Position des Laserscanstrahls, der verwendet wurde, um das Strichcodesymbol auf dem Paket zu lesen,
Analysieren der Computermodelle, um zu bestimmen, ob die gesammelten und aneinander gereihten Paketidentifikationsdaten räumlich und/oder zeitlich mit Paketmessdaten korreliert sind, um ein gleichzeitiges Mitverfolgen mehrerer Pakete, die durch das Allrichtungs-Scantunneluntersystem transportiert werden, zu erlauben.

**Revendications**

1. Système automatisé d'identification et de mesure de paquets comprenant :

un sous-système de tunnel à balayage omnidirectionnel (100) destiné à produire une pluralité de faisceaux de balayage laser pour lire des symboles de code à barres sur des paquets entrant dans ledit sous-système de tunnel à balayage omnidirectionnel, et à produire des données d'identification de paquet représentatives de chaque paquet identifié par un symbole de code à barres lu sur ledit paquet par un faisceau de balayage laser, et des données de position pour ledit faisceau,
un sous-système de dimensionnement de paquet (500, 600) destiné à acquérir des informations de mesure de paquet relatives à chaque paquet passant à travers ledit sous-système de tunnel à balayage omnidirectionnel et à produire des données de mesure de paquet représentatives desdites informations de mesure de paquet acquises,
un sous-système informatique destiné à recueillir et à mettre en file d'attente les données d'identification de paquet et les données de mesure de paquet et à créer, sur une base en temps réel, des modèles mathématiques à la fois pour la géométrie dudit paquet et la position du faisceau de balayage laser utilisé pour lire le symbole de code à barres sur ledit paquet,
dans lequel lesdits modèles mathématiques sont analysés pour déterminer si les données d'identification de paquets recueillies et mises en file d'attente sont corrélées spatialement et/ou temporellement avec les données de mesure de paquets de manière à permettre un suivi simultané de multiples paquets qui sont transportés à travers ledit sous-système de tunnel à balayage omnidirectionnel.

2. Système automatisé d'identification et de mesure de paquets selon la revendication 1, dans lequel ledit sous-système de tunnel à balayage omnidirectionnel comprend une pluralité de sous-systèmes de balayage laser (101 à 117) montés à partir d'une structure de support de dispositif de balayage, agencés autour d'une structure de transporteur (302A, 302B) de sorte que chaque sous-système de balayage laser projette un volume de balayage omnidirectionnel en trois dimensions défini ayant une profondeur de champ au-dessus de la structure de transporteur de manière à fournir collectivement un balayage omnidirectionnel à l'intérieur de chacun des trois plans de balayage principaux dudit sous-système de balayage omnidirectionnel.

3. Système automatisé d'identification et de mesure de paquets selon la revendication 1, dans lequel ledit sous-système de tunnel a un côté entrée et un côté sortie et comprend en outre : un sous-système de mise en file d'attente, de gestion et de traitement d'éléments de données destiné à mettre en file d'attente, gérer et traiter les éléments de données représentatifs de l'identification, des dimensions et/ou du poids de paquets, et une file d'attente de suivi de paquets en mouvement entretenue dans ledit sous-système de mise en file d'attente, de gestion et de traitement d'éléments de données de sorte que les éléments de données comprenant des objets, représentatifs de paquets détectés entrant dans ledit sous-système de tunnel à balayage, puissent être suivis en même temps que les données dimensionnelles et de mesure recueillies sur ces paquets détectés.

4. Système automatisé d'identification et de mesure de paquets selon la revendication 3, dans lequel chaque sous-système de balayage laser employé dans le sous-système de tunnel à balayage comprend un élément de balayage polygonal (130) ayant des facettes de miroir comportant des secteurs de facettes de miroir, et un dispositif destiné à générer des informations spécifiant quelle facette de miroir ou quel secteur de facette de miroir produit le faisceau de balayage laser utilisé pour lire un symbole de code à barres quelconque par le sous-système.

5. Système automatisé d'identification et de mesure de paquets selon la revendication 4, dans lequel ledit dispositif génère des informations spécifiant quelle facette de miroir ou quel secteur de facette de miroir produit le faisceau de balayage laser utilisé pour lire un symbole de code à barres quelconque par le sous-système, indépendamment de la vitesse angulaire de l'élément de balayage polygonal ou des variations de cette vitesse angulaire.

6. Système automatisé d'identification et de mesure de paquets selon la revendication 3, dans lequel ledit sous-système de mise en file d'attente, de gestion et de traitement d'éléments de données comprend en outre un sous-système de modélisation de géométrie de faisceaux de balayage destiné à produire, par rapport à un système de référence de coordonnées locales incorporé symboliquement au sein d'un sous-système de balayage laser employé dans ledit sous-système de tunnel à balayage omnidirectionnel, des informations de coordonnées comprenant un modèle géométrique de chaque faisceau de balayage laser utilisé pour lire un symbole de code à barres particulier pour lequel des données de caractères de symboles ont été produites par le sous-système de balayage laser.

7. Système automatisé d'identification et de mesure de paquets selon la revendication 6, dans lequel ledit sous-système de mise en file d'attente, de gestion et de traitement d'éléments de données comprend en outre un premier module de transformation homogène destiné à convertir les informations de coordonnées comprenant le modèle géométrique de chaque faisceau de balayage laser utilisé pour lire un symbole de code à barres particulier sur un paquet détecté, à partir du système de référence de coordonnées incorporé symboliquement au sein dudit sous-système de balayage laser, en un système de référence de coordonnées global intégré symboliquement à l'intérieur dudit système de tunnel à balayage omnidirectionnel.

8. Système automatisé d'identification et de mesure de paquets selon la revendication 6, dans lequel ledit sous-système de mise en file d'attente, de gestion et de traitement d'éléments de données comprend en outre un sous-système de modélisation de surface de paquet destiné à produire par rapport à un système de référence de coordonnées local intégré symboliquement à l'intérieur du sous-système de balayage laser, des informations de coordonnées comprenant un modèle géométrique de chaque surface sur chaque paquet dimensionné par le sous-système de dimensionnement de paquet.

9. Système automatisé d'identification et de mesure de paquets selon la revendication 7, dans lequel ledit sous-système de mise en file d'attente, de gestion et de traitement d'éléments de données comprend en outre un deuxième module de transformation homogène destiné à convertir les informations de coordonnées comprenant le modèle géométrique de chaque surface sur un paquet détecté, du système de référence de coordonnées local intégré symboliquement à l'intérieur du sous-système de balayage laser, en un système de référence de coordonnées global intégré symboliquement à l'intérieur du système de tunnel à balayage omnidirectionnel.

10. Système automatisé d'identification et de mesure de paquets selon la revendication 8, qui comprend en outre un sous-système de détermination d'intersection de faisceau de balayage laser et de surface de paquets destiné à déterminer quel paquet détecté a été balayé par le faisceau de balayage laser qui a lu un symbole de code à barres particulier, et destiné à relier (c'est-à-dire corréler) des données de mesure de paquet associées au paquet détecté avec des données d'identification de paquet associées au faisceau de balayage laser qui a lu un symbole de code à barres sur un paquet détecté.

11. Système automatisé d'identification et de mesure de paquets selon l'une quelconque des revendications précédentes, dans lequel le sous-système de tunnel à balayage omnidirectionnel est un sous-système de tunnel à balayage holographique.

12. Procédé d'identification et de mesure de paquets comprenant les étapes consistant à :

produire une pluralité de faisceaux de balayage laser dans un sous-système de tunnel à balayage omnidirectionnel (100) pour lire les symboles de code à barres sur des paquets entrant dans ledit sous-système de tunnel à balayage omnidirectionnel,
produire des données d'identification de paquet représentatives de chaque paquet identifié par un symbole de code à barres lu sur ledit paquet par un faisceau de balayage laser, et des données de position pour ledit faisceau,
acquérir (500, 600) des informations de mesure de paquet relatives à chaque paquet passant à travers ledit sous-système de tunnel à balayage omnidirectionnel et produire des données de mesure de paquet représentatives desdites informations de mesure de paquet acquises,
recueillir et mettre en file d'attente des données d'identification de paquet et des données de mesure de paquet, et créer, sur une base en temps réel, des modèles informatiques à la fois pour la géométrie dudit paquet et la position du faisceau de balayage laser utilisé pour lire le symbole de code à barres sur ledit paquet,
analyser lesdits modèles informatiques pour déterminer si les données d'identification de paquets recueillies et mises en file d'attente sont spatialement et/ou temporellement corrélées avec les données de mesure de paquets de manière à permettre un suivi simultané de multiples paquets qui sont transportés à travers ledit sous-système de tunnel à balayage omnidirectionnel.

FIG. 1A

FIG. 1B

F I G. 1C

FIG. 1D

$R_{ref}$ IS FOR SPECIFYING ONLY
POSITION/ORIENTATION OF
SCANNERS IN TUNNEL SYSTEM

FIG. 1E

45

F I G. 1G

F I G. 2A

F I G. 2B

## TUNNEL SCANNER POSITIONING DATA:

| SCANNER: | ROTATION ANGLES (degrees): | | | POSITION COORDINATES (inches): | | |
|---|---|---|---|---|---|---|
| | YAW | RITCH | ROLL | X | Y | Z |
| TOP/FRONT | 0 | 80 | 0 | 1 | 73 | -10 |
| TOP/BACK | 0 | 100 | 0 | -1 | 66 | 10 |
| FRONT | 0 | 40 | 0 | 0 | 57 | -40 |
| BACK | 0 | 130 | 0 | 0 | 57 | 40 |
| RIGHT SIDE/FRONT | 60 | 0 | 90 | -45 | 18 | -12 |
| RIGHT SIDE/BACK | 120 | 0 | 90 | -45 | 18 | 12 |
| LEFT SIDE/FRONT | -60 | 0 | 90 | 45 | 18 | -12 |
| LEFT SIDE/BACK | -120 | 0 | 90 | 45 | 18 | 12 |
| L/F CORNER #1 | -30 | 15 | -7 | 29 | 18 | -80 |
| L/F CORNER #2 | -30 | 15 | -7 | 40 | 18 | -69 |
| L/B CORNER #1 | -150 | 15 | 7 | 29 | 18 | 80 |
| L/B CORNER #2 | -150 | 15 | 7 | 40 | 18 | 68 |
| R/F CORNER #1 | 30 | 15 | 7 | -29 | 18 | -80 |
| R/F CORNER #2 | 30 | 15 | 7 | -40 | 18 | -59 |
| R/B CORNER #1 | 150 | 15 | -7 | -29 | 18 | 80 |
| R/B CORNER #2 | 150 | 15 | -7 | -40 | 18 | 68 |

ROTATION OCCURS IN THE ORDER GIVEN: YAW, PITCH, ROLL

POSITIVE YAW IS FROM R-AXIS TO P-AXIS
POSITIVE PITCH IS FROM Y-AXIS TO R-AXIS
POSITIVE ROLL IS FROM P-AXIS TO Y-AXIS

POSITION COORDINATES ARE OF THE CENTER OF THE DISC WITHIN THE FIXED (X,Y,Z) SYSTEM

FIG. 2C

F I G. 3A1

FIG. 3Á2

SCANNERS:

101 - 108 {
- L/F CORNER #1
- L/F CORNER #2
- R/F CORNER #1
- R/F CORNER #2
- L/B CORNER #1
- L/B CORNER #2
- R/B CORNER #1
- R/B CORNER #2
}

F I G. 3A3

FIG. 3A4

| ROTATIONAL SPEED OF DISK (rpm) | | | | | |
|---|---|---|---|---|---|
| | | | | | |
| X-SCAN 4 LINES/ 5 FOCAL PLANES (8.66 disk) DISK 4-6fp-8.66DISK xls LOO 1/21/98 WAVELENGTH: | | | | | |
| FACET | DIFFRACTION FOCAL LENGTH (inches) | GEOMETRICAL FOCAL LENGTH (inches) | ANGLE A (degrees) | ANGLE B (degrees) | ANGLE OF DIFFRACTION (degrees) |
| | | | | | |
| 1 | 39.00 | 39.07 | 45.9 | 57.40 | 32.60 |
| 2 | 39.00 | 39.07 | 45.9 | 57.40 | 32.60 |
| 3 | 39.00 | 39.07 | 45.9 | 57.40 | 32.60 |
| 4 | 39.00 | 39.07 | 45.9 | 57.40 | 32.60 |
| 5 | 45.01 | 45.11 | 45.9 | 57.00 | 33.00 |
| 6 | 45.01 | 45.11 | 45.9 | 5~00 | 33.00 |
| 7 | 45.01 | 45.11 | 45.9 | 57.00 | 33.00 |
| 8 | 45.01 | 45.11 | 45.9 | 57.00 | 33.00 |
| 9 | 51.51 | 51.66 | 45.9 | 56.67 | 33.33 |
| 10 | 51.51 | 51.66 | 45.9 | 56.67 | 33.33 |
| 11 | 51.51 | 51.66 | 45.9 | 56.67 | 33.33 |
| 12 | 51.51 | 51.66 | 45.9 | 56.67 | 33.33 |
| 13 | 58.32 | 58.64 | 45.9 | 56.40 | 33.60 |
| 14 | 58.32 | 58.64 | 45.9 | 56.40 | 33.60 |
| 15 | 58.32 | 58.64 | 45.9 | 56.40 | 33.60 |
| 16 | 58.32 | 58.64 | 45.9 | 56.40 | 33.60 |
| 17 | 64.93 | 65.24 | 45.9 | 56.19 | 33.81 |
| 18 | 64.93 | 65.24 | 45.9 | 56.19 | 33.81 |
| 19 | 64.93 | 65.24 | 45.9 | 56.19 | 33.81 |
| 20 | 64.93 | 65.24 | 45.9 | 56.19 | 33.81 |
| 21 | | | | | |
| 22 | | | | | |
| 23 | | | | | |
| . | | | | | |
| . | | | | | |
| . | | | | | |
| 37 | | | | | |
| 38 | | | | | |
| 39 | | | | | |
| 40 | | | | | |
| | AVERAGE ANGLE B(degrees): | | | 56.73 | |
| | | | | | |
| APPROXIMATE MINIMUM BOX WIDTH: | | 12.57 inches | | | |
| (BASED ON LARGE MIRROR AS LIMITATION) | | | | | |

FIG. 3A5A

54

| LIGHT COLLECTION FACTOR | MAXIMUM COLLECTION AREA (IGNORING NOTCH) (sq. in) | DESIGN COLLECTION AREA (INCLUDES NOTCH LOSS OF 0.15) (sq. inches) | BEAM SPEED AT CENTER OF SCAN LINE (inches/sec) | BEAM SPEED AT MAX DEPTH OF FIELD (inches/sec) | BEAM SPEED AT MIN DEPTH OF FIELD (inches/sec) |
|---|---|---|---|---|---|
| 1.00 | 1.25 | 1.32 | 32770 | 38130 | 29401 |
| 1.00 | 1.25 | 1.32 | 32770 | 38130 | 29401 |
| 1.00 | 1.25 | 1.32 | 32770 | 38130 | 29401 |
| 1.00 | 1.25 | 1.32 | 32770 | 38130 | 29401 |
| 1.35 | 1.68 | 1.72 | 37596 | 40937 | 34264 |
| 1.35 | 1.68 | 1.72 | 37596 | 40937 | 34264 |
| 1.35 | 1.68 | 1.72 | 37596 | 40937 | 34264 |
| 1.35 | 1.68 | 1.72 | 37596 | 40937 | 34264 |
| 1.78 | 2.22 | 2.23 | 42824 | 46150 | 39490 |
| 1.78 | 2.22 | 2.23 | 42824 | 46150 | 39490 |
| 1.78 | 2.22 | 2.23 | 42824 | 46150 | 39490 |
| 1.78 | 2.22 | 2.23 | 42824 | 46150 | 39490 |
| 2.30 | 2.87 | 2.63 | 48295 | 51608 | 44983 |
| 2.30 | 2.87 | 2.63 | 48295 | 51608 | 44983 |
| 2.30 | 2.87 | 2.63 | 48295 | 51608 | 44983 |
| 2.30 | 2.87 | 2.63 | 48295 | 51608 | 44983 |
| 2.87 | 3.57 | 3.49 | 53606 | 56908 | 50303 |
| 2.87 | 3.57 | 3.49 | 53606 | 56908 | 50303 |
| 2.87 | 3.57 | 3.49 | 53606 | 56908 | 50303 |
| 2.87 | 3.57 | 3.49 | 53606 | 56908 | 50303 |
| | | | | | |
| | | | | | |
| | | | | | |
| | | | | | |
| | | | | | |
| | | | | | |
| | | | | | |
| | | | | | |
| | | | | | |
| 37.18 | 48.34 | 46.34 | | SUMS | |

| | | |
|---|---|---|
| Vmax (in/s): | 56908 | |
| Vmin (in/s): | 29409 | |
| RATIO | 1.34 | |

FIG. 3A5C

22 in.

12.73 in.

CONVEYOR SCANNER SCAN PATTERN
AT THE MIDDLE FOCAL PLANE

F I G. 3A6

F I G. 3A7A

EP 1 066 587 B1

FIG. 3A7B

253A

253B

253F

VLD 1    $\lambda_R$

VLD 1    $\lambda_R$

VLD 1    $\lambda_R$

ENABLE

ENABLE

ENABLE

LASER CONTROL

MOTOR CONTROL

POWER SUPPLY

ENABLE

MOTOR

252

150

130

$\omega$

TRANSMIT DATA

I / O SUBSYSTEM

800

F I G. 3A7C

252

130

250

251

TO CONTROL
BOARD

253

7

F I G. 3A8A

130

252

251

F I G. 3A8B

FIG. 3A8C1

FIG. 3A8C2

109 - 114 {
SCANNERS:
- TOP FRONT
- TOP BACK
- LEFT/SIDE FRONT
- LEFT/SIDE BACK
- RIGHT/SIDE FRONT
- RIGHT/SIDE BACK

F I G. 3B1

EP 1 066 587 B1

131 HOME PULSE
MARK ( GAP )

FIG. 3B2

ROTATIONAL SPEED OF DISK (RPM)

TUNNEL SCANNER 1: 4 LINES/5 FOCAL PLANES DISK                                    WAVELENGTH:        685NM

| FACET | DIFFRACTION FOCAL LENGTH (INCHES) | GEOMETRICAL FOCAL LENGTH (INCHES) | ANGLE A (DEGREES) | ANGLE B (DEGREES) | ANGLE OF DIFFRACTION (DEGREES) | ANGLE OF BEAM FROM VERTICAL (DEGREES) | SCAN ANGLE (DEGREES) |
|---|---|---|---|---|---|---|---|
| 1 | 39.04 | 39.11 | 45.9 | 55.30 | 34.70 | 2.70 | 26.24 |
| 2 | 39.04 | 39.11 | 45.9 | 55.30 | 34.70 | 2.70 | 26.24 |
| 3 | 39.04 | 39.11 | 45.9 | 55.30 | 34.70 | 2.70 | 26.24 |
| 4 | 39.04 | 39.11 | 45.9 | 55.30 | 34.70 | 2.70 | 26.24 |
| 5 | 45.04 | 45.14 | 45.9 | 55.54 | 34.46 | 2.46 | 22.84 |
| 6 | 45.04 | 45.14 | 45.9 | 55.54 | 34.46 | 2.46 | 22.84 |
| 7 | 45.04 | 45.14 | 45.9 | 55.54 | 34.46 | 2.46 | 22.84 |
| 8 | 45.04 | 45.14 | 45.9 | 55.54 | 34.46 | 2.46 | 22.84 |
| 9 | 51.54 | 51.69 | 45.9 | 55.73 | 34.27 | 2.27 | 20.03 |
| 10 | 51.54 | 51.69 | 45.9 | 55.73 | 34.27 | 2.27 | 20.03 |
| 11 | 51.54 | 51.69 | 45.9 | 55.73 | 34.27 | 2.27 | 20.03 |
| 12 | 51.54 | 51.69 | 45.9 | 55.73 | 34.27 | 2.27 | 20.03 |
| 13 | 58.34 | 58.56 | 45.9 | 55.89 | 34.11 | 2.11 | 17.73 |
| 14 | 58.34 | 58.56 | 45.9 | 55.89 | 34.11 | 2.11 | 17.73 |
| 15 | 58.34 | 58.56 | 45.9 | 55.89 | 34.11 | 2.11 | 17.73 |
| 16 | 58.34 | 58.56 | 45.9 | 55.89 | 34.11 | 2.11 | 17.73 |
| 17 | 64.94 | 65.24 | 45.9 | 56.02 | 33.98 | 1.98 | 15.95 |
| 18 | 64.94 | 65.24 | 45.9 | 56.02 | 33.98 | 1.98 | 15.95 |
| 19 | 64.94 | 65.24 | 45.9 | 56.02 | 33.98 | 1.98 | 15.95 |
| 20 | 64.94 | 65.24 | 45.9 | 56.02 | 33.98 | 1.98 | 15.95 |

FIG. 3B3A

| FACET | SCAN MULT. FACTOR (m) | ROTATION. ANGLE ( DEGREES ) | ACCOUNTING FOR DEAD TIME FOR LASER BEAM 2.59 (DEGREES) | LIGHT COLLECTION FACTOR | MAXIMUM COLLECTION AREA (IGNORING NOTCH) (SQ. IN.) | DESIGN COLLECTION AREA (INCLUDES NOTCH LOSS OF 0.15 SQ.INCHES) |
|---|---|---|---|---|---|---|
| 1 | 1.37 | 19.19 | 21.78 | 1.00 | 1.29 | 1.36 |
| 2 | 1.37 | 19.19 | 21.78 | 1.00 | 1.29 | 1.36 |
| 3 | 1.37 | 19.19 | 21.78 | 1.00 | 1.29 | 1.36 |
| 4 | 1.37 | 19.19 | 21.78 | 1.00 | 1.29 | 1.36 |
| 5 | 1.35 | 16.91 | 19.51 | 1.32 | 1.71 | 1.75 |
| 6 | 1.35 | 16.91 | 19.51 | 1.32 | 1.71 | 1.75 |
| 7 | 1.35 | 16.91 | 19.51 | 1.32 | 1.71 | 1.75 |
| 8 | 1.35 | 16.91 | 19.51 | 1.32 | 1.71 | 1.75 |
| 9 | 1.34 | 14.98 | 17.58 | 1.72 | 2.23 | 2.23 |
| 10 | 1.34 | 14.98 | 17.58 | 1.72 | 2.23 | 2.23 |
| 11 | 1.34 | 14.98 | 17.58 | 1.72 | 2.23 | 2.23 |
| 12 | 1.34 | 14.98 | 17.58 | 1.72 | 2.23 | 2.23 |
| 13 | 1.33 | 13.38 | 15.97 | 2.19 | 2.84 | 2.81 |
| 14 | 1.33 | 13.38 | 15.97 | 2.19 | 2.84 | 2.81 |
| 15 | 1.33 | 13.38 | 15.97 | 2.19 | 2.84 | 2.81 |
| 16 | 1.33 | 13.38 | 15.97 | 2.19 | 2.84 | 2.81 |
| 17 | 1.32 | 12.12 | 14.71 | 2.71 | 3.51 | 3.43 |
| 18 | 1.32 | 12.12 | 14.71 | 2.71 | 3.51 | 3.43 |
| 19 | 1.32 | 12.12 | 14.71 | 2.71 | 3.51 | 3.43 |
| 20 | 1.32 | 12.12 | 14.71 | 2.71 | 3.51 | 3.43 |

FIG. 3B3B

EP 1 066 587 B1

F I G. 3B4

| Mirror angles for the 60 degrees Tunnel Scanner | | | | | | | | |
|---|---|---|---|---|---|---|---|---|
| | | | | | | | | |
| The angle delta is the anglular spacing between the mirror and its following neighbour mirror | | | | | | | | |
| | | | | | | | | |
| Mirror | Angular location of folding mirrors | | | | Angular rotation of folding mirrors | | | |
| | | (degrees) | | | | (degrees) | | |
| | | | | delta | | | | |
| 1 | | 25.61 | | 64.39 | | 2.28 | CCW | |
| 2 | | 90.00 | | 64.39 | | 0.00 | CW | |
| 3 | | 154.39 | | 51.23 | | 2.28 | CW | |
| 4 | | 205.61 | | 64.39 | | 2.28 | CCW | |
| 5 | | 270.00 | | 64.39 | | 0.00 | CW | |
| 6 | | 334.39 | | 51.23 | | 2.28 | CW | |
| | | | | | | | | |
| | | | | | | | | |

F I G. 3B5

EP 1 066 587 B1

CENTER DISC

F I G. 3B6

END DISCS

FIG. 3B7

15x60 deg PATTERN TRIPLE SCANNER

13.2 inch SEPARATION BETWEEN SCANNERS

F I G. 3B8

115 - 116 { SCANNERS:
- FRONT
- BACK

FIG. 3C1

OX58 deg PATTERN TRIPLE SCANNER

14 inch SEPARATION BETWEEN SCANNERS

F I G. 3C2

EP 1 066 587 B1

117
127
128
126
118
118
118
118
118
118
118
118
118
119
118

117
BOTTOM
SCANNER

F I G. 3D1

F I G. 3D2

F I G. 3D3A

PACKAGE FLOW

302B — 305 — 302A
WINDOW
306

12.50°

128

131

28°

126

129

132

117

119

F I G. 3D3B

FIG. 3D4

FIG. 3D5

WINDOW EDGE

WINDOW EDGE

LASER SCAN PATTERN PRODUCED
FROM SINGLE OPTICAL BENCH

FIG. 3D6

FIG. 3D7

FIG. 4

EP 1 066 587 B1

### X - Y PLANE
#### UPWARDLY-FACING / DOWNWARDLY-FACING
#### BAR CODES

F I G. 5A

### Y - Z PLANE

DOWNWARDLY-FACING BAR CODES

F I G. 5B

## X - Y PLANE
### SIDEWARDLY-FACING BAR CODES

RIGHT SIDE/
FRONT
AND
RIGHT SIDE/
BACK

LEFT SIDE/
FRONT
AND
LEFT SIDE/
BACK

F I G. 6

## X - Z PLANE
### FORWARDLY-FACING/REARWARDLY-FACING
### BAR CODES

BACK

FRONT

$$h = a + b$$

F I G. 7

## Y - Z PLANE
### UPWARDLY-FACING BAR CODES

R/B CORNER #1
AND
R/B CORNER #2

R/F CORNER #1
AND
R/F CORNER #2

$h = a + b$

-z

+z

## F I G. 8A

## X - Y PLANE
### UPWARDLY-FACING BAR CODES

$h = a + b$

-x

-w/2

w/2

+x

## F I G. 8B

Y - Z PLANE
UPWARDLY-FACING BAR CODES

LEFT SIDE OF
CONVEYOR BELT

$h = a + b$

L/B CORNER #1
AND
L/B CORNER #2

L/F CORNER #1
AND
L/F CORNER #2

a

b

-z

$z_0$

F I G. 9A

X - Y PLANE
UPWARDLY-FACING BAR CODES

h

a

$h = a + b$

b

-w/2

w/2

$x_0$

F I G. 9B

83

F I G. 10A

HOP

236A (236F)

RESET

261

SFP
GENERATION
MODULE

CLOCK

260

SFP

CONTROL
MODULE

263

SFSP
GENERATION
MODULE

262

SFSP

F I G. 10B

## DATA TABLE EMBODIED IN SFP GENERATOR ON DECODE PROCESSOR BOARD

| SCANNING FACET NO. | TRIGGERING EVENT: WHEN THE CLOCK PULSE COUNT ATTAINS THE VALUE EQUAL TO THE COUNT VALUE SET FORTH BELOW | PULSE EVENT FROM SFP MODULE |
|---|---|---|
| 12 | 7 | SF12P |
| 16 | 146 | SF16P |
| 4 | 271 | SF4P |
| 20 | 446 | SF20P |
| 8 | 561 | SF8P |
| 11 | 716 | SF11P |
| 15 | 855 | SF15P |
| 3 | 980 | SF3P |
| 19 | 1155 | SF19P |
| 7 | 1270 | SF7P |
| 10 | 1425 | SF10P |
| 14 | 1564 | SF14P |
| 2 | 1689 | SF2P |
| 18 | 1864 | SF18P |
| 6 | 1979 | SF6P |
| 9 | 2134 | SF9P |
| 13 | 2273 | SF13P |
| 1 | 2398 | SF1P |
| 17 | 2573 | SF17P |
| 5 | 2688 | SF5P |

W = 5200 RPM

CLOCK PULSE WIDTH = 4 μSEC

FIG. 10C

FIG. 10D

## TABLE EMBODIED IN SFSP GEERATOR DECODE
## PROCESSOR BOARD

| SCANNING FACET NO. | SFSP TRIGGERING EVENT | PULSE EVENT FROM SFSP MODULE |
|---|---|---|
| 12 | RULES 1 - 4 IN FIGS. | SFS 12/1P |
| | | SFS 12/2P |
| | | SFS 12/3P |
| | | SFS 12/4P |
| 16 | RULES 1-4 IN FIGS. | SF: 16/1P |
| | | SFS 16/2P |
| | | SFS 16/3P |
| | | SFS 16/4P |
| 4 | RULES 1-4 IN FIGS. | SFS 4/1P |
| | | SFS 4/2P |
| | | SFS 4/3P |
| | | SFS 4/4P |
| 20 | RULES 1-4 IN FIGS. | SFS 20/1P |
| | | SFS 20/2P |
| | | SFS 20/3P |
| | | SFS 20/4P |
| 8 | RULES 1-4 IN FIGS. | SFS 8/1P |
| | | SFS 8/2P |
| | | SFS 8/3P |
| | | SFS 8/4P |
| 11 | RULES 1-4 IN FIGS. | SFS 11/1P |
| | | SFS 11/2P |
| | | SFS 11/3P |
| | | SFS 11/4P |
| | o o o | |
| 17 | RULES 1-4 IN FIGS. | SFS 17/1P |
| | | SFS 17/2P |
| | | SFS 17/3P |
| | | SFS 17/4P |
| 5 | RULES 1-4 IN FIGS. | SFS 5/1P |
| | | SFS 5/2P |
| | | SFS 5/3P |
| | | SFS 5/4P |

F I G. 10E

**RULE 1: FOR GENERATING SFSX/1P TYPE PULSES**

FOR EACH FACET X BEFORE WHICH IS LOCATED FACET X-1 AND BEYOND WHICH IS LOCATED FACET X+1 (ABOUT THE SCANNING DISC), THE SFSP GENERATION MODULE GENERATES SFSX/1P TYPE PULSES WHEN THE COUNT IS EQUAL TO:

COUNT (SFXP)

**RULE 2: FOR GENERATING SFSX/2P TYPE PULSES**

FOR EACH FACET X, BEFORE WHICH IS LOCATED FACET X-1 AND BEYOND WHICH IS LOCATED FACET X+1 (ABOUT THE SCANNING DISC), THE SFSP GENERATION MODULE GENERATES SFSX/2P TYPE PULSES WHEN THE COUNT IS, EQUAL TO:

$$\text{COUNT (SFXP)} + 1 \left[ \frac{\text{COUNT (SFX+1P)} - \text{COUNT (SFXP)}}{4} \right]$$

F I G. 10F1

**RULE 3: FOR GENERATING SFSX/3P TYPE PULSES**

FOR EACH FACET X BEFORE WHICH IS LOCATED FACET X-1 AND BEYOND WHICH IS LOCATED FACET X+1 (ABOUT THE SCANNING DISC), THE SFSP GENERATION MODULE GENERATES SFSX/3 TYPE PULSES WHEN THE COUNT IS EQUAL TO:

$$\text{COUNT (SFXP)} + 2\left[\frac{\text{COUNT (SFX+1P)} - \text{COUNT (SFXP)}}{4}\right]$$

**RULE 4: FOR GENERATING SFSX/4P TYPE PULSES**

FOR EACH FACET X, BEFORE WHICH IS LOCATED FACET X-1 AND BEYOND WHICH IS LOCATED FACET X+1 (ABOUT THE SCANNING DISC), THE SFSP GENERATION MODULE GENERATES SFSX/4 TYPE PULSES WHEN THE COUNT IS EQUAL TO:

$$\text{COUNT (SFXP)} + 3\left[\frac{\text{COUNT (SFX+1P)} - \text{COUNT (SFXP)}}{4}\right]$$

F I G. 10F2

FIG. 10G

"START OF FACET-SECTOR PULSE (SFSP) GENERATION"

START OF FACET-SECTOR (4/1) PULSE - SFS 4/1P
START OF FACET-SECTOR (4/2) PULSE - SFS 4/2P
START OF FACET-SECTOR (4/3) PULSE - SFS 4/3P
START OF FACET-SECTOR (4/4) PULSE - SFS 4/4P

HOME PULSE MARK (GAP) 131

130

$\omega$ = constant

time +

FIG. 11A1

FIG. 11A2

EP 1 066 587 B1

HOME-OFFSET PULSE ( HOP ) TO DECODE PROCESSOR NO. X
( FROM MOTHERBOARD )

FIFO WRITE

342

COUNT AND SIGN DATA

START OF FACET PULSE
( e.g. 00000000 )

PRIMARY FIFO
340

FIFO READ

240A

DECODE
PROCESSOR
NO. X
( μP )
+
TABLES

DECODE
OUTPUT

(PACKAGE I.D.
DATA, SN SSN,
FN, min/max
FACET ANGLE)

FIFO WRITE

COUNT AND SIGN DATA

START-OF-FACET-SECTOR PULSE
( e.g. 00000000 )

AUX FIFO
341

FIFO READ

DIGITIZER
CIRCUIT
239A

F I G. 11B

EP 1 066 587 B1

| SCANNER NO. | TOTAL NO OF FACETS ON DISC |
|---|---|
| NO. OF SECTORS / FACET | SCANNING STATION NO. |

## F I G. 11C1

| SCANNING FACET NO. | TRIGGERING EVENT: WHEN THE CLOCK PULSE COUNT ATTAINS THE VALUE EQUAL TO THE COUNT VALUE SET FORTH BELOW | PULSE EVENT FROM SFP MODULE | TABLES EMBODIED IN DECODE PROCESSOR |
|---|---|---|---|
| 12 | 7 | SF12P | |
| 16 | 146 | SF16P | |
| 4 | 271 | SF4P | |
| 20 | 446 | SF20P | |
| 8 | 561 | SF8P | |
| 11 | 716 | SF11P | |
| 15 | 855 | SF15P | W= 5200 RPM |
| 3 | 980 | SF3P | CLOCK PULSE WIDTH = |
| 19 | 1155 | SF19P | |
| 7 | 1270 | SF7P | 4.0 μSEC |
| 10 | 1425 | SF10P | |
| 14 | 1564 | SF14P | |
| 2 | 1689 | SF2P | |
| 18 | 1864 | SF18P | |
| 6 | 1979 | SF6P | |
| 9 | 2134 | SF9P | |
| 13 | 2273 | SF13P | |
| 1 | 2398 | SF1P | |
| 17 | 2573 | SF17P | |
| 5 | 2688 | SF5P | |

## F I G. 11C2

## TABLE EMBODIED IN DECODE PROCESSOR

| SCANNING FACET NO. | SFSP TRIGGERING EVENT | PULSE EVENT FROM SFSP MODULE | MINIMUM AND MAXIMUM FACET ANGLES CORRESPONDING TO FACET-SECTOR IDENTIFIED BY SFSP EVENT |
|---|---|---|---|
| 12 | RULES 1 - 4 IN FIGS. | SFS 12/1P | $\theta_{ROT\ MIN}$, $\theta_{ROT\ MAX}$ |
| | | SFS 12/2P | |
| | | SFS 12/3P | |
| | | SFS 12/4P | |
| 16 | RULES 1-4 IN FIGS. | SFS 16/1P | |
| | | SFS 16/2P | |
| | | SFS 16/3P | |
| | | SFS 16/4P | |
| 4 | RULES 1 4 IN FIGS. | SFS 4/1P | |
| | | SFS 4/2P | |
| | | SFS 4/3P | |
| | | SFS 4/4P | |
| 20 | RULES 1-4 IN FIGS. | SFS 20/1P | |
| | | SFS 20/2P | |
| | | SFS 20/3P | |
| | | SFS 20/4P | |
| 8 | RULES 1-4 IN FIGS. | SFS 8/1P | |
| | | SFS 8/2P | |
| | | SFS 8/3P | |
| | | SFS 8/4P | |
| 11 | RULES 1-4 IN FIGS. | SFS 11/1P | |
| | | SFS 11/2P | |
| | | SFS 11/3P | |
| | | SFS 11/4P | |
| | o o o | | |
| 17 | RULES 1-4 IN FIGS. | SFS 17/1P | |
| | | SFS 17/2P | |
| | | SFS 17/3P | |
| | | SFS 17/4P | |
| 5 | RULES 1-4 IN FIGS. | SFS 5/1P | |
| | | SFS 5/2P | |
| | | SFS 5/3P | |
| | | SFS 5/4P | |

F I G. 11D

READ SCAN DATA ELEMENTS OUT OF PRIMARY AND AUXILLARY FIFOs IN DIGITIZING CIRCUIT ⟩ A

RECOVER DIGITAL COUNT DATA AND SFSP MARKERS FROM OUTPUT DATA STREAM AND BUFFER SAME ⟩ B

PROCESS DIGITAL COUNT DATA TO DECODE SYMBOL CHARACTERS AND PRODUCE PACKAGE I.D. DATA, AND USE SFSP TABLE TO DETERMINE SYNCHRONOUS MIN/MAX FACET ANGLES OF FACET SECTOR ON SCANNING DISC USED TO GENERATE LASER BEAM (SWEEP) SECTOR THAT COLLECTED THE PACKAGE I.D. DATA ⟩ C

USE DATA TABLE TO CORRELATE PACKAGE I.D. DATA, SCANNER NO., SCANNING STATION NO,. FACET NO., AND MIN/MAX FACET ANGLES OF THE FACET SECTOR ⟩ D

PRODUCE AS OUTPUT: PACKAGE I.D. DATA, SCANNER NO., SCANNING STATION NO., FACET NO., AND MIN/MAX FACET ANGLES OF THE FACET SECTOR USED TO GENERATE LASER SCANNING PLANE THAT COLLECTED PACKAGE I.D. DATA ⟩ E

F I G. 11E

OPTICALLY-ENCODED SCANNING DISC WITH START-OF-
FACET-SECTOR PULSE ( SFSP ) GENERATION MARKS

F I G. 12A

F I G. 12B

FIG. 12C

## TABLE EMBODIED IN SFSP GENERATOR MODULE

| SCANNING FACET NO. | SFSP TRIGGERING EVENTS | PULSE EVENT FROM SFSP MODULE |
|---|---|---|
| 12 | DETECTION OF $1^{ST}$, $2^{ND}$, $3^{RD}$ AND $4^{TH}$ SFS PULSE AFTER DETECTION OF HOME PULSE (HOP) | SFS 12/1P |
| | | SFS 12/2P |
| | | SFS 12/3P |
| | | SFS 12/4P |
| 1ᴖ | DETECTION OF $5^{TH}$, $6^{TH}$, $7^{TH}$ AND $8^{TH}$ SFS PULSE AFTER DETECTION OF HOP | SFS 16/1P |
| | | SFS 16/2P |
| | | SᴾS 16/3ᴾ |
| | | SFS 16/4P |
| 4 | DETECTION OF $9^{TH}$, $10^{TH}$, $11^{TH}$ AND $12^{TH}$ SFSP AFTER DETECTION OF HOP | SFS 4/1P |
| | | SFS 4/2P |
| | | SFS 4/3P |
| | | SFS 4/4P |
| 20 | DETECTION OF $13^{TH}$, $14^{TH}$, $15^{TH}$ AND $16^{TH}$ SFSP AFTER DETECTION OF HOP | SFS 20/1P |
| | | SFS 20/2P |
| | | SFS 20/3P |
| | | SFS 20/4P |
| 8 | DETECTION OF $17^{TH}$, $18^{TH}$, $19^{TH}$ AND $20^{TH}$ SFSP AFTER DETECTION OF HOP | SFS 8/1P |
| | | SFS 8/2P |
| | | SFS 8/3P |
| | | SFS 8/4P |
| 11 | DETECTION OF $21^{ST}$, $22^{ND}$, $23^{RD}$ AND $24^{TH}$ SFSP AFTER DETECTION OF HOP | SFS 11/1P |
| | | SFS 11/2P |
| | | SFS 11/3P |
| | | SFS 11/4P |
| | ⋮ | |
| 17 | DETECTION OF $73^{RD}$, $74^{TH}$, $75^{TH}$ AND $76^{TH}$ SFSP AFTER DETECTION OF HOP | SFS 17/1P |
| | | SFS 17/2P |
| | | SFS 17/3P |
| | | SFS 17/4P |
| 5 | DETECTION OF $77^{TH}$, $78^{TH}$, $79^{TH}$ AND $80^{TH}$ SFSP AFTER DETECTION OF HOP | SFS 5/1P |
| | | SFS 5/2P |
| | | SFS 5/3P |
| | | SFS 5/4P |

## F I G. 12D

"START OF FACET-SECTOR PULSE ( SFSP ) GENERATION"

START OF FACET-SECTOR (4/1) PULSE - SFS 4/1P
START OF FACET-SECTOR (4/2) PULSE - SFS 4/2P
START OF FACET-SECTOR (4/3) PULSE - SFS 4/3P
START OF FACET-SECTOR (4/4) PULSE - SFS 4/4P

5/12  12 16  4  20 8  11  15  3  19 7  10  14  2  18  6  9  13  1  17  5

time +

HOME PULSE
MARK ( GAP )
131

ω ≠ constant

F I G. 12E

F I G. 13A1

F I G. 13A2

HOME-OFFSET PULSE ( **HOP** ) TO DECODE PROCESSOR NO. X
( FROM MOTHERBOARD )

FIFO WRITE

342

COUNT AND SIGN DATA

340

FIFO READ

240A

DECODED
OUTPUT
DATA
ELEMENT

DECODE
PROCESSOR
NO. X
( µP )
+
TABLES

(PACKAGE I.D.
DATA, SN,
SSN, FN, FSN)

FIFO WRITE

COUNT AND SIGN DATA

START-OF-FACET-SECTOR PULSE
( e.g. 00000000 )

341

FIFO READ

DIGITIZER
CIRCUIT
239A

F I G. 13B

EP 1 066 587 B1

105

| SCANNER NO. | SCANNING STATION NO. |
|---|---|
| TOTAL NO. OF FACETS ON DISC | NO. OF SECTORS PER FACET |

**F I G. 13C1**

**TABLE EMBODIED IN DECODE PROCESSOR**

| SCANNING FACET NO. | SFSP TRIGGERING EVENTS | PULSE EVENT FROM SFSP MODULE | MIN. AND MAX. FACET ANGLES CORRESPONDING TO FACET SECTOR IDENTIFIED BY SFSP EVENT |
|---|---|---|---|
| 12 | DETECTION OF 1$^{ST}$, 2$^{ND}$, 3$^{RD}$ AND 4$^{TH}$ SFS PULSE AFTER DETECTION OF HOME PULSE (HOP) | SFS 12/1P | $\theta$ ROT MIN , $\theta$ ROT MAX |
| | | SFS 12/2P | |
| | | SFS 12/3P | |
| | | SFS 12/4P | |
| 16 | DETECTION OF 5$^{TH}$, 6$^{TH}$, 7$^{TH}$ AND 8$^{TH}$ SFS PULSE AFTER DETECTION OF HOP | SFS 16/1P | |
| | | SFS 16/2P | |
| | | SFS 16/3P | |
| | | SFS 16/4P | |
| 4 | DETECTION OF 9$^{TH}$, 10$^{TH}$, 11$^{TH}$ AND 12$^{TH}$ SFSP AFTER DETECTION OF HOP | SFS 4/1P | |
| | | SFS 4/2P | |
| | | SFS 4/3P | |
| | | SFS 4/4P | |
| 20 | DETECTION OF 13$^{TH}$, 14$^{TH}$, 15$^{TH}$ AND 16$^{TH}$ SFSP AFTER DETECTION OF HOP | SFS 20/1P | |
| | | SFS 20/2P | |
| | | SFS 20/3P | |
| | | SFS 20/4P | |
| 8 | DETECTION OF 17$^{TH}$, 18$^{TH}$, 19$^{TH}$ AND 20$^{TH}$ SFSP AFTER DETECTION OF HOP | SFS 8/1P | |
| | | SFS 8/2P | |
| | | SFS 8/3P | |
| | | SFS 8/4P | |
| 11 | DETECTION OF 21$^{ST}$, 22$^{ND}$, 23$^{RD}$ AND 24$^{TH}$ SFSP AFTER DETECTION OF HOP | SFS 11/1P | |
| | | SFS 11/2P | |
| | | SFS 11/3P | |
| | | SFS 11/4P | |
| ⁚ | ⁚ | | |
| 17 | DETECTION OF 73$^{RD}$, 74$^{TH}$, 75$^{TH}$ AND 76$^{TH}$ SFSP AFTER DETECTION OF HOP | SFS 17/1P | |
| | | SFS 17/2P | |
| | | SFS 17/3P | |
| | | SFS 17/4P | |
| 5 | DETECTION OF 77$^{TH}$, 78$^{TH}$, 79$^{TH}$ AND 80$^{TH}$ SFSP AFTER DETECTION OF HOP | SFS 5/1P | |
| | | SFS 5/2P | |
| | | SFS 5/3P | |
| | | SFS 5/4P | |

**F I G. 13C2**

READ SCAN DATA ELEMENTS OUT OF PRIMARY AND AUXILLARY FIFOs IN DIGITIZING CIRCUIT ⌐A

RECOVER DIGITAL COUNT DATA AND SFSP MARKERS FROM OUTPUT DATA STREAM AND BUFFER SAME ⌐B

PROCESS DIGITAL COUNT DATA TO DECODE SYMBOL CHARACTERS AND PRODUCE PACKAGE I.D. DATA, AND USE SFSP TABLE TO DETERMINE SYNCHRONOUS MIN/MAX FACET ANGLES OF FACET SECTOR ON SCANNING DISC USED TO GENERATE LASER BEAM (SWEEP) SECTOR THA, COLLECTED THE PACKAGE I.D. DATA ⌐C

USE DATA TABLE TO CORRELATE PACKAGE I.D. DATA, SCANNER NO., SCANNING STATION NO,. FACET NO., AND MIN/MAX FACET ANGLES OF THE FACET SECTOR ⌐D

PRODUCE AS OUTPUT: PACKAGE I.D. DATA, SCANNER NO., SCANNING STATION NO., FACET NO., AND MIN/MAX FACET ANGLES OF THE FACET SECTOR USED TO GENERATE LASER SCANNING PLANE THAT COLLECTED PACKAGE I.D. . DATA ⌐E

FIG. 13D

FIG. 14A

HOP

236A° (236F°)

261°

RESET

SFP
GENERATION
MODULE

CLOCK

SFP

CONTROL
MODULE

260°

SFSP
GENERATION
MODULE

263°

262°

SFP        SFSP

F I G. 14B

## HOP GENERATION ALGORITHM

START

A

N = # OF MODULES

$x_{Hj}$ = MODULE POSITION

B

INITIALIZE TIME-PERIOD

$\overline{T}_0 = 0$

C

HOME PULSE ? — NO

YES

D

START TIMER

$t = t_0$

HOME PULSE ? — NO

YES

E

F

SAMPLE TIMER

$T_i = t_i - t_{i-1}$

G

$|T_i - T_{i-1}| > 45\ \mu s\ ?$

YES / NO

H

$i > 100\ ?$ — NO

YES

ESTIMATE $T_i$

$$T_i = \sum_{k=i-1-n}^{i-1} a_k \cdot T_k$$

I

CALCULATE INTER-HOPs

$t_i^{Hj} = x^{Hj} \cdot T_i, \quad j = 1, \ldots, N$

J

SEND HOPs TO FACET GENERATOR

$$t_i^k = \sum_{j=1}^{k} t_i^{Hj}, \quad k = 1, \ldots, N$$

K

F I G. 14C

## FACET / TICK GENERATION ALGORITHM

F I G. 14D

## PACKAGE VELOCITY AND PACKAGE LENGTH MEASUREMENT
## SUBSYSTEM

PACKAGE-OUT-OF THE
TUNNEL ( POOT )
INDICATION
SUBSYSTEM 700

FIG. 15A

## PACKAGE VELOCITY AND PACKAGE LENGTH MEASUREMENT SUBSYSTEM

F I G. 15B1

PHOTODIODE OUTPUTS

F I G. 15B2

INPUT TO MICROPROCESSOR

F I G. 15B3

F I G. 15B4

F I G. 15B5A

FIG. 15B5B

PACKAGE VELOCITY AND LENGTH
MEASUREMENT SUBSYSTEM

FIG. 15C1

FIG. 15C2

( FOR RETRO - REFLECTIVE CONFIGURATION )

<u>FLOW CHARTS FOR THE VELOCITY AND LENGTH</u>
<u>MEASUREMENT SUBSYSTEM</u>

D   = DISTANCE BETWEEN 2 SENSORS ( TYPICAL VALUE: 3 INCHES )

VC = VELOCITY COUNTS ( 32 BITS )

LC = LENGTH COUNTS ( 32 BITS )

T   = 0.651 MICROSECONDS ( LENGTH ON ONE MACHINE CYCLE )

VS = VELOCITY COUNT RECEIVED FLAG

LS  = LENGTH COUNT RECEIVED FLAG

CC = ALL COUNTS AND FLAGS CLEARED FLAG

```
┌─────────────────────────────┐
│  POWER UP, TURN ON LASERS    │
│  AND THEN THE INTERRUPTS.    │
└─────────────────────────────┘
              │
              ▼
         ╱─────────╲            NO
        ╱ BOTH VS AND LS ╲──────────►
        ╲   ARE SET ?    ╱
         ╲─────────╱
              │ YES
              ▼
┌──────────────────────────────────────┐
│ LENGTH = D*LC / VC (in inches),       │
│ VELOCITY = D / T / VC (in inches /    │
│ seconds )                             │
│                                       │
│ TRANSMIT VELOCITY AND LENGTH,         │
│ CLEAR VS AND LS.                      │
└──────────────────────────────────────┘
```

F I G. 15D1

EXTERNAL INTERRUPT 0 ( SENSOR 1 )

```
         ┌──────────────┐
         │  INTERRUPT   │
         └──────┬───────┘
                │
                ▼
            ╱───────╲            YES
          ╱           ╲─────────────────────┐
         ⟨   CC = 1?    ⟩                    │
          ╲           ╱                      │
            ╲───────╱                        │
                │ NO                         │
                ▼                            ▼
  ┌─────────────────────────┐   ┌──────────────────────────┐
  │ CLEAR TIMER, CLEAR VS,  │   │ COPY 32-BIT TIMER VALUE  │
  │ LS, VC, LC.             │   │ INTO LC.                 │
  │                         │   │ SET LS.                  │
  │ SET CC                  │   │                          │
  │                         │   │ CLEAR CC                 │
  └────────────┬────────────┘   └────────────┬─────────────┘
               │                              │
               ▼                              ▼
  ┌─────────────────────────────────────────────────────────┐
  │                    EXIT INTERRUPT                        │
  └─────────────────────────────────────────────────────────┘
```

F I G. 15D2

EXTERNAL INTERRUPT 1 ( SENSOR 2 )

```
         ┌──────────────┐
         │  INTERRUPT   │
         └──────┬───────┘
                │
                ▼
  ┌─────────────────────────┐
  │ COPY 32-BIT TIMER INTO VC.│
  │ SET VS.                  │
  │                         │
  └────────────┬────────────┘
               │
               ▼
  ┌─────────────────────────┐
  │     EXIT INTERRUPT      │
  └─────────────────────────┘
```

F I G. 15D3

F I G. 16A

PACKAGE HEIGHT/WIDTH PROFILING SUBSYSTEM ( 600 )
AND PACKAGE-IN-TUNNEL INDICATION SUBSYSTEM ( 500 )

FIG. 16B

FIG. 17A

FIG. 17B

FIG. 17C

SCANNING TUNNEL
( 100 )

601A

612

611

H

302B

F I G. 18A

SCANNING TUNNEL
( 100 )

601A

612

611

H

302B

F I G. 18B

SCANNING TUNNEL
( 100 )

601A

612

611

H

302B

F I G. 18C

# FIR DIGITAL FILTER DESIGN FOR HEIGHT AND WIDTH DATA OF SCANNED PACKAGES

$x(n) \longrightarrow$ **A** $\displaystyle\sum_{i=-m}^{m} c(i)\, x(n+i)$ $\xrightarrow{\ x'(n)\ }$ **B** $\displaystyle\sum_{i=-m}^{m} c(i)\, x'(n+i)$ $\xrightarrow{\ x''(n)\ }$ **C** $\displaystyle\sum_{i=-m}^{m} c(i)\, x''(n+i)$ $\xrightarrow{\ x'''(n)}$

$c(i)$ inputs above boxes A, B, C.

$n = 0, 1, ..., N-1$

**COEFFICIENTS**

| COEFFICIENTS |
|---|
| -0.026352176 |
| -0.625 |
| -0.083934352 |
| -0.079577472 |
| -0.048302384 |
| 0 |
| 0.048302384 |
| 0.079577472 |
| 0.083934352 |
| 0.0625 |
| 0.026352176 |

$\tau_1$

**D** — 1st DERIVATIVE THRESHOLDING

**E** — SAMPLER → $x''(n)$

$x''(n)$

**F** — ZERO-CROSSING DETECTOR

$x'''(n)$

$n$ = position index

$x''(n)$

**G** — SAMPLER → $x''(n)$

**H** — 2nd DERIVATIVE THRESHOLDING

$\tau_2$

**I** — CHANGE DETECTION AT POSITION "n"

# F I G. 19A

EP 1 066 587 B1

**CHANGE DETECTION
PROCEDURE**

**F I G. 19B**

## METHOD OF SIMULTANEOUSLY DETECTING "SIDE-BY-SIDE" CONFIGURATIONS OF PACKAGES TRANSPORTED ALONG THE CONVEYOR BELT

SAMPLE THE TOTAL WIDTH OF THE CONVEYOR BELT (EDGE-TO-EDGE) USING THE ARRAY OF LIGHT BEAM TRANSMITTERS AND RECEIVERS ($T_w$ AND $R_w$) TO PRODUCE A 1-D ARRAY OF WIDTH DATA, W(n) — A

PROVIDE THE ARRAY OF SAMPLED WIDTH DATA W(n) = X(n) AS INPUT TO THE FIR DIGITAL FILTER OF FIG. 19A SO AS TO DETECT SUDDEN CHANGES IN WIDTH DATA AT ONE OR MORE POSITIONS ALONG THE WIDTH OF THE CONVEYOR BELT — B

ANALYZE THE DETECTED CHANGES IN WIDTH DATA W(n) OVER A NUMBER OF TIME SAMPLING PERIODS IN ORDER TO DETERMINE THE SPECIFIC "SIDE-BY-SIDE" CONFIGURATION OF PACKAGES ON THE CONVEYOR BELT AND THE WIDTH DIMENSIONS OF SUCH DETECTED PACKAGES — C

CORRELATE PACKAGE DIMENSION DATA WITH EACH PACKAGE IN THE DETERMINED CONFIGURATION AND TRANSMIT CORRESPONDING PACKAGE DATA ELEMENTS TO THE DATA ELEMENT QUEUING, HANDLING AND PROCESSING SUBSYSTEM — D

FIG. 19C

### METHOD OF SIMULTANEOUSLY DETECTING "STACKED" CONFIGURATIONS OF PACKAGES TRANSPORTED ALONG A CONVEYOR BELT

SAMPLE THE TOTAL HEIGHT ABOVE THE CONVEYOR BELT (TOP OF TUNNEL) USING THE ARRAY OF LIGHT BEAM TRANSMITTERS AND RECEIVERS ($T_h$ AND $R_h$) TO PRODUCE A 1-D ARRAY OF HEIGHT DATA, $H(n)$ — A

PROVIDE THE ARRAY OF SAMPLED HEIGHT DATA $H(n) = X(n)$ AS INPUT TO THE FIR DIGITAL FILTER OF FIG. 19A SO AS TO DETECT SUDDEN CHANGES IN HEIGHT DATA AT ONE OR MORE POSITIONS ABOVE THE CONVEYOR BELT. — B

ANALYZE THE DETECTED CHANGES IN HEIGHT DATA $H(n)$ OVER A NUMBER OF TIME SAMPLING PERIODS IN ORDER TO DETERMINE THE SPECIFIC "STACKED" CONFIGURATION OF PACKAGES ON THE CONVEYOR BELT AND THE HEIGHT DIMENSIONS OF SUCH DETECTED PACKAGES. — C

CORRELATE PACKAGE DIMENSION DATA WITH EACH PACKAGE IN THE DETERMINED CONFIGURATION AND TRANSMIT CORRESPONDING PACKAGE DATA ELEMENTS TO THE DATA ELEMENT QUEUING, HANDLING AND PROCESSING SUBSYSTEM — D

FIG. 19D

750

601A

100

754

302B

751

305

302A

FILTER — 752

PROCESSOR — 753

WEIGHT DATA

F I G. 20A

750

302B

751

100

305

601A

754

302A

F I G. 20B

PACKAGE-IN-TUNNEL SIGNALING/INDICATION SUBSYSTEM

F I G. 21

FIG. 22A1

DATA ELEMENT TYPES:
- PACKAGE MEASUREMENT DATA ELEMENT.
- SCAN BEAM DATA ELEMENT.
- PACKAGE-IN-TUNNEL (PIT) DATA ELEMENT.
- PACKAGE-OUT-TUNNEL (POOT) DATA ELEMENT.

1004

SYSTEM
EVENT
QUEUE
(FIFO)

FIFO
WRITE

FIFO
READ

1006

MOVING
PACKAGE
TRACKING
QUEUE
(FIFO)

FIFO
WRITE

DATA
ELEMENT
ANALYZER

PACKAGE DATA ELEMENT

HOLOGRAPHIC TYPE
SCAN BEAM DATA ELEMENT

(PACKAGE I.D. DATA,SN,SSN,FN,

MIN/MAX  FACET ANGLE, $T_i$ )

FIFO
READ

1005

PACKAGE DATA ELEMENT ( $V_1, V_2, ... V_8$,W,H,L,WGHT,$T_i$ ) $R_{global}$

NON-HOLOGRAPHIC SEAN BEAM DATA ELEMENT

- $d = W ( T_i ) \Delta T$    (FIG. 22B)

FIG. 22A2

EP 1 066 587 B1

PACKAGE
DATA ELEMENT

**DATA ELEMENT COMBINING MODULE** (1007B)

**PACKAGE SURFACE GEOMETRY MODELING MODULE** (1008B)

**HG X - FORM MODULE** (1009B)

SCAN DATA
ELEMENT

**X - Z SCANNING SURFACE MODELING MODULE** (1010B)

**HG X - FORM MODULE** (1011B)

**SCAN SURFACE AND PACKAGE SURFACE INTERSECTION DETERMINATION MODULE** (1012B)

**DATA OUTPUT SUBSYSTEM** (1013B)

( PACKAGE I.D. No.,SN )
( FROM BOTTOM SCANNERS)

{ PACKAGE I.D. No.,
H, W, L, Wght }

FIG. 22B

EP 1 066 587 B1

## DATA ELEMENT HANDLING RULES

1. WHEN A PACKAGE DATA ELEMENT (PDE) OF ANY TYPE IS REMOVED FROM THE SYSTEM EVENT QUEUE, THEN IT IS PLACED IN THE MOVING PACKAGE TRACKING QUEUE

2. WHEN A SCAN BEAM DATA ELEMENT (SBDE) IS REMOVED FROM THE SYSTEM EVENT QUEUE, THEN IT IS COMBINED WITH EACH PACKAGE DATA ELEMENT IN THE MOVING PACKAGE TRACKING QUEUE AND THEN EACH RESULTING DATA ELEMENT PAIR IS PROCESSED ALONG THE PACKAGE DATA ELEMENT CHANNEL AND SCAN DATA ELEMENT CHANNEL AS SHOWN IN FIGS. 22A1 AND 22A2

3. WHEN A PACKAGE-IN-TUNNEL (PIT) DATA ELEMENT IS REMOVED FROM THE SYSTEM EVENT QUEUE, THEN THE OLDEST PACKAGE DATA ELEMENT IN THE MOVING PACKAGE TRACKING QUEUE IS REMOVED THERE FROM

4. WHEN A PACKAGE-OUT-OF-TUNNEL (POOT) DATA ELEMENT IS REMOVED FROM THE SYSTEM EVENT QUEUE, THEN THE FOLLOWING OPERATIONS ARE CARRIED OUT

F I G. 23A1

(a) IF THE TIME STAMP $T_i$ ON THE REMOVED POOT DATA ELEMENT INDICATES THAT CORRESPONDING PACKAGE HAS MOVED OUT OF THE SCANNING TUNNEL, THEN REMOVE THE OLDEST PACKAGE DATA ELEMENT IN MOVING PACKAGE TRACKING QUEUE

(b) IF THE TIME STAMP $T_i$ ON THE REMOVED POOT DATA ELEMENT INDICATES THAT THE CORRESPONDING PACKAGE IS STILL MOVING THROUGH THE SCANNING TUNNEL, THEN DO NOT REMOVE ANY PACKAGE DATA ELEMENT FROM THE MOVING PACKAGE TRACKING QUEUE.

F I G. 23A2

## PACKAGE SURFACE GEOMETRY MODELING

EP 1 066 587 B1

F I G. 24A

## VECTOR-BASED SURFACE MODELLING OF PACKAGES MOVING IN SCANNING TUNNEL

MATHEMATICAL FORM OF EACH SURFACE ON THE PACKAGE: VECTOR-BASED MODEL CONSISTING OF (1) AT LEAST THREE VERTICE POINTS WITHIN THE PLANE OF THE PACKAGE SURFACE, AND (2) NORMAL VECTOR FOR THE PLANE.

PROCEDURE:

(1) USE POSITION VECTOR ( REFERENCED TO X=0, Y=0, Z=0 IN $R_{global}$), FOR SPECIFYING THE POSITION OF EACH VERTEX IN THE PACKAGE SURFACE PLANE; AND

(2) USE NORMAL VECTOR FOR SPECIFYING THE SURFACE DIRECTION OF THE PACKAGE SURFACE (AT WHICH LIGHT REFLECTS)

(3) THESE FOUR VECTORS SPECIFY THE SURFACE OF THE PACKAGE IN COORDINATE REFERENCE FROM $R_{global}$

FIG. 24B

FIG. 25A1

F I G. 25A2

( 1 ) THE RADIUS TO BEAM-INCIDENT-POINT ON THE HOLOGRAPHIC SCANNING DISC, ASSIGNED THE SYMBOLIC NOTATION "$r_0$"

( 2 ) SCANLINE SEPARATION BETWEEN ADJACENT SCANLINES AT THE FOCAL PLANE OF THE (i, J)-TH SCANLINE, ASSIGNED THE SYMBOLIC NOTATION "$S_{SL}$"

( 3 ) THE SCANLINE LENGTH (MEASURED INTO THE PAPER) FOR THE (i, J)-TH SCANLINE, ASSIGNED THE SYMBOLIC NOTATION "$L_{SL}$"

( 4 ) THE DISTANCE MEASURED FROM THE SCANNING DISC TO THE FOCAL PLANE OF THE (i, J)-TH SCANLINE, ASSIGNED THE SYMBOLIC NOTATION "$a_i$"

( 5 ) THE DISTANCE FROM RADIUS TO BEAM-INCIDENT-POINT $r_0$ TO BEAM FOLDING MIRROR , ASSIGNED THE SYMBOLIC NOTATION "L"

( 6 ) THE TILT ANGLE OF THE J-TH BEAM FOLDING MIRROR ASSOCIATED WITH GENERATION OF THE (i, J)-TH SCANLINE, ASSIGNED THE SYMBOLIC NOTATION "$\phi_i$"

( 7 ) THE TILT ANGLE OF THE VIRTUAL SCANNING DISC, ASSIGNED THE SYMBOLIC NOTATION "$2\phi$"

( 8 ) THE LATERAL SHIFT OF THE BEAM INCIDENT POINT ON THE VIRTUAL SCANNING DISC, ASSIGNED THE SYMBOLIC NOTATION "$\Delta X$"

( 9 ) THE VERTICAL SHIFT OF THE BEAM INCIDENT POINT ON THE VIRTUAL SCANNING DISC, ASSIGNED THE SYMBOLIC NOTATION "$\Delta Y$"

( 10 ) THE DISTANCE FROM THE ROTATION AXIS TO THE BEAM INCIDENT POINT ON THE VIRTUAL SCANNING DISC, ASSIGNED THE SYMBOLIC NOTATION "$r_0 + \Delta X$"

( 11 ) THE DISTANCE FROM THE BEAM INCIDENT POINT ON THE VIRTUAL SCANNING DISC TO THE FOCAL PLANE WITHIN WHICH THE (i, j)-TH SCANLINE RESIDES, ASSIGNED THE SYMBOLIC NOTATION "$f_i$"

( 12 ) THE DIAMETER OF THE CROSS-SECTION OF THE LASER BEAM SCANNING STATION, ASSIGNED THE SYMBOLIC NOTATION "$d_{BEAM}$"

( 13 ) THE ANGULAR GAP BETWEEN ADJACENT HOLOGRAPHIC SCANNING FACETS, ASSIGNED THE SYMBOLIC NOTATION "$d_{GAP}$"

( 14 ) THE OUTER RADIUS OF THE AVAILABLE LIGHT COLLECTION REGION ON THE HOLOGRAPHIC SCANNING DISC, ASSIGNED THE SYMBOLIC NOTATION "$r_{OUTER}$"

F I G. 25B1

( 15 ) THE INNER RADIUS OF THE AVAILABLE LIGHT COLLECTION REGION ON THE HOLOGRAPHIC SCANNING FACET, ASSIGNED THE SYMBOLIC NOTATION "$r_{INNER}$"

( 16 ) ONE-HALF OF THE DEPTH OF FIELD OF THE (i, J)-TH SCANLINE, ASSIGNED THE SYMBOLIC NOTATION "$\delta$"

( 17 ) THE DISTANCE FROM THE MAXIMUM READ DISTANCE ( $f_i$ + 5" ) TO THE INNER RADIUS $r_i$ OF THE SCANNING FACET, ASSIGNED THE SYMBOLIC NOTATION "C"

( 18 ) THE OUTER RAY ANGLE MEASURED RELATIVE TO THE NORMAL TO THE i-TH HOLOGRAPHIC FACET, ASSIGNED THE SYMBOLIC NOTATION "$\alpha$"

( 19 ) THE INNER RAY ANGLE MEASURED RELATIVE TO THE NORMAL TO THE i-TH HOLOGRAPHIC FACET, ASSIGNED THE SYMBOLIC NOTATION "$\gamma$"

( 20 ) THE LIGHT COLLECTION ANGLE MEASURED FROM THE FOCAL POINT OF THE I-TH FACET TO THE LIGHT COLLECTION AREA OF THE SCANNING FACET, ASSIGNED THE SYMBOLIC NOTATION "$\beta$"

( 21 ) THE INTERSECTION OF THE BEAM FOLDING MIRROR AND LINE C, ASSIGNED THE SYMBOLIC NOTATION "X"

( 21A ) THE INTERSECTION OF THE BEAM FOLDING MIRROR AND LINE C, ASSIGNED THE SYMBOLIC NOTATION "Y"

( 22 ) THE DISTANCE MEASURED FROM THE INNER RADIUS TO THE POINT OF MIRROR INTERSECTION, ASSIGNED THE SYMBOLIC NOTATION "D"

( 23 ) THE DISTANCE MEASURED FROM THE BASE OF THE SCANNER HOUSING TO THE TOP OF THE j -TH BEAM FOLDING MIRROR, ASSIGNED THE SYMBOLIC NOTATION "h"

( 24 ) THE DISTANCE MEASURED FROM THE SCANNING DISC TO THE BASE OF THE HOLOGRAPHIC SCANNER, ASSIGNED THE SYMBOLIC NOTATION "d"

( 25 ) THE FOCAL LENGTH OF THE i-TH HOLOGRAPHIC SCANNING FACET FROM THE SCANNING FACET TO THE CORRESPONDING FOCAL PLANE WITHIN THE SCANNING VOLUME, ASSIGNED THE SYMBOLIC NOTATION "$f_i$"

( 26 ) INCIDENT BEAM ANGLE, ASSIGNED THE SYMBOLIC NOTATION "$A_i$"

FIG. 25B2

( 27 ) DIFFRACTED BEAM ANGLE, ASSIGNED THE SYMBOLIC NOTATION "$B_i$"

( 28 ) THE ANGLE OF THE J-TH LASER BEAM MEASURED FROM THE VERTICAL, ASSIGNED THE SYMBOLIC NOTATION "$-\alpha$"

( 29 ) THE SCAN ANGLE OF THE LASER BEAM , ASSIGNED THE SYMBOLIC NOTATION "$\theta_{si}$"

( 30 ) THE SCAN MULTIPLICATION FACTOR FOR THE i-TH HOLOGRAPHIC FACET, ASSIGNED THE SYMBOLIC NOTATION "$M_i$"

( 31 ) THE FACET ROTATION ANGLE FOR THE i-TH HOLOGRAPHIC FACET, ASSIGNED THE SYMBOLIC NOTATION "$\theta_{ROTi}$"

( 32 ) ADJU⌣:ED FACET ROTATION ANGLE ACCOUNTING FOR DEADTIME, ASSIGNED THE SYMBOLIC NOTATION "$\theta'_{ROTi}$"

( 33 ) THE LIGHT COLLECTION EFFICIENCY FACTOR FOR THE i-TH HOLOGRAPHIC FACET, NORMALIZED RELATIVE TO THE 16TH FACET, ASSIGNED THE SYMBOLIC NOTATION "$\xi_i$"

( 34 ) THE MAXIMUM LIGHT COLLECTION AREA FOR THE i-TH HOLOGRAPHIC FACET, ASSIGNED THE SYMBOLIC NOTATION "$Area_i$"

( 35 ) THE BEAM SPEED AT THE CENTER OF THE ( i, j )-TH SCANLINE, ASSIGNED THE SYMBOLIC NOTATION "$V_{CENTER}$"

( 36 ) THE ANGLE OF SKEW OF THE DIFFRACTED LASER BEAM AT THE CENTER OF THE i-TH HOLOGRAPHIC FACET, ASSIGNED THE SYMBOLIC NOTATION "$\phi_{SKEW}$"

( 37 ) THE MAXIMUM BEAM SPEED OF ALL LASER BEAMS PRODUCED BY THE HOLOGRAPHIC SCANNING DISC, ASSIGNED THE SYMBOLIC NOTATION "$V_{MAX}$"

( 38) THE MINIMUM BEAM SPEED OF ALL LASER BEAMS PRODUCED BY THE HOLOGRAPHIC SCANNING DISC, ASSIGNED THE SYMBOLIC NOTATION "$V_{MIN}$"

( 39 ) THE RATIO OF THE MAXIMUM BEAM SPEED TO THE MINIMUM BEAM SPEED, ASSIGNED THE SYMBOLIC NOTATION " $V_{MAX}/V_{MIN}$"

( 40 ) THE DEVIATION OF THE LIGHT RAYS REFLECTED OFF THE PARABOLIC LIGHT REFLECTING MIRROR BENEATH THE SCANNING DISC, FROM THE BRAGG ANGLE FOR THE FACET, ASSIGNED THE · SYMBOLIC NOTATION "$\delta_e$"

F I G. 25B3

PARAMETER EQUATION USED IN THE SPREADSHEET
DESIGN OF THE SCANNER

(1) $\Delta x \quad := L(1 + \cos(2\phi))$

(2) $\Delta y \quad := L\sin(2\phi)$

(3) $\Delta y \quad := r_0 + \Delta x$

(4) $\quad := \sqrt{(f+\delta)^2 + l^2 + 2(f+\delta)l\cos(B)}$

LAW OF COSINES, WHERE: $\quad l = r_{outer} - r_{inner}$

$$\beta = \alpha - \gamma = B + 2\phi - 90 - \gamma$$

(5) $\alpha \quad := B - 90 + 2\phi$

(6) $r \quad := \alpha - \cos\left[\dfrac{(f+\delta)^2 + C^2 - l^2}{2(f+\delta)C}\right]$

(7) $\beta \quad := \alpha - \gamma$

(8) $X \quad := D\cos(B-\beta) + r_i$

(9) $Y \quad := D\sin(B-\beta)$

(10) $D \quad := \dfrac{[r_0 + L - r_i]\sin(90+\phi)}{\sin(90 - B + \beta - \phi)}$ (LAW OF SINES)

(11) $h \quad := Y + d$

F I G. 25C1

$$(12) \quad f_i \quad := \sqrt{a_i^2 + \left[ m\, S_{SL} \cdot \left[ r_0 + \Delta x \right] \right]^2}$$

m IS A FACTOR THAT VARIES FROM SCAN LINE TO SCAN LINE AND DETERMINED BY SCAN LINE SEPARATION AND DISTANCE FROM THE ROTATIONAL AXIS OF THE DISC.

$$(13) \quad B_i \quad := \operatorname{atan}\left[ \left[ \frac{m\, S_{SL} \cdot \left[ r_0 + \Delta x \right]}{a_i} \right] \right] + 90 - 2\phi$$

$$(14) \quad \theta_{Si} \quad := 2 \operatorname{atan}\left[ \left[ \frac{\frac{1}{2}\, ScanLineLength}{f_i} \right] \right]$$

$$(15) \quad M_i \quad := \frac{r_0}{f_i} + \cos(\lambda_1) + \cos(B_i)$$

$$(16) \quad \theta_{rotl} \quad := \frac{\theta_{Si}}{M_i}$$

$$(17) \quad \theta'_{rotl} \quad := \theta_{rotl} + \underbrace{\frac{d_{beam}}{r_0} + \frac{d_{gap}}{r_0}}_{\Theta_{dead}}$$

$$(18) \quad \xi_i \quad := \left[ \frac{f_i}{f_{16}} \right]^2 \frac{\sin\left[ B_{16} \right]}{\sin(B_i)}\, H_i$$

$$(19) \quad Area_i \quad := \pi \left[ r_{outer}^2 + r_{inner}^2 \right] \frac{\xi_i}{\sum\limits_{i=1}^{16} \left[ \xi_i \right]} \qquad i = 1,2,\ldots 16$$

F I G. 25C2

FACET NO.

AREA i

1.319

1.464

16

1

4.970

2

14

4.115

15

3.783

9

2.474

2.691

4

$r_{outer}$

3

$r_{inner}$

12

$r_i$

3.890

3

6

2.116

8

3.430

11

1.938

2.962

2.549

5

10

7

F I G. 26

<u>VECTOR MODELING OF LASER SCAN BEAMS
IN HOLOGRAPHIC SCANNING SUBSYSTEMS</u> .

<u>MATHEMATICAL FORM</u> FOR EACH LASER SCAN BEAM:
VECTOR-BASED MODEL OF OPTICAL PATH OF BEAM
FROM DISC TO MIRROR TO FOCAL PLANE ($\infty$ )

<u>PROCEDURE:</u>

(1) USE POSITION VECTOR REFERENCED FROM X=0, Y=0, Z=0

IN R$_{local\ scanner}$ FOR SPECIFYING THE STARTING POINT
OF LASER SCAN BEAM ON DISC, AND DIRECTION VECTOR
FOR SPECIFYING THE DIRECTION OF LASER BEAM        -
THE BEAM FOLDING MIRROR; AND

(2) USE POSITION VECTOR FOR SPECIFYING POINT ON
MIRROR WHERE BEAM IS REFLECTED FROM BEAM
FOLDING MIRROR TOWARDS FOCAL PLANE OF
FACET, EXTENDING TO INFINITY, AND DIRECTION
VECTOR FOR SPECIFYING THE DIRECTION OF
LASER BEAM  TOWARDS DESIGNATED FOCAL
PLANE

(3) THESE FOUR VECTORS SPECIFY THE LASER BEAM RAY IN
LOCAL COORDINATE REFERENCE R $_{local\ scanner}$

F I G. 27

## VECTOR-BASED MODEL OF SCANNING-SURFACE PRODUCED BY NON-HOLOGRAPHIC BOTTOM SCANNERS

**NOTE:**

EACH SCANNING SURFACE IS SPECIFIED BY FOUR BOUNDARY POINTS IN $y = 0$, $X$ - $Z$ PLANE OF $R_{global}$ REFERENCED TO $X = 0$, $y = 0$, $Z = 0$;

EACH POINT IS REPRESENTED BY A POSITION VECTOR AND A DIRECTION VECTOR ASSUMED NORMAL TO X-Y PLANE.

F I G. 28

VECTOR-BASED MODEL

IN $R_{local\ scanner}$

$z$

$x$

$y$

$R_{local\ scanner\ I}$

$+y$

$+z$

VECTOR-BASED MODEL

IN $R_{global}$

$+x$

$R_{global}$

302B
CONVEYOR BELT

| VECTOR-BASED SCAN BEAM OR SCAN SURFACE MODEL IN $R_{local\ scanner}$ | HOMOGENEOUS TRANSFORMATIONS | VECTOR-BASED SCAN BEAM OR SCAN SURFACE MODEL IN $R_{global}$ |

F I G. 29

# COORDINATE CONVERSION OF VECTOR-BASED
## MODELS OF PACKAGE SURFACES

SCANNING TUNNEL
( 100 )

PACKAGE AT SCANNING
POSITION IN TUNNEL

( TIME STAMPED $T_{i+k}$ )

PROFILING SUBSYSTEM

PACKAGE AT PROFILING
POSITION IN TUNNEL

( TIME STAMPED $T_i$ )

$V_2$  $V_3$
$+x$
$+y$
$V_1$  $V_4$
$V_6$  $V_7$
$V_5$  $V_8$
$+z$
$d$
$-x$
302B
$R_{global}$
$-z$
$-y$

$$d = \Delta T \ V, \text{WHERE}$$
$$\Delta T = T_i + T_{i+k},$$
$T_i$ = TIME STAMP ON
PACKAGE DATA ELEMENT
$T_{i+k}$ = TIME STAMP ON
SCAN DATA ELEMENT
MATCHED TO PACKAGE
DATA ELEMENT
V = PACKAGE VELOCITY

| VECTOR-BASED SURFACE MODEL IN $R_{global}$ AT PROFILING POSITION | HOMOGENOUS TRANSFORMS f(d) | VECTOR-BASED SURFACE MODEL IN $R_{global}$ AT SCANNING POSITION IN TUNNEL |
|---|---|---|

# F I G. 30

EP 1 066 587 B1

## SCAN BEAM/PACKAGE SURFACE INTERSECTION DETERMINATION METHOD FOR SCAN DATA ELEMENTS PRODUCED FROM HOLOGRAPHIC SCANNING SUBSYSTEMS

USING THE MINIMUM AND MAXIMUM SCANNING MODELS OF THE LASER SCAN BEAM, DETERMINE THE INTERSECTION POINT BETWEEN THE SCAN RAY AND A SURFACE ON THE PACKAGE (USING THE VECTOR-BASED MODELS THEREOF), REFERENCED TO THE GLOBAL COORDINATE FRAME $R_{global}$ — A

IF AN INTERSECTION POINT IS DETERMINED, THEN CONFIRM THAT SIGN OF THE NORMAL VECTOR OF THE SURFACE IS OPPOSITE THE SIGN OF SCAN RAY DIRECTION VECTOR — B

IF SIGN OF NORMAL VECTOR IS OPPOSITE SIGN OF SCAN RAY DIRECTION VECTOR, THEN DETERMINE IF INTERSECTION POINT (FOUND IN STEP ABOVE) FALLS WITH SPATIAL BOUNDARIES OF THE PACKAGE SURFACE — C

A

F I G. 31A

A

IF INTERSECTION POINT FALLS WITHIN BOUNDARIES OF
SURFACE, THEN OUTPUT A DATA ELEMENT IN
OUTPUꞔ. QUEUE COMPRISING THE PACKAGE I.D. DATA AND
THE DIMENSIONS AND MEASUREMENTS (e.g. L, H, W AND
WEIGHT) OF PACKAGE FOR USE BY OTHER
SUBSYSTEMS

D

F I G. 31B

SCAN SURFACE/PACKAGE SURFACE INTERSECTION DETERMINATION
METHOD FOR SCAN DATA ELEMENTS PRODUCED FROM
NON-HOLOGRAPHIC SCANNING SUBSYSTEMS (E.G. BOTTOM
LOCATED POLYGON SCANNERS) IN THE SYSTEM
OF PRESENT INVENTION

USING THE VECTOR-BASED SURFACE MODELS OF THE
SCAN-SURFACES OF THE BOTTOM POLYGON SCANNERS
AND SIDE SURFACES OF THE PACKAGE, DETERMINE
WHETHER THERE EXISTS A POINT OF INTERSECTION
BETWEEN THE SCANNING SURFACE OF THE
POLYGON-BASED SCANNER AND ANY SURFACE
OF THE PACKAGE

A

IF INTERSECTION POINTS EXIST, THEN CONFIRM THAT THE
SIGN OF THE VECTOR MODEL AT THE SCANNING SURFACE
(i.e. NORMAL VECTOR) IS OPPOSITE THE SIGN OF THE
VECTOR MODEL OF THE PACKAGE SURFACE

B

( A )

F I G. 32A

A

IF SIGN OF NORMAL VECTOR OF SCANNING SURFACE IS
OPPOSITE THE SIGN OF THE NORMAL VECTOR TO THE
PACKAGE SURFACE, THEN CONFIRM THAT CERTAIN
OF THE POINTS BOUNDED BY THE SCANNING SURFACE
COINCIDE WITH POINTS BOUNDED BY THE SURFACE
OF THE PACKAGE

C

IF SUFFICIENT OVERLAP IS FOUND BETWEEN THE
SCANNING SURFACE AND PACKAGE SURFACE, THEN
OUTPUT DATA ELEMENT COMPRISING THE PACKAGE
I.D. DATA WITH DIMENSIONS AND MEASUREMENTS
(e.g. L, H, W, AND WEIGHT) OF PACKAGE FOR USE
IN OTHER SUBSYSTEMS

D

F I G. 32B

**EP 1 066 587 B1**

**Patent documents cited in the description**

- US 5019714 A, Knowles
- US 5699161 A
- WO 08949915 A
- WO 08854832 A
- WO 08886806 A
- WO 08726522 A
- WO 08573949 A
- WO 9722945 A
- WO 9822945 A
- US 09243078 B
- US 09241930 B
- US 5343027 A, Knowles
- US 5727081 A